# EUROPEAN PATENT APPLICATION

(11) **EP 1 898 413 A2**
(43) Date of publication of application: **12.03.2008**
(21) Application number: 07017606.0
(22) Date of filing: 07.09.2007
(51) Int. Cl.: G11B 23/40, B41J 3/407, G11B 7/00

(54) **Recording device, printing system, and disc medium**

(30) Priority: 08.09.2006 JP 2006243805; 12.09.2006 JP 2006247391; 14.09.2006 JP 2006249381; 19.09.2006 JP 2006253309; 20.09.2006 JP 2006254054; 20.09.2006 JP 2006254789; 21.09.2006 JP 2006256219; 22.09.2006 JP 2006257462; 25.09.2006 JP 2006258306; 26.09.2006 JP 2006259973; 01.12.2006 JP 2006325107; 19.12.2006 JP 2006341747; 19.01.2007 JP 2007010551
(71) Applicant: ROHM CO., LTD., Kyoto-shi, Kyoto 615-8585 (JP)
(72) Inventor: Tanaka, Masahide, Kyoto-shi Kyoto 615-8585 (JP); Hatayama, Yasuyuki, Kyoto-shi Kyoto 615-8585 (JP); Dohi, Toshiaki, Kyoto-shi Kyoto 615-8585 (JP)
(74) Representative: Glawe, Delfs, Moll

(57) **Abstract**

A recording device for a disc medium having a recording side and a label side has a receiving mechanism adapted to receive the disc medium, a recording part adapted to record data into the recording side of the disc medium received by the receiving mechanism, a printing part adapted to print an image on the label side of the disc medium received by the receiving mechanism, the image relating to the data recorded in the recording side of the disc medium, and a controller adapted to control the printing part in accordance with data information relating to the data which has been recorded in the recording side of the disc medium.

## Description

### BACKGROUND OF THE INVENTION

### 1. Field of the Invention

The present invention relates to a recording device for a removable storage medium.

### 2. Description of Related Art

One well-known type of recording device for removable storage media is DVD recorders that handle storage media in the shape of rotated discs, such as DVDs and CDs. A storage medium that is inserted into and ejected out of such a recording device has a data face on one side and a label face on the other side. The label face allows, for example, the titles of the contents recorded in the data face to be hand-written with a marker pen or the like. On the other hand, some conventionally proposed recording media are ink-jet printable, meaning that their label face is so treated as to accept printing by an ink-jet printer or the like. In either case, a user can visually recognize the contents recorded in the data face by looking at the label face.

Lately, storage media that are, on their label face, provided with a color-changeable layer that changes its color on exposure to heat or light have been put into practical use, along with recording devices that can handle them. With these, a storage medium inserted reversely (with its reverse face in the foreground) into a recording device can be irradiated with laser light from the recording head already existing in the recording device so that an image that allows visual recognition of the contents can be burned on the label face. In connection with this technology, many proposals have been made, for example in JP-A-2002-203321.

Moreover, the label-face burning technology mentioned above has been applied to video recorders, leading to many proposals for coordination with a program titling function and for easy creation of label images from recorded video images and the like.

The disadvantage with conventional functions for creating images on the exterior of storage media as achieved by the label-face burning technology mentioned above is that the creation of images needs to be totally taken care of by a user. This makes such functions useful, indeed, for users highly motivated to create images for themselves, but difficult to use for average users.

### SUMMARY OF THE INVENTION

An object of the present invention is to provide a recording device that allows easy creation of an image on the exterior of a storage medium, so easy that average users can use the image creation function.

Another object of the present invention is to provide a recording device in which confusion between data stored in the recording medium and image on the exterior of the storage medium is avoided.

To achieve the above object, according to one aspect of the present invention, a recording device for a disc medium having a recording side and a label side is provided with: a receiving mechanism adapted to receive the disc medium; a recording part adapted to record data into the recording side of the disc medium received by the receiving mechanism; a printing part adapted to print an image on the label side of the disc medium received by the receiving mechanism, the image relating to the data recorded in the recording side of the disc medium; and a controller adapted to control the printing part in accordance with data information relating to the data which has been recorded in the recording side of the disc medium.

Other features, elements, steps, advantages and characteristics of the present invention will become more apparent from the following detailed description of preferred embodiments thereof with reference to the attached drawings.

### BRIEF DESCRIPTION OF THE DRAWINGS

Fig. 1 is a block diagram showing a first embodiment of a disc recorder system embodying the invention;
Fig. 2 is a flow chart showing the functions that the controller 10 shown in Fig. 1 performs when the power is turned on;
Fig. 3 is a flow chart showing the details of the initial menu mode in step S34 in Fig. 2;
Fig. 4 is a flow chart showing the details of the DVD mode in step S22 in Fig. 2 and in step S60 in Fig. 3;
Fig. 5 is a flow chart showing the details of the acquisition and encoding of label-burning information in step S98 in Fig. 4;
Fig. 6 is a flow chart showing the functions that the controller 10 performs when an operation requesting ejection of the medium is made in the DVD recorder shown in Fig. 1;
Fig. 7 is a flow chart showing the details of the label burning mode in steps S18 and S28 in Fig. 2, in step S82 in Fig. 3, and in step S120 in Fig. 4;
Fig. 8 is a table summarizing the relationship between the medium and the DVD recorder 2 in respect of label burning management;
Fig. 9 is a flow chart showing the details of the automatic creation of label-burning image in step S214 in Fig. 7;
Fig. 10 is a flow chart showing the details of the burned image information acquisition in step S234 in Fig. 9;
Fig. 11 is a flow chart showing the details of the background processing in step S246 in Fig. 9;
Fig. 12 is a flow chart showing the details of the burning processing in step S218 in Fig. 7;
Fig. 13 is a flow chart showing the details of the burning condition checking processing in step S112 in Fig. 4 and in step S176 in Fig. 6;
Fig. 14 is a flow chart showing the functions that the controller 10 performs when an operation requesting finalization of the medium is made;
Fig. 15 is a flow chart showing the functions that the controller 10 performs when an operation requesting formatting of the medium is made;
Fig. 16 is a block diagram showing a second embodiment of a disc recorder system embodying the invention;
Fig. 17 is a flow chart showing the functions that the controller 110 performs to control the first and second heads in the DVD recorder of the second embodiment;
Fig. 18 is a block diagram showing a third embodiment of a disc recorder system embodying the invention;
Fig. 19 is a flow chart showing the functions that the controller 210 performs to control the reversible head in the DVD recorder of the third embodiment;
Fig. 20 is a block diagram showing a fourth embodiment of a disc recorder system embodying the invention;
Fig. 21 is a flow chart showing the functions that the controller 310 performs to control the automatic medium reversing and inserting mechanism in the DVD recorder of the fourth embodiment;
Fig. 22 is a block diagram showing a fifth embodiment of a disc recorder system embodying the invention;
Fig. 23 is a flow chart showing the functions that the controller 410 performs to prevent an erroneous operation in the DVD recorder of the fifth embodiment;
Fig. 24 is a television display screen view showing an image on the label face of the medium;
Fig. 25 is a block diagram showing a sixth embodiment of a disc recorder system embodying the invention;
Fig. 26 is a flow chart showing the details of the burning image layout processing in step S500 in Fig. 25;
Fig. 27 is a flow chart showing the details of the ring-shaped character image creation processing in the specified language in step S518 in Fig. 26;
Fig. 28 is a flow chart showing the details of the ordinary character image creation processing in the specified language in step S528 in Fig. 26;
Fig. 29 is a flow chart showing the details of the character pitch adjustment and priority-based character number reduction processing in step S570 in Fig. 27 and in step S594 in Fig. 28;
Fig. 30 shows the television display screen showing an image on the label face of the medium, showing what is displayed when the processing in step S572 in Fig. 27 is performed;
Fig. 31 is a flow chart showing the details of the character top inner circumference arranging and line head position setting processing in step S572 in Fig. 27;
Fig. 32 shows the television display screen showing an image on the label face of the medium, showing one example of what is displayed when the processing in step S594 in Fig. 28 is performed;
Fig. 33 shows the television display screen showing an image on the label face of the medium, showing another example of what is displayed when the processing in step S594 in Fig. 28 is performed;
Fig. 34 is a flow chart showing the details of the line head position setting processing in step S588 in Fig. 28;
Fig. 35 is a flow chart of a seventh embodiment, showing the details of the burning image layout processing in step S500 in Fig. 25;
Fig. 36 is a flow chart showing the details of the ring-shaped character image creation processing in step S1002 in Fig. 35;
Fig. 37 is a flow chart showing the details of the ordinary character image creation processing in step S1008 in Fig. 35;
Fig. 38 a flow chart showing the details of the burning image creation processing with consideration given to the previously burned image in step S1019 in Fig. 25 and in step S1023 in Fig. 37;
Fig. 39 is a diagram showing an example of how interactive operation proceeds while the user editing processing performed in step S1014 in Fig. 35 is displayed on the television screen;
Fig. 40 is a flow chart showing the editing processing by the user in step S1014 in Fig. 35;
Fig. 41 is a flow chart of an eighth embodiment, showing the details of the burning image layout processing in step S500 in Fig. 25;
Fig. 42 is a flow chart showing the burning image creation based on the burning flag in step S1144 in Fig. 41;
Fig. 43 is a flow chart illustrating in detail the user confirmation in step S1146 in Fig. 41;
Fig. 44 is a television display screen showing an image on the label face of the medium in a ninth embodiment, showing an example of how a burning region is secured in a region secured as a remaining capacity;
Fig. 45 is a television screen view showing an example in which burning data having line feeds automatically inserted between different sets of data is overlaid on the burned label face;
Fig. 46 is a television screen view showing an example in which, from the state shown in Fig. 45, line head position setting processing has been performed at each line;
Fig. 47 is a television screen view showing an example in which, from the state shown in Fig. 46, a target line (line 1) has been selected and line feed processing has been performed there;
Fig. 48 is a television screen view showing an example in which, from the state shown in Fig. 47, line head position setting processing has been performed at all lines after line feeding;
Fig. 49 is a television screen view showing an example in which, from the state shown in Fig. 48, a target line (line 3) has been selected and line feed processing has been performed there;
Fig. 50 is a television screen view showing an example in which, from the state shown in Fig. 49, line head position setting processing has been performed at all lines after line feeding;
Fig. 51 is a television screen view showing an example in which, from the state shown in Fig. 50, a particular item (recorded channel) has been deleted from each set of data;
Fig. 52 is a television screen view showing an example in which, from the state shown in Fig. 51, another particular item (recording start hour) has been deleted from each set of data;
Fig. 53 is a television screen view showing an example in which, from the state shown in Fig. 52, line head position setting processing has been performed at all lines after item deletion;
Fig. 54 is a television screen view showing an example in which, from the state shown in Fig. 53, line feed processing has been performed at a target line (line 2);
Fig. 55 is a television screen view showing an example in which, from the state shown in Fig. 54, a target line (line 4) has been selected and line feed processing has been performed there;
Fig. 56 is a television screen view showing an example in which, from the state shown in Fig. 55, line head position setting processing has been performed at all lines after line feeding;
Fig. 57 is a television screen view showing an example in which, from the state shown in Fig. 56, a target line (line 6) has been selected and line feed processing has been performed there;
Fig. 58 is a television screen view showing an example in which, from the state shown in Fig. 57, line head position setting processing has been performed at all lines after line feeding;
Fig. 59 is a television screen view showing an example in which, from the state shown in Fig. 58, a target line (line 8) has been selected and line feed processing has been performed there;
Fig. 60 is a television screen view showing an example in which, from the state shown in Fig. 59, a particular item (recording date and time) has been deleted from each set of data;
Fig. 61 is a television screen view showing an example in which, from the state shown in Fig. 60, line head position setting processing has been performed at all lines after item deletion;
Fig. 62 is a flow chart showing an example of the details of the ordinary character image creation processing in the specified language in step S528 in Fig. 26;
Fig. 63 is a flow chart showing an example of the details of the line feed processing in step S1200 in Fig. 62;
Fig. 64 shows a television display screen showing an image on the label face of the medium in a tenth embodiment, showing an example in which line head position setting processing has been performed at each line;
Fig. 65 is a television screen view showing an example in which, from the state shown in Fig. 64, a target line (line 1) has been selected and line feed processing has been performed there;
Fig. 66 is a television screen view showing an example in which, from the state shown in Fig. 65, line head position setting processing has been performed at all lines after line feeding;
Fig. 67 is a television screen view showing an example in which, from the state shown in Fig. 66, a target line (line 4) has been selected and line feed processing has been performed there;
Fig. 68 is a television screen view showing an example in which, from the state shown in Fig. 67, line head position setting processing has been performed at all lines after line feeding;
Fig. 69 is a television screen view showing an example in which, from the state shown in Fig. 68, a target line (line 5) has been selected and line feed processing has been performed there;
Fig. 70 is a television screen view showing an example in which, from the state shown in Fig. 69, line head position setting processing has been performed at all lines after line feeding;
Fig. 71 is a television screen view showing an example in which, from the state shown in Fig. 70, a target line (line 6) has been selected and line feed processing has been performed there;
Fig. 72 is a television screen view showing an example in which, from the state shown in Fig. 71, line head position setting processing has been performed at all lines after line feeding;
Fig. 73 is a television screen view showing an example in which, from the state shown in Fig. 72, a target line (line 8) has been selected and line feed processing has been performed there;
Fig. 74 is a television screen view showing an example in which, from the state shown in Fig. 73, line head position setting processing has been performed at all lines after line feeding;
Fig. 75 is a television screen view showing an example in which, from the state shown in Fig. 74, a target line (line 9) has been selected and line feed processing has been performed there;
Fig. 76 is a television screen view showing an example in which, from the state shown in Fig. 75, line head position setting processing has been performed at all lines after line feeding;
Fig. 77 is a television screen view showing an example in which, from the state shown in Fig. 76, a target line (line 11) has been selected and line feed processing has been performed there;
Fig. 78 is a television screen view showing an example in which, from the state shown in Fig. 77, line head position setting processing has been performed at all lines after line feeding;
Fig. 79 is a television screen view showing an example in which, from the state shown in Fig. 78, a target line (line 13) has been selected and line feed processing has been performed there;
Fig. 80 is a television screen view showing an example in which, from the state shown in Fig. 79, duplicate items (recording start hour and recorded channel) have been deleted from the last set of data;
Fig. 81 is a television screen view showing an example in which, from the state shown in Fig. 80, a duplicate item (recorded channel) has been deleted from the last but one set of data and then line head position setting processing has been performed at all lines after line feeding;
Fig. 82 is a flow chart showing another example of the details of the line feed processing in step S1200 in Fig. 62;
Fig. 83 shows a television display screen showing an image on the label face of the medium in an eleventh embodiment, showing an example in which line head position setting processing has been performed at each line;
Fig. 84 a television screen view showing an example in which, from the state shown in Fig. 83, duplicate items (recording start hour and recorded channel) have been deleted from all sets of data except the first;
Fig. 85 is a television screen view showing an example in which, from the state shown in Fig. 84, a target line (line 1) has been selected and line feed processing has been performed there;
Fig. 86 is a television screen view showing an example in which, from the state shown in Fig. 85, line head position setting processing has been performed at all lines after line feeding;
Fig. 87 is a television screen view showing an example in which, from the state shown in Fig. 86, a target line (line 4) has been selected and line feed processing has been performed there;
Fig. 88 is a television screen view showing an example in which, from the state shown in Fig. 87, line head position setting processing has been performed at all lines after line feeding;
Fig. 89 is a television screen view showing an example in which, from the state shown in Fig. 88, a target line (line 6) has been selected and line feed processing has been performed there;
Fig. 90 is a television screen view showing an example in which, from the state shown in Fig. 89, line head position setting processing has been performed at all lines after line feeding;
Fig. 91 is a television screen view showing an example in which, from the state shown in Fig. 90, a target line (line 8) has been selected and line feed processing has been performed there;
Fig. 92 is a television screen view showing an example in which, from the state shown in Fig. 91, line head position setting processing has been performed at all lines after line feeding; and
Fig. 93 is a flow chart showing another example of the details of the line feed processing in step S1200 in Fig. 62.

### DETAILED DESCRIPTION OF PREFERRED EMBODIMENTS

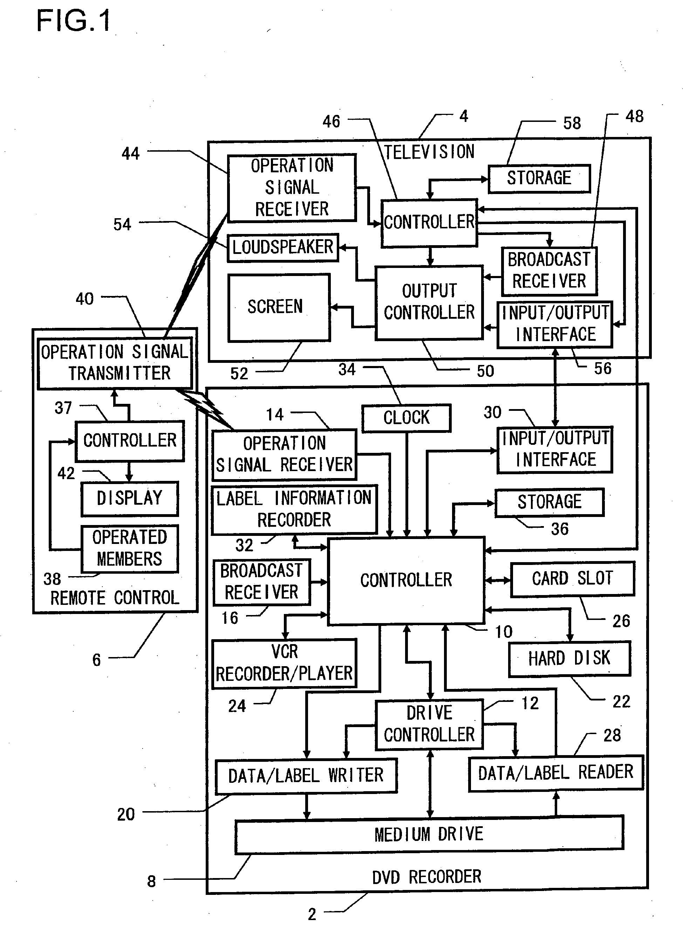

Fig. 1 is a block diagram showing a first embodiment of a disc recorder system embodying the present invention. The system is composed mainly of a DVD recorder 2 and a television 4, and also includes a remote control 6 for remotely controlling them. The DVD recorder 2 and the television 4 may be integrated together.

The DVD recorder 2 has a medium drive 8 that handles a removable, disc-shaped storage medium such as a DVD or CD (hereinafter referred to as a medium). The medium drive 8 has a slot into which to insert a medium and an inserting/ejecting mechanism. The medium drive 8, driven by a drive controller 12 that is controlled by a controller 10, rotates the inserted medium.

The controller 10, operating in response to an operation signal receiver 14 that receives infrared operation signals from the remote control 6, controls the functions of the DVD recorder 2 as a whole.

The controller 10 makes a data/label writer 20 write contents data, such as a broadcast program received by a broadcast receiver 16, to the medium. Under the control of the drive controller 12, the data/label writer 20 moves radially relative to the medium as the medium is rotated, and writes the contents data to the medium while scanning its data face with laser light. Moreover, in response to the operation signal receiver 14, the controller 10 can make the data/label writer 20 write, to the data face of the medium, movie contents data recorded on a hard disk 22, movie contents data recorded on a video tape in a VCR recorder/player 24, or still picture contents data recorded on a memory card inserted in a card slot 26.

Furthermore, in response to the operation signal receiver 14, the controller 10 can make a data/label reader 28 read the contents recorded on the medium and output the contents via an input/output interface 30 to the television 4 so that the contents are played back and displayed on it. Under the control of the drive controller 12, the data/label reader 28 moves radially relative to the medium as the medium is rotated, and reads the contents data while scanning the data face of the medium with laser light. For easier understanding of their functions, the data/label writer 20 and the data/label reader 28 are illustrated as separate blocks in Fig. 1; in practice, they are built as a single module and share part of their components, such as an optical system.

The medium inserted into the medium drive 8 has a data face on one side (recording side) and a label face on the other side (label side). With a common type of medium, after data is recorded in its data face, the title of the recorded contents can be hand-written with a marker pen, or printed with a printer, on the label face of the medium. The medium drive 8 accepts, other than such a common type of medium, also the type of medium that is, on its label face, provided with a color-changeable layer that changes its color on exposure to heat or light (hereinafter referred to as "label-burnable type".

When burning an image on the label face of a label-burnable medium, the medium is inserted reversely (with its reverse face in the foreground) into the medium drive 8. The controller 10 can then make the data/label writer 20 burn, on the label face of the label-burnable medium, a label-burning image (which means an image to be burned as a label) recorded in a label information recorder 32. Specifically, under the control of the drive controller 12, the data/label writer 20 moves radially relative to the medium as the medium is rotated, and burns the image on the label face of the medium while scanning it with laser light and thereby changing the color of the color-changeable layer. Thus, for the purpose of burning an image on the label face, the data/label writer 20 uses the very mechanism and functions for writing contents to the data face. Here, what the data/label writer 20 actually performs is "burning" of a label image, but since it achieves that by use of the same mechanism for writing contents, it is referred to as "writer" with respect to not only data but also labels. It should however be noted that, throughout the present specification, for easy understanding, writing of a label is referred to as "burning" of it, and thus that "burning" in essence denotes the same thing as "writing".

The information stored in the label information recorder 32 for use when burning a label includes various kinds of information, including information on what is recorded in the data face, such as the titles of contents, and information on the recording dates and times of contents as obtained from a clock 34. This will be discussed later.

The programs and other information that the controller 10 needs for its operation are stored in a storage 36. The storage 36 can also temporarily store the data that the controller 10 needs for its operation.

The medium drive 8 accepts insertion of a medium even when the power to the DVD recorder 2 is off. To achieve that, the medium drive 8 is provided with a detector that detects insertion of a medium, and this detector is constantly fed with a feeble stand-by current. When the detector detects insertion of a medium, the power to the DVD recorder 2 is turned on.

Instead, in a case where the slot of the medium drive 8 adopts a construction involving a tray that moves out of and back into a cabinet, the medium drive 8 may be provided with a detector that detects an operation trying to move the tray out, with the detector fed with a feeble stand-by current. This allows the power to the DVD recorder 2 to be turned on detection of an operation trying to move the tray out.

In either case, the power to the DVD recorder 2 can be turned on by insertion of a medium; thus the power to the DVD recorder 2 does not need to be turned on before insertion of a medium.

The remote control 6 includes a controller 37. When the remote control 6 is in a DVD recorder operation mode, the controller 37 detects manual operations made with operated members 38, such as buttons and keys, and makes an operation signal transmitter 40 transmit corresponding infrared operation signals. As described previously, these infrared operation signals are received by the operation signal receiver 14 of the DVD recorder 2, which then operates accordingly.

Moreover, the controller 37 of the remote control 6 controls a display 42 to display on it the operation mode of the remote control 6 and the results of operations made.

When the remote control 6 is brought into a television operation mode, the operation signal transmitter 40 transmits infrared operation signals to the television 4. These are received by an operation signal receiver 44, in response to which a controller 46 operates to control the functions of the television 4 as a whole. In a normal television mode, the controller 46 of the television 4 makes an output controller 50 output broadcast contents, which are received by a broadcast receiver 48, to a screen 52 and a loudspeaker 54 so that the user can watch and listen to them.

On the other hand, in a DVD mode, the output controller 50 outputs, instead of signals from the broadcast receiver 48 provided in the television 4, signals that are fed from the DVD recorder 2 via an input/output interface 56 to the screen 52 and the loudspeaker 54. Now contents from the DVD recorder 2 is outputted via the input/output interface 30 provided in it to the television 4, and the user can watch and listen to them on the television 4. The programs and other information that the controller 46 needs for its operation are stored in a storage 58. The storage 58 can also temporarily store the data that the controller 46 needs for its operation.

Moreover, the controller 10 of the DVD recorder 2 and the controller 46 of the television 4 are linked together by a digital line so that they operate in a coordinated fashion without being operated individually. For example, whether the television 4 outputs contents signals from the broadcast receiver 48 or contents signals from the input/output interface 56 to the screen 52 and the loudspeaker 54 can be switched according to the operation of the DVD recorder 2, with no operation on the television 4.

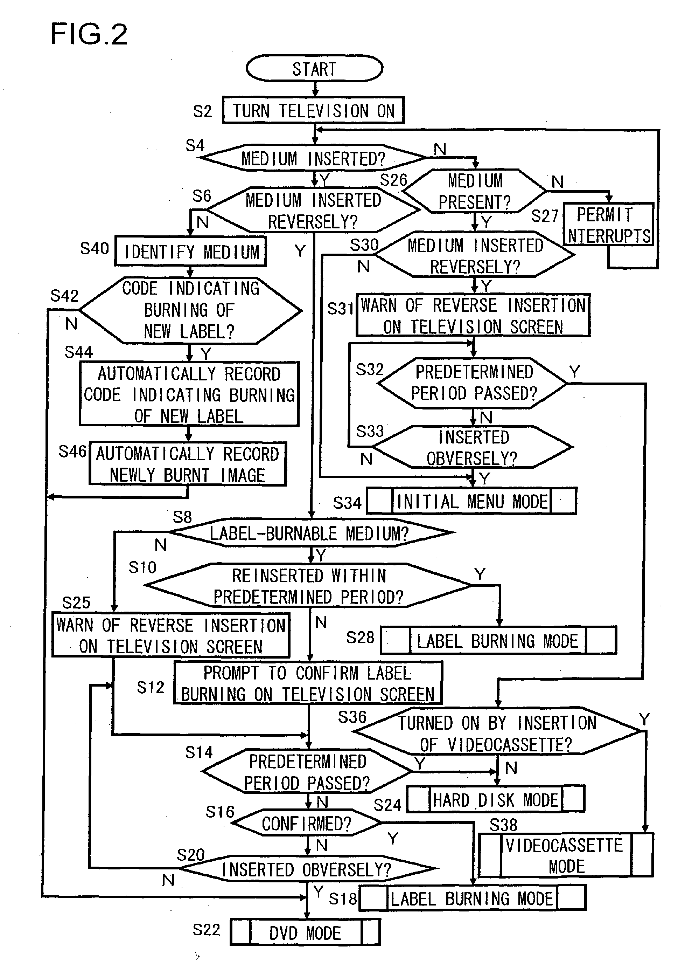

Fig. 2 is a flow chart showing the functions that the controller 10 of the DVD recorder 2 shown in Fig. 1 performs when the power is turned on. When the power to the DVD recorder 2 is turned on, the flow starts so that, in step S2, the power to the television 4 is turned on in a coordinated fashion. Thus, with a single operation, the power to the DVD recorder 2 and that to the television 4 are both turned on, allowing the operation status of the DVD recorder 2 and other messages to be displayed on the screen 52 of the television 4.

Next, in step S4, based on a signal from the medium drive 8 and the drive controller 12, whether or not a medium has been newly inserted is checked. If the flow proceeds directly from step S2 to step S4 and a medium is found to have been newly inserted, it means that the power to the DVD recorder 2 has been turned on not as a result of, as usual, the operation signal receiver 14 turning it on in response to an operation made on the remote control 6, but by insertion of the medium. When a medium is found to have been newly inserted, the flow proceeds to step S6, where, based on a signal from the medium drive 8 and the drive controller 12 or a signal from the data/label reader 28, whether or not the medium is inserted reversely is checked. If the medium is inserted reversely, the flow proceeds to S8, where whether or not the inserted medium is of the label-burnable type is checked. This check too is done based on a signal from the medium drive 8 and the drive controller 12 or a signal from the data/label reader 28. If the medium is of the label-burnable type, the flow proceeds to step S10.

In step S10, based on a signal from the medium drive 8 and the drive controller 12, whether or not the medium has been once ejected and then reinserted within a predetermined period is checked. The significance of this check will be described later. If step S10 is reached as a result of the power to the DVD recorder 2 being turned on by insertion of the medium, no such ejection-reinsertion sequence has ever taken place, and therefore the flow proceeds to step S12, where a message prompting the user to confirm whether or not label burning is intended is displayed on the screen 52 of the television 4. Here, the message may be accompanied with an audible announcement to the same effect. With the message kept displayed, the flow proceeds to step S14.

In step S14, whether or not a predetermined period has passed since the start of the display in step S12 is checked; if not, the flow proceeds to step S16. In step S16, whether or not the user has so operated the operated members 38 of the remote control 6 as to confirm that he intends label burning is checked; if so, the flow proceeds to step S18 to enter a label burning mode.

In this way, in step S12, a message is outputted to ask the user whether or not he has inserted the medium for label recording; moreover, in step S16, the user's response to that asking is confirmed. This user interface ensures that a switch to the label burning mode takes place after the confirmation of the user's intention.

On the other hand, if, in step S16, no operation by the user is recognized, the flow proceeds to step S20, where, based on a signal from the medium drive 8 and the drive controller 12 or a signal from the data/label reader 28, whether or not the user has reinserted the medium obversely (with its obverse face in the foreground). In case the user has inserted a medium reversely by mistake with no intention of label burning, the message that starts to be displayed in step S12 makes the user recognize his mistake; thus, the user is expected to reinsert the medium obversely. If, in step S20, the user is found to have actually reinserted the medium obversely, the flow proceeds to step S22 to enter the DVD mode.

If, in step S20, the medium is found not to have been reinserted obversely, the flow returns to step S14. Thereafter, until a predetermined period is found to have passed, the loop through steps S14, S16, and S20 is repeated to wait for confirmation by the user in step S16 or reinsertion of the medium in step S20. When, in step S14, the predetermined period is found to have passed, the flow proceeds to step S24 to enter a hard disk mode (HDD mode). This is because, for one thing, data recording is impossible with a medium inserted obversely and, for another, no proper processing on a medium can be expected when, despite immediately after insertion of the medium, the user does not confirm his intention of label burning.

On the other hand, if, in step S8, the medium is not of the label-burnable type, the flow proceeds to step S25. This only happens when the user has inserted the medium in the wrong way, and that is so clear that there is no need to confirm the user's intention. Thus, in step S25, a message explicitly pointing out that the medium is inserted reversely is displayed on the screen 52 of the television 4. This message too may be accompanied with an audible announcement to the same effect. With the message kept displayed, the flow proceeds to step S14.

In this case, since the user is not expected to make a confirmation operation in step S16, the flow proceeds to step S20, where whether or not the medium has been reinserted is checked. If the medium is found to have been reinserted obversely, the flow proceeds to step S22 to enter the DVD mode.

On the other hand, if, in step S20, the medium is not found to have been reinserted obversely, the flow returns to step S14. Thereafter, until a predetermined period is found to have passed, the loop through steps S14, S16, and S20 is repeated to wait for reinsertion of the medium in step S20. When, in step S14, the predetermined period is found to have passed, the flow proceeds to step S24 to enter the hard disk mode.

In this way, according to the result of the check of whether or not the medium is of the label-burnable type, the user is guided by different messages. This user interface helps alleviate embarrassment and confusion on the part of the user.

Next, a description will be given of the case in which, in step S4, no medium is found to be newly inserted. This means that the power to the DVD recorder 2 has been turned on as a result of, as usual, an operation to turn it on being made. Then, in step S26, based on a signal from the medium drive 8 and the drive controller 12 or a signal from the data/label reader 28, whether or not a medium has already been inserted in the medium drive 8 is checked. If the medium drive 8 is empty, the flow proceeds to step S27 to permit interrupts for accepting various operations, and then returns to step S4. Thereafter, until a medium is found to be newly inserted in step S4, the loop through steps S4, S26, and S27 is repeated. Here, since interrupts are permitted in step S27, whenever an operation is performed, the flow escapes from the loop.

If, while the loop is repeated, a new medium is found to be newly inserted in step S4, the flow proceeds to step S6 to perform the operations already described. In this case, in step S10, the medium may be found to have been once rejected and then reinserted within a predetermined period. If so, the flow immediately proceeds to step S28 to enter the label burning mode. That is, this is considered to happen when the user has once ejected the medium and then subsequently reinserted it reversely with an intention of label burning. Thus, to prevent embarrassment and trouble on the part of the user, the operations in steps S12 and S16 are omitted, and the flow promptly enters the label burning mode.

If, in step S26, a medium has already been inserted in the medium drive 8, the flow proceeds to step S30, where, based on a signal from the medium drive 8 and the drive controller 12 or a signal from the data/label reader 28, whether or not the medium is inserted reversely. If the medium is inserted reversely, in step S31, a warning message to that effect is displayed on the screen 52 of the television 4. This message to may be accompanied with an audible announcement to the same effect. With the message kept displayed, the flow proceeds to step S32.

In step S32, whether or not a predetermined period has passed since the start of the display in step S31 is checked; if not, the flow proceeds to step S33. In step S33, based on a signal from the medium drive 8 and the drive controller 12 or a signal from the data/label reader 28, whether or not the user has reinserted the medium obversely is checked. If, in step S33, the user is found to have reinserted the medium obversely, the flow proceeds to step S34 to enter an initial menu mode. In this way, if a medium has already been inserted in the medium drive 8, every time the power is turned on, whether or not the medium is inserted reversely is checked and, if so, a warning is given to make the user reinsert the medium with obversely; then the flow enters the initial menu mode. If a medium has been left inserted with reversely until the power is turned on, there is little likeliness that the user have intended to perform label burning. Thus, in that case, irrespective of whether or not the medium is of the label-burnable type, no message for conformation like that in step S12 is displayed.

If, in step S30, the medium is inserted obversely, the flow proceeds immediately to step S34 to enter the initial menu mode.

On the other hand, if, in step S33, the medium is not found to be inserted obversely, the flow returns to step S32. Thereafter, until a predetermined period is found to have passed in step S32, steps S32 and S33 are repeated. When, in step S32, the predetermined period is found to have passed, the flow proceeds to step S36.

In the DVD recorder 2 according to the present invention, just as the power to it is turned on by insertion of a medium, the power to it is also turned on by insertion of a videocassette into the VCR recorder/player 24. In step S36, based on a signal from the VCR recorder/player 24, whether or not the power has been turned on by insertion of a videocassette is checked and, if so, the flow proceeds to step S38 to enter a videocassette recorder mode.

If, in step S36, it is not by insertion of a videocassette that the power has been turned on, the flow proceeds to step S24 to enter the hard disk mode. This is because, with the medium kept inserted reversely, no proper processing on the medium can be expected.

Next, a description will be given of the case in which, in step S6, the medium is inserted obversely. In this case, the flow proceeds to step S40, where the data/label reader 28 reads the ID of the medium from its data face to identify the medium. Next, the flow proceeds to step S42, where whether or not a tag indicating that a new session of burning has been performed on the label face of the identified medium is recorded in the label information recorder 32 of the DVD recorder 2 is checked. If such a tag is recorded, the flow proceeds to step S44, where the tag is automatically recorded in the data face of the medium. Then, the flow proceeds to step S46, where the very image newly burned on the label face is automatically recorded in the data face of the medium, and the flow proceeds to step S22 to enter the DVD mode.

If, in step S42, no tag indicating that a new session of burning has been performed on the label face of the medium is recorded in the label information recorder 32 of the DVD recorder 2, the flow proceeds immediately to step S22 to enter the DVD mode.

In this way, according to the present invention, every time a medium is inserted into the DVD recorder 2, the medium is identified and, if new information is found about label burning on the identified medium, it is automatically recorded in the data face. This has the following significance: when label burning on a medium has just been finished, the medium is inserted reversely, and thus no change can be effected on the medium but on the label face; thus a change is effected on the label face, and the information about the change is, along with the ID of the medium, held in the DVD recorder 2 so that later, when the same medium is inserted obversely for the first time, the operations in steps S40 through S46 are automatically performed, and thereby the information recorded in the data face is updated to reflect the change in information effected on the label face. This is useful to keep consistency between the information recorded in the data face and that recorded on the label face. This feature will be described in more detail later.

Fig. 2 assumes that the flow starts with the turning on of the power; in practice, once the power is turned on, at any time point thereafter, irrespective of whatever state the DVD recorder 2 is in, whenever a medium is newly inserted, the flow jumps to step S6 to perform the operations in step S6 and the subsequent steps.

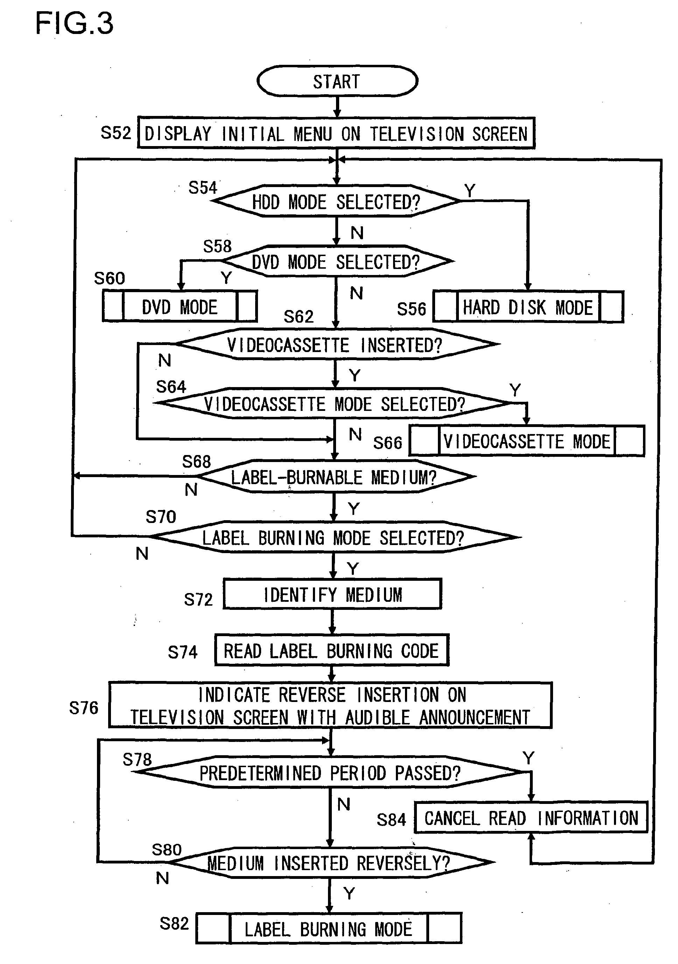

Fig. 3 is a flow chart showing the details of the initial menu mode in step S34 in Fig. 2. It should be noted that, in the description of the flows shown in Fig. 3 and the subsequent drawings, the following facts are not always explicitly mentioned: the insertion and ejection of a medium, the determination of the direction in which it is inserted and ejected, the checks of its type and ID, etc. are handled by the controller 10 based on a signal from the medium drive 8 and the drive controller 12 or a signal from the data/label reader 28; on the other hand, the checks of the user's intention, such as mode selection, is handled by the controller 10 in response to the operation signal receiver 14, which receives infrared signals from the remote control 6. These facts apply equally in the second and subsequent embodiments described later.

When the flow of the initial menu mode shown in Fig. 3 starts, in step S52, an initial menu is displayed on the television screen. The initial menu allows access to various modes.

First, in step S54, whether or not the hard disk mode is selected is checked. If so, the flow proceeds to step S56 to enter the hard disk mode; if not, the flow proceeds to step S58.

In step S58, whether or not the DVD mode is selected is checked. If so, the flow proceeds to step S60 to enter the DVD mode; if not, the flow proceeds to step S62.

In step S62, whether or not a videocassette is inserted in the VCR recorder/player 24 is checked. If so, the flow proceeds to step S64 to check whether or not a videocassette mode is selected. If so, the flow proceeds to step S66 to enter the videocassette mode; if not, the flow proceeds to step S68. If, in step S62, no videocassette is inserted in the VCR recorder/player 24, the flow proceeds immediately to step S68.

In step S68, whether or not the medium inserted in the medium drive 8 is of the label-burnable type is checked, and, if so, the flow proceeds to step S70 to check whether or not the label burning mode is selected is checked. If so, the flow proceeds to step S72; if not, the flow returns to step S54. If, in step S68, the medium is not of the label-burnable type, the flow returns immediately to step S54.

Thereafter, until any of the available modes is selected, the loop through steps S54 to S70 is repeated.

In step S72, the ID of the medium is read from its data face to identify the inserted medium. Next, in step S74, the label burning tag is read from the data face, and this, along with the ID, is recorded in the label information recorder 32 of the DVD recorder 2. The label burning tag serves as basic information when creating label-burning image, and is read and recorded before the medium is ejected to be reinserted reversely.

Next, in step S76, a message prompting the user to reverse the medium and reinsert it reversely for label burning is displayed on the screen 52 of the television 4, and an audible announcement to the same effect is made from the loudspeaker 54. With the message kept displayed, the flow proceeds to step S78.

In step S78, whether or not a predetermined period has passed since the start of the display in step S76 is checked, and, if not, the flow proceeds to step S80. In step S80, whether or not the medium has been reinserted reversely by the user is checked. If, in step S80, the medium is found to have been reinserted reversely by the user, the flow proceeds to step S82 to enter the label burning mode.

On the other hand, if, in step S80, the medium is not found to have been reversely inserted, the flow returns to step S78, and thereafter, until a predetermined period has passed, the steps S78 and S80 are repeated. If, in step S78, the predetermined period is found to have passed, the flow proceeds to step S84 to cancel from the label information recorder 32 of the DVD recorder 2 the label burning tag information read in step S74, and then returns to step S54. This is because, if the medium is not inserted reversely within the predetermined period, it is considered to mean that the user has no intention of label burning for the time being.

Back starting with step S54, the operations described above are repeated so that, when step S74 is reached again, the label burning tag is newly read from the data face of the medium, and this is, along with the ID, recorded in the label information recorder 32 of the DVD recorder 2. Thus, the user can, whenever he likes, insert the medium reversely to enter the label burning mode.

If, in step S24 in Fig. 2 or in step S56 in Fig. 3, the flow enters the hard disk mode, it does not go through the user-interface steps involving display and operation relating to label burning, like step S12 in Fig. 2 and step S70 in Fig. 3. In this way, different user interfaces, in terms of display and operation, are used between in the DVD mode, in which label burning may be required, and in the hard disk mode, in which label burning is never required, so as not to cause unnecessary confusion on the part of the user.

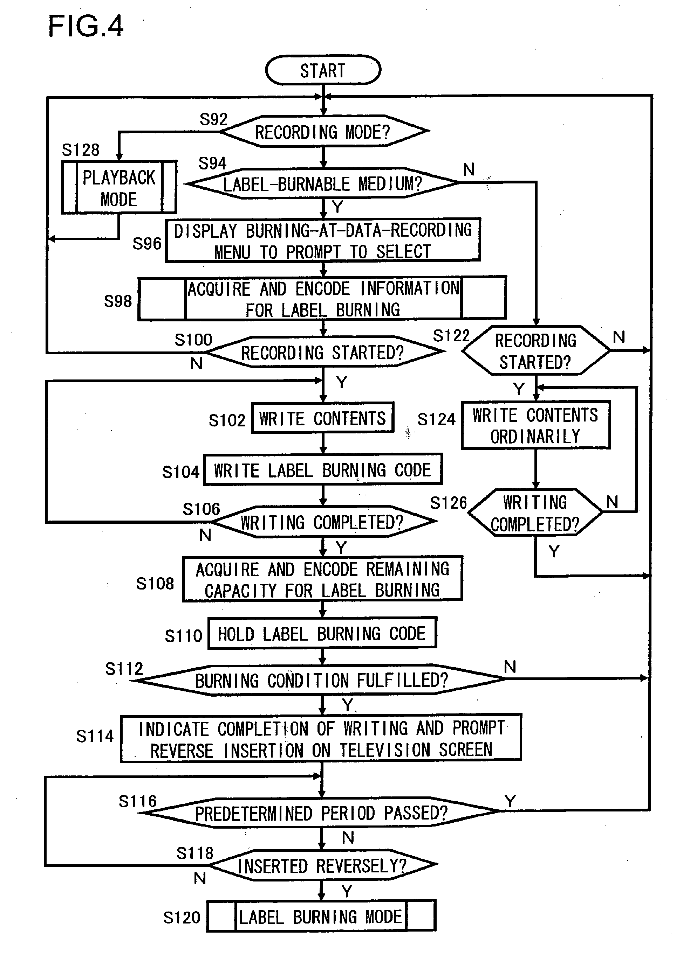

Fig. 4 is a flow chart showing the details of the DVD mode in step S22 in Fig. 2 and in step S60 in Fig. 3. When the flow starts, in step S92, whether or not a DVD recording mode has been entered is checked. If so, the flow proceeds to step S94 to check whether or not the medium is of the label-burnable type is checked. If so, the flow proceeds to step S96 to display a burning-at-data-recording menu, and prompt its selection. "Burning at data recording" denotes that recording to the data face is immediately followed by burning on the label face, and its menu allows selection among a few different conditions for burning.

Although step S96 is illustrated as a single step, in practice it includes a step of displaying the menu and a step of waiting a predetermined period for a selection operation to be made. As soon as a selection operation is made, the flow proceeds to step S98; if no selection operation is made within the predetermined period, a "conditional burning-at-data-recording menu" is automatically selected, and the flow proceeds to step S98. The menu and how a selection is made on it will be described in detail below.

After a selection is made on the menu, the flow proceeds to step S98 to acquire information for label burning and encode it for the creating of a burning image. This step will be described in more detail later. Next, in step S100, whether or not an operation requesting starting of recording of data has been made is checked. If so, the flow proceeds to step S102; if not, the flow returns to step S92 to be ready for the next operation in the DVD mode.

In step S102, contents are written to the data face and then, in step S104, the label burning tag acquired and encoded in step S98 is written to the data face. Then, in step S106, whether or not the writing of the contents and the label burning tag has been completed is checked.

If, in step S106, the writing is found to have been completed, the flow proceeds to step S108. If not, the flow returns to step S102 so that, until the writing is found to have been completed, the loop through steps S102 to S106 is repeated.

In step S108, the remaining capacity on the data face after completion of the writing is acquired, and this is encoded as data for label burning. Next, in step S110, the tags for the creation of a label-burning image obtained in steps S98 and S108 are held in the label information recorder 32. Now, even when the medium is ejected, information relating to the information written to the data face, that is, information needed to create a label-burning image, remains in the DVD recorder 2.

Next, in step S112, whether or not a condition is fulfilled that requires that recording to the data face be immediately followed by label burning is checked. This condition is previously set, for example in step S96, and, if the condition is fulfilled, the flow proceeds to step S114 to display messages indicating completion of writing on the data face and prompting the user to reverse the medium and reinserting it reversely for label burning on the screen 52 of the television 4. The messages may be accompanied with audible announcements to the same effect. With the messages kept displayed, the flow proceeds to step S116.

In step S116, whether or not a predetermined period has passed since the start of the display in step S114 is checked, and, if not, the flow proceeds to step S118. In step S118, whether or not the medium has been reinserted reversely by the user is checked. If, in step S118, the medium is found to have been reinserted reversely by the user, the flow proceeds to step S120 to enter the label burning mode.

On the other hand, if, in step S118, the medium is not found to have been inserted reversely, the flow returns to step S116, and thereafter, until the predetermined period has passed, steps S116 and S118 are repeated. If, in step S116, the predetermined period is found to have passed, the flow returns to step S92 to be ready for the next operation in the DVD mode. This is because, if the medium is not inserted reversely within the predetermined period, it is considered to mean that the user has changed his intention not to perform label burning for the time being. Even if label burning is not started at this stage, at any time thereafter, an operation can be made to jump to the label burning mode.

If, in step S94, the medium is not of the label-burnable type, the flow proceeds to step S122 to check whether or not an operation requesting starting of recording of data has been made. If so, the flow proceeds to step S124 to write contents to the data face. Then, in step S126, whether or not the writing of the contents has been completed is checked.

If, in step S126, the writing is found to have been completed, the flow proceeds to step S92 to be ready for the next operation in the DVD mode. If the writing has not been completed, the flow returns to step S124 so that, until the writing is found to have been completed, steps S124 and S126 are repeated. If no operation requesting starting of recording has been made, the flow returns to step S92 to be ready for the next operation in the DVD mode.

If, in step S92, a recording mode has not been entered, the flow proceeds to step S128 to enter a playback mode. When an operation requesting ending of the playback mode is made, the flow returns to step S92 to be ready for the next operation in the DVD mode.

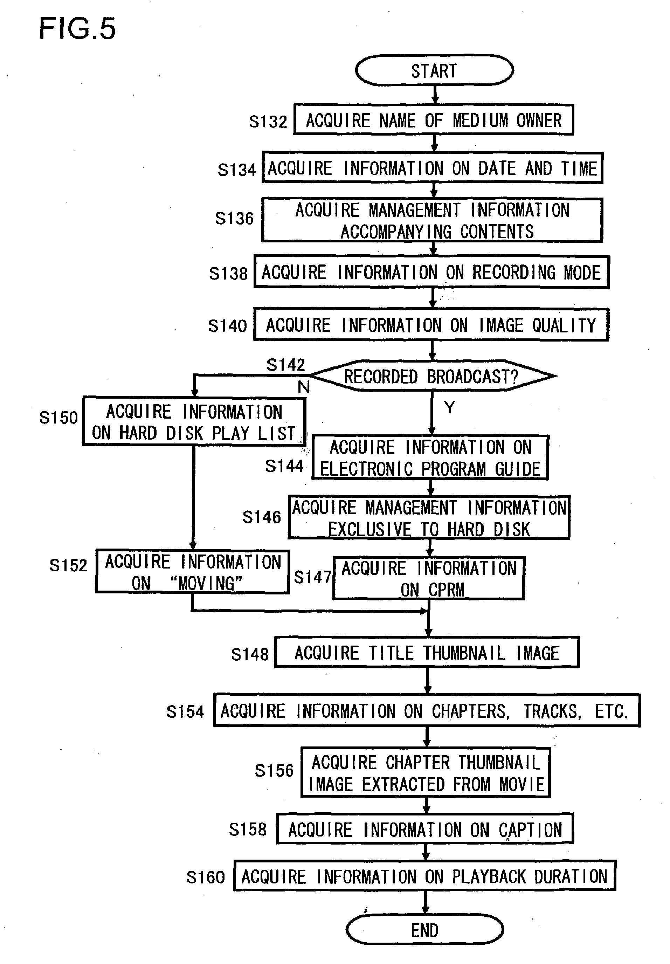

Fig. 5 is a flow chart showing the details of the acquisition and encoding of label-burning information in step S98 in Fig. 4. When the flow starts, in step S132, the name of the owner of the medium is acquired, by being read from the data face of the medium, and encoded. Then, in step S134, information on the date and time of writing to the medium is acquired from the clock 34 of the DVD recorder 2. Then, in step S136, from the source of the contents stored in the hard disk 22 or the like, information for management that accompanies the contents, such as the original recording date and time, is acquired. Next, in step S138, information on the recording mode is acquired, and then, in step S140, information on image quality is acquired.

In step S142, whether or not the source of the contents is a broadcast is checked, and if so, the flow proceeds to step S144 to acquire information on the recorded program from an electronic program guide. Then, in step S146, information that is used for writing to the hard disk 22 but that is not recorded to a medium such as a DVD is acquired and encoded. Then, in step S147, if the contents are copy-right-protected by CPRM or the like, the relevant information is acquired and encoded, and the flow proceeds to step S148.

If, in step S142, the contents are not a recorded broadcast, what is about to be performed is regarded as dubbing from the hard disk 22 and thus, in step S150, information on the play list of the hard disk 22 is acquired. Then, in step S152, in a case where what is about to be performed is "moving", whereby dubbing is performed form the hard disk 22 and then the original in the hard disk 22 is deleted, the relevant information is acquired and enclosed, and the flow proceeds to step S148.

In step S148, a title thumbnail image of the contents is acquired. Then, in step S154, information on chapters, tracks, and the like is acquired. Moreover, in step S154, a chapter thumbnail image extracted from the movie contents is acquired. Then, in step S158, information on a caption to be superimposed on the image is acquired. Next, in step S160, information relating to the playback duration of the contents is acquired, and the flow for the acquisition and encoding of label-burning information now comes to an end. The information acquired in any of the relevant steps described above is encoded whenever necessary.

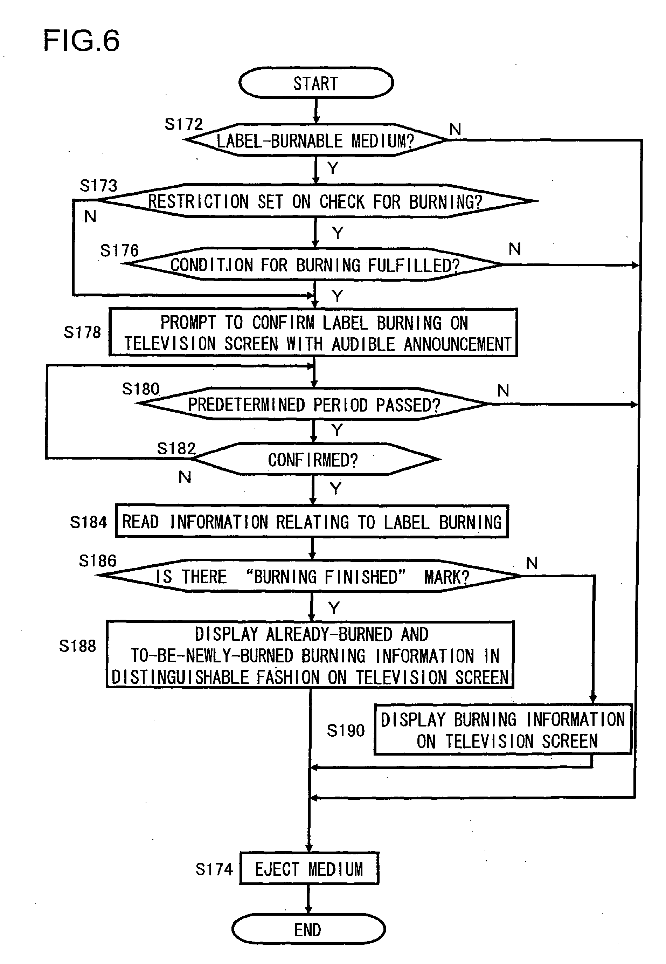

Fig. 6 is a flow chart showing the functions that the controller 10 performs when an operation requesting ejection of the medium is made in the DVD recorder 2 shown in Fig. 1. When the flow starts as a result of an operation requesting ejection of the medium is made on the remote control 6, first, in step S172, whether or not the medium about to be ejected is of the label-burnable type is checked. If so, the flow proceeds to step S173; if not, the flow jumps to step S174 to immediately eject the medium, and then the flow ends.

If the medium is of the label-burnable type and the flow proceeds to step S173, whether or not any restriction has been set to be imposed on the check of whether or not to perform label burning is checked. If any such restriction has been imposed, the flow proceeds to step S176 to check whether or not the condition for label burning is fulfilled.

If the condition for label burning is fulfilled, the flow proceeds to step S178. If, in step S176, the condition for label burning is not fulfilled, the flow jumps to step S174 to eject the medium, and then the flow ends. If, in step S173, no restriction has been set to be imposed on the check of whether or not to perform label burning, the flow proceeds directly to step S178.

In step S178, a message prompting the user to confirm whether or not to perform label burning is displayed on the screen 52 of the television 4, and an audible announcement to the same effect is made from the loudspeaker 54. With the message kept displayed, the flow proceeds to step S180.

In step S180, whether or not a predetermined period has passed since the start of display in step S178 is checked and, if not, the flow proceeds to step S182. In step S182, whether or not the user has confirmed his intention of label burning on the remote control 6 is checked and, if so, the flow proceeds to step S184.

On the other hand, if, in step S182, no such confirmation by the user has been recognized, the flow returns to step S180, and thereafter, until the predetermined period has passed, steps S180 and S182 are repeated. If, in step S180, the predetermined period is found to have passed, the flow jumps to step S174 to eject the medium, and then the flow ends.

In step S184, information relating to label burning recorded in the data face is read. Then, in step S186, whether or not the read data includes a "label-burning finished" mark, and, if so, the flow proceeds to step S188. In step S188, the label-burning information that has already been burned and that which is going to be newly burned are displayed in a visually distinguishable fashion on the screen 52 of the television 4. With this kept displayed, the flow proceeds to step S174 to eject the medium, and then the flow ends.

The visual distinction in the display in step S188 is achieved, for example, by displaying the already-burned and the to-be-newly-burned information in different colors, or by blinking one of them.

On the other hand, if, in step S186, no "burning finished" mark is found, the flow proceeds to step S190 to display the label-burning information that is going to be newly burned on the screen 52 of the television 4. With this kept displayed, the flow proceeds to step S174 to eject the medium, and then the flow ends.

The display started in step S188 or S190 is kept displayed even after the medium is reinserted reversely. The displayed information is used when a label is burned on the reversely inserted medium; the information may be burned as it is, or may be manually edited and corrected before being burned.

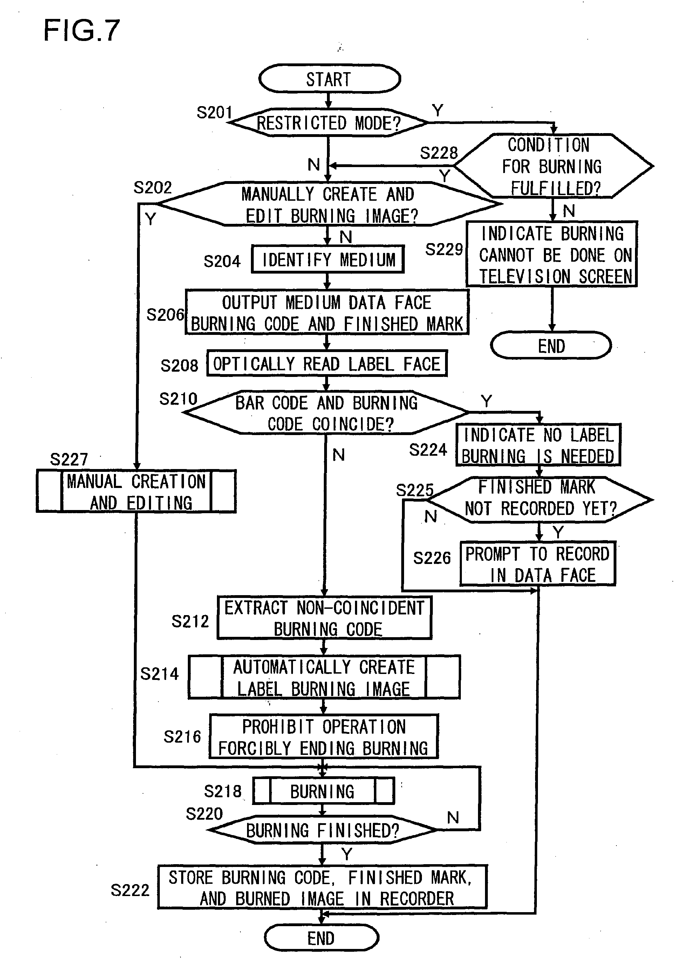

Fig. 7 is a flow chart showing the details of the label burning mode in steps S18 and S28 in Fig. 2, in step S82 in Fig. 3, and in step S120 in Fig. 4. When the flow starts, in step S201, whether or not a label burning restricted mode has been set is checked.

In the first embodiment of the present invention, once a label is burned, it cannot be erased. On the other hand, with respect to the data recorded on the data face, whereas some types of medium do not allow it to be erased or corrected once recorded, other types of medium allow it to be rewritten many times. To cope with this, a mode is provided that prohibits label burning until the contents in the data face are definitely fixed. This mode is called the label burning restricted mode.

If the label burning restricted mode has not been set, the flow proceeds to step S202 to check whether or not a setting has been made to manually create and edit a label-burning image. If no setting for manual creation and editing has been made, the flow proceeds to step S204 and the following steps for automatic creation. In step S204, the ID of the medium is read from its label face to identified the inserted medium.

Next, in step S206, with respect to the identified medium, the data face burning tag and the "burning finished" mark recorded in the label information recorder 32 are outputted. Then, in step S208, the label face is optically read. The information optically read here includes a bar code burned on the label face.

In step S210, whether or not the bar code optically read from the label face coincides with the data face burning tag outputted in step S206 is checked. If they do not coincide, the flow proceeds to step S212 to extract the non-coincident burning tag. The extracted burning tag corresponds to information to be newly burned. Then, in step S214, based on the non-coincident burning tag, a label-burning image is automatically created. How this proceeds will be described in detail later.

Next, in step S216, prohibition is imposed against forced termination of burning in progress, and then the flow proceeds to step S218 to start burning. Then, in step S220, whether or not burning has been finished is checked, and, if so, the flow proceeds to step S222. On the other hand, if burning has not been finished, the flow returns to step S218, and thereafter, until burning is finished, steps S218 and 220 are repeated.

In step S222, the burning tag, the "burning finished" mark, and the burned image are, along with the ID of the medium, stored in the label information recorder 32 of the DVD recorder 2, and then the flow ends.

If, in step S210, the bar code coincides with the burning tag, the flow proceeds to step S224 to display on the screen 52 of the television 4 a message indicating that no label burning is necessary. Then, the flow proceeds to step S225 to check whether or not the information outputted in step S206 to be burned on the data face of the medium includes a burning tag for which the corresponding "burning finished" mark has not been recorded (hereinafter, such a burning tag is referred to as a "burning tag with no burning finished mark"). If there is any burning tag with no "burning finished" mark, the flow proceeds to step S226 to display on the screen 52 of the television 4 a message prompting the user to record a "burning finished" mark on the data face, and then the flow ends.

If, in response to the prompting, the user reinserts the medium obversely, then, through the operations in steps S40 to S46, a "burning finished" mark and a label-burning image are written to the data face of the medium.

On the other hand, if, in step S225, there is no burning tag with no "burning finished" mark, the flow immediately ends.

If, in step S202, a setting has been made to manually create and edit a label-burning image, the flow proceeds to step S227 to manually create and edit a label-burning image, and then proceeds to step S218 to start burning.

If, in step S201, the label burning restricted mode has been set, the flow proceeds to step S228 to check whether or not a condition for permitting burning is fulfilled. A condition for permitting burning is, for example, either that the medium has been finalized or that the contents written to the data face have been protected.

If, in step S228, any of such conditions for permitting burning is fulfilled, the flow proceeds to step S202 to perform the same operations as described above. On the other hand, if, in step S228, no condition for permitting burning is fulfilled, the flow proceeds to step S229 to display on the screen 52 of the television 4 a message indicating that burning cannot be performed, and then the flow ends. The message may be audibly rendered.

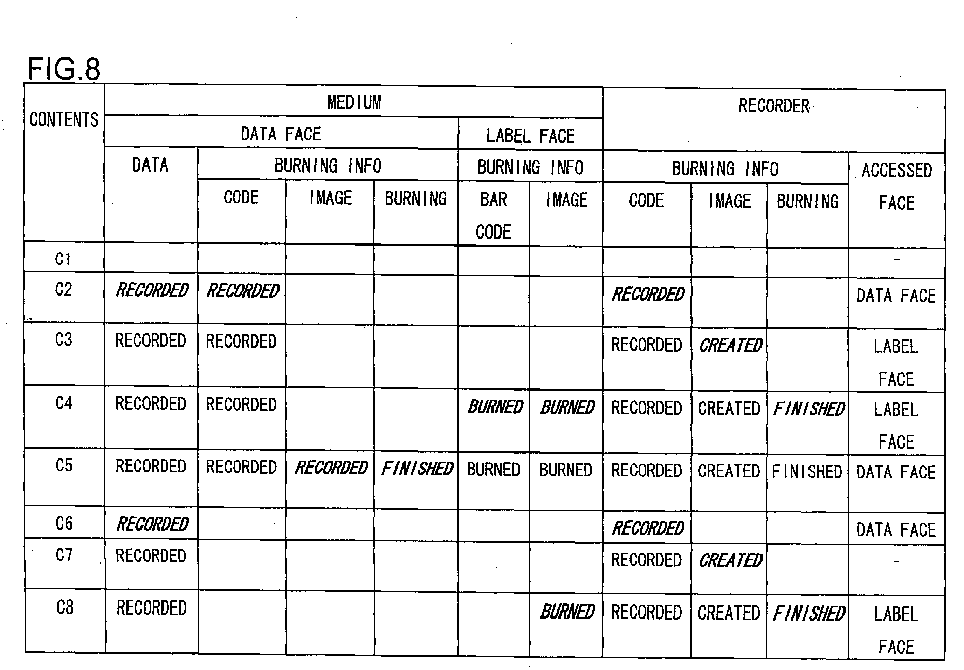

Fig. 8 is a table summarizing the label management described above. This table shows the relationship among the information written to the data face of the medium, the information burned on its label face, the burning information held in the label information recorder 32 of the DVD recorder 2, and the faces of the medium that the data/label writer 20 accesses, with respect to contents C1 to C8 in different stages.

In Fig. 8, with respect to contents C1, no writing to the data face, no burning on the label face, and no holding of information in the DVD recorder 2 have been done yet. In contrast, for contents C2, the contents have been, along with the corresponding label face burning tag, written to the data face. In this status, the label face burning tag is held in the label information recorder 32 as well. This status of contents C2 corresponds to the stage where the operations in steps S102 and S110 in Fig. 4 have been gone through.

Further advanced from the status of contents C2, the status of contents C3 is such that the necessity to create a label-burning image in the DVD recorder 2 has been recognized and actually one has been created. This corresponds to the stage where the operations in steps S204 to S214 in Fig. 7 have been gone through. In the table, in a given stage, information that newly appears there is indicated in bold italic letters, and information that has appeared in a previous stage is indicated in ordinary letters. For example, with respect to contents C3, the contents and the label face burning tag written to the data face and the label face burning tag held in the label information recorder 32 have appeared in the status of contents C2, and are thus indicated in ordinary letters; in contrast, the label-burning image newly created in the DVD recorder 2 is indicated in bold italic letters.

Further advanced from the status of contents C3, the status of contents C4 is such that label burning has been performed. Here, an image and a burning tag in the form of a bar code are burned on the label face, and, at the end of the burning, a "burning finished" mark is recorded in the label information recorder 32 in the DVD recorder 2. This corresponds to the stage in which the operations in steps S216 to S222 in Fig. 7 have been gone through.

Lastly, further advanced from the status of contents C4, the status of contents C5 is such that the "burning finished" mark and the burned image have been written to the data face of the medium as well. This corresponds to the stage in which the operations in steps S40 to S46 in Fig. 2 have been gone through.

Next, based on the status of contents C1 to C5 shown in Fig. 8 and described above, a practical example of how label burning is managed will be described. First, if, as in contents C4, a tag bar code (a bar code corresponding to a burning tag) has been burned on the label face, a label image having information corresponding to that tag must also have been burned on the label face. On the other hand, the contents written to the data face is known from the label burning tag written in the data face. Accordingly, if the label burning tag read from the data face coincides with the label burning tag read in the form of a bar code from the label face, it is then known that an image corresponding to information of the contents written in the data face has already been burned on the label face, and that the contents written in the data face correspond to the burned label image.

For example, when a medium having contents C3 and C4 written in its data face is inserted reversely, then, through steps S204 to S208 in Fig. 7, whether or not the label burning tag on the data face coincides with the bar code on the label face is checked in step S210. They coincide with respect to contents C4, but do not with respect to contents C3. Since there is thus a non-coincident tag, in step S212, the non-coincident tag is extracted; specifically, in this case, the burning tag of contents C3 is extracted. Then, in step S214, based on the burning tag for contents C3, and with consideration given to the image already burned for contents C4, a label-burning image is automatically created.

As described above, with respect to contents C4, unless bar code information is read from the label face, it is not known whether or not the burning of a label image has been competed; when the status of contents C5 is reached, simply by reading the data face, it is known whether or not the burning of a label image corresponding to the contents in the data face has been completed.

Accordingly, by ensuring that reaching the status of contents C4 guarantees reaching the status of contents C5, in other words, by ensuring that the status of contents C4 practically does not occur, it is possible, simply by reading the data face, to check whether or not the burning of a label image corresponding to contents has been completed. This can be made possible by adopting a configuration in which, without a medium being manually reinserted reversely, recording to the data face and burning on the label face can be automatically performed in a correlated fashion. This will be described in connection with the embodiments described later.

The contents C6 to C8 correspond to contents C2 to C4, respectively; in the former, however, the writing of the label burning information to the data face is omitted for a simpler configuration. With respect to contents C6 to C8, no comparison of the label-burning information is made between the data face and label face of the medium; thus, the burning of a tag bar code is also omitted.

With contents C6 to C8, instead of label face burning management based on information read from the medium, label burning management is performed based exclusively on the label burning tag and the "burning finished" mark recorded in the label information recorder 32 of the DVD recorder 2.

Such simplification is useful in cases where media are used exclusively on a particular DVD recorder (specifically, the DVD recorder on which the media were processed for the writing of data and the burning of label as described above). In such cases, information on all media and on all the contents recorded in them can be grasped by the DVD recorder itself that handled such recording; thus, based on the burning information, burning images, and "burning finished" marks recorded in the label information recorder 32, it is possible to manage the burning of label images corresponding to the contents on the data face of media.

For example, when a medium having contents C7 and C8 written in its data face is inserted, by referring to the label information recorder 32 according to the ID that identifies that medium, it is possible to know that label burning has been completed for contents C8 but not yet for contents C7.

It should be noted that the following description of the first embodiment assumes that no simplification like that described above is involved and that contents C1 to C5 are dealt with.

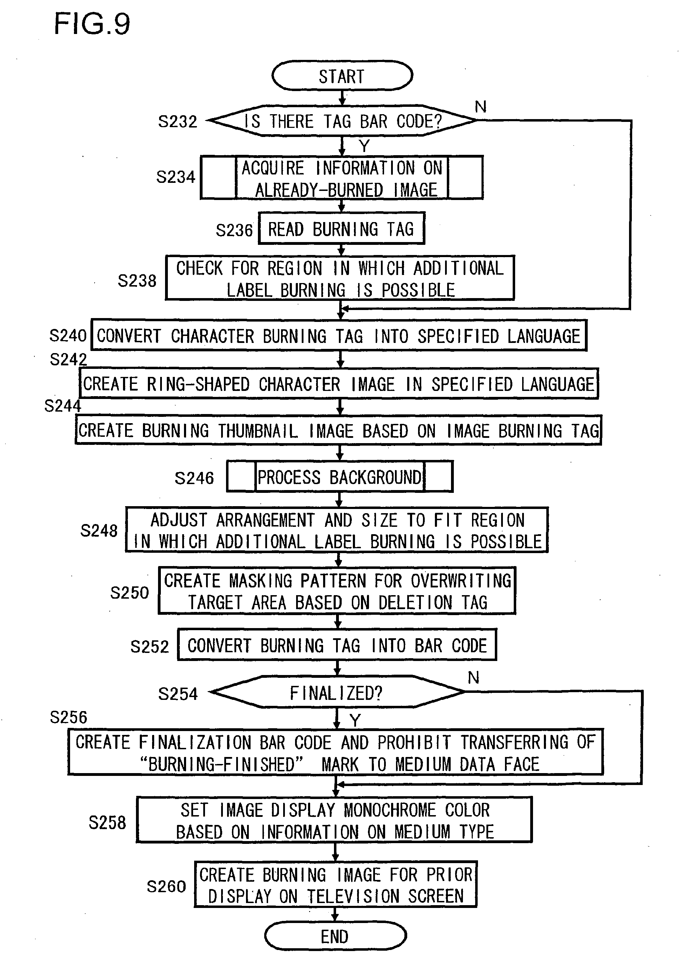

Fig. 9 is a flow chart showing the details of the automatic creation of label-burning image in step S214 in Fig. 7. When the flow starts, in step S232, whether or not there is a tag bar code on the label face is checked to thereby check whether or not there is an image already burned on the label face of the medium. If there is such an image, the flow proceeds to step S234 to acquire information on the already burned image. How this proceeds will be described later.

Then, in step S236, based on the acquired information on the already burned image, the corresponding burning tag is read. Then, in step S238, based on the burning tag of the already burned image, the label face is checked for a region in which additional burning is possible, and the flow proceeds to step S240. Here, the purpose of checking for a region in which additional burning is possible is to prevent inadvertent double burning.

On the other hand, if, in step S232, no tag bar code has been burned and thus no image has been burned on the label face, the flow proceeds directly to step S240.

In step S240, if a burning tag for characters is in a language different from the specified language, the language in which burning is performed is converted. For example, if a burning tag is information in English and the specified language is Japanese, the information is converted into Japanese.

Next, in step S242, based on the burning tag in the specified language, characters are laid out into a ring shape to create a burning character image. According to the present invention, label burning is performed by scanning the label face of a medium while the medium is rotated. Thus, when the image of the characters to be burned is laid out into a ring shape concentric with the rotating scanning direction, it is possible to complete the scanning of the entire character image with minimum movement of the data/label writer 20 in the radial direction. This helps reduce the time required to burn the character image compared with when it is laid out into a rectilinear shape.

In step S244, a thumbnail image for burning is created based on a burning tag for an image, and, in step S246, a background for it is processed. How this proceeds will be described in detail later.

Next, in step S248, the new burning image is arranged in the region where additional burning has been found to be possible in step S238 and, as necessary, the size of the new burning image is adjusted. Specifically, if there is any image that has already been burned, this is taken into consideration in setting the arrangement and size of the new image so that the new image is laid out outside the region in which the exiting image is written; in this way, double burning is prevented.

Then, in step S250, based on a deletion tag, a masking pattern is created that is so laid out as to overwrite the target area. As described previously, in the first embodiment of the present invention, once a label is burned, it cannot be erased. Thus, when some contents in the data face are erased and a label corresponding to them has already been burned, there is no choice but to create a masking pattern with which to doubly burn and thereby overwrite the already burned area. Step S250 serves this purpose, permitting a masking pattern to be created and overwrite where deletion is needed.

A typical masking pattern may be a double cross-out line or the like which has been conventionally defined to mean a deletion of once written words. Instead of such a prosaic pattern, it is also possible to adopt any, selected to match the shape of the area to be overwritten, of various patterns comprising, for example, heart marks and illustrations of flowers and animals.

In step S252, the burning tag is converted into a bar code for burning on the label face. Next, in step S254, whether or not the medium has been finalized is checked. If the medium has been finalized, in step S256, a bar code indicating that it has been finalized is created, and prohibition is imposed against transfer-writing of the "label-burning finished" mark in the label information recorder 32 to the data face of the medium. While this prohibition is imposed, the operations in steps S42 to S46 are not performed. This is because, if the data face has been finalized and label burning is performed on the label face, an attempt to write the "burning finished" mark to the data face fails, and this contradicts what is required in the operations in steps S44 and S46.

Next, in step S258, based on the result of the check of the type of the medium, the monochrome color in which to display the burning image is set. This, since different types of medium appear to have different colors on their label face, makes it possible to present a preview of the burning image in a monochrome color that suits the color that the recognized medium type appears to have. For example, if the medium is recognized to be one that appears to have a bluish-purple color on its label face, a monochrome color in bluish-purple is displayed; with a medium whose label face appears to be green, a monochrome color in green is displayed. In this way, on the screen 52 of the television 4, a preview image is displayed in a color true to the actual color in which an image is going to be burnt. Next, in step S260, a burning image to be displayed beforehand on the television screen is created in the color thus determined, and then the flow ends.

In the burning image created in step S260 to be displayed beforehand on the television screen, the already-burned image acquired in step S234 and the to-be-newly-burned image based on step S248 or S250 are superimposed together. To display these superimposed images in a visually distinguishable fashion, for example, one of them is blinked.

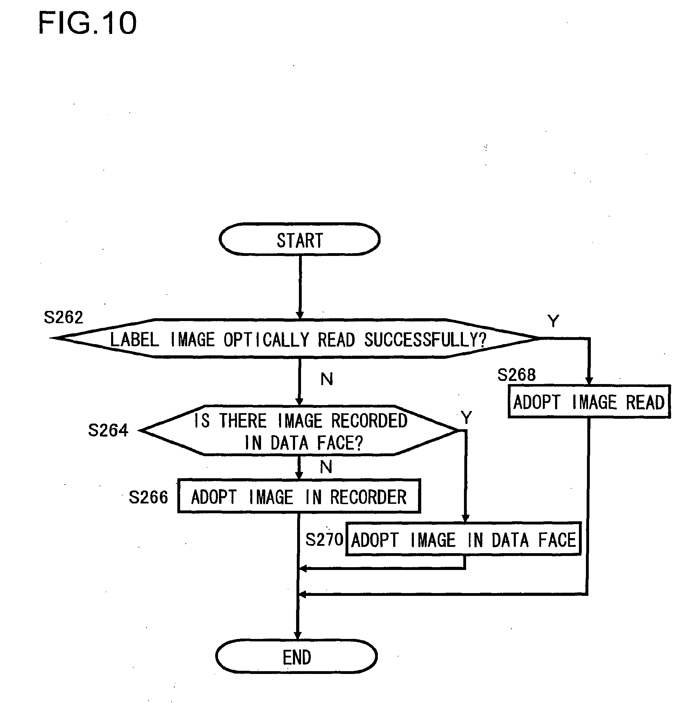

Fig. 10 is a flow chart showing the details of the burned image information acquisition in step S234 in Fig. 9. When the flow starts, in step S262, whether or not the label image has been optically read successfully is checked, and, if not, in step S264, whether or not there is an image recorded in the data face is checked. If no image is recorded there either, in step S266, the image recorded in the label information recorder 32 of the DVD recorder 2 is adopted, and then the flow ends.

On the other hand, if, in step S262, the label image has been optically read successfully, the flow proceeds to step S268 to adopt the image optically read, and then the flow ends. If, in step S264, there is an image recorded in the data face, the flow proceeds to step S270 to adopt the image recorded in the data face.

The significance of the flow shown in Fig. 10 is that, when acquiring an image burned on a label, priority is given to one that is as close as possible to the original. Specifically, if the label image itself can be optically read, the image so read is adopted; if this is impossible, the image that is original at least at the level of the medium, i.e. the one recorded in its data face, is adopted; if even this is impossible, the image stored in the DVD recorder 2 is used.

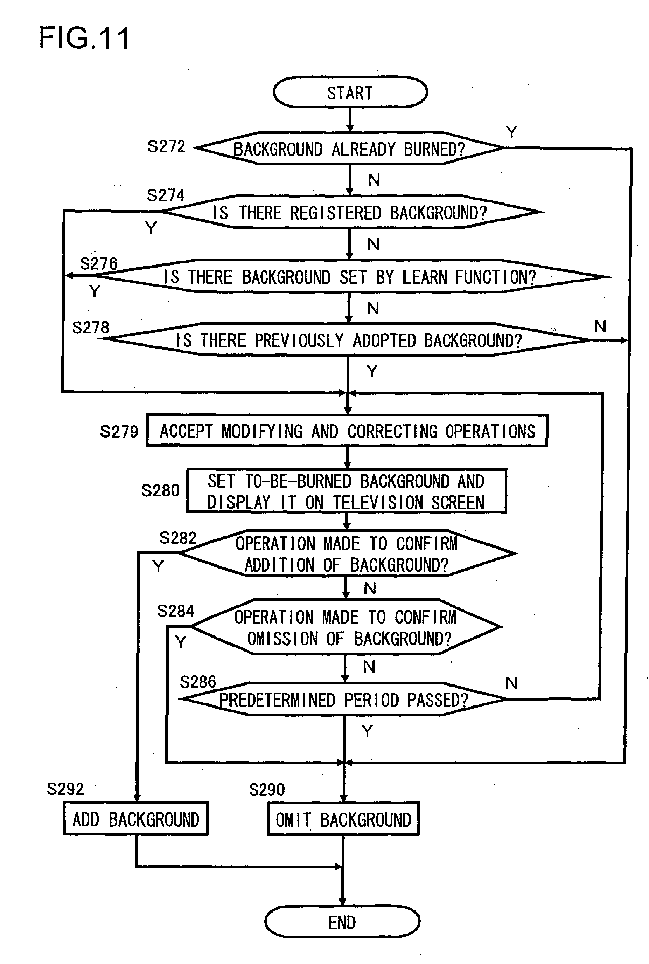

Fig. 11 is a flow chart showing the details of the background processing in step S246 in Fig. 9. When the flow starts, in step S272, whether or not a background has already been burned on the label face is checked. If no background has been burned yet, the flow proceeds to step S274 to check whether or not a background to be burned has previously been registered. Incidentally, it is possible to previously register different backgrounds for different owners of media, and whenever the owner of an inserted medium can be identified, the background registered by its owner is extracted.

If no previously registered background can be extracted, the flow proceeds to step S276 to check whether or not there is a background that can be determined by a "learn" function. In this step, by the "learn" function, an analysis of the backgrounds that the owner of the inserted medium has selected in the past is made to extract from them one frequently and recently selected.

If there is no background that can be extracted by the "learn" function, the flow proceeds to step S278 to extract the previously adopted background, and then proceeds to step S279. If a background can be extracted in step S274 or S276, the flow then proceeds directly to step S279.

In step S279, the user is allowed to make operations to modify and correct, as he likes, the background extracted as described above. Since no correction is needed at first, the flow proceeds directly to step S280. In step S280, the extracted background is set as the background that is going to be burned, and is displayed on the screen 52 of the television 4.

Then, in step S282, whether or not an operation confirming the addition of that background has been made is checked. If no such operation has been made, the flow proceeds to step S284 to check whether or not an operation confirming omission of a background has been made. If no such operation has been made, the flow proceeds step S286 to check whether or not a predetermined period has passed since the background that has been set to be newly burned started to be displayed on the screen 52 of the television 4. If the predetermined period has not passed, the flow returns to step S279. Thereafter, unless an operation is made in step S282 or S284 or the predetermined period is found to have passed in step S286, the loop through steps S279 to S286 is repeated.

While this loop is repeated, in step S280, the user is allowed to make operations to correct or modify the displayed background that is going to be burned. If, in step S279, such an operation is accepted, in step S280, the background that has been set to be burned is modified or corrected, and the resulting new background is displayed on the screen 52 of the television 4. At this point, the count of the predetermined period checked in step S286 is reset so that it starts to be counted from zero again.

If, in step S286, the predetermined period is found to have passed, in step S290, burning is set to be performed with no background, and then the flow ends. What is shown in Fig. 11 is a flow that is executed as part of the automatic creation of a burning image shown in Fig. 9 and, as described above, if no operation is made in the course of the flow, the predetermined period after its start, burning with no background is automatically selected.

In general, where there are a character information image and a background image, the background image occupies a larger area than the character information image. Thus, by selecting burning with no background by default, it is possible to write an image with no background so as not to occupy a large area or take a long time to burn it. In this way, it is possible to prevent burning from taking an unduly long time.

If, in step S282, an operation is made to confirm addition of a background, the flow proceeds to step S292 to perform burning with a background added, and then the flow ends. If, in step S284, an operation is made to confirm omission of a background, the flow proceeds to step S290 without waiting the predetermined period.

If, in step S272, a background has already been burned, even when the burning image has a background, this background is forcibly omitted and the flow proceeds to step S290 to perform burning with no background. This prevents double burning of backgrounds, which generally each occupy the entire burnable region.

If, in step S278, there is no previously adopted background, it means that there is no background at all that is fit to be extracted even at this stage. Thus, since it is no longer appropriate to automatically add a background, the flow proceeds to step S290 to perform burning with no background.

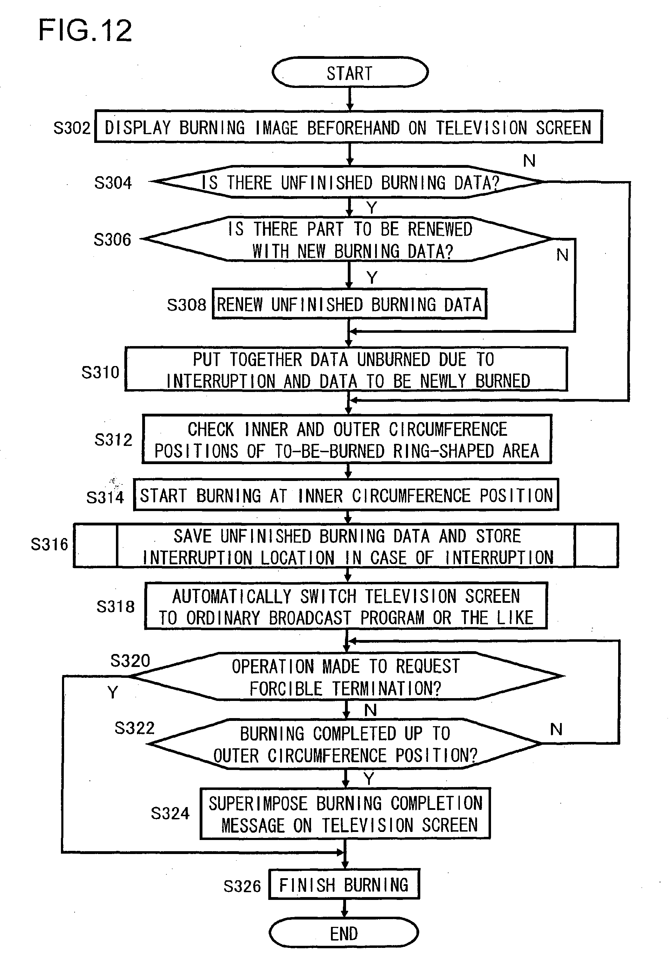

Fig. 12 is a flow chart showing the details of the burning processing in step S218 in Fig. 7. When the flow starts, in step S302, the burning image is displayed beforehand on the television screen. This offers a preview of the image before burning.

Next, in step S304, whether or not there is data that has been left partly unburned as a result of burning being interrupted. Such unfinished burning data arises when burning is interrupted by an unforeseeable incident like a power failure, and also arises when burning is forcibly terminated intentionally.

Next, if there is any unfinished burning data as described above, the flow proceeds to step S306 to check whether or not the part renewed by the new burning data lies within the unfinished burning data. If the renewed part lies within the unfinished burning data, instead of just restarting burning, the flow proceeds to step S308 to renew the relevant part of the unfinished burning data with the new burning data, and then the flow proceeds to step S310. If, in step S306, there is no renewed part, the flow proceeds directly to step S310.

In step S310, the unfinished burning data resulting from interrupted burning and the new burning data are put together into a single burning image, and the flow proceeds to step S312. Since the layout of the image has already been determined through the flow for automatic creation of a label burning image shown in Fig. 9, the past burning image left unburned and the new burning image smoothly fit together. For example, an unburned ring-shaped area and a to-be-newly-burned ring-shaped area are put together into a single continuous ring-shaped area. On the other hand, if, in step S304, there is no unfinished burning data, the flow proceeds directly to step S312.

In step S312, the inner and outer circumference positions of the to-be-burned ring-shaped area are checked. Then, in step S314, burning is started from the inner circumference position of the to-be-burned ring-shaped area. This helps shorten the burning time compared with when burning is always started from the innermost circumference position of the label burning region.

Next, in step S316, precautional measures against interruption of burning are taken so that, in case burning is interrupted, unfinished burning data can be saved and the location of interruption is stored. Specifically, the label information recorder 32 is designed as a nonvolatile recorder; moreover, in the to-be-burned data stored there, the location up to which burning has been completed is tracked and kept updated as burning progresses. Thus, when burning is interrupted, the burning completion position is no longer updated, and in this way the location of interruption is stored. Moreover, since the to-be-burned data is stored in the nonvolatile label information recorder 32, unfinished burning data can easily be saved. When burning is actually interrupted, with appropriate timing thereafter, unfinished burning data is processed appropriately for later management.

The measures described above are simply precautionally taken, and therefore the saving of data and the storing of the interruption location are performed when burning is actually interrupted. That is, unless burning is interrupted, no operation is performed that affects the later operations. Thus, the flow quickly passes through step S316 to proceed to step S318.

In step S318, the screen 52 of the television 4 is automatically switched from the beforehand display of the burning image to, for example, an ordinary broadcast program. This automatic switching is achieved by transmitting the broadcast received by the broadcast receiver 16 of the DVD recorder 2 from the controller 10 via the input/output interface 30 to the input/output interface 56 of the television 4. Instead, the controller 46 may be made to switch such that the broadcast received by the broadcast receiver 48 of the television 4 is outputted from the output controller 50. In this case, a command to switch is transmitted from the controller 10 of the DVD recorder 2 to the controller 46 of the television 4.

In either case, through the operations described above, as soon as burning is started in step S314, the screen 52 of the television 4 is automatically switched to, for example, an ordinary broadcast program. This saves the user from wasting his time doing nothing while burning is performed.

Next, in step S320, whether or not an operation has been made to request forcible termination of burning is checked and, if not, in step S322, whether or not burning has been completed up to the outer circumference position of the to-be-burned ring-shape area is checked. If burning has not been completed up to the outer circumference position, the flow returns to step S320, and thereafter, unless an operation is made to request forcible termination of burning, step S320 and S322 are repeated.

If, in step S322, burning is found to have been completed up to the outer circumference position, the flow proceeds to step S324 to display a message indicating completion of burning by superimposing it on the ordinary broadcast program or the like being displayed on the screen 52 of the television 4. The flow then proceeds to step S326 to finish label burning, and then ends. The display started in step S324 is continued for a predetermined period after the end of the flow. This display notifies the user, who is enjoying a broadcast program or the like, of the completion of the label burning.

As described above, when, in step S322, burning is found to have been completed up to the outer circumference position of the to-be-burned ring-shaped area, the flow proceeds to step S326 to quickly finish burning. This helps shorten the burning time compared with when burning is always finished on reaching the outermost circumference position of the label burning region.

If, in step S320, an operation is found to have been made to request forcible termination of burning, the flow proceeds direct to step S326 to finish label burning. If this happens, the operations ready in step S316 are performed so that, when burning is finished, unfinished burning data is saved and the location of interruption is stored.

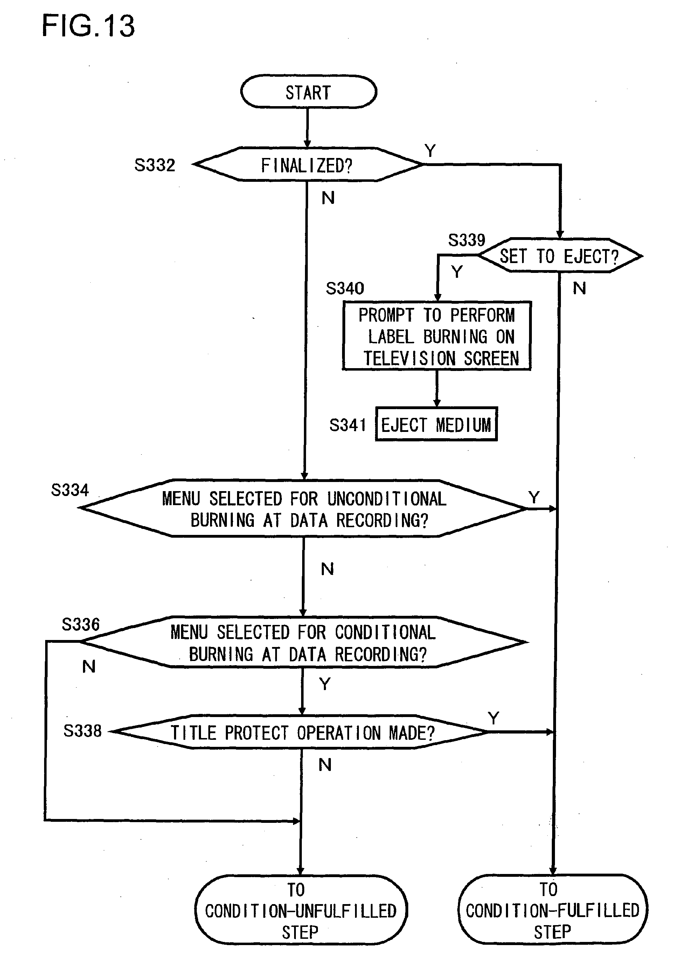

Fig. 13 is a flow chart showing the details of the burning condition checking processing in step S112 in Fig. 4 and in step S176 in Fig. 6. When the flow starts, in step S332, whether or not finalization has been done is checked. If finalization has not been done, the flow proceeds to step S334 to check whether or not a menu for performing label burning unconditionally at data recording has been selected.

If no such menu has been selected, the flow proceeds to step S336 to check whether or not a menu for performing label burning conditionally at data recording has been selected. If such a menu has been selected, the flow proceeds to step S338. In step S338, whether or not a condition for performing label burning at data recording is fulfilled is checked; specifically, in Fig. 13, an example is taken up where it is checked whether or not a title protect operation has been made to prohibit deletion of particular contents written in the data face. If the condition in step S338 is not fulfilled, the flow proceeds to the step to which it is supposed to proceed when no condition for label burning is fulfilled. Specifically, if the check is made in step S112 in Fig. 4, the flow returns to step S92; if the check is made in step S176 in Fig. 6, the flow proceeds to step S174.

On the other hand, if, in step S334, the menu for performing label burning unconditionally at data recording has been selected, the flow proceeds to the step to which it is supposed to proceed when a condition for label burning is fulfilled. Specifically, if the check is made in step S112 in Fig. 4, the flow proceeds to step S114; if the check is made in step S176 in Fig. 6, the flow proceeds to step S178. Also if, in step S338, a title protect operation has been made, the flow proceeds to the step to which it is supposed to proceed when a condition for label burning is fulfilled.

If, in step S332, finalization is found to have been done, the flow proceeds to step S339 to check whether or not a setting has been made to automatically eject the medium when a predetermined condition is fulfilled. If no such setting for medium ejection has been made, the flow proceeds to the step to which it is supposed to proceed when a condition for label burning is fulfilled.

On the other hand, if such a setting for medium ejection has been made, the flow proceeds from step S339 to step S340. In step S340, a message prompting the user to perform label burning is displayed on the screen 52 of the television 4. This message may be accompanied with an audible announcement to the same effect. Then, the flow proceeds to step S341 to automatically eject the medium.

One distinctive feature of the present invention is that, with a medium inserted obversely so that writing to the data face is possible, if a predetermined condition is fulfilled, a predetermined signal is generated to enable writing to the label face. And this function, whereby writing to the label face is enabled based on a signal, corresponds to the display of a message prompting to perform label burning as performed when the flow proceeds to step S 114 in Fig. 4 or step S 178 in Fig. 6.

The above described steps from S339 to S341 are another example for enabling writing to the label face. In this example, when a predetermined condition is fulfilled, in response to the generation of the above-mentioned predetermined signal, the medium is automatically ejected to enable writing to the label face. Here, the predetermined condition is, in Fig. 13, whether or not finalization has been done; instead, any other condition may be set. For example, the medium may be automatically ejected when a title protect operation is made.

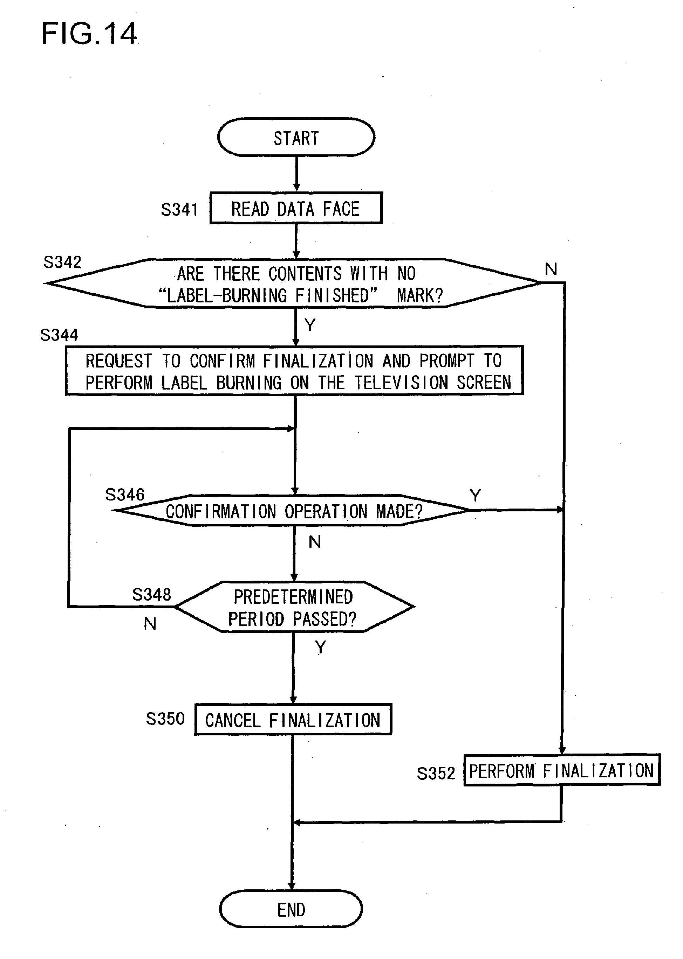

Fig. 14 is a flow chart showing the functions that the controller 10 performs when an operation requesting finalization of the medium is made on the remote control 6. When an operation requesting finalization is made, the flow starts. In step S341, the data face is read and, in step S342, based on the burning information read, whether or not any contents with no "label-burning finished" mark is written in the data face is checked.

If such contents are found, in step S344, messages requesting confirmation of intention of finalization and prompting to perform label burning are displayed on the screen 52 of the television 4. These messages may be accompanied with audible announcements to the same effect. As will be understood from Fig. 8, there are many possibilities in the relationship between the data face and label face of the medium. With a medium on which all contents have the status of contents C5 in Fig. 8, the information recorded in the data face completely coincides with that written on the label face. In this case, the result of the check in step S342 is "no".

In contrast, if the result of the check in step S342 is "yes", it means that the medium contains at least one set of contents having the status of any of contents C2 to C4 in Fig. 8. If the operations in steps S40 to S46 in Fig. 2 correctly function, no contents must have the status of contents C4, and thus any contents with no "label-burning finished" mark must be contents C2 or C3, indicating that the medium contains contents of which information is not burned on the label face.

It is to cope with such a case that, in step S344 described above, messages requesting confirmation of intention of finalization and prompting to perform label burning are displayed on the screen 52 of the television 4. Once finalization is done, no writing to the data face is any longer possible. Thus, even when label burning is thereafter performed to bring the contents into the status of contents C4 in Fig. 8, they can no longer be brought into the status of contents C5 in Fig. 8. With such a medium, it is no longer possible to confirm complete coincidence of information between the data face and the label face.

After the display in step S344, while the display is continued, in step S346, whether or not an operation has been made to confirm intention of finalization is checked. If no such operation is found to be made, the flow proceeds to step S348 to check whether or not a predetermined period has passed since the start of the display in step S344. If the predetermined period has not passed yet, the flow returns to step S346 and thereafter, unless a conformation operation is made in step S346, until the predetermined period has passed, steps S346 and S348 are repeated. If, in step S348, the predetermined period is found to have passed, the flow proceeds to step S250 to cancel finalization, and then the flow ends. In this way, with a medium that meets the condition checked in step S342, if no response is obtained to the request and prompt made in step S344, to be on the safe side, the previously made operation requesting finalization is canceled so that finalization will not be performed.

On the other hand, if in step S346, the user makes an operation to confirm intention of finalization, the flow proceeds to step S352 to perform finalization according to the user's intention. If, in step S342, there are no contents with no "label-burning finished" mark, the flow proceeds directly to step S352 to immediately perform finalization, and then the flow ends.

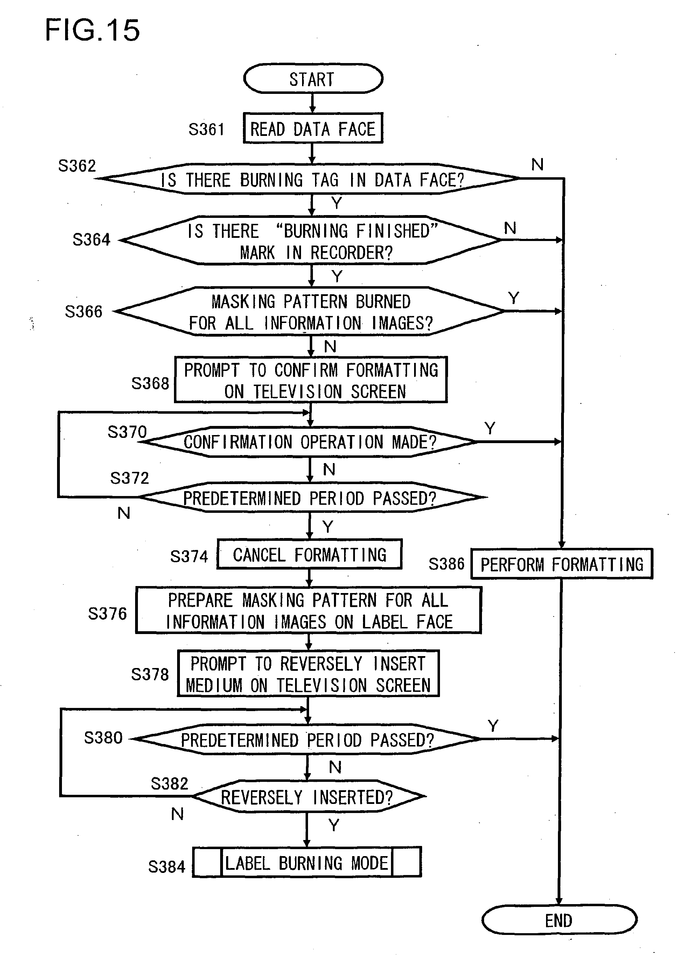

Fig. 15 is a flow chart showing the functions that the controller 10 performs when, with a rewritable medium, to delete all the data in its data face, an operation requesting formatting of the medium is made on the remote control 6. When an operation requesting formatting is made, the flow starts. In step S361, the data face is read and, in step S362, based on the burning image read, whether or not there is a burning tag in the data face is checked.

If there is a burning tag in the data face, the flow proceeds to step S364 to identify the ID of the medium in the label information recorder 32 of the DVD recorder 2 and then check whether or not, for that medium, a "burning finished" mark has been recorded. If a "burning finished" mark has been recorded, in step S366, whether or not a masking pattern has already been burned for all information images. Here, "information images" denote images relating to information indicating what is recorded in the data face, such information being, for example, the titles of the contents, and exclude images having no information relating to what is recorded in the data face, such images being, for example, background images.

If not all the images have been overwritten, the flow proceeds to step S368 to display a message requesting to confirm the user's intention of formatting on the screen 52 of the television 4. This message may be accompanied with an audible message to the same effect. The reason this is done here is as follows: the fact that step S368 is reached means that an image relating to the contents etc. in the data face has been burned on the label face; if this is ignored and simply the data face alone is formatted, inconsistency arises between the data face and the label face.

After the display in step S368, while the display is continued, in step S370, whether or not an operation confirming intention of formatting has been made is checked. If no confirmation operation is found to have been made, the flow proceeds to step S372 to check whether or not a predetermined period has passed since the start of the display in step S368. If the predetermined period has not passed, the flow returns to step S370 and thereafter, unless a confirmation operation is made in step S370, until the predetermined period has passed, steps S370 and S372 are repeated. If, in step S372, the predetermined period is found to have passed, the flow proceeds to step S374 to cancel formatting.

Next, in step S376, a burning image pattern that can overwrite all the information images on the label face is prepared, and the flow proceeds to step S378. Here, images, such as background images, that have no information relating to the contents in the data face are excluded, and no masking burning image pattern is prepared for the corresponding area.

In step S378, a message prompting the user to reinsert the medium reversely is displayed on the screen 52 of the television 4. This message may be accompanied with an audible message. With the message kept displayed, the flow proceeds to step S380.

In step S380, whether or not a predetermined period has passed since the start of the display in step S378 is checked and, if not, the flow proceeds to step S382. In step S382, whether or not the medium has been reinserted reversely by the user is checked. If, in step S382, the medium is found to haves been reinserted reversely by the user, the flow proceeds to step S384 to enter the label burning mode.

On the other hand, if, in step S382, the medium is not found to haves been inserted reversely, the flow returns to step S380, and thereafter, until the predetermined period has passed, steps S380 and S382 are repeated. If, in step S380, the predetermined period is found to have passed, the flow immediately ends. Even if label burning is not started at this stage, at any time thereafter, an operation can be made to jump to the label burning mode.

The foregoing describes the flow executed when, even though an operation requesting formatting has been made, its execution is cancelled. Now, a description will be given of the case where formatting is executed. First, if, in step S362, no burning tag is found in the data face, the flow proceeds to step S386 to perform formatting, and then the flow ends. This is because, assuming that the contents have any of the status of contents C1 to C5 in Fig. 8, if no burning tag is found in the data face, no image must have been burned on the label face.

Even if a burning tag is found in the data face, if, in step S364, no "burning finished" mark is found in the label information recorder 32 of the DVD recorder 2, the flow proceeds to step S386 to perform formatting, and then the flow ends. This is because, assuming that the contents have any of the status of contents C1 to C5 in Fig. 8, if no "burning finished" mark is found in the label information recorder 32, it can safely be judged that no image have been burned on the label face. In this case, it is assumed that no label has been burned on another label face burning device either.

Moreover, also if, in step S366, a masking pattern has already been burned for all information images, the flow proceeds to step S386 to perform formatting, and then the flow ends. If, in step S370, the user is found to have made an operation confirming his intention of formatting, according to the user's intention, the flow proceeds to step S386 to perform formatting, and then the flow ends.

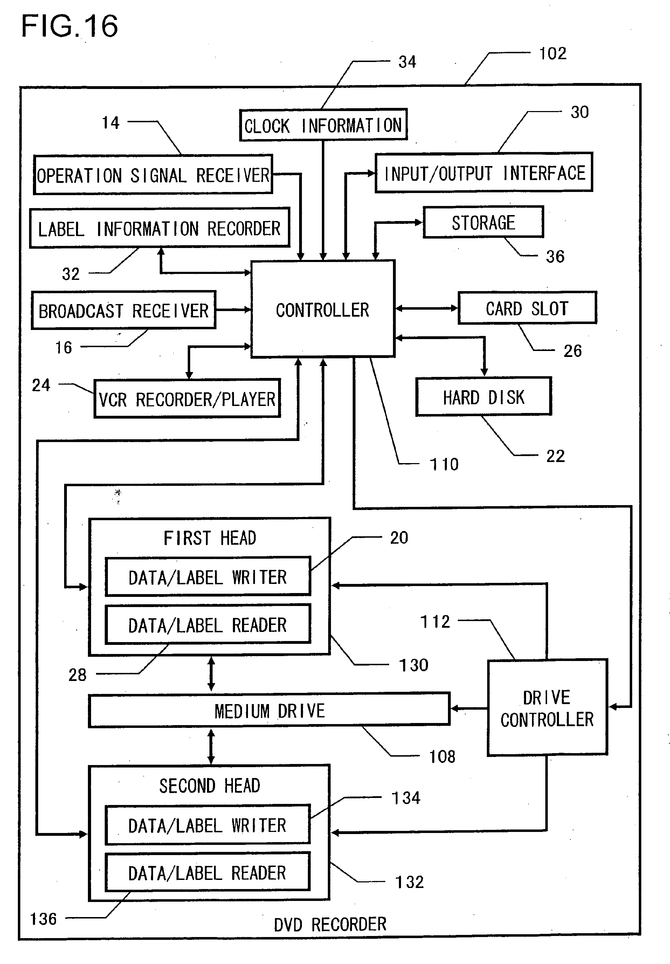

Fig. 16 is a block diagram showing a second embodiment of a disc recorder system embodying the present invention. Also in the second embodiment, the system is composed mainly of a DVD recorder 102 and a television 4, and also includes a remote control 6 for remotely controlling them. As in the first embodiment, also in the second embodiment, the DVD recorder 102 and the television 4 may be integrated together. It should be noted that, in Fig. 16, the television 4 and the remote control 6 are omitted from illustration because they are the same as in the first embodiment shown in Fig 1. Likewise, in the illustrated configuration of the DVD recorder 102, such parts as are found also in the first embodiment are identified by common reference numerals, and their description will not be repeated unless necessary.

The second embodiment shown in Fig. 16 differs from the first embodiment shown in Fig. 1 in the configuration around the medium drive. Specifically, the medium drive 8 shown in Fig. 1 accesses the inserted media on one side alone to write and read contents data and to burn and read label images; thus, to burn on and read from the label face, the medium needs to be inserted reversely. In contrast, the medium drive 108 shown in Fig. 16 accesses the inserted media on both sides to write and read contents data and to burn and read label images; thus, the medium does not need to be reversed.

In Fig. 16, the data/label writer 20 and the data/label reader 28 are quite the same as those shown in Fig. 1 and, in Fig. 16, they are illustrated together as a first head 130. Although no "first head" is illustrated in Fig. 1, also in Fig. 1, when the data/label writer 20 and the data/label reader 28 are collectively referred to, they should be understood as a "first head".

In the second embodiment shown in Fig. 16, a second head 132 having quite the same configuration as the first head 130 is provided on the opposite side of the medium drive 108. Specifically, the second head 132 is composed of a data/label writer 134 having quite the same configuration as the data/label writer 20 of the first head 130 and a data/label reader 136 having quite the same configuration as the data/label reader 28 of the first head 130.

Basically, it suffices to configure the first and second heads 130 and 132 such that one of them is capable of writing and reading data and the other is capable of burning and reading labels. In the second embodiment, however, the first and second heads 130 and 132 are each configured to be capable of both writing and reading data and burning and reading labels. There are two reasons for this: first, giving the first and second heads 130 and 132 a common configuration helps reduce cost; second, so configuring them frees the user from bothering about whether he is inserting a medium obversely or reversely.

A drive controller 112 controls the first and second heads 130 and 132 and the medium drive 108 mentioned above. A controller 110 controls the drive controller 112, and exchanges data with the first and second heads 130 and 132.

Here, naturally, no mechanism is provided for reversing the positions of the first and second heads 130 and 132.

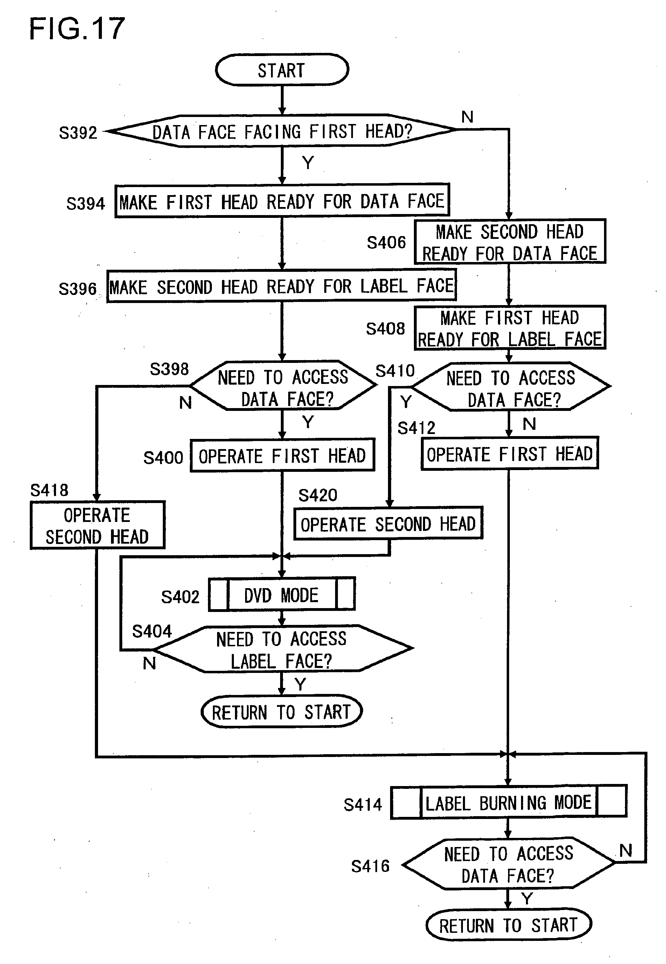

Fig. 17 is a flow chart showing the functions that the controller 110 performs to control the first and second heads 130 and 132 in the DVD recorder 102 of the second embodiment. The functions of the controller 110 are the same as those of the controller 10 of the first embodiment except those relating to reversed insertion of the medium. Specifically, "reversed insertion" in the first embodiment refers to switching the access to the medium by the head between the data face and the label face. Thus, with respect to such functions as do not care how such switching is actually achieved, reading the parts of the description of the first embodiment referring to "reversed insertion" as "switching between the first and second heads 130 and 132" makes it possible to apply the corresponding functions in the flow described in connection with the first embodiment to the second embodiment.

The flow shown in Fig. 17 starts every time a medium is inserted or a need arises to access it. In step S392, whether or not the medium is inserted in the medium drive 108 with the data face facing the first head 130 is checked. If the data face faces the first head 130, the flow proceeds to step S394 to make the first head 130 ready to handle the data face, and then proceeds to step S396 to make the second head 132 ready to handle the label face.

Next, in step S398, whether or not, for example, an operation relating to recording or reading of data has been made and as a result a need to access the data face has arisen is checked. If a need to access the data face has arisen, the flow proceeds to step S400 to drive the first head 130, and then proceeds to step S402 to enter the DVD mode. Then, in step S404, whether or not, for example, an operation relating to burning or reading of a label has been made and as a result a need to access the label face has arisen is checked. If a need to access the label face has arisen, the flow returns to its start in Fig. 17.

On the other hand, if, in step S404, no need to access the label face has arisen, the flow returns to step S402 to continue the DVD mode. Thereafter, so long as no need to access the label face is found to have arisen in step S404, the steps S402 and S404 are repeated to continue the DVD mode.

On the other hand, if, in step S392, the medium is not inserted in the medium drive 108 with the data face facing the first head 130, it means that the label face of the medium faces the first head 130. Accordingly, in this case, the flow proceeds to step S406 to make the second head 132 ready to handle the data face, and then proceeds to step S408 to make the first head 130 ready to handle the label face.

Next, in step S410, whether or not, for example, an operation relating to recording or reading of data has been made and as a result a need to access the data face has arisen is checked. If no need to access the data face has arisen, it means that a need to access the label face has arisen; thus, the flow proceeds to step S412 to drive the first head 130, and then proceeds to step S414 to enter the label burning mode. Then, in step S416, whether or not, for example, an operation relating to recording or reading of data has been made and as a result a need to access the data face has arisen is checked, and, if so, the flow returns to its start in Fig. 17.

On the other hand, if, in step S416, no need to access the data face has arisen, the flow returns to step S414 to continue the label burning mode. Thereafter, so long as no need to access the data face is found to have arisen in step S416, steps S414 and S416 are repeated to continue the label burning mode.

If, in step S398, no need to access the data face has arisen, it means that a need to access the label face has arisen; thus, the flow proceeds to step S418 to drive the second head 132, and then proceeds to step S414 to enter the label burning mode.

If, in step S410, a need to access the data face has arisen, the flow proceeds to step S420 to drive the second head 132, and then proceeds to step S402 to enter the DVD mode.

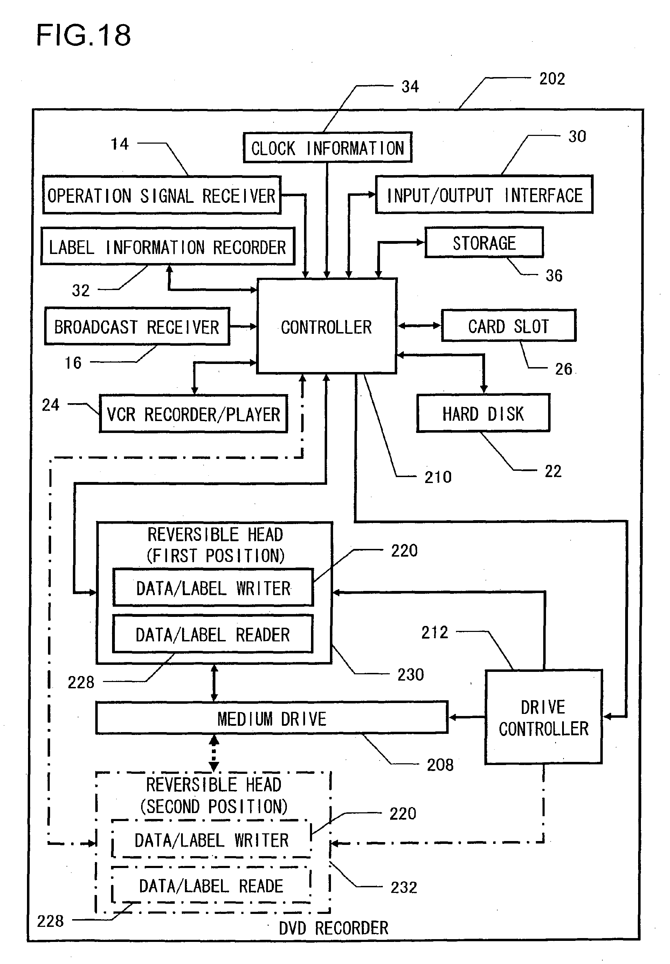

Fig. 18 is a block diagram showing a third embodiment of a disc recorder system embodying the present invention. Also in the third embodiment, the system is composed mainly of a DVD recorder 202 and a television 4, and also includes a remote control 6 for remotely controlling them. As in the first embodiment, also in the third embodiment, the DVD recorder 202 and the television 4 may be integrated together. It should be noted that, also in Fig. 18, as in the second embodiment, the television 4 and the remote control 6 are omitted from illustration because they are the same as in the first embodiment shown in Fig 1. Likewise, in the illustrated configuration of the DVD recorder 202, such parts as are found also in the first embodiment are identified by common reference numerals, and their description will not be repeated unless necessary.

The third embodiment shown in Fig. 18 differs from the first embodiment shown in Fig. 1, also here, in the configuration around the medium drive. Specifically, as in the second embodiment, the medium drive 208 can access the inserted media on both sides to write and read contents data and to burn and read label images, and does not require the medium to be reversed.

In the third embodiment shown in Fig. 18, there are provided a data/label writer 220 and a data/label reader 228 in a single pair as in the first embodiment. The difference from the first embodiment is that, here, they are configured as a reversible head whose position can be changed between on the data-face and label-face sides of the medium.

Specifically, the reversible head moves between a first position 230 indicated by solid lines and a second position 232 indicated by dash-and-dot lines on the opposite side of the medium drive 208, and thus can access the medium on both sides without it being reversed, to write and read data on the data face and to burn and read labels on the label face. As with the second embodiment, also with the third embodiment, the user can insert a medium into the medium drive 208 without bothering about whether he is inserting it obversely or reversely.

A drive controller 212 controls the data/label writer 220, the data/label reader 228, and the medium drive 208 mentioned above. A controller 210 controls the drive controller 212, and exchanges data with the reversible head (the data/label writer 220 and the data/label reader 228) located in the first or second position 230 or 232.

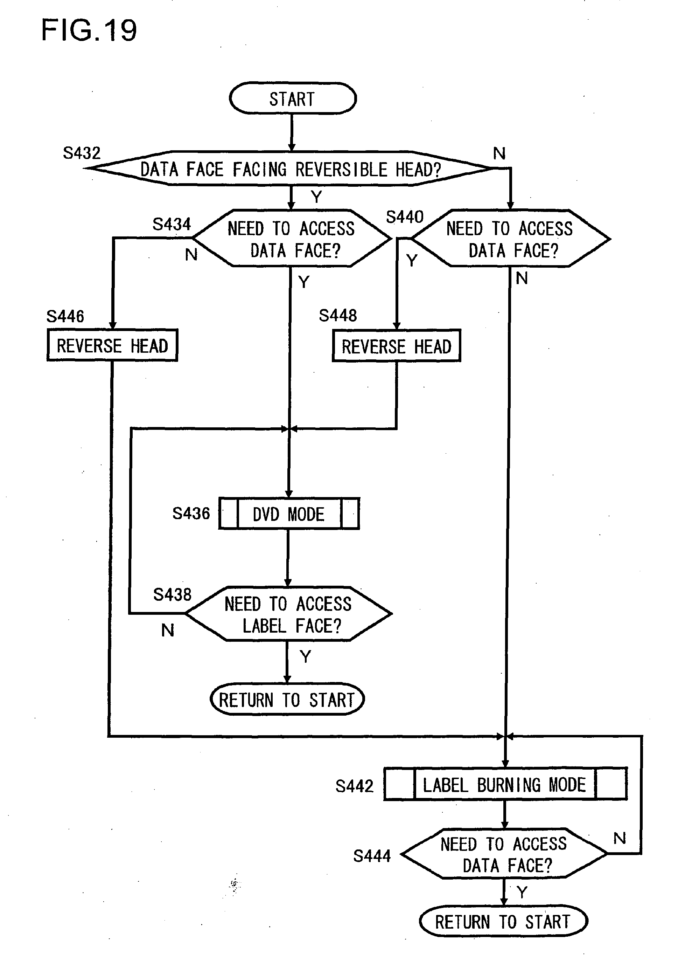

Fig. 19 is a flow chart showing the functions that the controller 210 performs to control the reversible head to reverse it between the first and second positions 230 and 232 in the DVD recorder 202 of the third embodiment. The functions of the controller 210 are the same as those of the controller 10 of the first embodiment except those relating to reversed insertion of the medium. Specifically, "reversed insertion" in the first embodiment refers to switching the access to the medium by the head between the data face and the label face. Thus, with respect to such functions as do not care how such switching is actually achieved, reading the parts of the description of the first embodiment referring to "reversed insertion" as "reversing of the head" makes it possible to apply the corresponding functions in the flow described in connection with the first embodiment to the third embodiment.

The flow shown in Fig. 19 starts every time a medium is inserted or a need arises to access it. In step S432, whether or not the medium is inserted in the medium drive 208 with the reversible head, located in the first or second position 230 or 232, facing the data face of the medium is checked. If the data face faces the reversible head, the flow proceeds to step S434.

In step S434, whether or not, for example, an operation relating to recording or reading of data has been made and as a result a need to access the data face has arisen is checked. If a need to access the data face has arisen, the flow proceeds to step S436 to enter the DVD mode. Then, in step S438, whether or not, for example, an operation relating to burning or reading of a label has been made and as a result a need to access the label face has arisen is checked. If a need to access the label face has arisen, the flow returns to its start in Fig. 19.

On the other hand, if, in step S438, no need to access the label face has arisen, the flow returns to step S436 to continue the DVD mode. Thereafter, so long as no need to access the label face is found to have arisen in step S438, the steps S436 and S438 are repeated to continue the DVD mode.

On the other hand, if, in step S432, the medium is not inserted in the medium drive 208 with the reversible head facing the data face, it means that the reversible head faces the label face of the medium. Accordingly, in this case, the flow proceeds to step S440.

In step S440, whether or not, for example, an operation relating to recording or reading of data has been made and as a result a need to access the data face has arisen is checked. If no need to access the data face has arisen, it means that a need to access the label face has arisen; thus, the flow proceeds to step S442 to enter the label burning mode. Then, in step S444, whether or not, for example, an operation relating to recording or reading of data has been made and as a result a need to access the data face has arisen is checked, and, if so, the flow returns to its start in Fig. 19.

On the other hand, if, in step S444, no need to access the data face has arisen, the flow returns to step S442 to continue the label burning mode. Thereafter, so long as no need to access the data face is found to have arisen in step S444, steps S442 and S444 are repeated to continue the label burning mode.

If, in step S434, no need to access the data face has arisen, it means that a need to access the label face has arisen; thus, the flow proceeds to step S446 to reverse the head. Then, the flow proceeds to step S442 to enter the label burning mode.

If, in step S440, a need to access the data face has arisen, the flow proceeds to step S448 to reverse the head, and then proceeds to step S436 to enter the DVD mode.

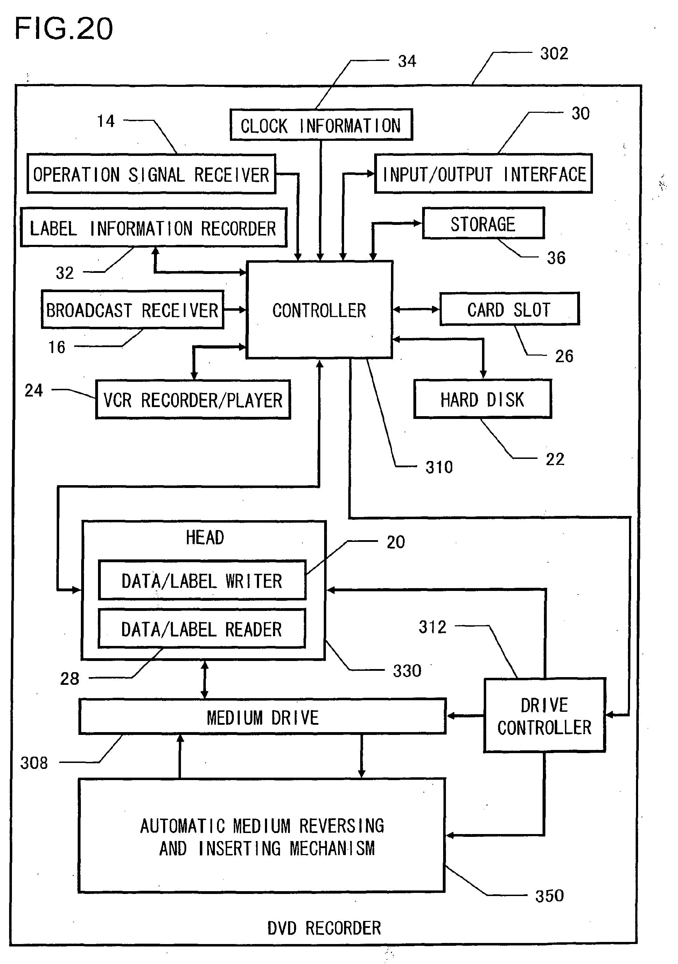

Fig. 20 is a block diagram showing a fourth embodiment of a disc recorder system embodying the present invention. Also in the fourth embodiment, the system is composed mainly of a DVD recorder 302 and a television 4, and also includes a remote control 6 for remotely controlling them. As in the first embodiment, also in the fourth embodiment, the DVD recorder 302 and the television 4 may be integrated together. It should be noted that, also in Fig. 20, as in the second embodiment, the television 4 and the remote control 6 are omitted from illustration because they are the same as in the first embodiment shown in Fig 1. Likewise, in the illustrated configuration of the DVD recorder 302, such parts as are found also in the first embodiment are identified by common reference numerals, and their description will not be repeated unless necessary.

The fourth embodiment shown in Fig. 20 differs from the first embodiment shown in Fig. 1, also here, in the configuration around the medium drive. The medium drive 308 shown in Fig. 20 has basically the same configuration as the medium drive 8 shown in Fig. 1, and accesses the inserted medium on one side alone to write and read contents data and to burn and read label images. Here, however, an automatic medium reversing and inserting mechanism 350 operates in coordination with the medium drive 308 so that the inserted medium can automatically be reversed and reinserted. The head 330 used here is the same as that in Fig. 1, and is composed of a data/label writer 20 and a data/label reader 28.

A drive controller 312 controls the data/label writer 20, the data/label reader 28, and the medium drive 308. Moreover, the controller 312 controls the automatic medium reversing and inserting mechanism 350 to make it operate in coordination with the medium drive 308 to receive the medium ejected from the medium drive 308, then automatically reverse it, and then automatically insert it back into the medium drive 308. Thus, without the user being required to manually reverse the medium, it is possible to write and read on the data face and to burn and read labels on the label face. Moreover, as in the second embodiment, also in the fourth embodiment, the user can insert a medium into the medium drive 308 without bothering about whether he is inserting it obversely or reversely.

A controller 310 controls the drive controller 312, and exchanges data with the head 330 (the data/label writer 20 and the data/label reader 28).

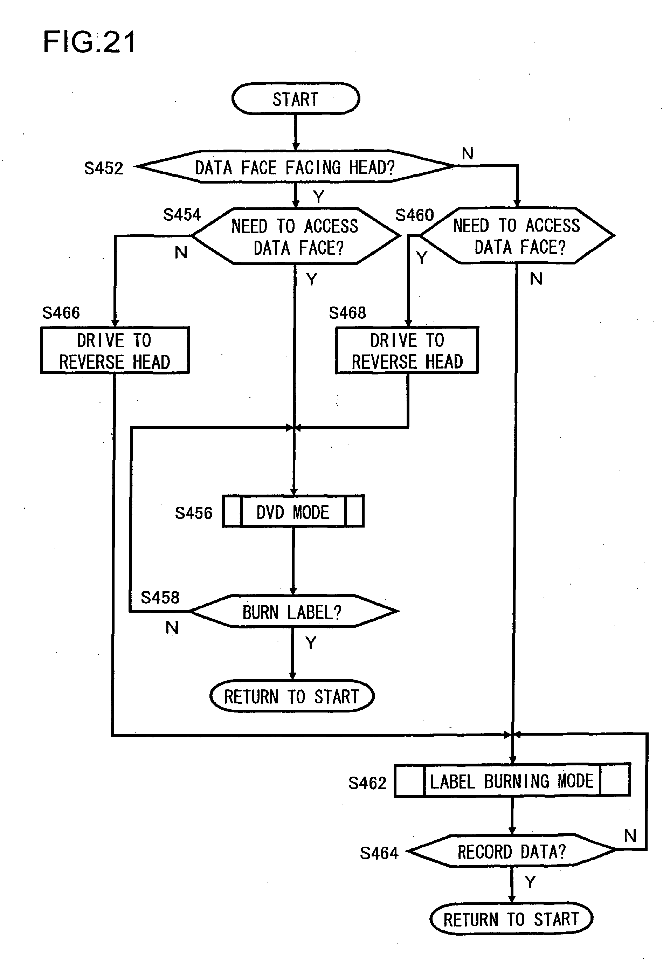

Fig. 21 is a flow chart showing the functions that the controller 310 performs to control the automatic medium reversing and inserting mechanism 350 in the DVD recorder 302 of the fourth embodiment. The functions of the controller 310 are the same as those of the controller 10 of the first embodiment except those relating to reversed insertion of the medium. Specifically, "reversed insertion" in the first embodiment refers to switching the access to the medium by the head between the data face and the label face. Thus, with respect to such functions as do not care how such switching is actually achieved, reading the parts of the description of the first embodiment referring to "reversed insertion" as "automatic reversing and inserting" makes it possible to apply the corresponding functions in the flow described in connection with the first embodiment to the fourth embodiment.

The flow shown in Fig. 21 starts every time a medium is inserted or a need arises to access it. In step S452, whether or not the medium is inserted in the medium drive 308 with the head 330 facing the data face is checked. If the data face faces the head 330, the flow proceeds to step S454.

In step S454, whether or not, for example, an operation relating to recording or reading of data has been made and as a result a need to access the data face has arisen is checked. If a need to access the data face has arisen, the flow proceeds to step S456 to enter the DVD mode. Then, in step S458, whether or not, for example, an operation relating to burning or reading of a label has been made and as a result a need to access the label face has arisen is checked. If a need to access the label face has arisen, the flow returns to its start in Fig. 21.

On the other hand, if, in step S458, no need to access the label face has arisen, the flow returns to step S456 to continue the DVD mode. Thereafter, so long as no need to access the label face is found to have arisen in step S458, the steps S456 and S458 are repeated to continue the DVD mode.

On the other hand, if, in step S452, the medium is not inserted in the medium drive 108 with the head 330 facing the data face, it means that the head 330 faces the label face of the medium. Accordingly, in this case, the flow proceeds to step S460.

In step S460, whether or not, for example, an operation relating to recording or reading of data has been made and as a result a need to access the data face has arisen is checked. If no need to access the data face has arisen, it means that a need to access the label face has arisen; thus, the flow proceeds to step S462 to enter the label burning mode. Then, in step S464, whether or not, for example, an operation relating to recording or reading of data has been made and as a result a need to access the data face has arisen is checked, and, if so, the flow returns to its start in Fig. 21.

On the other hand, if, in step S464, no need to access the data face has arisen, the flow returns to step S462 to continue the label burning mode. Thereafter, so long as no need to access the data face is found to have arisen in step S464, steps S462 and S464 are repeated to continue the label burning mode.

If, in step S454, no need to access the data face has arisen, it means that a need to access the label face has arisen; thus, the flow proceeds to step S466 to drive the automatic medium reversing and inserting mechanism 350. Then, the flow proceeds to step S462 to enter the label burning mode.

If, in step S460, a need to access the data face has arisen, the flow proceeds to step S468 to drive the automatic medium reversing and inserting mechanism 350, and then proceeds to step S456 to enter the DVD mode.

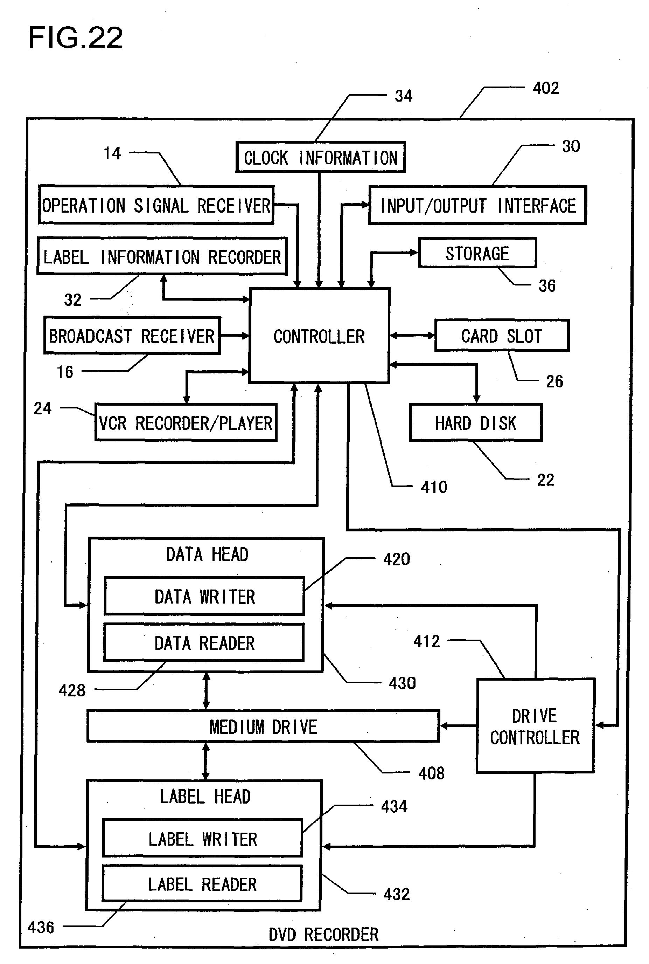

Fig. 22 is a block diagram showing a fifth embodiment of a disc recorder system embodying the present invention. Also in the fifth embodiment, the system is composed mainly of a DVD recorder 402 and a television 4, and also includes a remote control 6 for remotely controlling them. As in the first embodiment, also in the fifth embodiment, the DVD recorder 402 and the television 4 may be integrated together. It should be noted that, in Fig. 22, the television 4 and the remote control 6 are omitted from illustration because they are the same as in the first embodiment shown in Fig 1. Likewise, in the illustrated configuration of the DVD recorder 402, such parts as are found also in the first embodiment are identified by common reference numerals, and their description will not be repeated unless necessary.

The fifth embodiment shown in Fig. 22 differs from the first embodiment shown in Fig. 1, also here, in the configuration around the medium drive. The medium drive 408 shown in Fig. 22, like the medium drive 108 shown in Fig. 16, can access the inserted medium on both sides. In the fifth embodiment, however, there is provided a data head 430 dedicated to the writing and reading of contents data and a label head 432 dedicated to the burning and reading of label images. Thus, the medium does not need to be reversed, but it needs to be inserted in a prescribed orientation.

Specifically, the data head 430 in Fig. 22 is composed of a data writer 420 and a data reader 428, and is dedicated to access to the data face. Thus, access to the data face is only possible from the side where the data head 430 is located.

On the other hand, provided opposite the data head 430 across the medium drive 408, the label head 432 is composed of a label writer 434 and a label reader 436, and is dedicated to access to the label face. Thus, access to the label face is only possible from the side where the label head 432 is located.

With the construction described above, when a medium is inserted into the medium drive 408 with its data face facing the data head 430, the label face faces the label head 432. Thus, without reversing the medium, it is possible to write and read contents data and to burn and read label images. If the medium is inserted in the wrong orientation, however, it is impossible to perform any of those operations.

A drive controller 412 controls the data head 430, the label head 432, and the medium drive 408. A controller 410 controls the drive controller 412, and exchanges data with the data head 430 and the label head 432.

As described above, in the fifth embodiment, as in ordinary DVD recorders with no capability of label burning, there is no concept of the DVD recorder 2 operating when a medium is inserted reversely. Moreover, providing a dedicated data head 430 and a dedicated label head 432 permits these to be configured independently so that each suits its purpose. For example, in the fifth embodiment, the label head 432 is not limited to one that achieves burning with laser light. For example, an ordinary ink-jet printer head can be used as the label writer 434. In that case, it is accordingly necessary to use, instead of media of the "label-burnable type" having on their label face a color-changeable layer that changes its color on exposure to heat or light, media having its label face treated to be ready for ink-jet printing (hereinafter referred to as "label-printable type").

In the present invention, regarding any feature which does not care how information is written to the label face as described just above, the terms "label burning" and "label printing" used in the description of any embodiment should be understood to mean "label writing" in general.

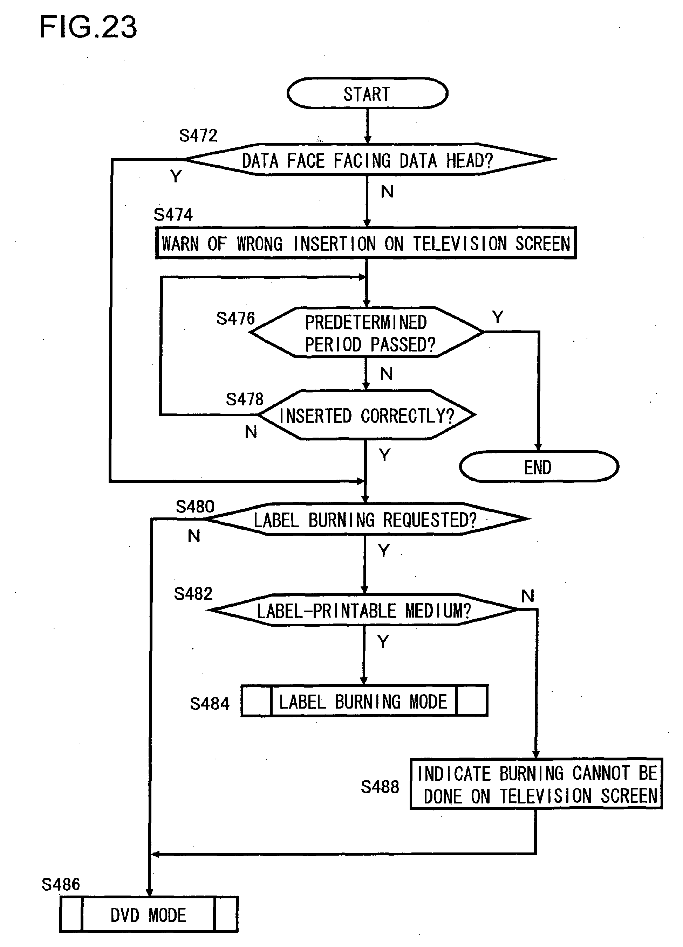

Fig. 23 is a flow chart showing the functions that the controller 410 performs to prevent an erroneous operation in the DVD recorder 402 of the fifth embodiment shown in Fig. 22. The functions of the controller 410 are the same as those of the controller 10 of the first embodiment except those relating to reversed insertion of the medium. That is, with respect to such functions as do not care whether or not the medium needs to be reversely inserted, it is possible, in regard to access to not only the data face but also the label face, to apply the corresponding functions in the flow described in connection with the first embodiment to the fifth embodiment.

The flow shown in Fig. 23 starts every time a medium is inserted or a need arises to access it. In step S472, whether or not the data face faces the data head 430 is checked. If, the data face does not face the data head 430, the flow proceeds to step S474.

In step S474, a warning message indicating that the medium is inserted in the wrong orientation is displayed on the screen 52 of the television 4. This message may be accompanied with an audible message. Then, with the message kept displayed, the flow proceeds to step S476.

In step S476, whether or not a predetermined period has passed since the start of the display in step S474 is checked and, if not, the flow proceeds to step S478. In step S478, whether or not the medium has been reinserted in the correct orientation by the user is checked. If, in step S478, the medium is found to have been reinserted in the correct orientation by the user, the flow proceeds to step S480. If, in step S472, the data face faces the data head 430, the flow proceeds directly to step S480.

On the other hand, if, in step S478, the medium is not found to have been correctly inserted, the flow returns to step S476, and thereafter, until the predetermined period has passed, steps S476 and S478 are repeated. Then, if, in step S476, the predetermined period is found to have passed, the flow immediately ends.

In step S480, whether or not the flow has been started as a result of, for example, an operation requesting label burning being made and thereby necessitating a need to access the medium is checked. If label burning has been requested, in step S482, whether or not the medium is of the label-printable type is checked. If it is of the label-printable type, the flow proceeds to step S484 to enter the label burning mode.

On the other hand, if, in step S480, no need to access the medium has arisen as a result of an operation requesting label burning, the flow proceeds to S486 to enter the DVD mode. If, in step S482, the medium is not of the label-printable type, the flow proceeds to step S488 to display a message indicating that label burning is impossible on the screen 52 of the television 4. This message may be accompanied with an audible message. Then, a reservation is made to keep this message displayed for a predetermined period, and the flow proceeds to step S486 to enter the DVD mode.

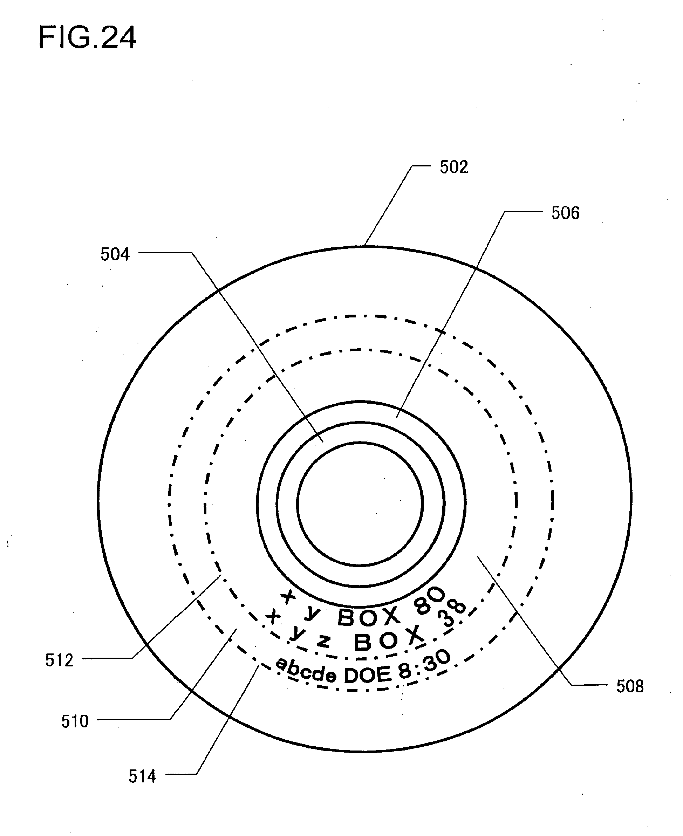

Fig. 24 shows a television display screen showing an image on the label face of a medium of the "label-printable type", where an already-burned image and a to-be-newly-burned image are shown superimposed together. In the innermost part of the image-burnable region on the label face of the medium 502, there is provided a bar code burning region 504. This bar code burning region 504 is a ring-shaped region concentric with the rotation direction of the medium, and there bar codes converted from burning tags are burned. In the bar code burning region 504, bar codes can be additionally burned as contents are additionally written to the data face.

Outside the bar code burning region 504, there is provided a remaining capacity indicating image burning region 506. The remaining capacity indicating image burning region 506 also is a ring-shaped region concentric with the rotation direction of the medium, and there an arc-shaped strip indicating the remaining writable capacity on the data face is burned. This strip is incrementally burned and grows longer in the circumferential direction as more data is written to the data face. When the remaining capacity becomes zero, the burned strip becomes a ring continuous around 360 degrees.

Outside the remaining capacity indicating image burning region 506, there is a region where burning image can freely be laid out. In the example shown in Fig. 24, in a ring-shaped, already-burned region 508, there are burned together a character string "xy BOX 80" indicating the title of contents written in the data face and, with a line feed interposed and thus at the second line (line 2), a character string "xyz BOX 38" indicating the next contents. These characters are laid out in a ring shape, with the top of the characters pointing inward of the label face.

A ring-shaped, to-be-newly-burned region 510 is laid out to avoid the already-burned region 508 so as not to overlap with it, and there a character string "abcde DOE 8:30" that is going to be burned is displayed in a ring-shaped layout. The character image in this to-be-newly-burned region 510 is displayed on the screen 52 of the television 4 in a fashion distinguishable from the character image in the already-burned region 508, for example by being blinked so that its color becomes light intermittently.

To perform burning, the head is moved to the position on the label face corresponding to the inner circumference position 512 of the to-be-newly-burned region 510, and, starting there, scanning is performed increasingly outward; scanning is stopped at the position on the label face corresponding to the outer circumference position 514, which marks the edge of the ring-shaped burned image; thus, burning is finished. This helps reduce the time required for burning compared with when a character string is laid out in a rectilinear shape.

Moreover, since the character strings are laid out in a ring shape with their top pointing inward of the label face as described above, the character string that is burned later, namely "abcde DOE 8:30", is laid out at the third line (line 3) following the character strings previously burned, namely "xy BOX 80" at line 1 and "xyz BOX 38" at line 2. Thus, lines can be additionally laid out as contents are additionally burned.

In a state in which, as shown in Fig. 24, the character strings at lines 1 and 2 are laid out only in part of the ring-shaped already-burned region 508, instead of laying out the character string at line 3 in the to-be-newly-burned region 510 outside it, a to-be-newly-burned image may be laid out in a blank region inside the already-burned region 508.

The embodiments described above deal with cases where the present invention is applied to media having a label face on the opposite side of its data face. It should be understood, however, that those features of the present invention which do not care which side of the medium is what face can be applied equally to media that permit a label to be burned on a data face itself.

The embodiments described above deal with cases where the present invention is applied to disc-shaped media having an axis of rotation. It should be understood, however, that those features of the present invention which do not care the type of medium can be applied not only to disc-shaped storage media but also to spindleless storage media such as solid-state memories.

In cases where automatically read images conforming to widespread methods, such as bar codes, are written on an exterior surface of media, automatically read images so written can be read and used on any suitably designed device other than the one on which they were written. Accordingly, a recording device itself does not necessarily have to be equipped for the reading of automatically read images written on an exterior surface of media.

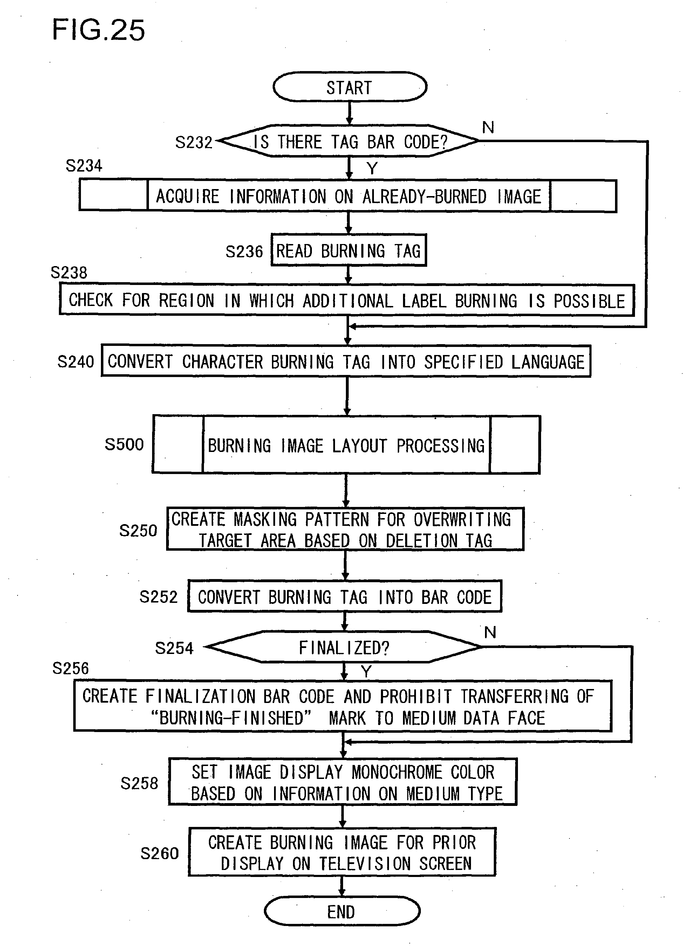

Fig. 25 is a block diagram showing the operation of a controller in a sixth embodiment of a disc recorder system embodying the present invention. The sixth embodiment is a modified version of the flow in Fig. 9, which shows the details of the automatic creation of label-burning image; thus, like Fig. 9, Fig. 25 shows the details of the automatic creation of label-burning image in step S214 in Fig. 7. Most of the steps in Fig. 25 are common to Fig. 9, and such steps in the former as find their counterparts in the latter are identified by common step numbers.

Specifically, steps S232 to S240 and steps S250 to S260 are the same as those equally numbered in Fig. 9; steps S242 to S248 in Fig. 9 are replaced with step S500 for burning image layout processing in Fig. 25. This step S500 is applicable to any of the first to fifth embodiments described above.

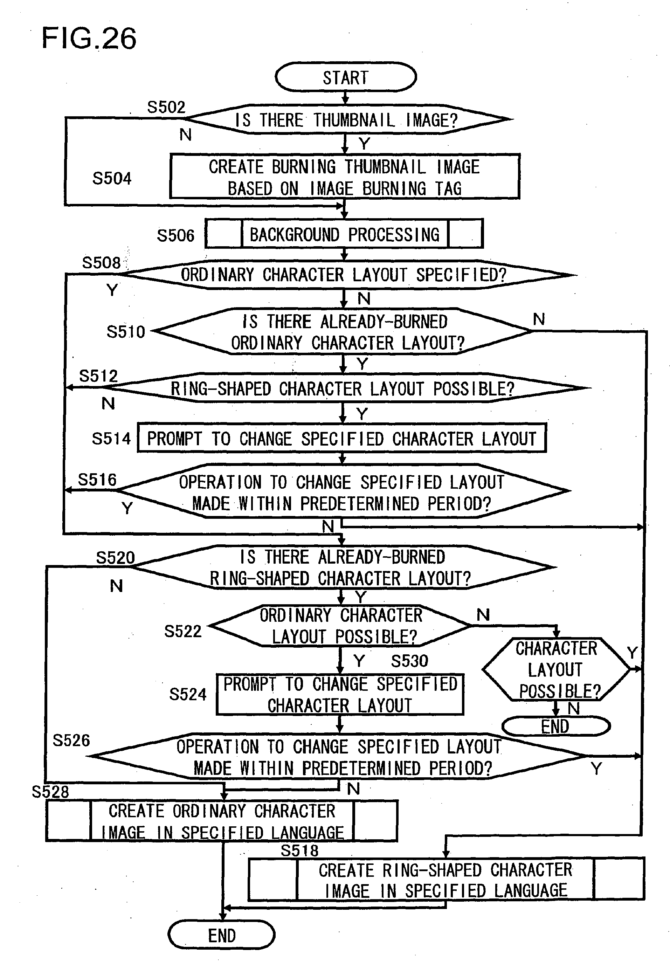

Fig. 26 shows the details of the burning image layout processing in step S500 in Fig. 25. When the flow in Fig. 25 proceeds from step S240 to step S500, the flow in Fig. 26 starts. First, in step S502, whether or not there is any image burning tag corresponding to a thumbnail image is checked. If there is an image burning tag corresponding to a thumbnail image, the flow proceeds to step S504 to create a burning thumbnail image based on the image burning tag, and the proceeds to step S506. On the other hand, if there is no image burning tag corresponding to a thumbnail image, the flow proceeds directly to step S506. In step S506, background processing is performed, the details of which is the same as shown in Fig. 11.

Next, in step S508, whether or not a character layout with ordinary, rectilinearly arranged lines has explicitly been specified is checked. If not, the flow proceeds to step S510 to start processing for the creation of a ring-shaped character image. In this way, the sixth embodiment allows a choice between an ordinary character arrangement and a ring-shaped character arrangement. If the user does not make an explicit choice, the flow automatically proceeds to step S510.

In step S510, whether or not label burning in an ordinary character layout has already been performed is checked. If there is any existing ordinary character layout, the flow proceeds to step S512 to check whether or not a ring-shaped character layout can be arranged so as not to interfere with the already burned rectilinearly arranged, ordinary characters. For example, if rectilinearly arranged characters have already been burned along a chord between opposite ends of the circumference across a central part of the label, it is impossible to lay out ring-shaped characters so as not to interfere them.

If a layout is possible, the flow proceeds to step S514 to display a message or sound an audible announcement to prompt the user to change the specified character layout and, while this is continued, the flow then proceeds to step S516. In step S516, whether or not the user has made an operation to change the layout within a predetermined period after the start of the prompting is checked. If no such operation has been made, the flow proceeds to step S518 to start processing for the creation of a ring-shaped character image in the specified language, at the end of which the flow ends, making a return to step S250 in Fig. 25. If, in step S510, no ordinary character layout has already been burned, the flow proceeds directly to step S518.

Here, why steps S514 and S516 are provided will be explained. The fact that step S514 is reached indicates that, at least in terms of space, a ring-shaped character layout can still be added to already-burned ordinary characters. It is, however, aesthetically not preferable to mix an ordinary character layout and a ring-shaped character layout on the same label face, and this is the reason that the user is again prompted to change the layout.

On the other hand, if, in step S508, an ordinary character layout has been specified, the flow proceeds to step S520 to start processing for an ordinary character layout. Also if, in step S512, a ring-shaped character layout is impossible, the flow proceeds to step S520. Also if, in step S516, an operation to change the specified layout is made within the predetermined period, the flow proceeds to step S520.

In step S520, whether or not label burning in a ring-shaped character layout has already been performed is checked. If there is any existing ring-shaped character layout, the flow proceeds to step S522 to check whether or not a rectilinearly arranged, ordinary character layout can be arranged so as not to interfere with the already burned ring-shaped character layout is checked. For example, if ring-shaped characters have already been burned almost around a full turn somewhere between the innermost and outermost circumferences of the label, it is impossible to lay out rectilinear characters beyond a certain length so as not to interfere them.

If, in step S522, a layout is possible, the flow proceeds to step S524 to display a message or sound an audible announcement to prompt the user to change the specified layout and, while this is continued, the flow then proceeds to step S526. In step S526, whether or not the user has made an operation to change the layout within a predetermined period after the start of the prompting is checked. If no such operation has been made, the flow proceeds to step S528 to start processing for the creation of an ordinary character image in the specified language, at the end of which the flow ends, making a return to step S250 in Fig. 25. If, in step S520, no ordinary character layout has already been burned, the flow proceeds directly to step S528.

On the other hand, if, in step S526, an operation to change the specified layout is made within the predetermined period, the flow proceeds to step S518. If, in step S522, an ordinary character layout is impossible, then, in step S530, whether or not a ring-shaped character layout is possible is checked and, if possible, the flow proceeds to step S518. If, in step S530, neither type of character layout is possible, character burning is impossible; thus, the flow immediately ends, making a return to step S250 in Fig. 25.

The reason that steps S524 and S526 are provided above is the same as the previously stated reason that S514 and S516 are provided.

Instead of providing steps S512 to S516, it is also possible to immediately proceed to step S520 if, in step S510, there is an already burned ordinary character layout; likewise, instead of providing steps S522 to S526, it is also possible to proceed to step S518 immediately or via step S530 if, in step S520, there is an already-burned ring-shaped character layout. With this configuration, mixing of an ordinary character layout with a ring-shaped character layout is automatically avoided, without the user being requested to confirm.

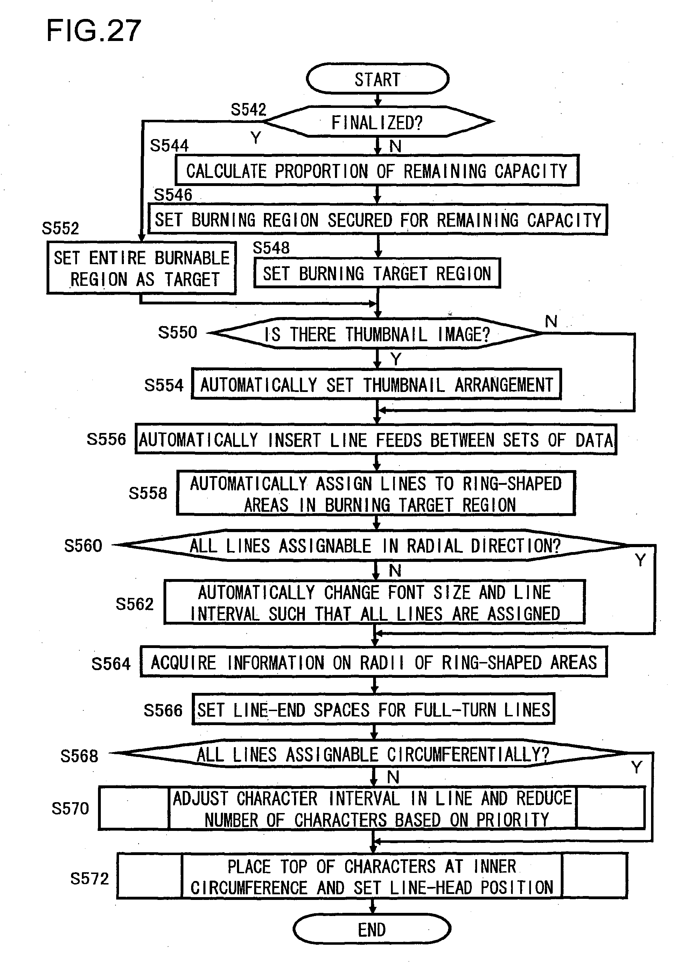

Fig. 27 is a flow chart showing the details of the ring-shaped character image creation processing in the specified language in step S518 in Fig. 26. When the flow starts, in step S542, whether or not the data face has been finalized is checked. If it is not finalized, the flow proceeds to step S544 to calculate the proportion of the remaining capacity on the data face. Next, in step S546, based on the calculated proportion of the remaining capacity, a burning region to be reserved for it on the label face is determined. This is because, when the data face has a remaining capacity, an accordingly large blank area needs to be secured on the label face to allow burning corresponding to data that will be recorded into the data face in the future. Then, the flow proceeds to step S548 to determine the region in which burning can be performed this time, and then proceeds to step S550.

On the other hand, if, in step S542, the data face is found to have been finalized, the flow proceeds to step S552 to determine, as the burning target region this time, the entire burnable region remaining on the label face at that point. This is because, since the contents recorded in the data face have been made definite by finalization, no more data will be recorded to the data face in the future, and therefore the burnable region currently remaining on the label face can entirely be used.

In step S550, whether or not there is a thumbnail image is checked and, if there is a thumbnail image, the flow proceeds to step S554 to automatically determine the arrangement of the thumbnail, and then proceeds to step S556. This is because, since a thumbnail requires a predetermined area and its size is standardized, it is reasonable to lay it out first. On the other hand, if, in step S550, no thumbnail image is found, the flow proceeds directly to step S556.

In step S556, line feeds are automatically inserted between different sets of data in burning character information. Moreover, in step S558, the lines of character strings thus determined by insertion of line feeds in step S556 are automatically assigned to respective ring-shaped areas inside the burning target region determined in step S548 or S552. The automatic assignment here is tentatively performed with the font size and line interval as initially set.

Next, in step S560, whether or not all the lines can be assigned to ring-shaped areas inside the burning target region is checked. Here, in step S560, whether or not such assignment is possible is checked only in the radial direction, and not in the circumferential direction. If, in step S560, it is found that, with the initially set values, not all the lines can be assigned in the radial direction, the flow proceeds to step S562 to automatically change the font size and line interval such that all the lines can be assigned in the radial direction, and then proceeds to step S564. Specifically, in step S562, the font size and line interval are made smaller than their initial values. On the other hand, if, in step S560, all the lines can be assigned in the radial direction, the flow proceeds directly to step S564.

In step S564, the information on the radii of the individual ring-shaped areas to which the lines are now assigned is acquired. This is done to make it possible to calculate the circumferential length of each ring-shaped area. Next, in step S566, line-end spaces are set that are put at line ends when lines extend along their respective ring-shaped areas. This is because, if a line extends continuously around a full turn along a ring-shaped area, the line head is difficult to recognize.

Next, in step S568, whether or not, with the line-end spaces thus added, all the lines can be assigned inside their respective ring-shaped areas in the circumferential direction is checked. If proper assignment is impossible, as with a line extending around such that the line end overlaps with the line head or such that no line-end space is left behind, then, in step S570, processing is performed to adjust the character pitch in the line and to reduce the number of characters based on priority. Through this processing, the character pitch in the circumferential direction is narrowed, and the number of characters in the line of each set of data is reduced according to a previously set priority rule. This processing will be described in detail later.

Furthermore, in step S572, processing is performed to place the top of characters at the inner circumference and to set the line head position. This processing is for making a layout like that in the ring-shaped already-burned region 508 in Fig. 24, and will be described in detail later.

If, in step S568, it is found that all the lines can be assigned in the circumferential direction, the flow proceeds directly to step S572.

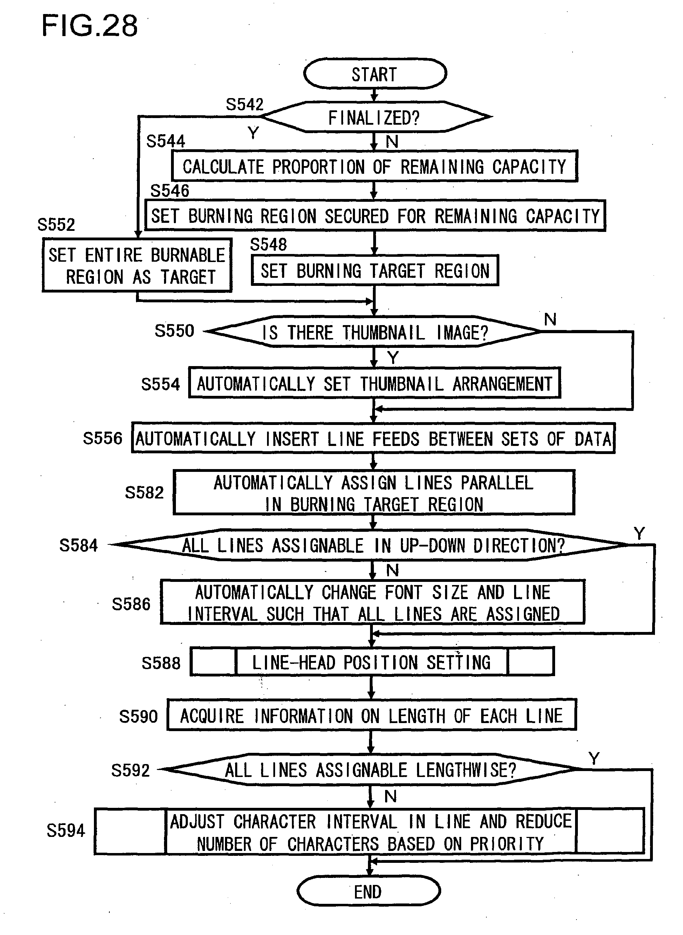

Fig. 28 is a flow chart showing the details of the normal character image creation processing in the specified language in step S528 in Fig. 26. Steps S542 to S556 of this flow are common to the flow shown in Fig. 27; accordingly, these steps are identified by common step numbers, and their description will not be repeated.

In Fig. 28, when the flow proceeds to step S582, in the burning target region set in step S548 or step S552, the lines of character strings determined by insertion of line feeds in step S556 are automatically assigned as ordinary, rectilinear and parallel character strings. The automatic assignment here is tentatively performed with the font size and line interval as initially set.

Next, in step S584, whether or not all the lines can be assigned to ring-shaped areas inside the burning target region is checked. Here, in step S584, whether or not such assignment is possible is checked only in the up/down direction, and not in the length direction along the character strings. If, in step S584, it is found that, with the initially set values, not all the lines can be assigned in the up/down direction, the flow proceeds to step S586 to automatically change the font size and line interval such that all the lines can be assigned in the up/down direction, and then proceeds to step S588. Specifically, in step S586, the font size and line interval are made smaller than their initial values. On the other hand, if, in step S584, all the lines can be assigned in the up/down direction, the flow proceeds directly to step S588.

In step S588, processing is performed to set the line head position of each of the lines assigned in the burning target region. This processing will be described in detail later. Here, the processing for setting the line head position includes centering of lines; that is, if a line is too long, its line head lies outside the burning target region. This and other cases involving an excessively long line are coped with in step S590 and the following steps.

In step S590, information on the length permitted for each of the assigned lines is acquired. This is because the burning target region is doughnut-shaped, and the length permitted for each line differs from one line to another. Next, in step S592, whether or not each line can be assigned in the length direction is checked. If such assignment is impossible then, in step S594, processing is performed to adjust the character pitch in the line and to reduce the number of characters based on priority, and the processing is ended. Specifically, in step S594, the character pitch in the length direction is narrowed, and the number of characters in the line of each set of data is reduced according to a previously set priority rule. This will be described in detail later. If, in step S592, it is found that all the lines can be assigned in the length direction, the processing is ended immediately.

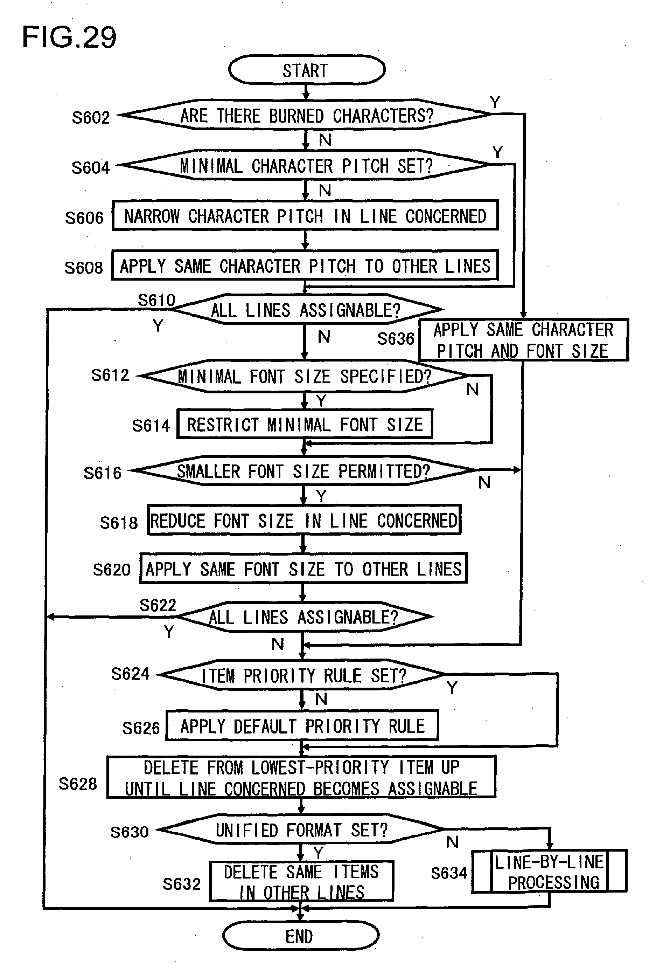

Fig. 29 is a flow chart showing the details of the character pitch adjustment and priority-based character number reduction processing in step S570 in Fig. 27 and in step S594 in Fig. 28. When the flow starts, in step S602, whether or not there are any already-burned characters on the label face is checked. If there are no already-burned characters, the flow proceeds to step S604, where, of all lines that are too long to be assignable, the one of which the number of characters lying outside the burning target region is largest is selected, and, with respect to this line, whether or not the current character pitch setting is minimal is checked.

In the subsequent steps, all the processing done to make assignment possible is done in a similar manner as described above; that is, it is done for, of all lines that are too long to be assignable, the one of which the number of characters lying outside is largest.

If, in step S604, the character pith setting is not minimal, there still is room to narrow the character pitch; thus, the flow proceeds to step S606 to reduce the character pitch as much as possible so that the entire line concerned can be assigned in the assignment region. The flow then proceeds to step S608 to apply the thus narrowed character pitch to the other lines, and then proceeds to step S610. The processing in step S608 makes it possible to assign all the other lines automatically without the need to check each of them individually for assignability. Moreover, this processing helps avoid the untidiness resulting from different lines having different character pitches.

On the other hand, if, in step S604, the character pitch setting is already minimal, it is impossible to narrow the character pitch any more; thus, the flow proceeds directly to step S610.

Incidentally, not all lines need to be assigned with an equal character pitch. Accordingly, in a modified embodiment, step S608 may be omitted, and instead the processing in step S606 may be repeated sequentially for each unassignable line. Alternatively, it is also possible to allow the user a choice of whether or not to apply an equal character pitch to all the lines.

In step S610, whether or not all the lines can be assigned at this stage is checked. If narrowing the character pitch has not been successful in making all the lines assignable, the flow proceeds to step S612 to check whether or not the user has previously specified a minimal font size. If a minimal font size has been specified, the flow proceeds to step S614 to place a restriction so that no font size smaller than that is selected. This prevents selection of a font size smaller than the user can adapt to in the course of reducing the font size with a view to securing more space for assignment. If a minimal font size has been specified, through the processing just described, the flow proceeds to step S616. If, in step S612, no minimal font size has been specified, the flow proceeds directly to step S616.

In step S616, whether or not it is possible to reduce the current font size is checked and, if possible, the flow proceeds to step S618 to reduce the font size as much as possible so that the entire line concerned can be assigned in the assignment region. Then, the flow proceeds to step S620 to apply the thus reduced font size to the other lines. This processing makes it possible to assign all the other lines automatically without the need to check each of them individually for assignability. Moreover, this processing helps avoid the untidiness resulting from different lines having different font sizes.

Incidentally, when different lines are permitted to have different font sizes, it may be possible to assign the other lines without necessarily reducing their font sizes to the equal one. Accordingly, in a modified embodiment, step S620 may be omitted, and instead the processing in step S618 may be repeated sequentially for each unassignable line.

After the processing in step S620, the flow proceeds to step S622 to check whether or not reducing the font size has been successful in making all the lines assignable. If reducing the font size has not been successful in making all the lines assignable, the flow proceeds to step S624 to check whether or not the user has previously set a priority rule regarding burning items. If none has been specified, the flow proceeds to step S626 to apply a priority rule prepared by default, and then proceeds to step S628. On the other hand, if, in step S624, a priority rule has been set, this priority rule is applied, and the flow proceeds to step S628.

In step S628, in order that the entire line concerned can be assigned in the assignment region, the characters of one item after another are deleted, from the item of the lowest priority up, until the line becomes assignable. When the items burnable in the line concerned are determined, the flow proceeds to step S630 to check whether or not the user has previously made a setting to unify the burning format among different lines. If such a setting has been made, the flow proceeds to step S632 to apply the deletion of the same items to the other lines, and the flow then ends. The processing in step S632 makes it possible to assign all the other lines automatically without the need to check each of them individually for assignability. Moreover, this processing helps avoid the inconsistency of different items being displayed at different lines.

On the other hand, if, in step S630, no setting for a unified format has been made, the flow proceeds to step S634 to perform line-by-line processing. In this line-by-line processing, with respect to each of the other unassignable lines, the processing similar to that in step S628 is performed to determine which items to delete in each line. When which items to delete are determined with respect to all those lines, the flow ends.

If, in step S610 or S622, it is found that all the lines are assignable, the flow immediately ends. If, in step S602, there are already-burned characters, the flow proceeds to step S636 to apply the character pitch and font size of the already-burned characters, and then proceeds to step S624. However, in cases where, in step S562 in Fig. 27 or in step S586 in Fig. 28, the font size and line interval have automatically been changed to make all the lines assignable, then, in step S636, the thus changed font size and line interval are adopted.

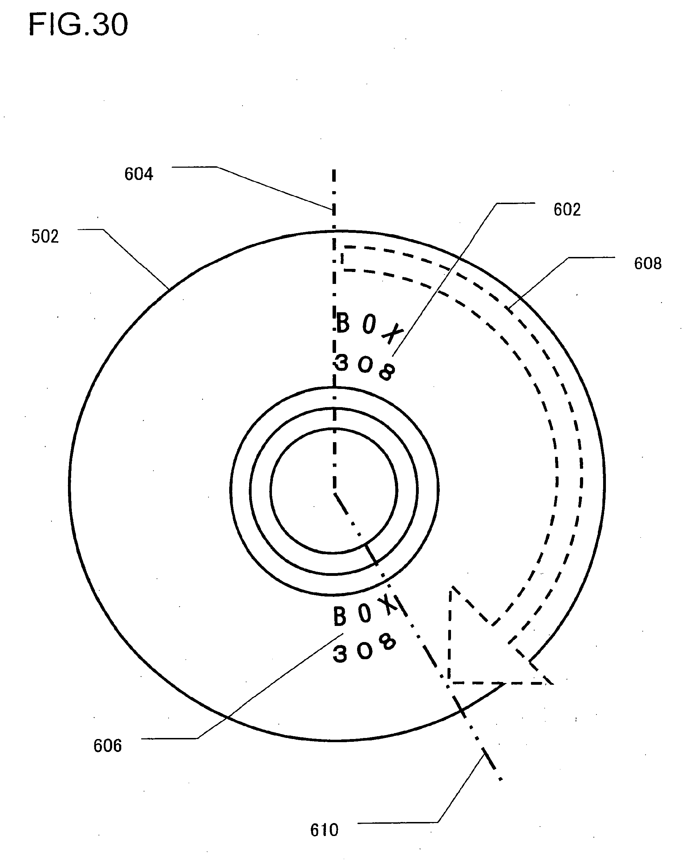

Fig. 30 shows the television display screen showing an image on the label face of the medium, showing what is displayed when the processing in step S572 in Fig. 27 is performed. In the following description, for the sake of simplicity, the top, bottom, left, and right of the label face are defined relative to the orientation of the image on the label face as displayed as a preview on the screen 52 of the television 4. In Fig. 30, on the label face of the medium 502 is shown, for comparison, a to-be-newly-burned image 602 exemplifying a ring-shaped character image in an ordinary case. The burning image has "BOX" at line 1 and "308" at line 2. Moreover, an ordinary ring-shaped character image 602 like this is laid out such that the bottom of the characters points inward of the label face. Furthermore, the line heads are aligned at a rotation direction reference position 604 set in a top part of the label face.

In contrast, according to the present invention, a ring-shaped character image 606, although likewise having "BOX" at line 1 and "308" at line 2, is laid out such that the top of the characters points inward of the label face, and is arranged in a bottom part of the label face. Moreover, the line head of "BOX" at line 1 is determined such that the end of "BOX" is located at the position 610 an angle 608 apart from the rotation direction reference position 604.

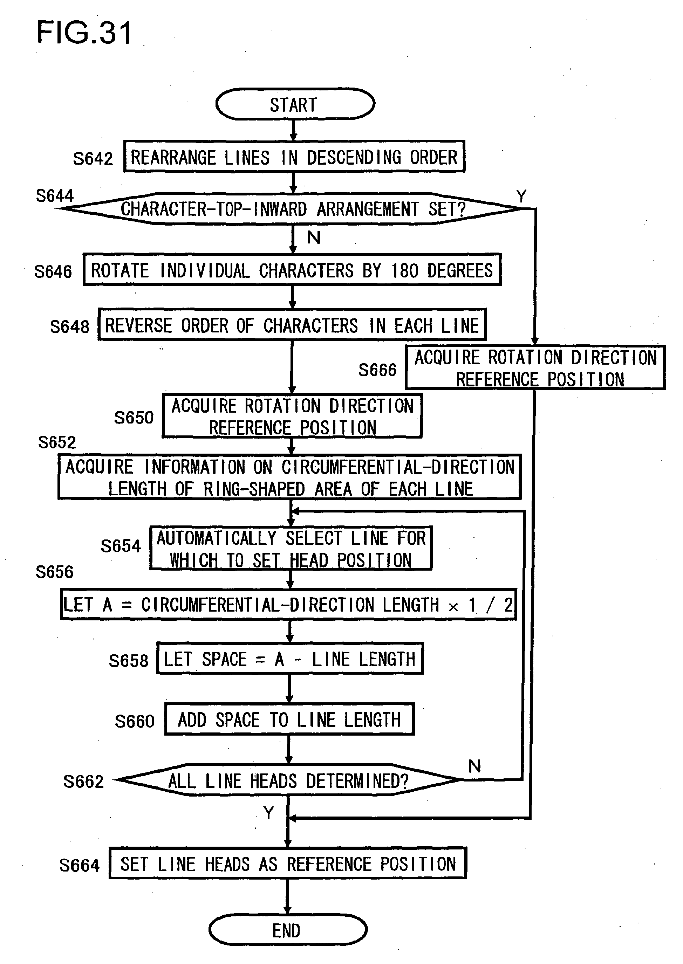

Fig. 31 is a flow chart showing the details of the character top inner circumference arranging and line head position setting processing in step S572 in Fig. 27. When the flow starts, first, in step S642, the lines are rearranged in descending order. In the present specification, "descending order" denotes reversing the order of the data of the individual lines forming the to-be-newly-burned image 602. This is done to change, as shown in Fig. 30, the arrangement in the ordinary ring-shaped character image 602, where lines are arranged starting at the outer circumference of the ring-shape area, to the arrangement in the ring-shaped character image 606 according to the present invention, where lines are arranged starting at the inner circumference of the ring-shape area.

Next, in step S644, whether or not an arrangement in which the bottom of characters points toward the inner circumference is set is checked. Normally such an arrangement is not set but characters are arranged with their top pointing toward the inner circumference; thus, the flow proceeds to step S646, where the characters are rotated by 180 degrees. This is done to change, as shown in Fig. 30, the arrangement in the ordinary ring-shaped character image 602, where the bottom of characters points toward the inner circumference and, when characters reach a bottom part of the label face, they are arranged upside down, to the arrangement in the ring-shaped character image 606 according to the present invention, where, in a bottom part of the label face, the top of characters points toward the inner circumference.

Then, in step S648, processing is performed to reverse the order of characters in each line. This is done to change, as shown in Fig. 30, the arrangement in the ordinary ring-shaped character image 602, where, when characters reach a bottom part of the label face, they are arranged such that they can be read from right to left, to the arrangement in the ring-shaped character image 606 according to the present invention, where, even in a bottom part of the label face, characters can be read from left to right.

On completion of the processing described above, the flow proceeds to step S650 to acquire information on the rotation direction reference position 604 shown in Fig. 30. Then, in step S652, information on the length, in the circumferential direction, of the ring-shaped area assigned to each line is acquired. Then, in step S654, one line for which to set the line head is automatically selected. The automatic selection here is performed starting with line 1; thus, the line selected first is, in the case of the ring-shaped character image 606 shown in Fig. 30, "BOX" at line 1.

Next, in step S656, the value of "A", which represents half of the circumferential-direction length of the selected line, is calculated. For example, in the case of the line of "BOX" in the ring-shaped character image 606 in Fig. 30, what is so calculated is the circumferential-direction length from the rotation direction reference position 604 to the left end of "B" in the 180-degree-rotated ring-shaped character image 606. Then, in step S658, the length of the line is subtracted from the value of "A", and thereby the space available from the reference position is calculated. In the case of the line of "BOX" in the ring-shaped character image 606 in Fig. 30, what is so calculated is the space from the rotation direction reference position 604 to the position 610 an angle 608 apart from it (that is, the right end of the character "X").

In step S660, the space thus calculated is added to the line length. This produces a character string in which, as seen in Fig. 30, "a space", "X", "O", and "B" are arranged in this order counter-clockwise starting at the rotation direction reference position 604. The line head is thus located at an end of the space. Accordingly, setting the end of the space at the rotation direction reference position 604 permits the ring-shaped character image 606 of "BOX" to be laid out in the position illustrated in Fig. 30.

When the line head of one line is determined in this way, the flow proceeds to step S662 to check whether or not the line heads of all the lines have been determined. If there is any line whose line head has not been determined yet, the flow returns to step S654 to automatically select the next line and execute steps S656 to S660. Thereafter, until it is found that the line heads of all the lines have been determined in step S662, steps S654 to S662 are repeated. When the line heads of all the lines are determined, the flow proceeds to step S664 to set the thus determined line heads as the reference position, and then the flow ends.

If, in step S644, an arrangement in which the bottom of characters points toward the inner circumference is set, the flow proceeds to step S666 to acquire the rotation direction reference position, and then immediately proceeds to step S664. This is because, in such a case, the layout is like that of the ring-shaped character image 602 in Fig. 30, and thus the line heads of the lines can be, as they are, set as the rotation direction reference position 604. In the flow shown in Fig. 31, step S642 comes before step S644. Thus, when step S666 is reached, the rearrangement of lines in descending order in step S642 has already been performed, and accordingly, as seen in Fig. 30, the characters laid out where the ring-shaped character image 602 is shown are different from what is shown there, but are laid out such that the line of "BOX" is located closer to the inner circumference. This is because, since character information is recorded starting at the inner circumference according to the present invention, with consideration given to additional recording, new information should better be written closer to the outer circumference even when a layout in which the bottom of characters points toward the inner circumference is adopted.

In a modified embodiment, however, when a layout in which the bottom of characters points toward the inner circumference is adopted, it is also possible, as shown in the ring-shaped character image 602 in Fig. 30, to arrange the line of "BOX" closer to the outer circumference. In this case, in Fig. 31, the order of steps S642 and S644 is reversed.

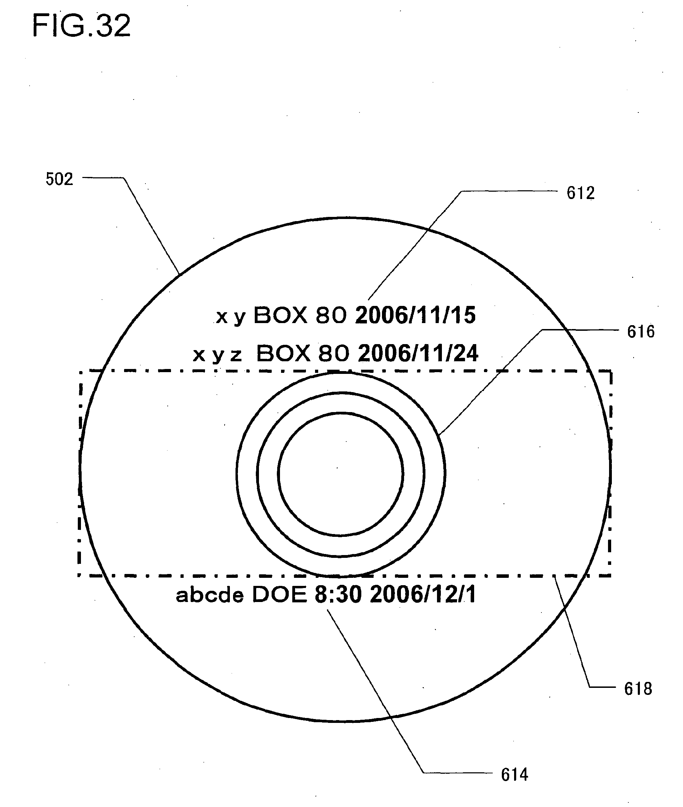

Fig. 32 shows the television display screen showing an image on the label face of a medium of the "label-printable type", showing one example of what is displayed when the processing in step S594 in Fig. 28 is performed. In Fig. 32, on the label face of the medium 502, to-be-newly-burned images 612 and 614 are laid out. These to-be-newly-burned images 612 and 614 are the result of creating to-be-burned images by collectively laying out the following series of character information: "xy BOX 80 2006/11/15" at line 1; "xyz BOX 80 2006/11/24" at line 2; and "abcde DOE 8:30 2006/12/1" at line 3.

Specifically, the burnable region in which the lines can be assigned is restricted to a top part and a bottom part of the label face to avoid a central region 618 in which division by the unburnable area inside the innermost circumference 616 is likely. With the burnable region separated into a top and a bottom part in this way, lines 1 and 2 are laid out in the top part, and line 3 is laid out in the bottom part. In a layout like this, a character string forming a line is not divided, and thus a larger number of characters can be arranged in each line. Moreover, the lines are all centered so as to be in harmony with the circular burning region.

A layout like that shown in Fig. 32 is suitable in cases where the contents recorded in the data face are definite and the layout of the entire recordable region on the label face can be managed collectively, as in cases where finalization has already been performed or there is no capacity left on the data face. This is because, in such cases, it is possible to adopt layouts that are universal and pleasant in design.

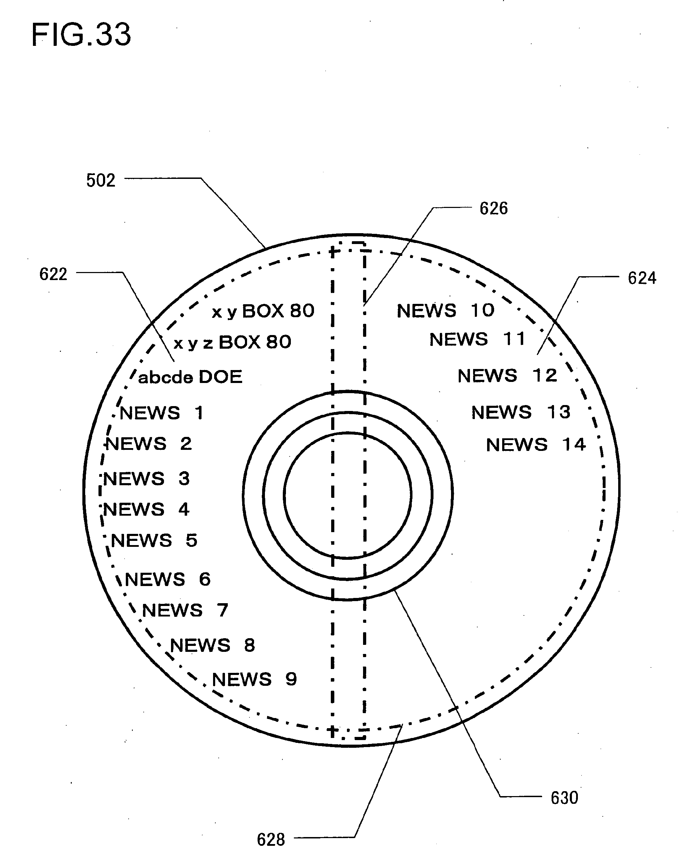

Fig. 33 shows the television display screen showing an image on the label face of a medium of the "label-printable type", showing another example of what is displayed when the processing in step S594 in Fig. 28 is performed. In Fig. 33, on the label face of the medium 502, burning images 622 and 624 are laid out.

In the layout shown in Fig. 33, even the central region in which division of a character string is likely is used as a burning region so that as much character information as possible can be recorded. Specifically, the burning region is separated into a left and a right part by a burning-prohibited region 626, with the burning image 622 laid out in the left part and the burning image 624 laid out in the right part. In both the left and right parts, of a central region (corresponding to the central region 618 in Fig. 32), the part between the outer circumference 628 and the inner circumference 630 (corresponding to the innermost circumference 616 in Fig. 32) is used as a burning region for lines; of a top region and a bottom region (corresponding to the burnable region in Fig. 32), the parts between the outer circumference 628 and the burning-prohibited region 626 are used as a burnable region for lines.

The left burning image 622 is so laid out that the line heads are aligned leftward at the outer circumference 628, and the right burning image 624 is so laid out that the line ends are aligned rightward at the outer circumference 628. The lines do not necessarily have to be laid out to be aligned rightward or leftward in this way, but may instead be centered inside their respective burning regions.

Designed as described above, the layout shown in Fig. 33 is, as described above, suitable in cases where as much character information as possible needs to be recorded, and also in cases where as large a burnable region as possible needs to be left for future burning on the label face. On the disadvantageous side, the length a line can have is smaller; as a result, for example, of the character string "xy BOX 80 2006/11/15", which can be fully burned in Fig. 32, the date item "2006/11/15" is deleted in the layout in Fig. 33.

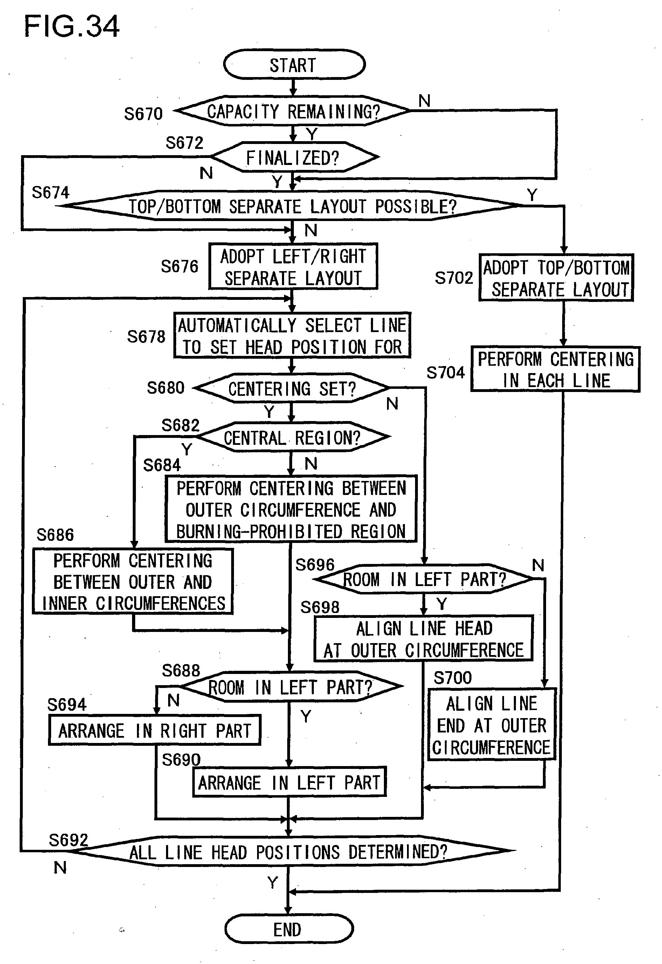

Fig. 34 is a flow chart showing the details of the line head position setting processing performed in step S588 in Fig. 28 to make the layouts shown in Figs 32 and 33 possible. When the flow starts, first, in step S670, whether or not there is remaining capacity on the data face is checked. If there are remaining capacity, the flow proceeds to step S672 to check whether or not finalization has been performed. If finalization has not been performed, the flow proceeds to step S674. If, in step S670, there is no remaining capacity, the flow proceeds directly to step S674.

In step S674, whether or not a top/bottom separate layout is possible is checked. This check amounts to checking whether or not the layout shown in Fig. 32 can be adopted, and its check result depends on the shape of the burnable region and the amount of information to be newly burned. If a top/bottom separate layout is impossible, the flow proceeds to step S676. If, in step S672, finalization has not been performed, the flow proceeds to step S676. This is because, when there is remaining capacity and in addition finalization has not been performed yet, it is appropriate to secure as large a burnable area as possible.

In step S676, a left/right separate layout is adopted. This means that the layout shown in Fig. 33 is adopted. Next, in step S678, one line for which to set the line head position is automatically selected. The automatic selection here starts with line 1. For example, if, in Fig. 33, the first three lines of the burning image 622 have already been burned, and the to-be-newly-burned character information is from "NEWS 1" to "NEWS 14", the line selected first is "NEWS 1".

Next, in step S680, whether or not a setting to perform centering has been made is checked and, if such setting has been made, the flow proceeds to step S682. In step S682, whether or not the line selected in step S678 is laid out in the central region is checked. If it is not laid out in the central region, it is laid out in the top or bottom region; thus, the flow proceeds to step S684 to adopt centering between the outer circumference 628 and the burning-prohibited region 626 in Fig. 33, and then proceeds to step S688.

On the other hand, if, in step S682, the line is found to be laid out in the central region, the flow proceeds to step S686 to adopt centering between the outer circumference 628 and the inner circumference 630 in Fig. 33, and then proceeds to step S688.

In step S688, whether or not there is room for a layout in the left part of the left/right separated burnable region is checked. For example, in the case of "NEWS 1" in Fig. 33, since there is room in the left part, in step S690, "NEWS 1" is arranged in the left part of the burning region, and then the flow proceeds to step S692.

On the other hand, for example, in the case of "NEWS 10" in Fig. 33, since there is no longer any room in the left part of the burning region, the flow proceeds to step S694 to arrange "NEWS 10" in the right part of the burning region, and then proceeds to step S692.

Described above is the processing performed when a setting to perform centering has been made. If, in step S680, no setting to perform centering is found to have been made, line head setting processing is performed just as shown in Fig. 33.

Specifically, in step S696, whether or not there is room for a layout in the left part of the burning region is checked. If there is room there, the flow proceeds to step S698 to arrange the line in the left part of the burning region, for example as with "NEWS 1" in Fig. 33 and align the line head leftward at the outer circumference 628, and then proceeds to step S692.

On the other hand, if, in step S696, there is no room in the left part of the burning region, the flow proceeds to step S700 to arrange the line in the right part of the burning region, for example as with "NEWS 10" in Fig. 33 and align the line end rightward at the outer circumference 628, and the proceeds to step S692.

As described above, when no setting to perform centering has been made, irrespective of whether or not the line is laid out in the central region, the line head position can be set relative to the outer circumference 628 of the burning region as shown in Fig. 33. As has been discussed above, in the present specification, when setting the line head position, the line head itself may directly be used as the reference for position setting, or the line end or the end of the space appended to it may be used as the reference, or centering may be performed. Any of these approaches eventually contributes indirectly to the setting of the line head position, and therefore it should be understood that "line head position setting" in its broad sense, includes such indirect approaches as well, unless otherwise stated.

In step S692, whether or not the line head positions of all the lines have been determined is checked. If all the lines have been dealt with, the flow ends; if there is any line that has not been dealt with, the flow returns to step S678 to automatically select the next line. In this way, until it is found that all the line head positions have been determined in step S692, steps S678 to S700 are repeated.

On the other hand, if, in step S674, a top/bottom separate layout is possible, then, in step S702, a top/bottom separate layout avoiding the central region is adopted, and then, in step S704, centering is performed in each line; the flow then ends. This makes the layout shown in Fig. 32 possible. In this way, when a top/bottom separate layout is possible, the processing required is simple.

It should be understood that the processing shown in Fig. 34 is directed exclusively to the arrangement of lines and the setting of the line head position, and that it is the subsequent flow, namely the flow shown in Fig. 29, that takes care of the checking of whether or not each line fits in the burning region and the handling of a line that does not.

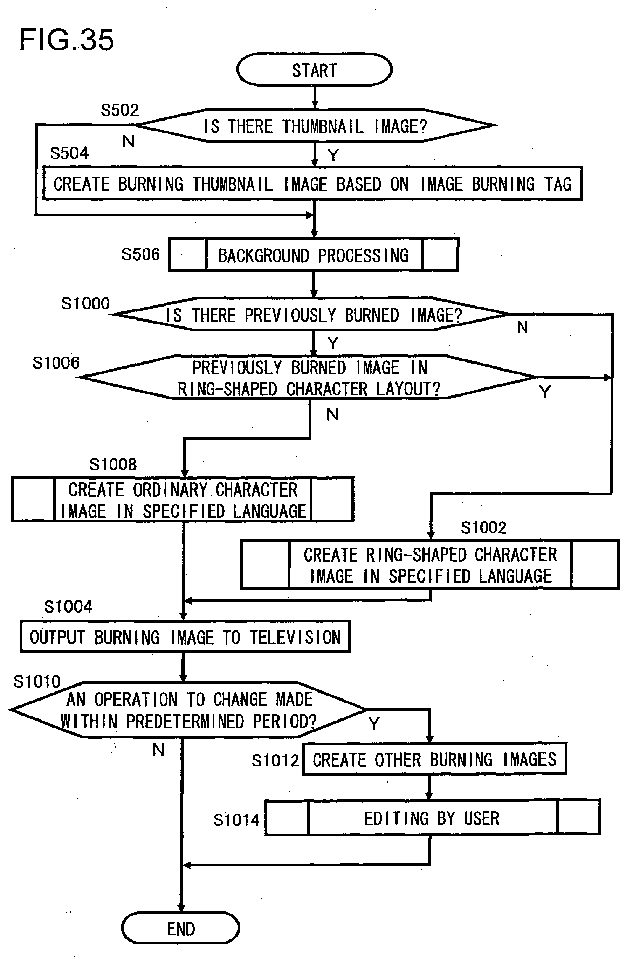

Fig. 35 relates to a seventh embodiment of the present invention. The seventh embodiment has largely the same configuration as the sixth embodiment, and operates, like the sixth embodiment, according to the flow chart of Fig. 25. The difference lies in the details of step S500 in Fig. 25; specifically, here, a burning image is created in a layout different from that in which a burning image has thus far been described to be created. Fig. 35 is a flow chart showing the details of the burning image layout processing in step S500 in Fig. 25 in the seventh embodiment. Steps S502 to S506 in Fig. 35 are common to Fig. 26; therefore the mutually corresponding steps are identified with common step numbers, and their description will not be repeated unless necessary.

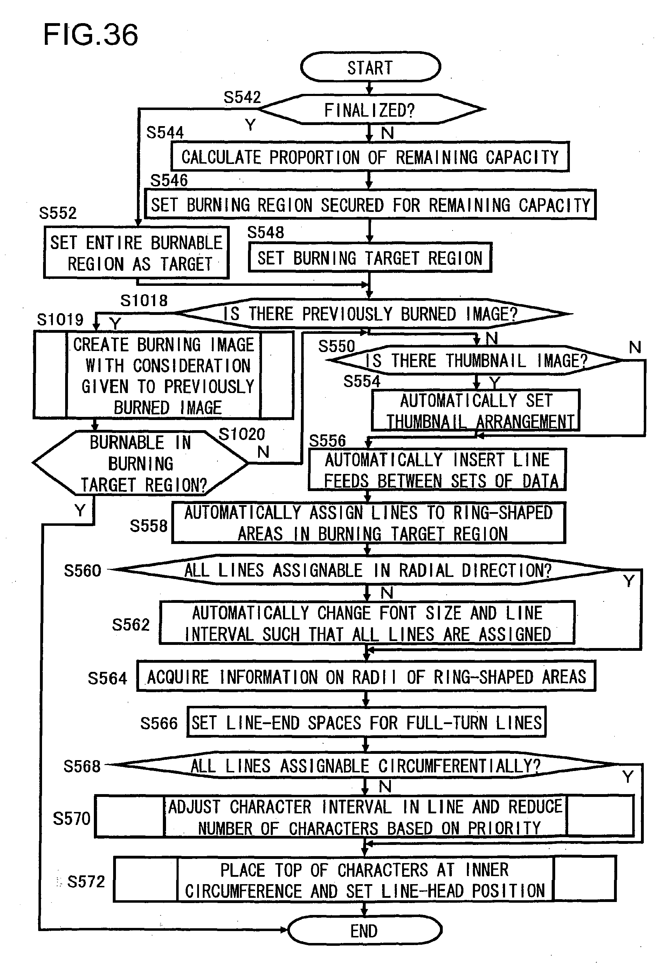

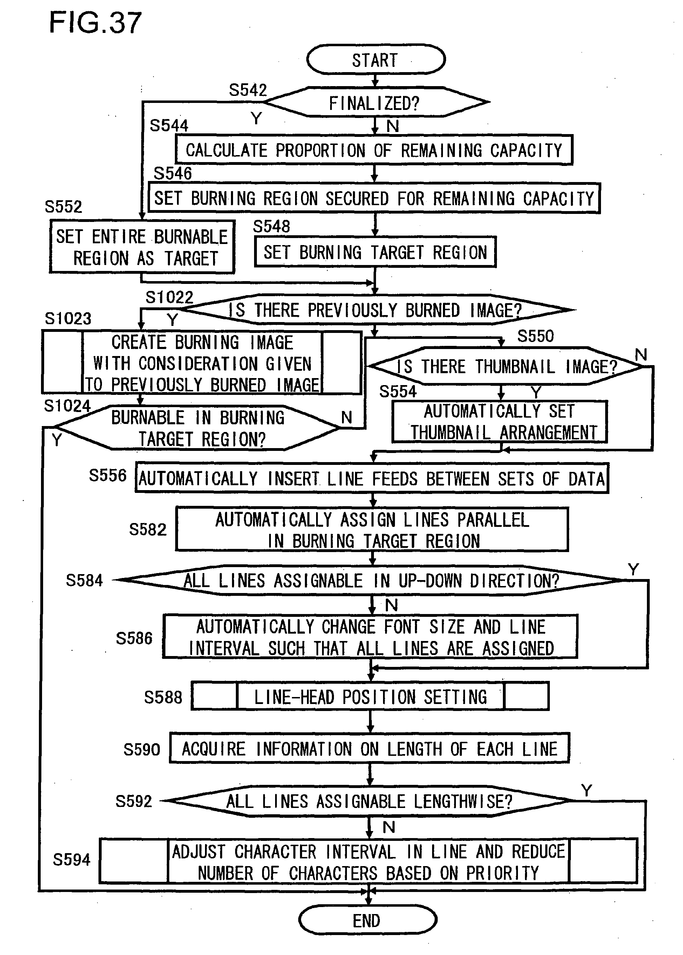

After background processing is performed in step S506, in step S1000, whether or not there is any previously burned image is checked. If there is no previously burned image, then, in step S1002 (which will be described in detail later in the course of the description of Fig. 36), a ring-shaped character image is created in the specified language. Then, in step S1004, a burning image having the thus created ring-shaped character layout is displayed on the screen 52 of the television 4. On the other hand, if, in step S1000, it is found that there is a previously burned image, then, in step S1006, whether or not the previously burned image has a ring-shaped character layout is checked. If it is found not to have a ring-shaped character layout, then, in step S1008 (which will be described in detail later in the course of the description of Fig. 37), an ordinary character image is created in the specified language. Then, in step S1004, a burning image having the thus created ordinary character layout is displayed on the screen 52 of the television 4. If, in step S1000, it is found that there is a previously burned image and then, in step S1006, it is found that the previously burned image has a ring-shaped character layout, then, in step S1002, a ring-shaped character image is created in the specified language. Then, in step S1004, a burning image having the thus created ring-shaped character layout is displayed on the screen 52 of the television 4.

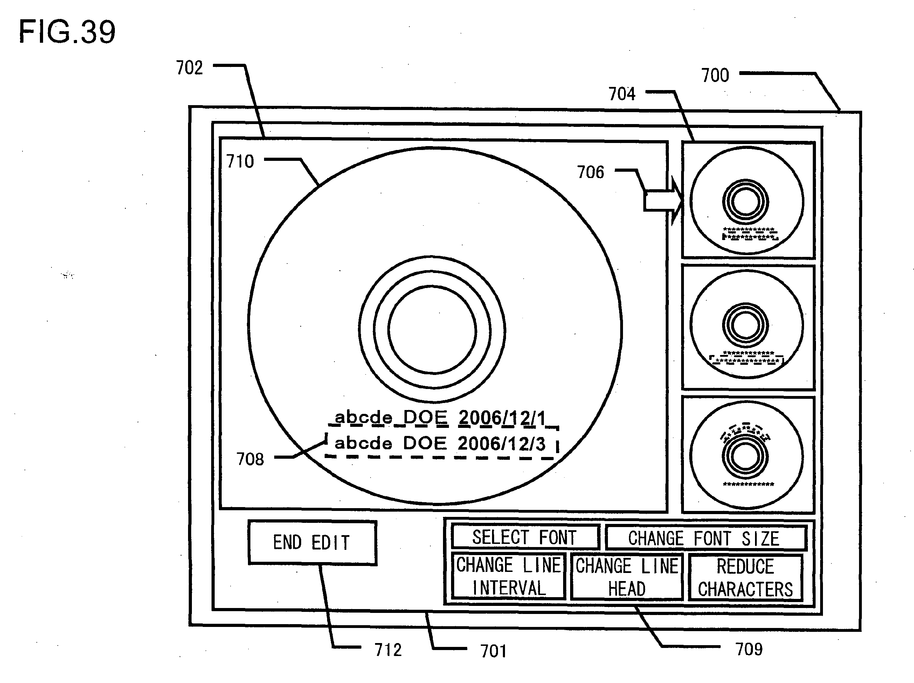

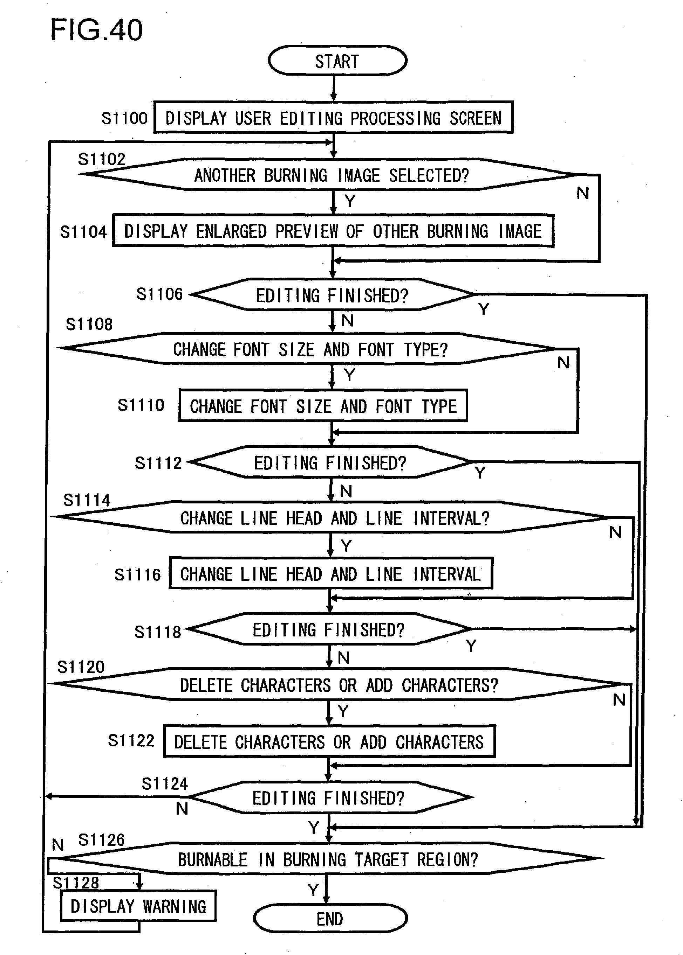

After the burning image is displayed on the screen 52 of the television 4 in step S1004, in step S1010, if an operation to change the layout specified for the burning image is not made within a predetermined period, the creation of the burning image is finished. If, in step S1010, an operation to change the specified layout is made within the predetermined period, then, in step S1012, other burning image creation processing (which will be described in detail later in the course of the description of Fig. 40) is performed and then, in step S1014 (which will be described in detail later in the course of the description of Figs. 39 and 40), the user performs editing; now the creation of the burning image is finished.

Now, the details will be described of the check made in step S1000 to see whether or not there is a previously burned image. In this step, whether or not there is a previously burned image is checked based on one or both of burning-finished information on the label face of the disc as held in the label information recorder 32 and burning-finished information obtained as a result of the data/label reader 28 reading a tag bar code from the label face of the disc. Alternatively, burning-finished information from the data/label reader 28 may be stored in the label information recorder 32 so that, based on this information, whether or not there is a previously burned image is checked. A previously burned image may be checked based on the already-burned image with the newest date, or based on the already-burned image with the oldest date. Alternatively, in cases where a plurality of already-burned images have been burned in different layouts, the already-burned image having the most frequently burned layout may be used as a previously burned image to make the check in step S1000.

Now, the details will be described of the ring-shaped character image creation processing in the specified language in step S1002, with reference to Fig. 36. Fig. 36 has steps S1018, S1019, and S1020 inserted between steps S548 and S550 of Fig. 27. Accordingly, the mutually corresponding steps are identified with common step numbers, and their description will not be repeated unless necessary.

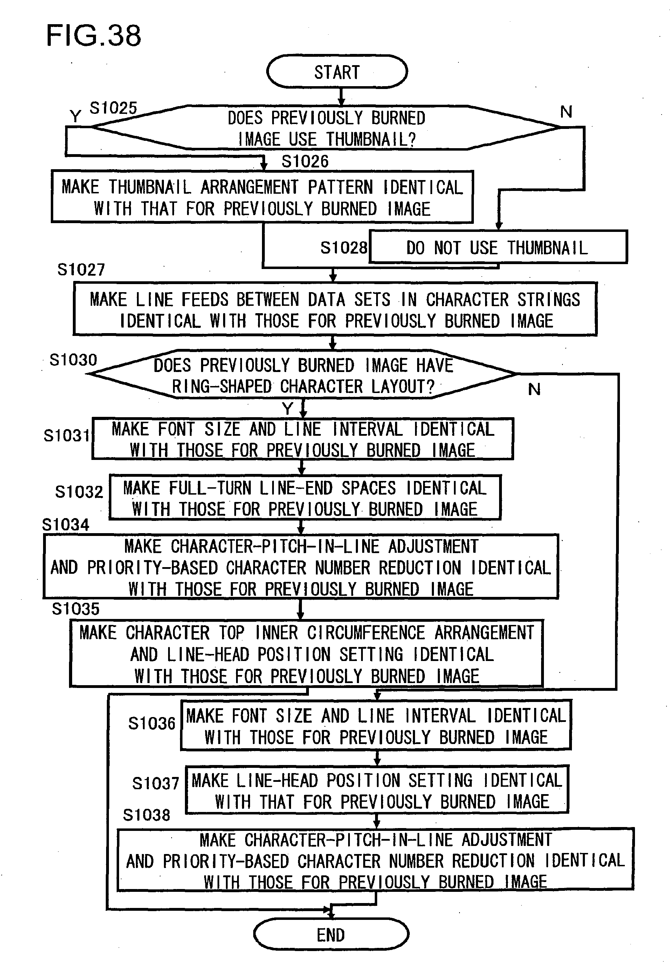

In Fig. 36, after burning image layout processing is started and a few steps of it are performed, in step S548, a burning target region is determined. Thereafter, if, in step S1018, it is found that there is a previously burned image, then, in step S1019 (which will be described in detail later in the course of the description of Fig. 38), a burning image is created with consideration given to the previously burned image; then, in step S1020, whether or not the thus created burning image is burnable in the burning target region is checked and, if it is found to be burnable, the burning image created with consideration given to the previously burned image is determined as the burning image to be burned this time, and the flow ends. If, in step S1020, the burning image created with consideration given to the previously burned image is found to be unburnable in the burning target region, the flow then, to create a burning image in a different layout, proceeds to step S550 to create a ring-shaped character image different from the burning image created in step S1019. Step S550 is also executed when, in step S1018, it is found that there is no previously burned image.

Now, the details will be described of the ordinary character image creation processing in the specified language in step S1008 in Fig. 35, with reference to Fig. 37. Fig. 37 has steps S1022, S1023, and S1024 inserted between steps S548 and S550 of Fig. 27. Accordingly, the mutually corresponding steps are identified with common step numbers, and their description will not be repeated unless necessary.

After the burning target region is determined in step S548, if, in step S1022, it is found that there is a previously burned image, then, in step S1023 (which will be described in detail later in the course of the description of Fig. 38), a burning image is created with consideration given to the previously burned image; then, in step S1024, whether or not the thus created burning image is burnable in the burning target region is checked and, if it is burnable, the creation of the burning image in an ordinary character layout is finished. If, in step S1024, the created image is found to be unburnable in the burning target region, the flow then, to create a burning image in a different layout, proceeds to step S550 to create a ring-shaped character image different from the burning image created in step S1023. Step S550 is also executed when, in step S1022, it is found that there is no previously burned image.

Now, with reference to Fig. 38, a detailed description will be given of how a burning image is created with consideration given to a previously burned image in step S1019 in Fig. 36 and in step S1023 in Fig. 37. In Fig. 38, irrespective of whether or not the previously burned image has a ring-shaped character layout or an ordinary character layout, first, in step S1025, whether or not the previously burned image uses a thumbnail is checked. If the previously burned image uses a thumbnail, then, in step S1026, the arrangement pattern of the thumbnail is made identical with that for the previously burned image, and then, in step S1027, the line feeds between different sets of data in character strings are made identical with those for the previously burned image (in all the examples described before paragraph 0320, line feeds are always inserted between different sets of data in character strings when a burning image is created; however, the target of the check in step S1027 may be a burning image in which no line feeds are inserted between different sets of data in character strings or an already-burned image resulting from such a burning image being burned); the flow then proceeds to step S1030.

On the other hand, if, in step S1025, the previously burned image is found not to use a thumbnail, then, in step S1028, it is decided not to use a thumbnail, and then, in step S1027, the line feeds between different sets of data are made identical with those for the previously burned image; the flow then proceeds to step S1030.

After step S1030, different courses are taken depending on whether or not the previously burned image has a ring-shaped character layout or an ordinary character layout. If, in step S1030, the previously burned image is found to have a ring-shaped character layout, then, through the subsequent steps S1030 to S1035, a burning image is created in a ring-shaped character layout with consideration given to the previously burned image.

If, in step S1030, the previously burned image is found to have a ring-shaped character layout, then, in step S1031, the font size and the line interval are made identical with those for the previously burned image, and then, in step S1032, the full-turn line-end spaces are made identical with those for the previously burned image; then, in step S1034, the adjustment of the character pitch in the line is made identical with that for the previously burned image. Moreover, in step S1034, the reduction of the number of characters based on priority that was performed on the previously burned image is performed also on the burning image created this time. For example, if, at the time of previous burning, of two items of information, namely date and time, the time information was the target of the reduction of the number of characters, then also in the burning image burned this time, of the date and time of broadcast of the program, the time information is the target of the reduction of the number of characters.

In step S1035, the arrangement of the character top inner circumference arrangement and the line head position are made identical with those for the previously burned image, and a burning image is created in a ring-shaped character layout with consideration given to the previously burned image (as will be seen from how the flow proceeds, these steps S1031, S1032, S1033, S1034, and S1035 are executed only when a burning image in a ring-shaped character layout is created, and are not executed when a burning image in an ordinary character layout is created).

If, in step S1030, the previously burned image is found not to have a ring-shaped character layout, then, through the subsequent steps S1036 to S1038, a burning image is created in an ordinary character layout with consideration given to the previously burned image. If, in step S1030, the previously burned image is found not to have a ring-shaped character layout, then, in step S1036, it is decided that the font of the same size and type as that used in the previously burned image will be used in the burning image created this time, and that the same line interval as that used in the previously burned image will be used in the burning image created this time. Thereafter, in step S1037, the line head position set through the line head position setting processing performed on the already-burned image is applied to the burning image, and then, in step S1038, the adjustment of the character pitch in the line that was performed on the previously burned image is performed also on the burning image created this time. Moreover, the reduction of the number of characters based on priority that was performed on the previously burned image is performed also on the burning image created this time, and thus a burning image is created in an ordinary character layout with consideration given to the previously burned image (as will be seen from how the flow proceeds, these steps S1036, S1037, and S1038 are executed only when a burning image in an ordinary character layout is created, and are not executed when a burning image in a ring-shaped character layout is created).

The burning image created through the steps described above with reference to Fig. 38 is free from inconsistency such as it having a differently sized font from the already-burned image. This image layout processing will be welcome to users who additionally write information on a serial drama every time they have watched one chapter of it.

As described above, the burning image created in step S1002 or S1008 in Fig. 35 is then, in step S1004, outputted via the input/output interface 30 to the screen 52 of the television 4. In step S1010, the user, while viewing the burning image outputted to the screen 52 of the television 4, proceeds to the actual burning of it on the label face, and, to make this possible, the user needs to confirm his acceptance to do so within a predetermined period. If the user does not express an intention to change the burning image within the predetermined period, the image layout processing is finished; the burning image is thus determined, and is then actually burned through the subsequent processing. On the other hand, if the user expresses an intention to change within the predetermined period, he can then perform editing.

In the editing by the user in step S1014, a plurality of burning images created through different sessions of layout processing are displayed to allow the user to select one of them and decide which burning image to edit. When the user decides to perform editing, in step S1012, other burning image creation processing is performed to create a plurality of burning images having different layouts. Then, in step S1014, the editing on the burning images by the user is performed.

Fig. 39 is a diagram showing an example of how interactive operation proceeds while the user editing processing performed in step S1014 in Fig. 35 is displayed on the television screen. A user editing processing screen 701 is displayed on the screen of the television 700 in Fig. 39. In an enlarged preview box 702, an enlarged preview of, of all the burning images shown in burning image selection boxes 704, the one being selected by a cursor 706 is shown. A burning image is shown inside a broken-line frame 708, while an already-burned image is shown with no such broken-line frame. Here, the image shown as "abcde DOE 2006/12/1" on a label screen 710 is an already-burned image. The image shown as "abcde DOE 2006/12/3" on the label screen 710 is, of all the burning images shown in burning image selection boxes 704, the one being selected by the cursor 706 by default. In this example, the already-burned image and the burning image both have an ordinary character layout, have the font of the same type and size, have the same line heads, and, with the program time deleted from both, have the same items as targets of character number reduction (both have the same number and types of items of information as information on programs). Thus, it is understood that the burning image "abcde DOE 2006/12/3" selected from the burning image selection boxes 704 by default has been created through steps 1019 and 1020 in Fig. 36.

The user can perform manual additional editing (which will be described in detail later) on the burning image displayed in the enlarged preview box 702 by making selections in an additional editing command box 709. When, having finished such editing, the user selects and confirms an "end edit" icon 712, the burning image layout processing ends, leaving the burning image selected from the burning image selection boxes 704 and displayed in the enlarged preview box 702 (and, if manual additional editing has been performed, including its results).

Now, the user editing processing in Fig. 39 will be described with reference to the flow chart in Fig. 40 showing the user editing processing. In step S1100, the user editing processing screen (701 in Fig. 39) is displayed. In step S1102, whether or not the user has selected another burning image is checked. Here, "another burning image" denotes a burning image other than the one selected by default in the burning image selection boxes 704 when the user editing processing screen is first displayed, and is created in step S1012 in Fig. 35. That is, to realize a user interface that permits the user to select, from among a plurality of burning images given different layouts, one with a layout he likes, it is necessary to create beforehand a plurality of other burning images in different layouts.

When the user elects another burning image, then, in step S1104, the selected other burning image is displayed in the enlarged preview box 702. When the user finishes editing in step S1106, the burning image displayed in the enlarged preview box 702 is determined as the burning image to be burned, and is then actually burned.

If the user is not so particular about the layout of the burning image, when he is given an occasion to select another burning image in addition to the burning image selected by default, he is likely to have determined the burning image through the series of operations thus far. However, if the user is particular about the details of the layout of the burning image, he may still be unsatisfied with the burning image automatically created through the burning image layout processing. One way to cope with such a user is to allow him to perform manual additional editing.

Now, manual additional editing by the user will be described with reference to Fig. 40. Here, the part of the flow relating to manual additional editing is from step S1108 to step S1124. If, in step S1106 in Fig. 40, editing is finished, then, in step S1126, whether or not the burning image is burnable in the burning target region is checked. If burnable, editing is finished; if unburnable, then, in step S1128, a warning to that effect is given, and then, in step S1102, the user is prompted to perform editing again. If, in step S1106, editing is continued, then, in step S1108, the font size and the font type can be changed. If no change is made, then the flow proceeds directly to step S1112; if a change is made, then, in step S1110, the change is reflected in the burning image, and then the flow proceeds to step S1112.

If, in step S1112, editing is finished, then, in step S1126, whether or not the burning image is burnable in the burning target region is checked. If burnable, editing is finished; if unburnable, then, in step S1128, a warning to that effect is given, and then, in step S1102, the user is prompted to perform editing again. If, in step S1112, editing is continued, then, in step S1114, the line head and the line interval can be changed. If no change is made, then the flow proceeds directly to step S1118; if a change is made, then, in step S1116, the change is reflected in the burning image, and then the flow proceeds to step S1118.

If, in step S1118, editing is finished, then, in step S1126, whether or not the burning image is burnable in the burning target region is checked. If burnable, editing is finished; if unburnable, then, in step S1128, a warning to that effect is given, and then, in step S1102, the user is prompted to perform editing again. If, in step S1118, editing is continued, then, in step S1120, the characters in the burning image can be reduced or characters can be added to it. If no reduction or addition is made, then the flow proceeds directly to step S1124; if a reduction or addition is made, then, in step S1122, the reduction or addition is reflected in the burning image, and then the flow proceeds to step S1124.

If, in step S1124, editing is finished, then, in step S1126, whether or not the burning image is burnable in the burning target region is checked. If burnable, editing is finished; if unburnable, then, in step S1128, a warning to that effect is given, and then, in step S1102, the user is prompted to perform editing again. Also if, in step S1124, editing is not finished but continued, the flow proceeds to step S1102 so that the user is prompted to perform editing again.

The operations in steps S1108, S1114, and S1120 are performed when the user selects and confirms the corresponding one of the icons in the additional editing command box 709 (Fig. 39) on the user editing processing screen. To allow the font size to be changed, it is preferable to adopt a cyclic selection method such that, every time the icon for changing the font size is selected and confirmed, the font grows larger, returning to the smallest font on exceeding a predetermined size. This requires only one icon compared with in a case where, to allow the font size to be changed, two icons need to be provided on the user editing processing screen, one for enlarging the font and the other for reducing it. Moreover, since the operation simply requires selection and confirmation of icons, the user can create a burning image more finely reflecting his preferences by operating a cross-shaped key and an enter key provided on the remote control 6.

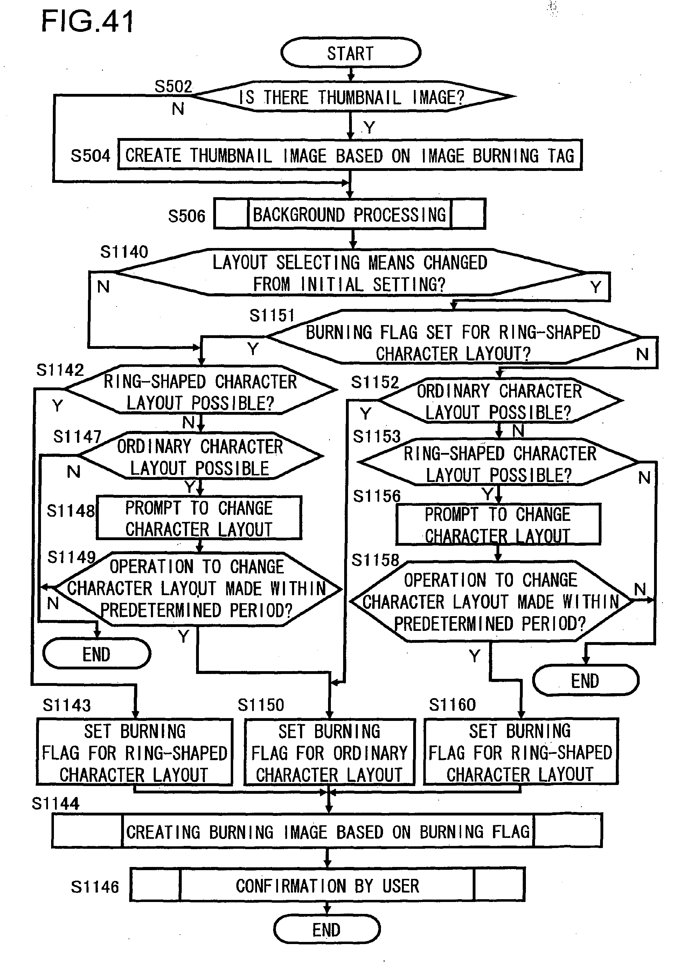

Fig. 41 relates to an eighth embodiment of the present invention. The eighth embodiment also has largely the same configuration as the sixth embodiment, and operates, like the sixth embodiment, according to the flow chart of Fig. 25. The difference lies in the details of step S500 in Fig. 25; specifically, here, a burning image is created in a layout different from those used in the sixth and seventh embodiments. Fig. 41 is a flow chart showing the details of the burning image layout processing in step S500 in Fig. 25 in the eighth embodiment. The processing performed in steps S502, S504, and S506 in Fig. 41 is the same as that in the identically numbered steps in Fig. 26, and therefore no overlapping description will be repeated unless necessary.

After background processing is performed in step S506 in Fig. 41, in step S1140, whether or not layout selecting means has been changed from the initial setting is checked. In the initial setting, the layout selecting means is so selected as to create a burning image in a ring-shaped character layout.

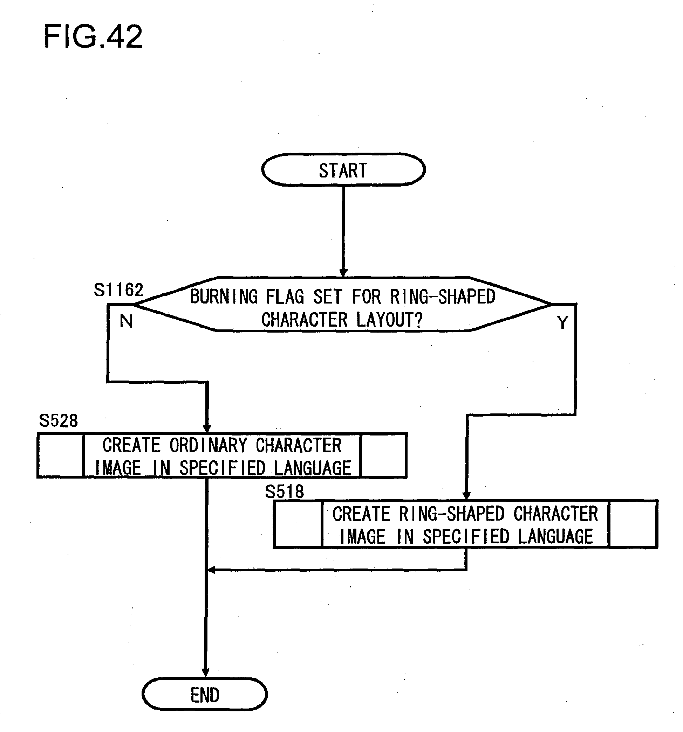

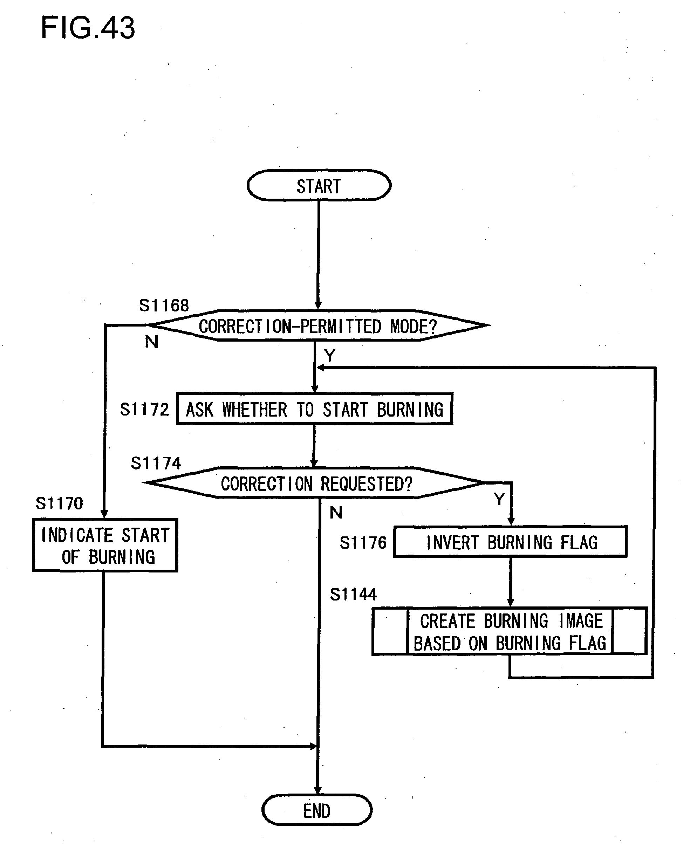

First, a description will be given of the case where, in step S1140, the layout selecting means has not been changed from the initial setting. Subsequent to step S1140, in step S1142, whether or not a ring-shaped character layout is possible without interfering already-burned characters is checked (in the following description, a check of whether or not a layout is possible refers to a check of whether or not a burning image being created can be laid out without interfering with already-burned characters). If a ring-shaped character layout is possible, then, in step S1143, a burning flag is set for a ring-shaped character layout. Then, in step S1144 (described later in the course of the description of Fig. 42), a burning image is created based on the burning flag, and then, in step S1146 (described later in the course of the description of Fig. 43), the user is prompted to confirm. On the other hand, if, in step S1142, it is found that a ring-shaped character layout is impossible, then, in step S1147, whether or not an ordinary character layout is possible is checked. If it is impossible, it means that neither a ring-shaped character layout nor an ordinary character layout is possible; thus, the flow ends, making a return to step S250 in Fig. 25. If, in step S1147, it is found that an ordinary character layout is possible, then, in step S1148, the user is prompted to change the character layout. If, in step S1149, an operation to change the character layout is made within a predetermined period, then, in step S1150, the burning flag is set for an ordinary character layout. Then, in step S1144, a burning image is created based on the burning flag, and then, in step S1146, the user is prompted to confirm. If, in step S1149, no operation to change the character layout is made within the predetermined period, a failure to create a burning image is reported, and the flow ends.

Next, a description will be given of the case where, in step S1140, the layout selecting means has been changed from the initial setting even once. If, in step S1140, the layout selecting means is found to have been changed from the initial setting even once, then, in step S1151, whether or not the burning flag is set for a ring-shaped character layout is checked. If, in step S1151, the burning flag is found to be set for a ring-shaped character layout, the flow proceeds to step S1142 to perform the subsequent processing; if, in step S1151, the burning flag is found not to be set for a ring-shaped character layout, then, in step S1152, whether or not an ordinary character layout is possible is checked. If, in step S1152, an ordinary character layout is found to be possible, then the processing starting with and subsequent to step S1150 is performed; if, in step S1152, an ordinary character layout is found to be impossible, then, in step S1153, whether or not a ring-shaped character layout is possible is checked.

If, in step S1153, a ring-shaped character layout is found to be impossible, it means that neither an ordinary character layout nor a ring-shaped character layout is possible; thus, the flow ends, making a return to step S250 in Fig. 25. On the other hand, if, in step S1153, a ring-shaped character layout is found to be possible, then, in step S1156, the user is prompted to change the character layout. If, in step S1158, the user makes an operation to change the character layout within a predetermined period, then, in step S1160, the burning flag is set for a ring-shaped character layout, and the flow proceeds to the processing starting with and subsequent to step S1144. On the other hand, if, in step S1158, the user makes no operation to change the character layout within the predetermined period, a failure to create a burning image is reported, and the flow ends.

Now, with reference to Fig. 42, a description will be given of the creation of a burning image based on the burning flag in step S1144 in Fig. 41. Steps S518 and S528 in Fig. 42 are the same as steps S518 and S528 in Fig. 26, and therefore their description will not be repeated. In step S1162 in Fig. 42, whether or not the burning flag is set for a ring-shaped character layout is checked. If the burning flag is set for a ring-shaped character layout, then, in step S518, a ring-shaped character image is created in the specified language, and the flow ends; if the burning flag is set for an ordinary character layout, then, in step S528, an ordinary character image is created in the specified language, and the flow ends.

Now, with reference to Fig. 43, a description will be given of the confirmation by the user in step S1146 in Fig. 41. Step S1144 in Fig. 43 is the same as step S1144 in Fig. 41, and therefore its description will not be repeated. At the start of the flow in Fig. 43, a burning image has already been created in a ring-shaped character layout or an ordinary character layout. If, in step S1168, a correction-permitted mode is off (it can be freely switched between on and off, and is initially set to be off), then, in step S1170, the burning image is displayed on the screen 52 of the television 4; then, a message indicating that burning is started with that burning image is displayed, and the flow ends. If, in step S1168, the correction-permitted mode is on, then, in step S1172, the burning image is displayed on the screen 52 of the television 4, and the user is asked whether or not to accept to start burning with that burning image.

Then, if, in step S1174, the user expresses an intention to make a correction, then, in step S1176, the burning flag is inverted (when the burning flag is set for a ring-shaped character layout, inverting it results in the burning flag holding a ordinary character layout); then, in step S1144, a burning image is created based on the burning flag, and the flow proceeds to step S1172. On the other hand, if, in step S1174, the user expresses no intention to make a correction, the flow ends, with no correction made in the burning image that had been created at the start of the flow in Fig. 43.

In a modified embodiment (No. 2) described with reference to Fig. 41, in principle, a burning image is created in a ring-shaped character layout. Thus, advantageously, unless the user explicitly specifies a layout, a burning image that can be burned in a shorter time is automatically created.

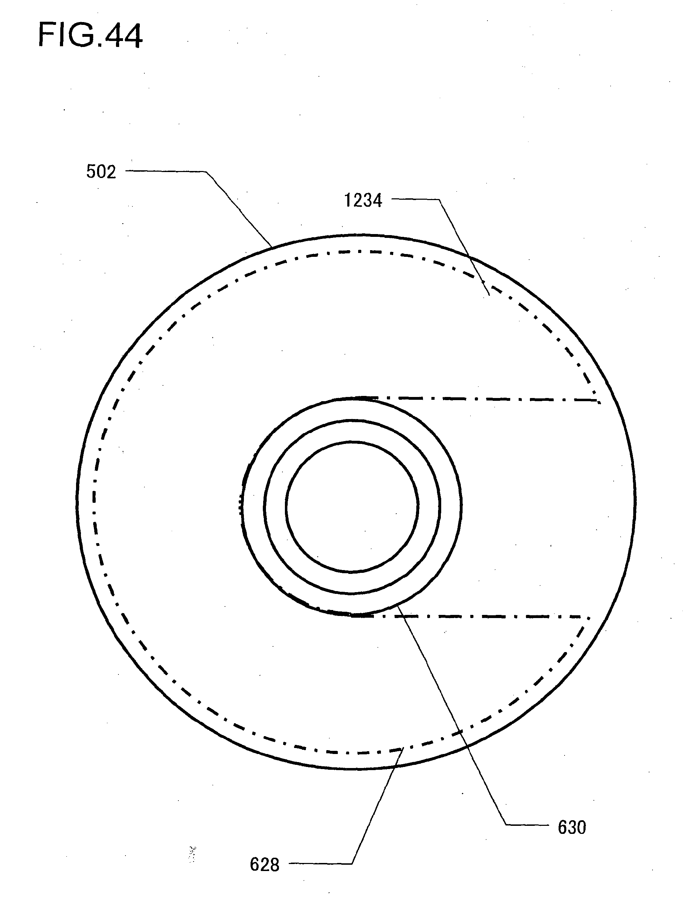

Fig. 44 is a television display screen showing an image on the label face of the medium in a ninth embodiment of the present invention. The ninth embodiment has largely the same configuration as the sixth embodiment, and operates, like the sixth embodiment, according to the flow chart of Figs. 25 and 26. The difference lies in the details of step S528 in Fig. 26; specifically, here, a burning image is created in a layout different from those of the already described burning images.

Fig. 44 shows the burning region in the layout of the burning image in the ninth embodiment. Here, such parts as find their counterparts in the image of the label face in Fig. 33 are identified by common reference numerals. As will be clear from Fig. 44, in the burning region 1234 in the ninth embodiment, the region between the outer circumference 628 and the inner circumference 630 of the medium 502 can be used continuously from left to right. To avoid confusion, however, the region to the right of the inner circumference 630 is excluded from the burning region 1234, and nothing is burned in this region.

In the ninth embodiment, in this burning region 1234, data of character strings having line feeds inserted between different sets of data is burned. In the burning region 1234, the length that each line is permitted to have differs from one line to another, and therefore information on the length of each line is acquired; at the same time, information on the line head position of each line is also acquired. If the length of information to be burned is greater than the burnable length, line feeds are inserted and/or one or more of the items to be burned are deleted according to priority.

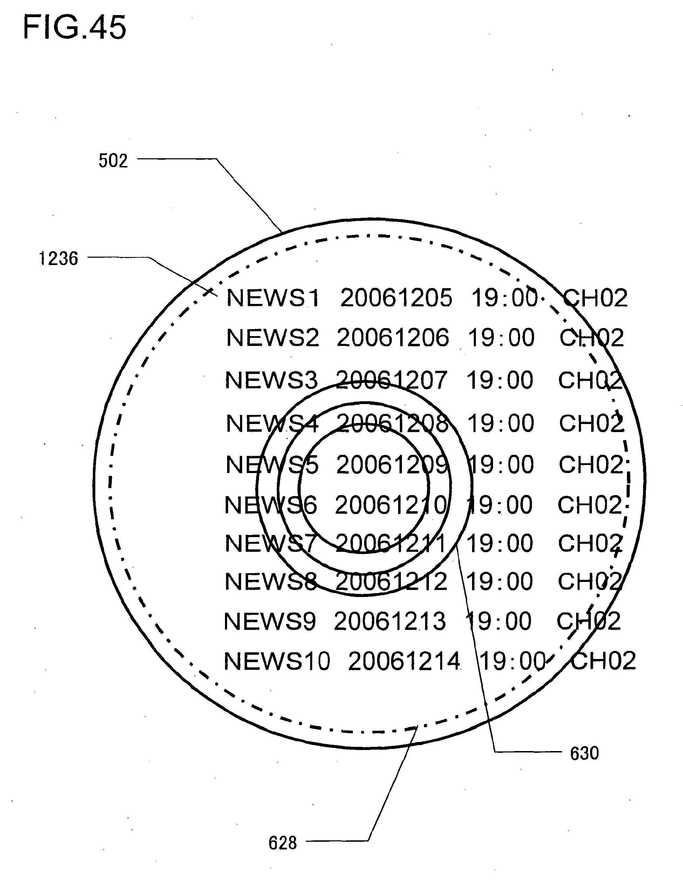

Fig. 45 shows how burning data 1236 having gone through processing for automatic line feeds between different sets of data is laid out in the burning region 1234. Here, only line 1 is arranged at the left end of the outer circumference 628, and the line head positions of the other lines are aligned with that of line 1.

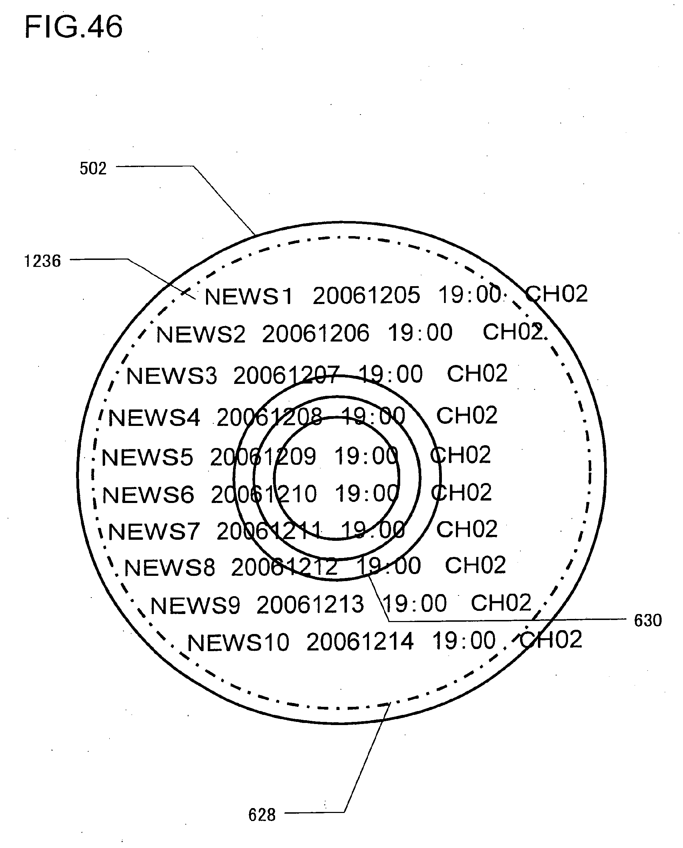

Fig. 46 shows how burning data 1236 having gone through processing for automatic line feeds between different sets of data and then having gone through processing for line head position setting is laid out in the burning region 1234. Here, according to the acquired information on the line head position of each line, the lines are aligned at the left end of the outer circumference 628.

A line (line 1) for which the line head position has been set is selected. Then, based on the acquired information on the line length, whether or not the selected line is assignable inside the burning region in the left/right direction is checked. In the case shown in Fig. 46, the right end of line 1 lies outside the burning region 1234, and is therefore found to be unassignable in the left/right direction. When a line is found to be unassignable in the left/right direction, a line feed is inserted in it to make it assignable.

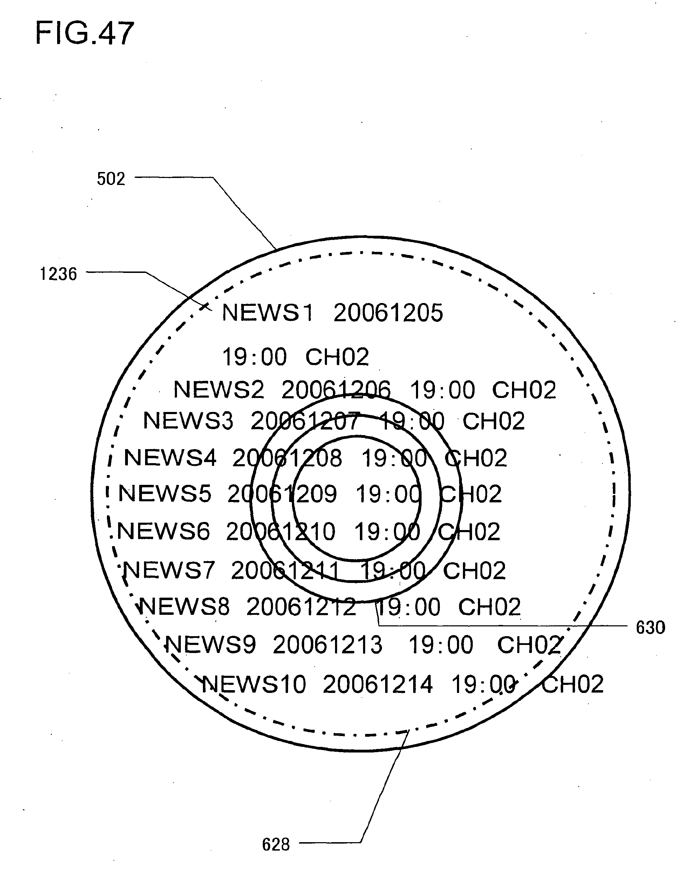

Fig. 47 shows how, since line 1 has been found to be unassignable inside the burning region in the left/right direction, a line feed is inserted in line 1 to carry to a new line the part of it lying outside the burning region 1234. Here, the line feed may be inserted between items or in the middle of an item. In the state shown in Fig. 47, the line feed is inserted between items; specifically, it comes before the item "19:00" representing the recording start time.

In the stage shown in Fig. 47, the line head of "19:00" coming after the line feed is aligned with the line head of the original line "NEWS 1". As a result of "19:00" carried to a new line, the next and following lines, starting with "NEWS 2", are moved one line down. At this point, the line heads of these lines remain where they were determined to be in Fig. 46; thus, they are no longer aligned with the outer circumference 628, but, for example, the line head of "NEWS 10" lies beyond the outer circumference 628.

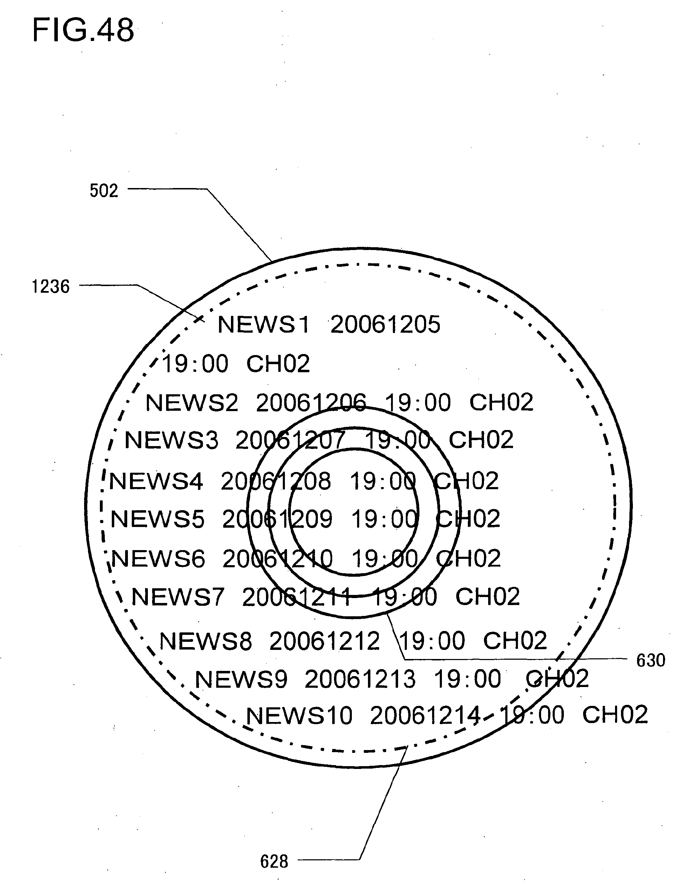

Fig. 48 shows how the above-mentioned misalignment of the line head positions of the lines from the outer circumference 628 is corrected through line head position setting processing so that the lines are aligned back at the outer circumference 628. Thus, a line feed generates a new line aligned with the line head of the previous line.

Correcting the line head positions of all the lines on insertion of a line feed as described above has the following significance as well: if insertion of a line feed produces room to the left of characters in the burning region, as with "19:00" at line 2 in Fig. 47, since there is room to the right of the characters in the case of Fig. 47, no problem arises; if there is no room to the right, however, the line end may go beyond the outer circumference 628 rightward. Even if this is the case, correcting the line head position such that it is located at the left end of the outer circumference 628 may make the line after the line feed assignable in the left/right direction.

Next, in the state in Fig. 48, since the line feed has increased the up/down direction width of the data, whether or not all the line fit in the burning region in the up/down direction is checked. In the case shown in Fig. 48, all the lines fit in the burning region in the up/down direction, yielding a check result of "OK".

If the above check result is "OK", then the line (line 3) next to the one after the line feed is selected. Here again, whether or not the selected line is assignable inside the burning region in the left/right direction is checked. In the case shown in Fig. 48, the line does not fit in the burning region in the left/right direction, yielding a check result of "NG". Then, just as described above, a line feed is inserted in this line so that it fits in the burning region.

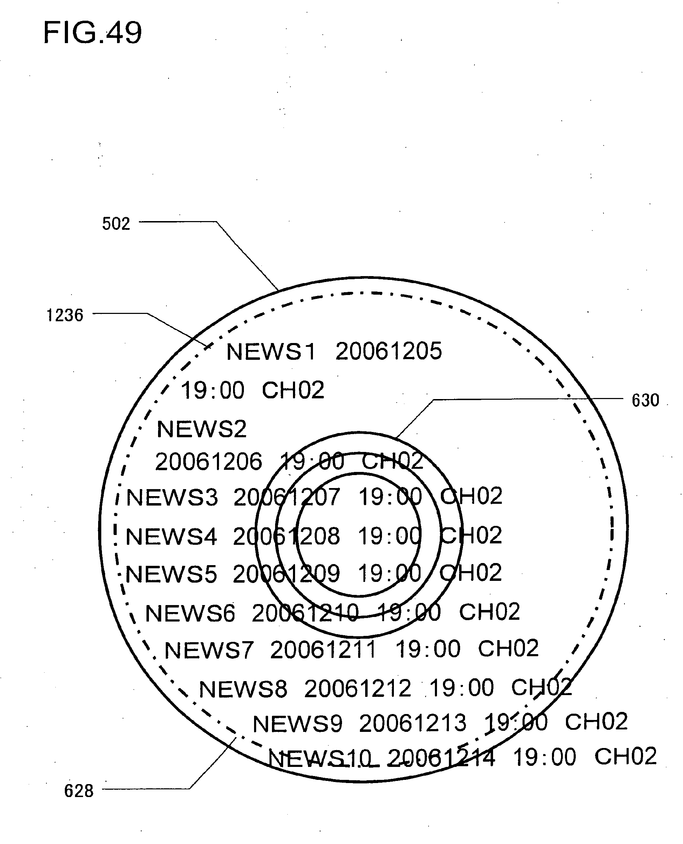

Fig. 49 shows how, since line 3 has been found to be unassignable in the burning region in the left/right direction, a line feed is inserted in line 3 to carry to a new line the part of it lying outside the burning region.

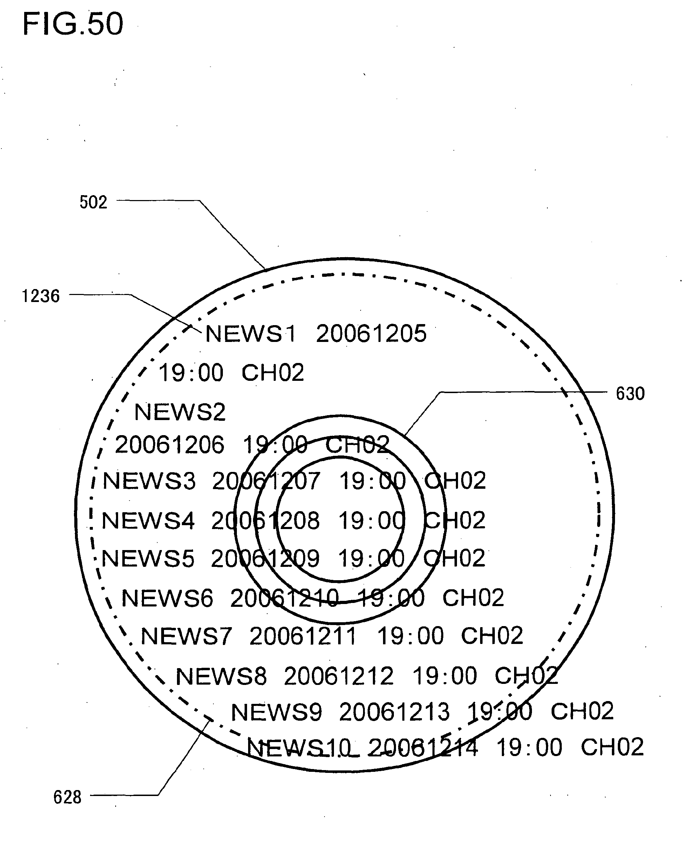

Fig. 50 shows how, since the line head of the new line (line 4) produced on insertion of the line feed lies away from the outer circumference 628, line head position setting processing is performed so that the line heads of all the lines are aligned at the outer circumference 628. Here, as a result of insertion of the line feed described above, the up/down-direction width of the data has increased. Thus, next, whether or not all the line fit in the burning region in the up/down direction is checked. In the state shown in Fig. 50, the lines lie beyond the burning region in the up/down direction, yielding a check result of "NG".

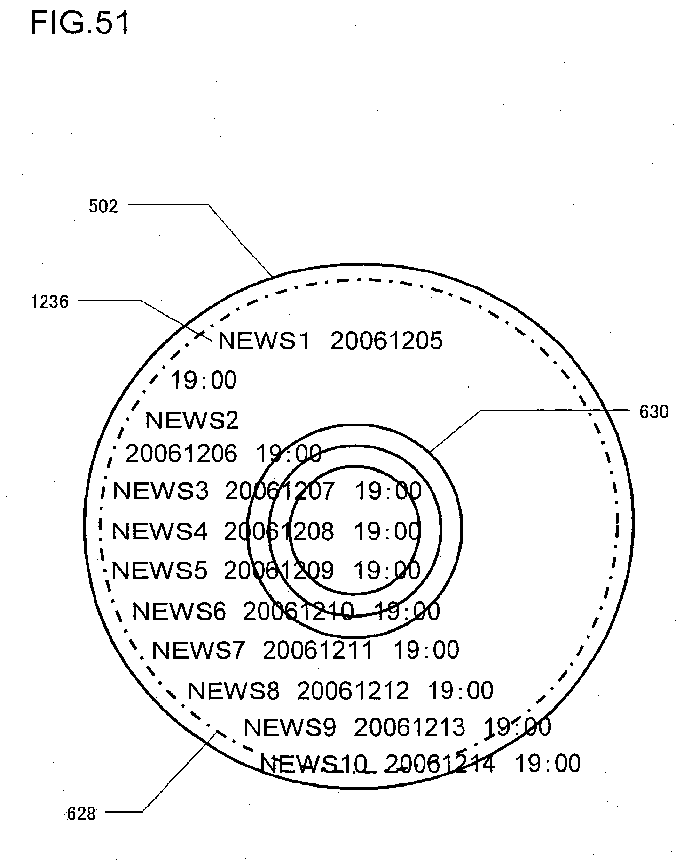

Fig. 51 shows how, when the above check result is "NG", and therefore no more displayed data can be burned, processing such as deletion of characters on an item by item basis (for example, the recorded channel) is performed. The processing here is so performed that the burning data 1236 fits inside the burning region 1234.

Depending on the order of display, reducing the burning data 1236 may leave blank room; thus, line head setting processing is performed again. Then, whether or not any line has disappeared as a result of the above deletion is checked. In the case shown in Fig. 51, since no line has disappeared, the state is maintained as it is. Since the deletion may cause a change in the number of lines here, whether or not the lines are assignable in the up/down direction is checked. In the state shown in Fig. 51, even through an item has been deleted, but the lines still lie beyond in the up/down direction; thus, deletion of characters is performed again.

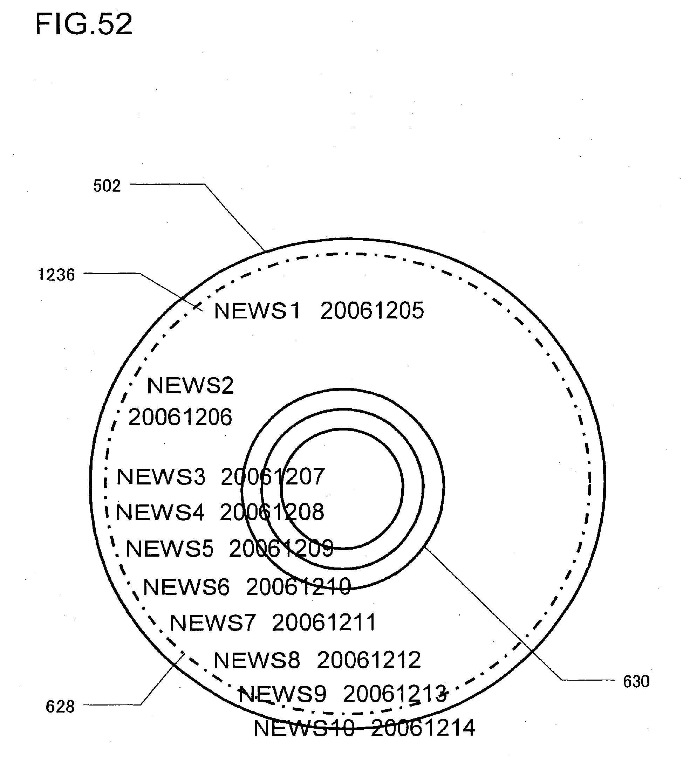

Fig. 52 shows how further deletion of characters (the recording start hour) is performed. As a result of the further deletion of characters, the line head positions change.

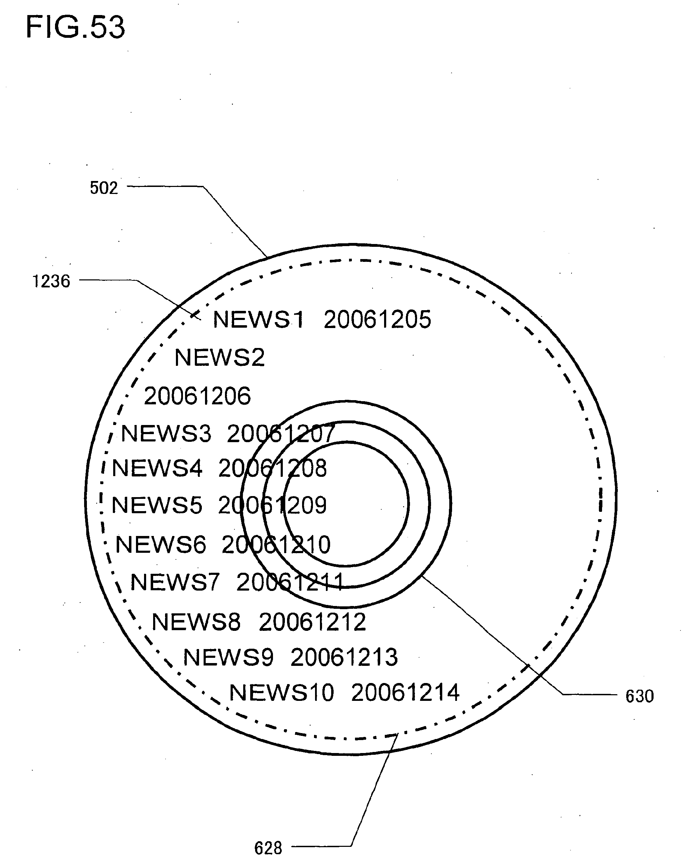

Fig. 53 shows how, from Fig. 52, line head position setting processing is performed such that the lines are aligned at the outer circumference 628. Here, if any line has disappeared as a result of the character deletion, as shown in Fig. 53, there appears room for assignment to the left and right at line 2.

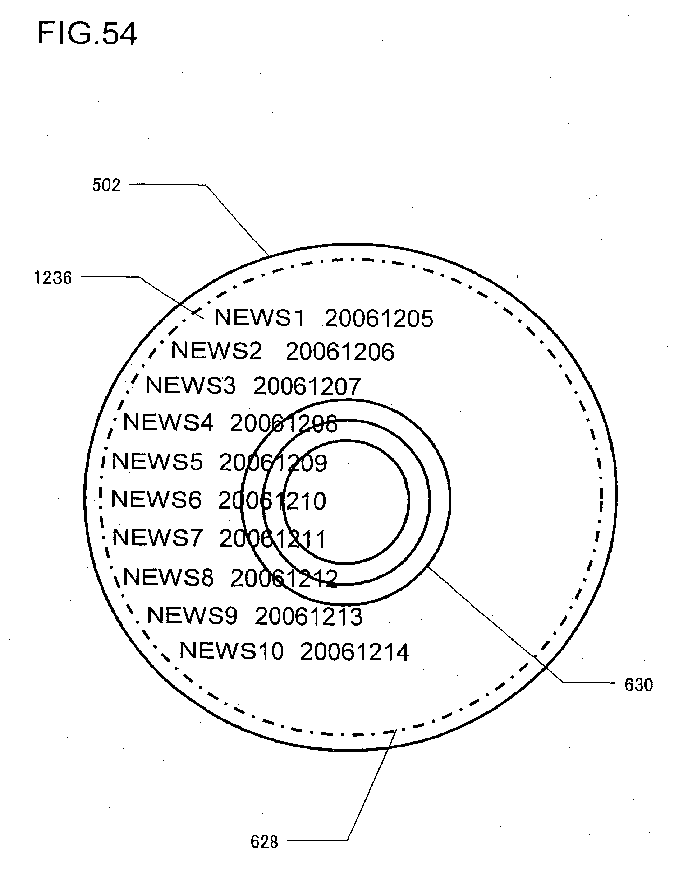

Fig. 54 shows how, in a case where room for assignment has appeared as described above and a line feed has already been inserted, the line feed within one set of data is canceled so that the set of data is arranged back into a single line. Since this accordingly reduces the number of lines, line head position setting processing is then performed.

The above processing causes a change in the number of lines in Fig. 54; thus, then, for each line, whether or not it is assignable in the up/down direction is checked. In Fig. 54, all the lines fit inside the burning region in the up/down direction; thus, then, whether or not they fit in the left/right direction is checked. In Fig. 54, line 4 is unassignable in the left/right direction; thus, a line feed is inserted in it, and then line head position setting processing is performed after the line feed.

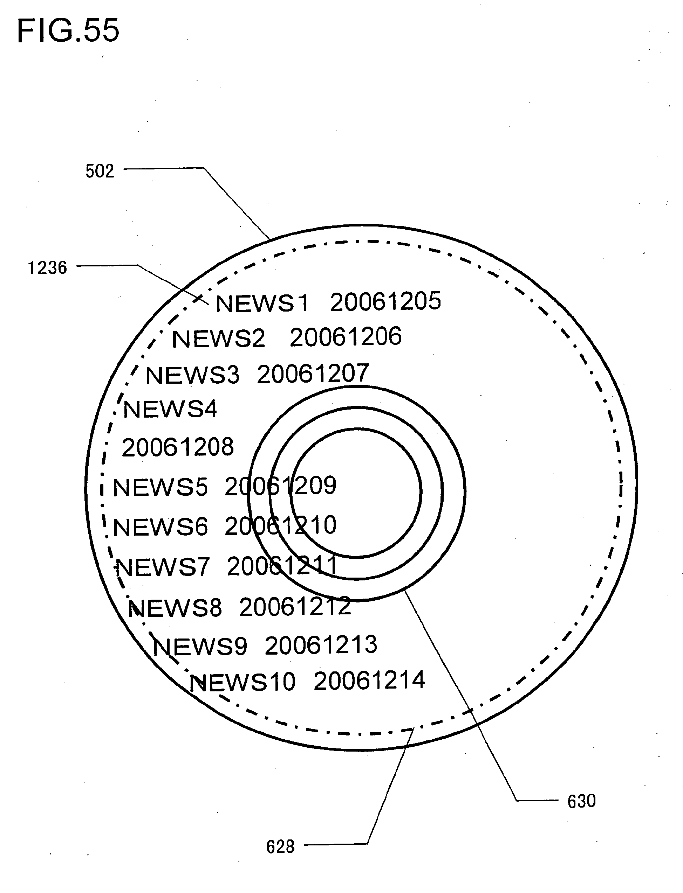

As described above, if there is no room for assignment in the left/right direction, a line feed is inserted and, so long as line feed insertion does not make up/down-direction assignment impossible, line feed insertion is repeated. Fig. 55 shows how, since line 4 is unassignable in the left/right direction, a line feed is inserted in it.

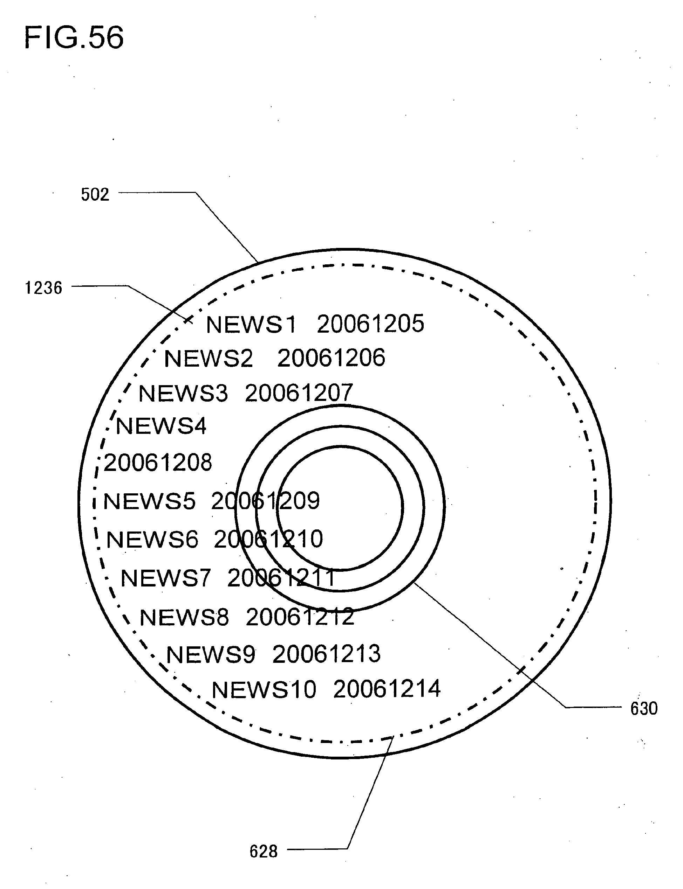

Fig. 56 shows how, since line 5 newly produced as a result of insertion of the line feed lies away from the outer circumference 628, line head position setting processing is performed after line feeding so that line 5 is aligned at the outer circumference 628. The line feed produces a new line aligned with the line head of the previous line. In Fig. 55, the data at line 6 and the following lines is moved down from the previous line head positions of those lines; thus, part of the data lies outside the burning region, becoming unburnable. Thus, based on the acquired information on the line head positions set within the burning region, the line head positions of all the lines are corrected.

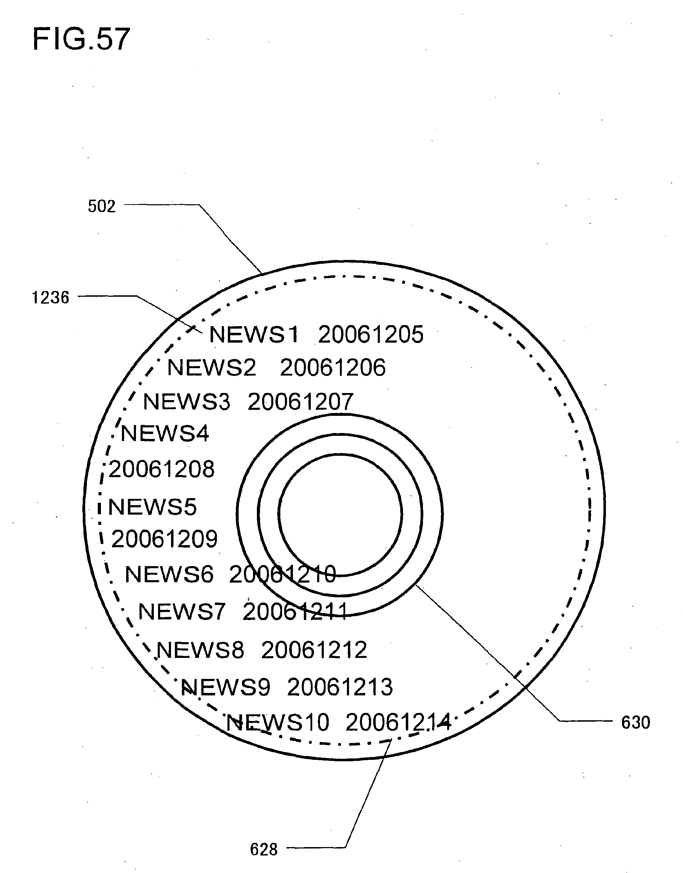

Fig. 57 shows how, since line 6 has been found to be unassignable in the left/right direction, a line feed is inserted in line 6 to carry to a new line the part of it lying outside the burning region.

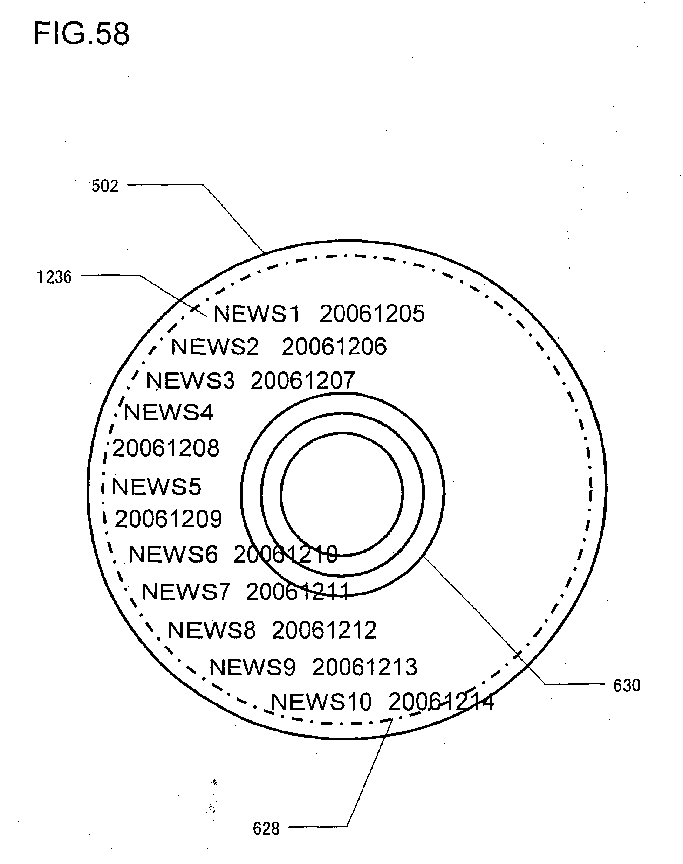

Fig. 58 shows how, since line 7 newly produced as a result of insertion of the line feed lies away from the outer circumference 628, line head position setting processing is performed after line feeding so that line 7 is aligned at the outer circumference 628. In this state, no part lies outside the burning region in the up/down direction; thus, the next line start to be processed.

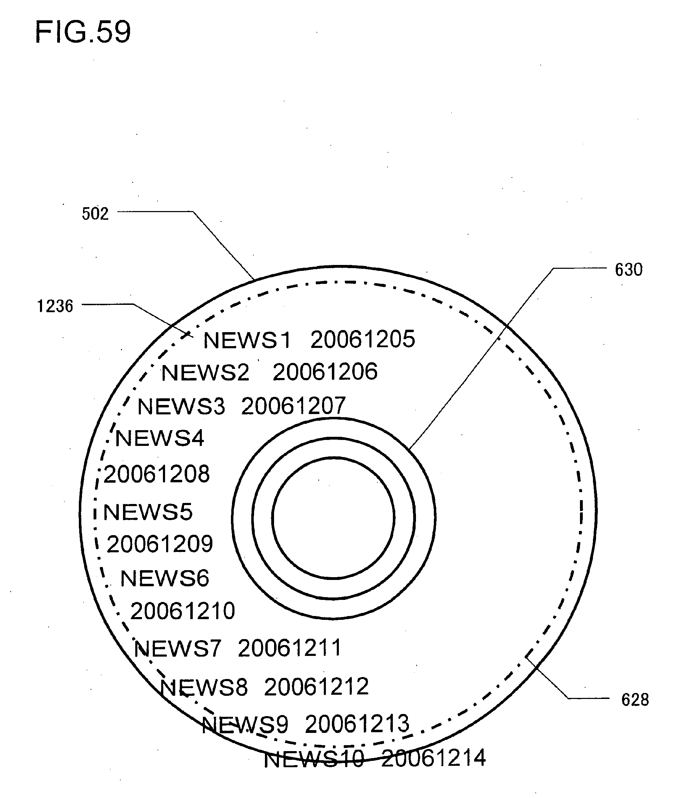

Fig. 59 shows how, since line 8 lies beyond the burning region and is thus found to be unassignable in the left/right direction, a line feed is inserted in line 8 to carry to a new line the part of it lying outside the burning region.

In Fig. 59, as a result of the line feed, the burning data partly lies outside the burning region in the up/down direction. Thus, no more display data can be displayed, and therefore processing such as deletion of characters on an item by item basis is performed so that the burning data 1236 fits inside the burning region.

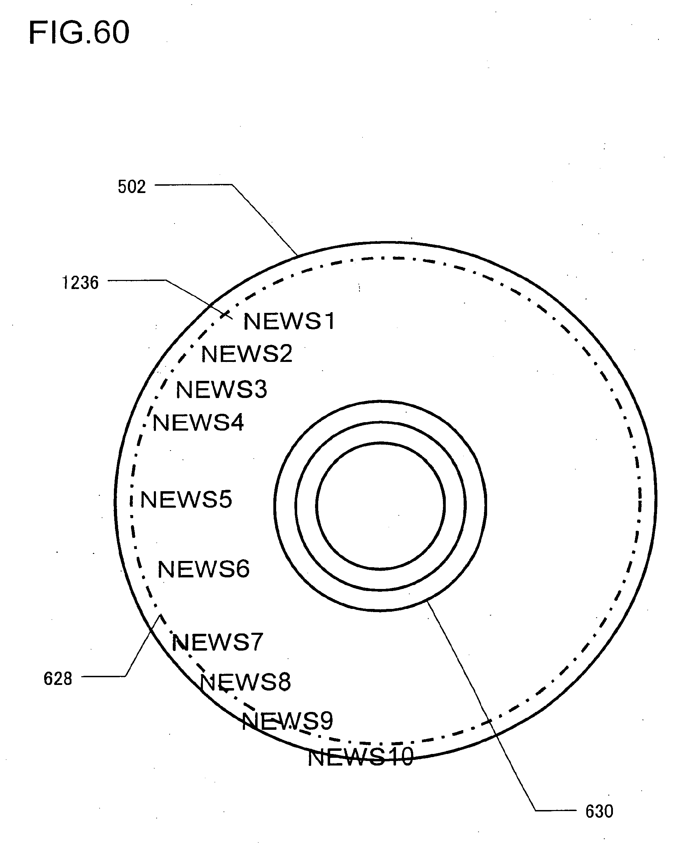

Fig. 60 shows how deletion of characters (the recording date and time are deleted) is performed to make the burning data 1236 fit inside the burning region 1234.

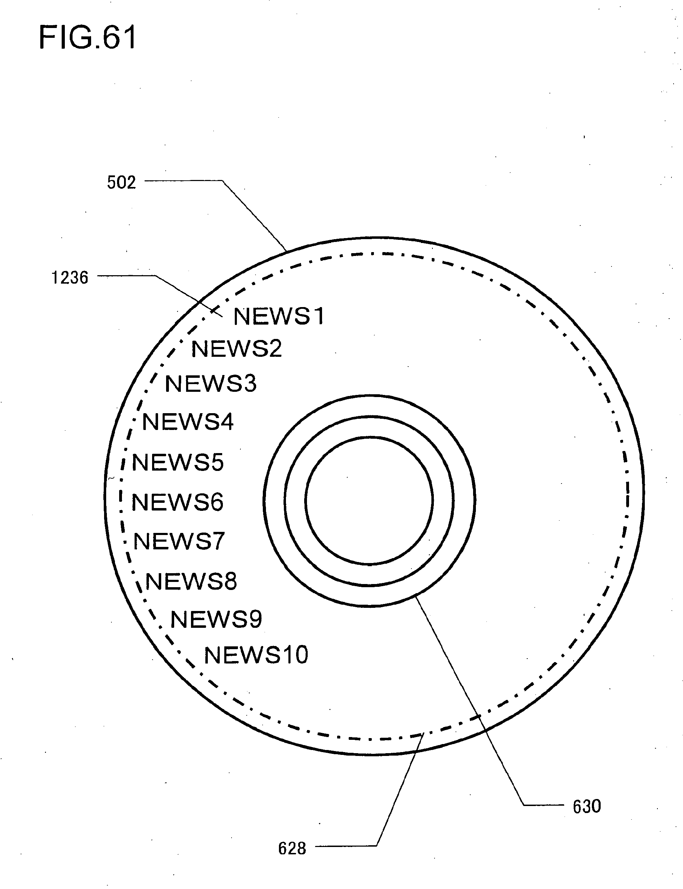

Fig. 61 shows how, from Fig. 60, line head position setting processing is performed to rearrange the lines so that their line heads are aligned at the outer circumference 628. In this state, no line has disappeared. Here again, whether or not all the lines are assignable in the up/down direction is checked. In Fig. 61, all the lines fit in the burning region, and are thus found to be assignable; thus, next, whether or not all the lines are assignable in the left/right direction is checked. In Fig. 61, all the lines fit inside the burning region, and are thus found to be assignable. This is the end of the entire line feed processing.

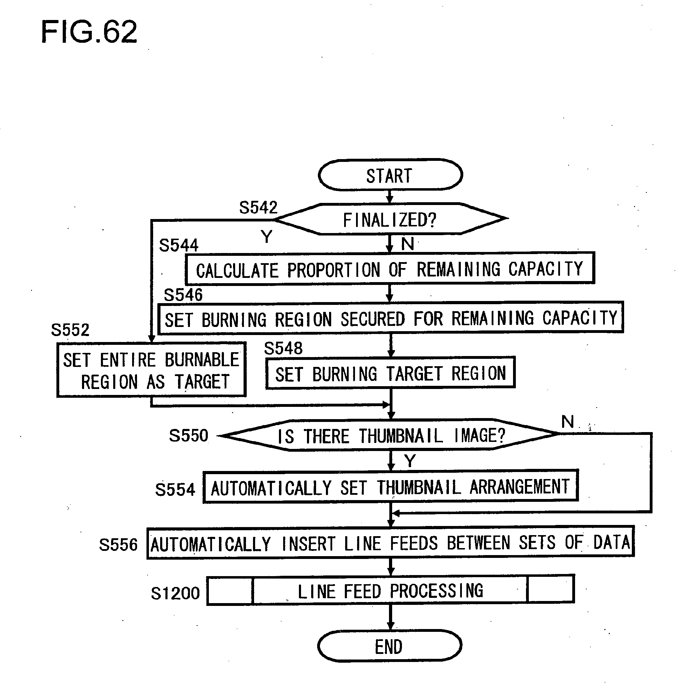

Fig. 62 is a flow chart showing the details of the ordinary character image creation processing in the specified language in step S528 in Fig. 26 in a ninth embodiment of the present invention. Steps S542 to S556 of this flow are common to the flow shown in Fig. 28; accordingly, these steps are identified by common step numbers, and their description will not be repeated.

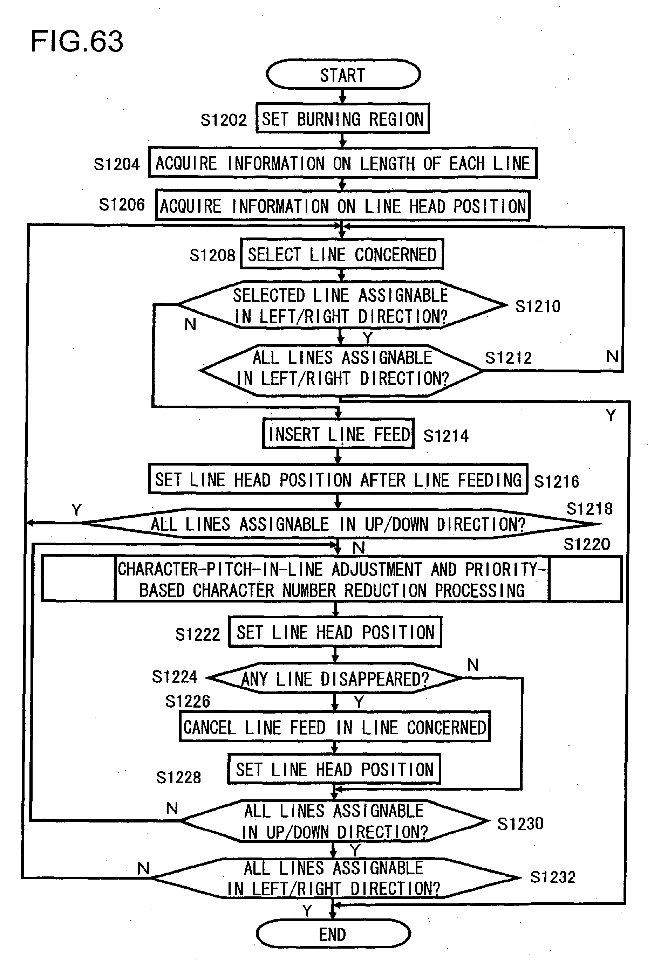

Fig. 63 is a flow chart showing an example of the details of the line feed processing in step S1200 in Fig. 62 in the ninth embodiment. When the flow starts, first, with consideration given to the region secured as the burning region secured for the remaining capacity, in step S1202, a burning region is set. As described previously, the burning region may be secured elsewhere than in the central region 618 shown in Fig. 32, or may be secured like the burning region 1234 shown in Fig.44.

In step S1204, information on the length of each line in the burning region is acquired, and, as in step S590 in Fig. 28, information on the length that each assigned line can have is acquired. This is because the burning region is doughnut-shaped, and thus the length that each line can have differs from line to line.

In step S1206, as in step S588 in Fig. 28, the line head position is set. In this step, all the lines having line feeds automatically inserted between different sets of data in the step S556 of Fig. 46 are arranged such that their line heads are aligned at the outer circumference 628.

Next, the flow proceeds to step S1208 to select a line for which the line head position has been set. The line selected first is line 1. On completion of predetermined processing on the line selected in step S1208, the next line starts to be processed.

In step S1210, whether or not the line selected in step S1208 is assignable in the burning region in the left/right direction is checked. If it is unassignable in the left/right direction, the flow proceeds to step S1214; if it is assignable, the flow proceeds to step S1212 to check whether or not all the lines are assignable in the left/right direction. If all the lines are assignable in the left/right direction, the entire processing comes to an end; if not all the lines are assignable in the left/right direction, the flow returns to step S1208.

In step S1214, for every line concerned, based on information on its length, line feed processing is performed until the line becomes assignable in the burning region in the left/right direction. A line newly produced as a result of insertion of a line feed may lie away from the line head position set in step S1206. Thus, in step S1216, line head position setting processing is newly performed.

Since the line feed processing in step S1214 described above has increased the number of lines, the burning data has a larger up/down-direction width, and may thus partly lie outside the specified burning region. Accordingly, in step S1218, whether or not all the lines are assignable in the up/down direction is checked. If assignable, it means that there is room in the up/down direction; thus, the flow proceeds to step S1208 to process the next line. If unassignable, no more burning data 1236 can be kept displayed; thus, the flow proceeds to step S1220 to reduce what is displayed by performing character number reduction processing or the like on the burning data 1236 that is to be displayed.

In step S1222, since the character number reduction processing or the like in step S1220 has caused a change in the line head position, line head position setting processing is newly performed to rearrange the lines.

In step S1224, whether or not any line has disappeared as a result of the character number reduction processing is checked. If any line has disappeared, there appears room in the up/down direction; thus, any line concerned is moved up. If, as a result of upward movement, the line becomes assignable in the left/right direction, the flow proceeds to step S1226 to cancel the line feed in the line to reduce the number of lines. In step S1228, since the line feed cancellation processing in step S1226 has caused a change in the line head position, line head position setting processing is newly performed to rearrange the lines. Moreover, the reduction in the number of lines resulting from the line feed cancellation processing in step S1226 causes a change in the up/down-direction width of the burning data 1236, in step S1230, whether or not all the lines are assignable is checked again. If, in step S1224, no line is found to have disappeared, then the flow may proceed directly to step S1230.

In step S1230, since the character number reduction processing and the disappeared line processing performed have caused a change in the number of lines, as in the step S1218, whether or not all the lines are assignable in the up/down direction is checked. If unassignable, character number reduction processing is performed again to reduce what is displayed as the burning data 1236. If assignable, the flow proceeds to step S1232. In step S1232, whether or not all the lines are assignable in the left/right direction is checked. If all the lines are assignable in the left/right direction, the entire processing comes to an end. If not all lines are assignable in the left/right direction, the flow returns to step S1208.

If, in steps S1212 and S1232, all the lines are assignable in the left/right direction as described above, since they are already assignable in the up/down direction, the burning data 1236 can be assigned on the label face. Thus, the entire processing comes to an end.

In summary, when left/right-direction assignment is impossible, a line feed is inserted; when the increase in the number of lines resulting from the line feed causes the up/down-direction width of the burned data to become greater than that of the burning region, the data to be displayed is reduced so that the width of the burned data is reduced to make up/down-direction assignment possible; the processing is then repeated to make left/right-direction assignment possible as well.

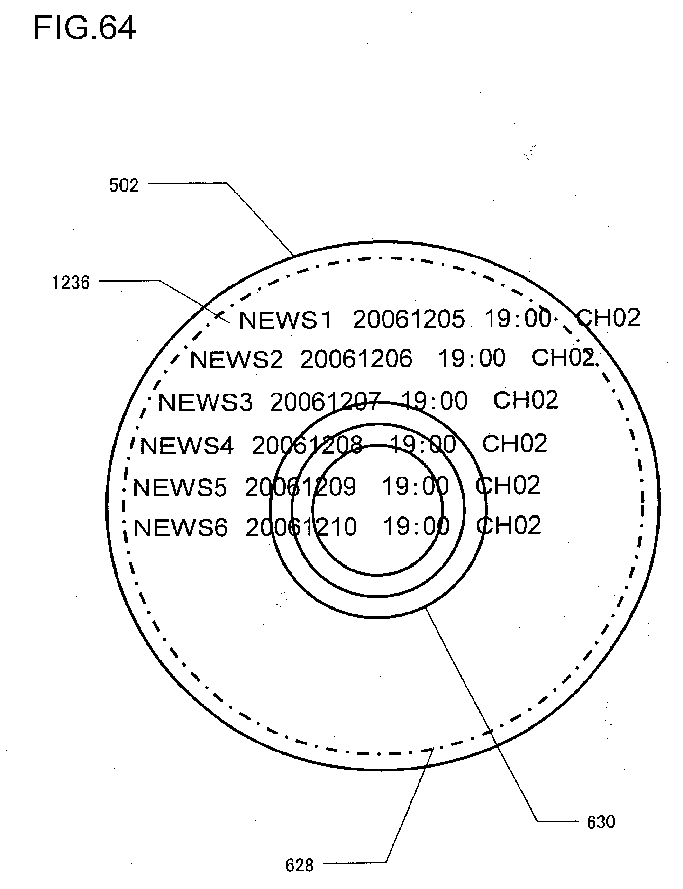

Fig. 64 shows a television display screen showing an image on the label face of the medium in a tenth embodiment of the present invention. The tenth embodiment has largely the same configuration as the sixth embodiment, and operates, like the sixth embodiment, according to the flow chart of Figs. 25 and 26. The difference lies in the details of step S528 in Fig. 26; specifically, here, a burning image is created in a layout different from those of the already described burning images. Fig. 64 shows a state similar to that shown in Fig. 46 in connection with the ninth embodiment, and shows how line head position setting processing is performed on the applied burning data 1236 so that the line heads of the lines are aligned at the outer circumference 628.

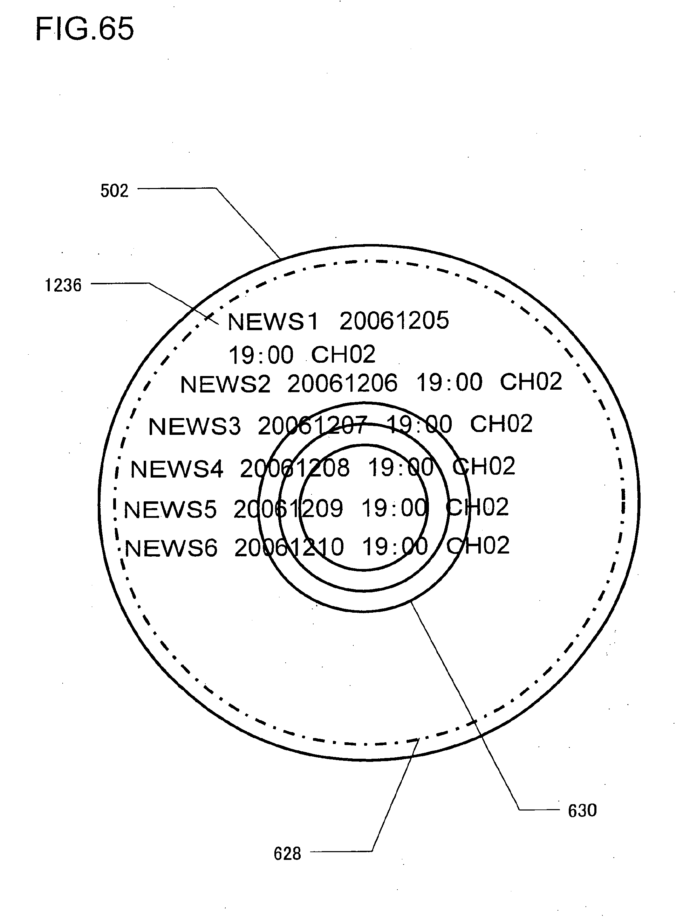

Fig. 65 shows how, since line 1 partly lies outside the burning region and is found to be unassignable in the left/right direction, a line feed is inserted in line 1 to carry to a new line the part of it lying outside the burning region (the recording start time "19:00" and the recorded channel "CH02").

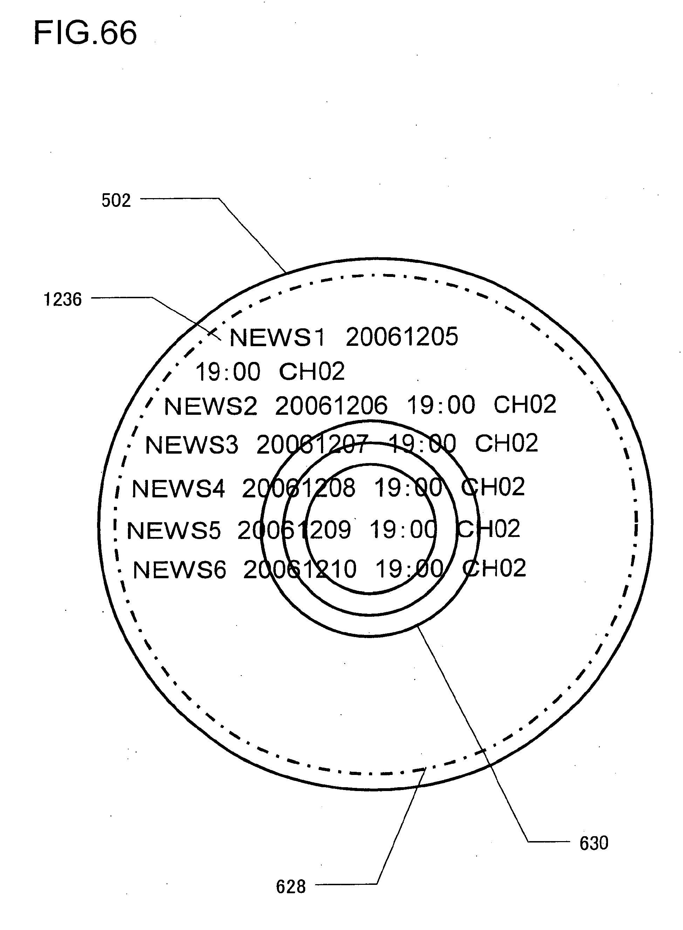

Fig. 66 shows how, since the line head of the new line (line 2) created as a result of insertion of the line feed lies away from the outer circumference 628, line head position setting processing is performed so that the line heads of all the lines are aligned at the outer circumference 628. Here, since the inserted line feed has increased the data width in the up/down direction, whether or not all the lines fit inside the burning region in the up/down direction is checked. In the state shown in Fig. 66, since all the lines fit inside the burning region in the up/down direction, they are found to be assignable. If all the lines are found to be assignable, the next line (line 3) starts to be processed.

Next, whether or not line 3 lies beyond the burning region is checked. As shown in Fig. 66, line 3 does not lie beyond the burning region. Thus, without performing any processing such as line feed processing here, the next line starts to be processed.

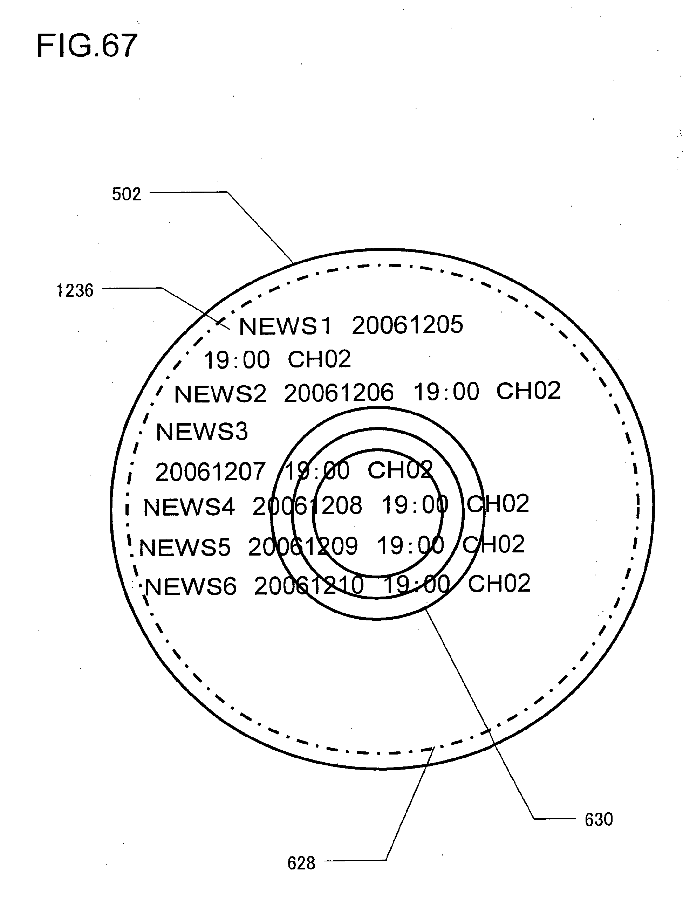

Fig. 67 shows how, since line 4 partly lies outside the burning region and is found to be unassignable in the left/right direction, a line feed is inserted in line 4 to carry to a new line the part of it lying outside the burning region (the recording start time and the recorded channel).

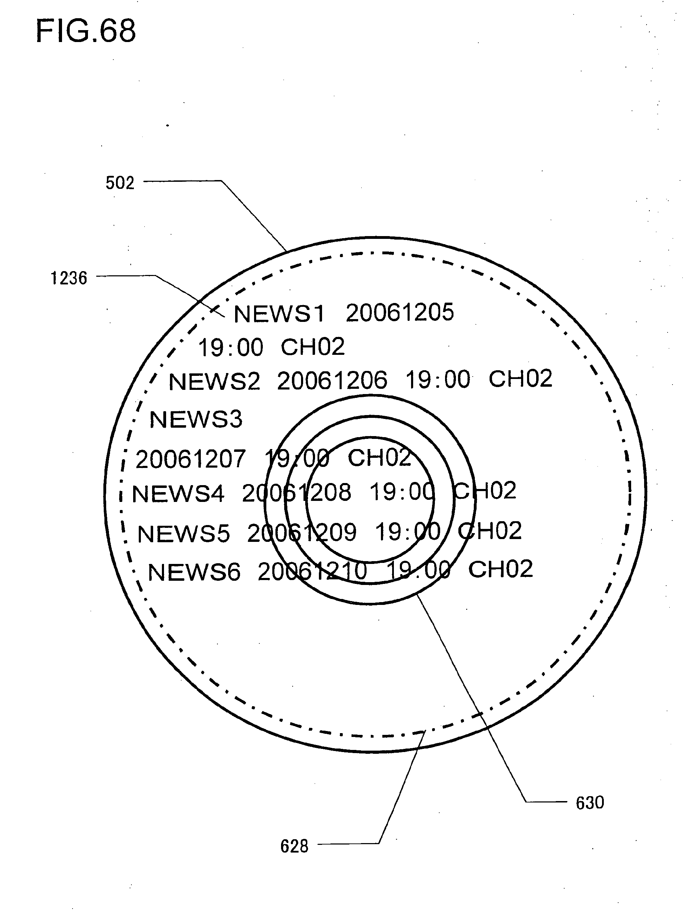

Fig. 68 shows how, since the line head of the new line (line 5) created as a result of insertion of the line feed lies away from the outer circumference 628, line head position setting processing is performed so that the line heads of all the lines are aligned at the outer circumference 628.

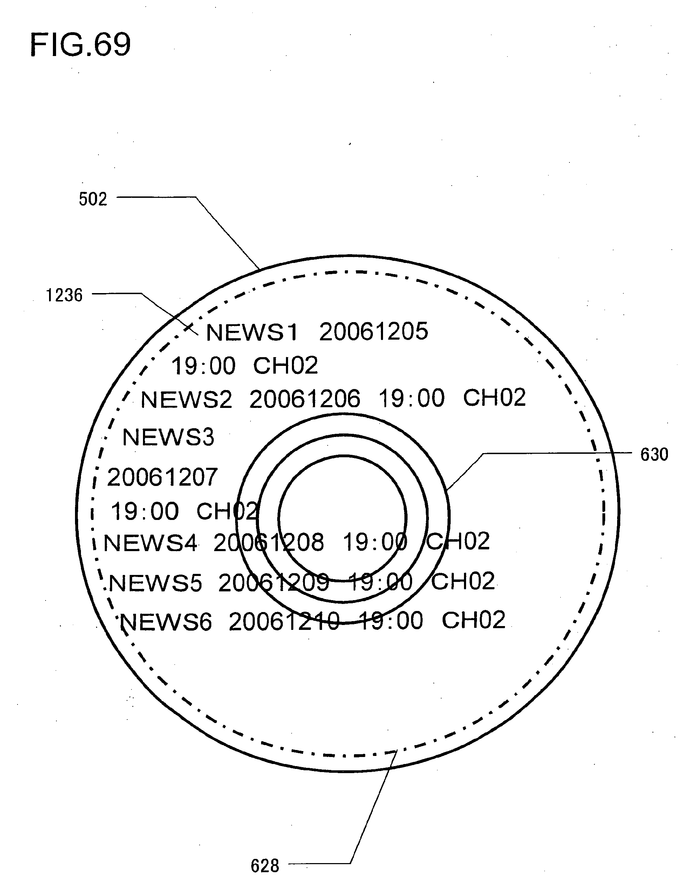

Fig. 69 shows how, since line 5 partly lies outside the burning region and is found to be unassignable in the left/right direction, a line feed is inserted in line 5 to carry to a new line the part of it lying outside the burning region.

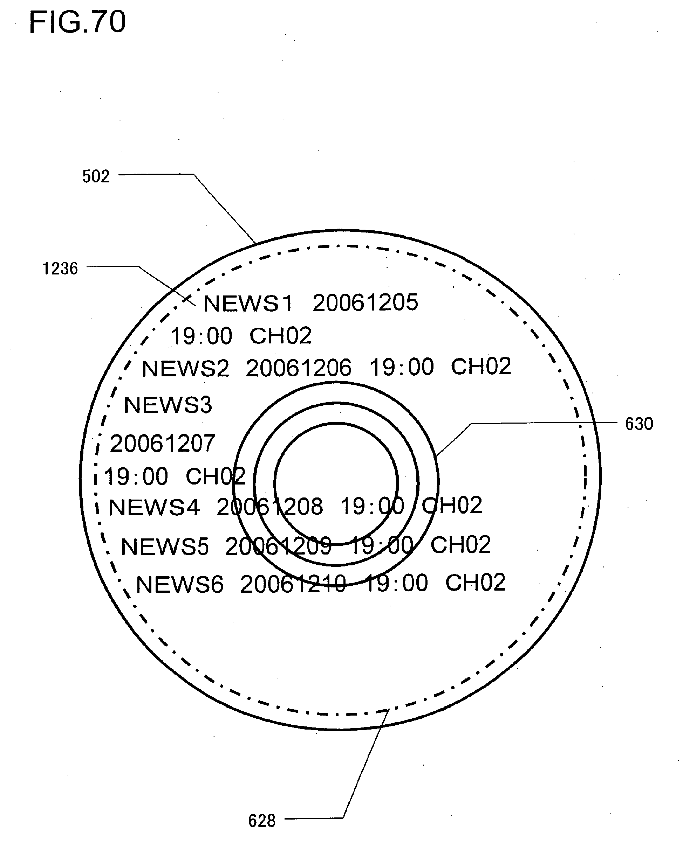

Fig. 70 shows how, since the line head of the new line (line 6) created as a result of insertion of the line feed lies away from the outer circumference 628, line head position setting processing is performed so that the line heads of all the lines are aligned at the outer circumference 628.

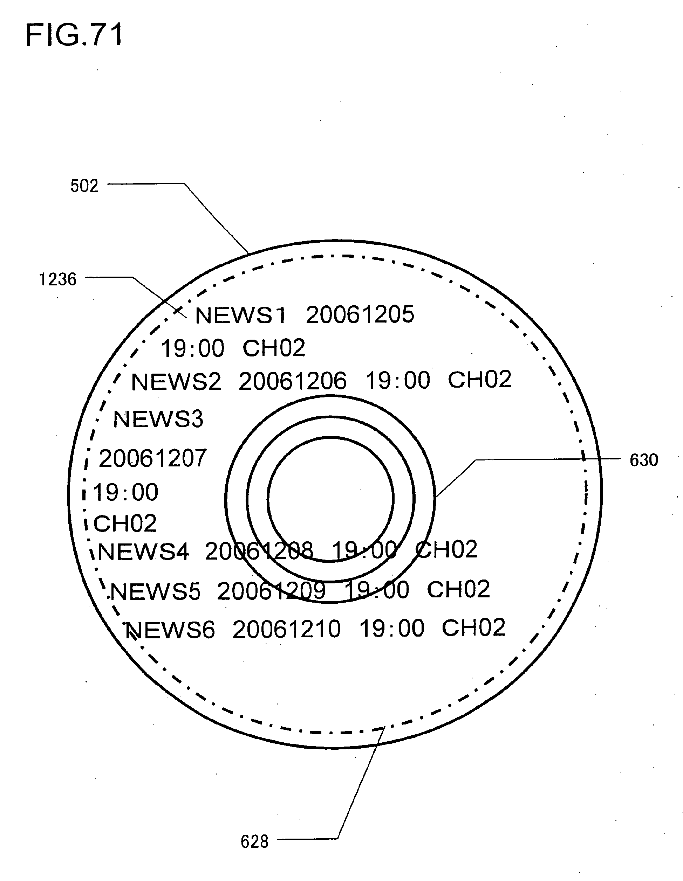

Fig. 71 shows how, since line 6 partly lies outside the burning region and is found to be unassignable in the left/right direction, a line feed is inserted in line 6 to carry to a new line the part of it lying outside the burning region.

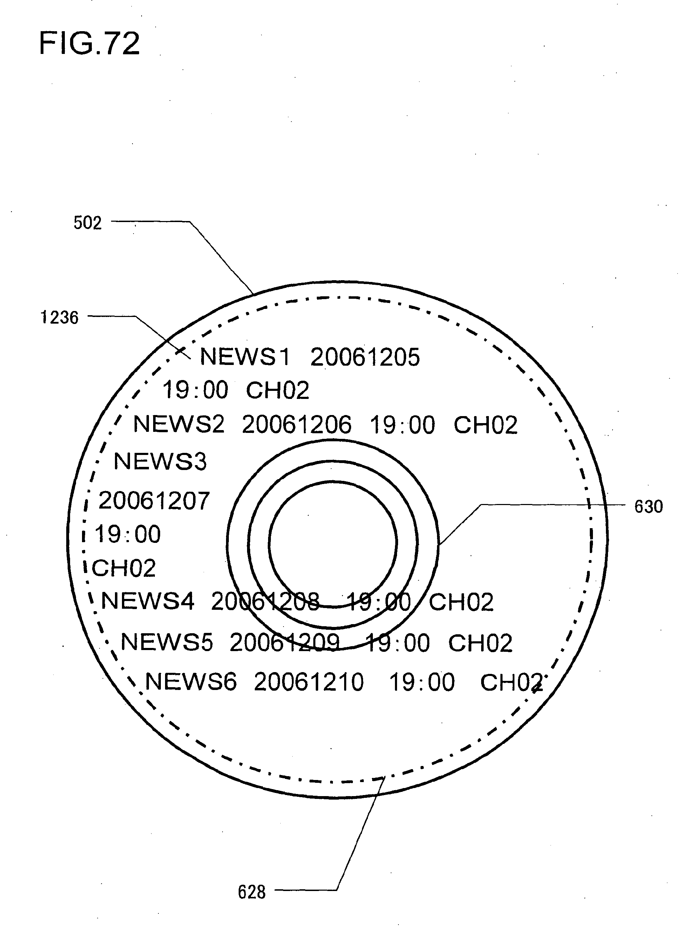

Fig. 72 shows how, since the line head of the new line (line 7) created as a result of insertion of the line feed lies away from the outer circumference 628, line head position setting processing is performed so that the line heads of all the lines are aligned at the outer circumference 628. Here, since the inserted line feed has increased the data width in the up/down direction, whether or not all the lines fit inside the burning region in the up/down direction is checked. In the state shown in Fig. 72, since all the lines fit inside the burning region in the up/down direction, they are found to be assignable. If all the lines are found to be assignable, the next line (line 8) starts to be processed.

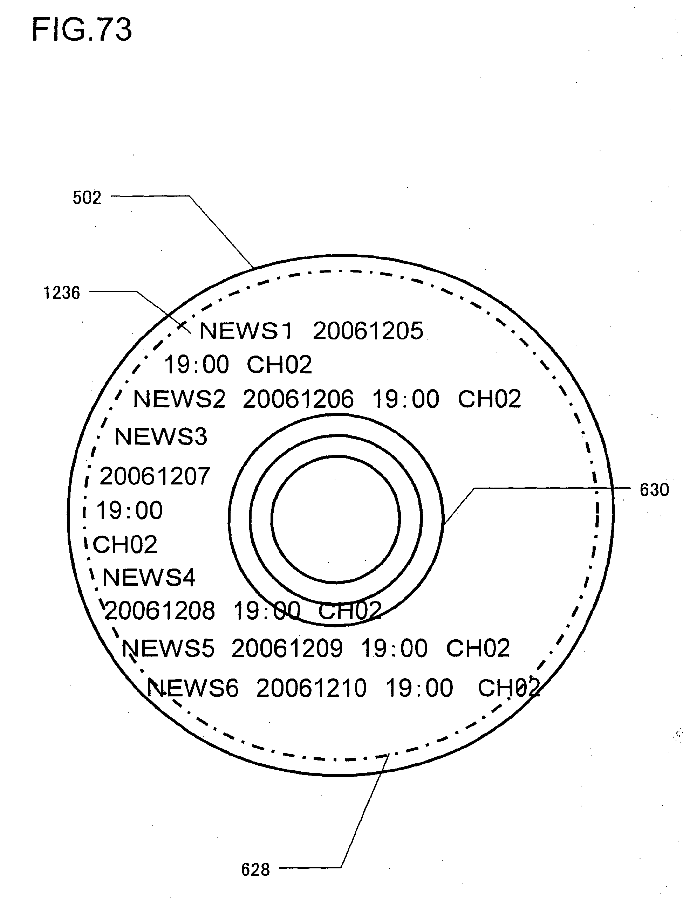

Fig. 73 shows how, since line 8 partly lies outside the burning region and is found to be unassignable in the left/right direction, a line feed is inserted in line 8 to carry to a new line the part of it lying outside the burning region.

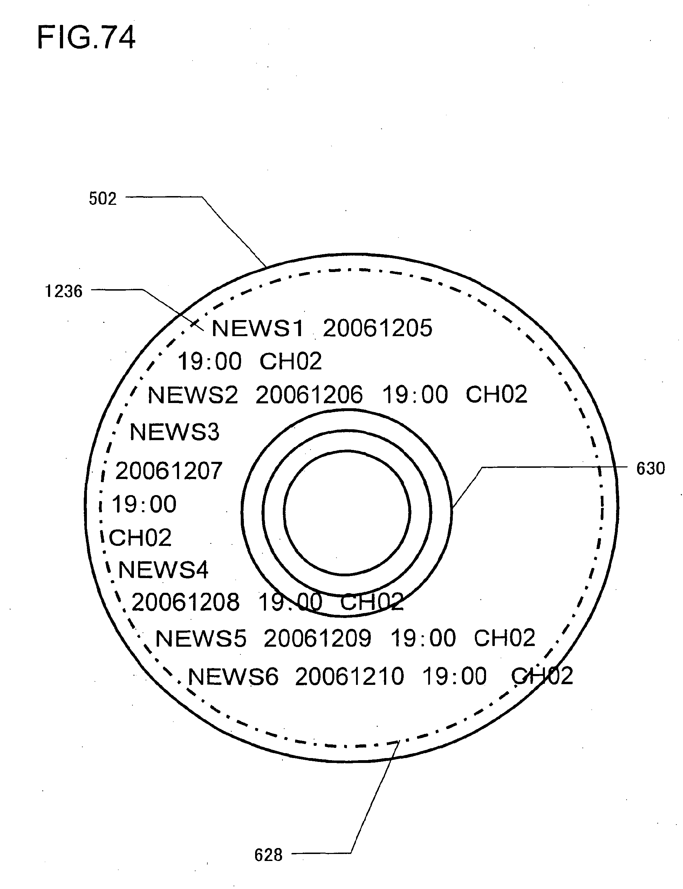

Fig. 74 shows how, since the line head of the new line (line 9) created as a result of insertion of the line feed lies away from the outer circumference 628, line head position setting processing is performed so that the line heads of all the lines are aligned at the outer circumference 628.

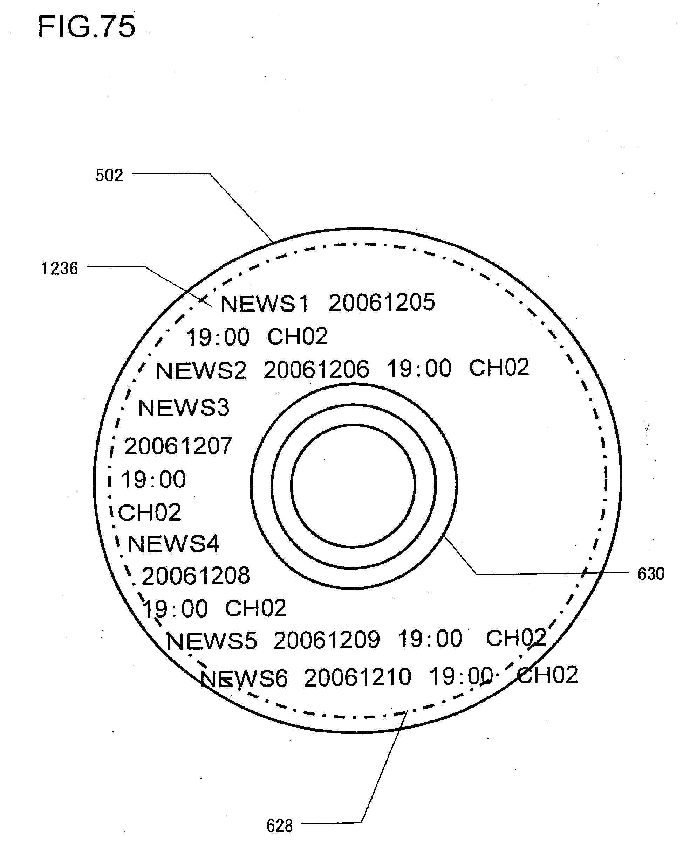

Fig. 75 shows how, since line 9 partly lies outside the burning region and is found to be unassignable in the left/right direction, a line feed is inserted in line 9 to carry to a new line the part of it lying outside the burning region.

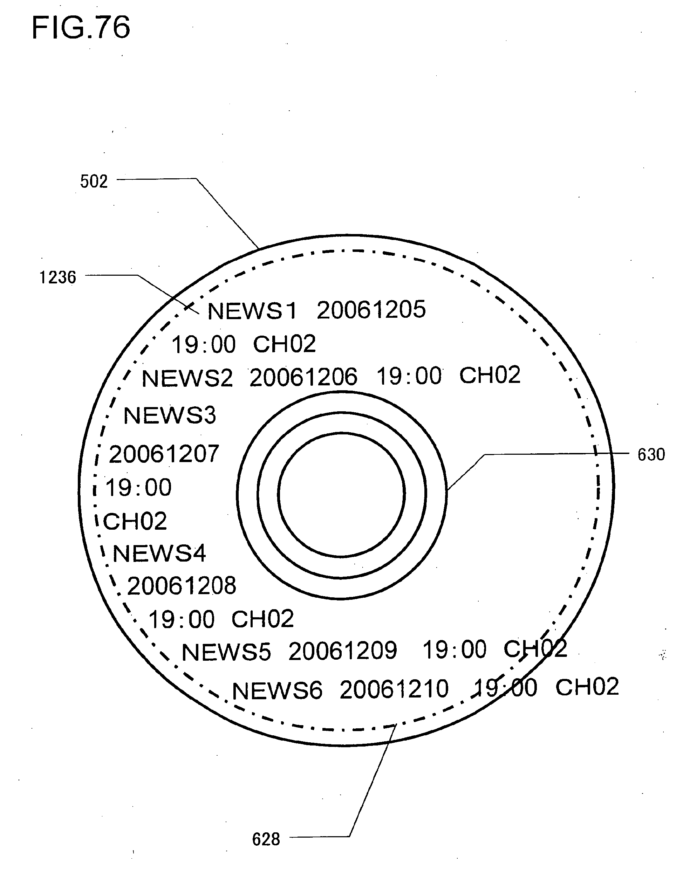

Fig. 76 shows how, since the line head of the new line (line 10) created as a result of insertion of the line feed lies away from the outer circumference 628, line head position setting processing is performed so that the line heads of all the lines are aligned at the outer circumference 628. Here, since the inserted line feed has increased the data width in the up/down direction, whether or not all the lines fit inside the burning region in the up/down direction is checked. In the state shown in Fig. 76, since all the lines fit inside the burning region in the up/down direction, they are found to be assignable. If all the lines are found to be assignable, the next line (line 11) starts to be processed.

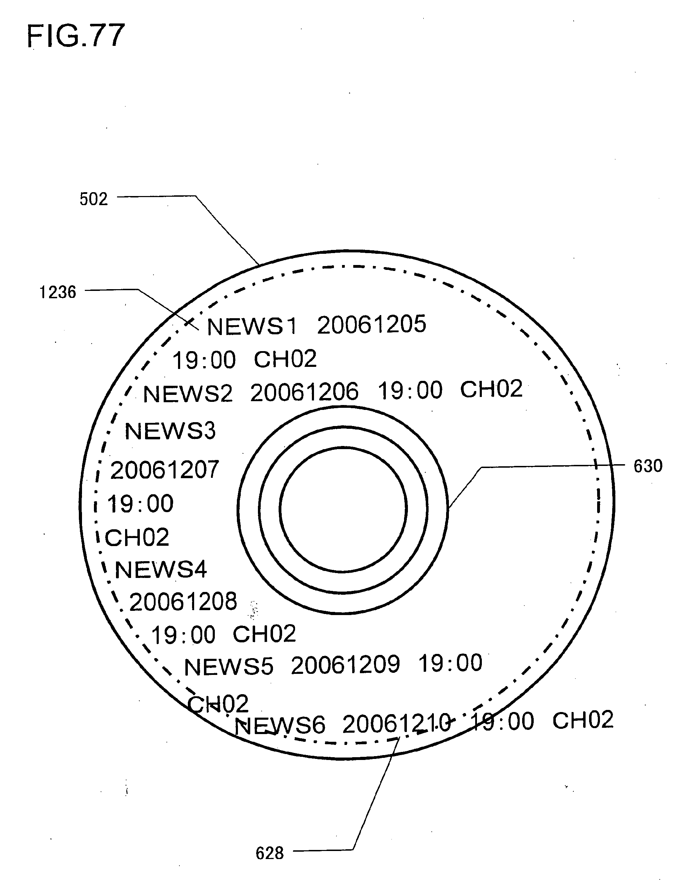

Fig. 77 shows how, since line 11 partly lies outside the burning region and is found to be unassignable in the left/right direction, a line feed is inserted in line 11 to carry to a new line the part of it lying outside the burning region.

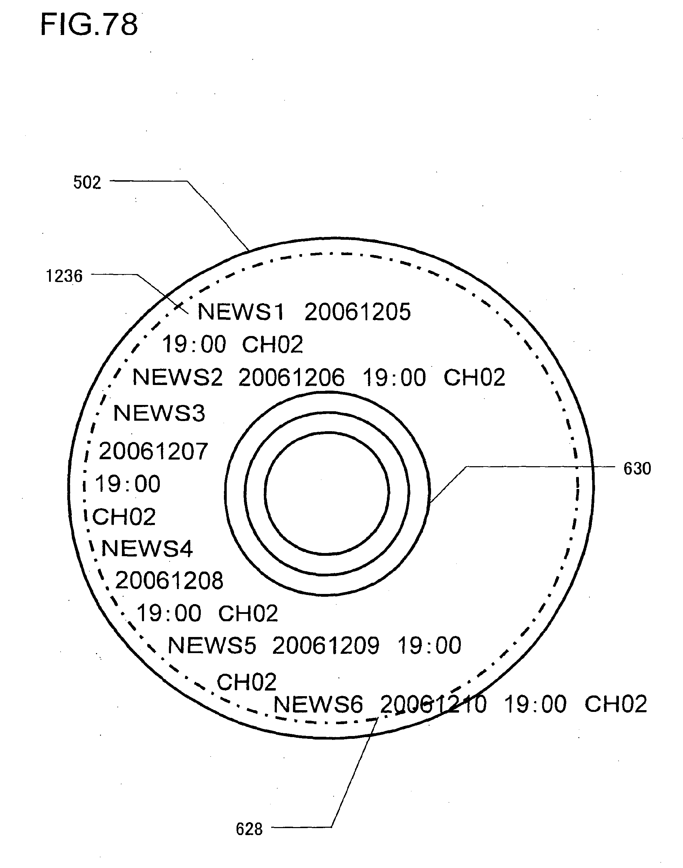

Fig. 78 shows how, since the line head of the new line (line 12) created as a result of insertion of the line feed lies away from the outer circumference 628, line head position setting processing is performed so that the line heads of all the lines are aligned at the outer circumference 628. Here, since the inserted line feed has increased the data width in the up/down direction, whether or not all the lines fit inside the burning region in the up/down direction is checked. In the state shown in Fig. 78, since all the lines fit inside the burning region in the up/down direction, they are found to be assignable. If all the lines are found to be assignable, the next line (line 13) starts to be processed.

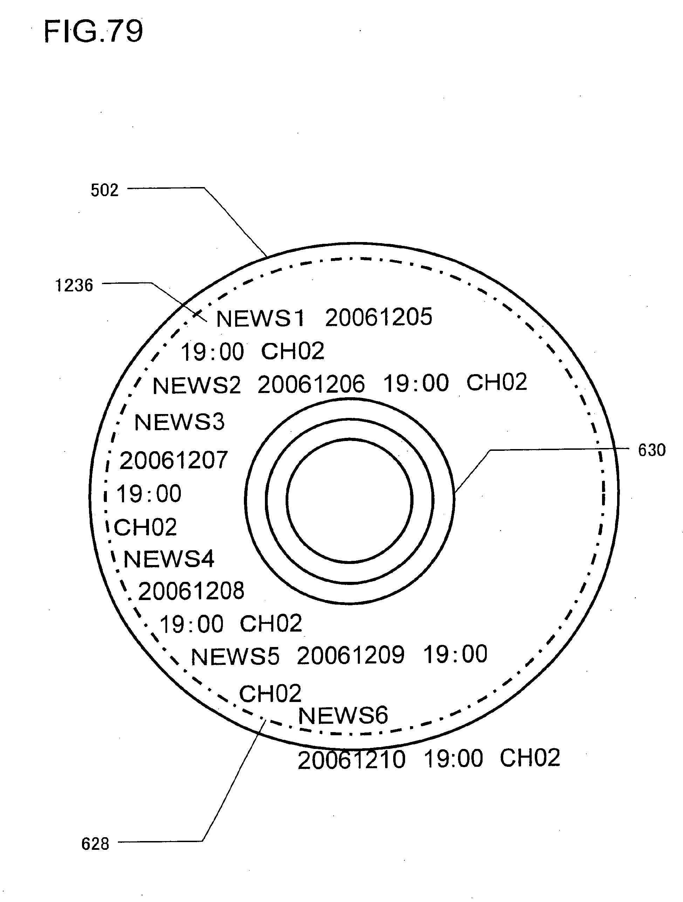

Fig. 79 shows how, since line 13 partly lies outside the burning region and is found to be unassignable in the left/right direction, a line feed is inserted in line 13 to carry to a new line the part of it lying outside the burning region.

At this stage, the inserted line feed has increased the data width in the up/down direction, and therefore whether or not all the lines fit inside the burning region in the up/down direction is checked. In the state shown in Fig. 79, since not all the lines fit inside the burning region in the up/down direction, they are found to be unassignable.

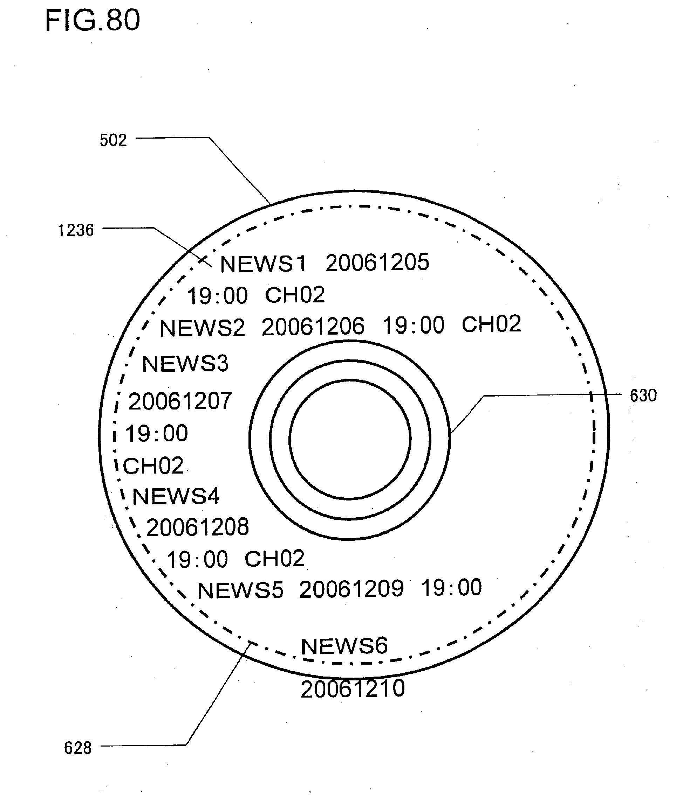

Fig. 80 shows how, to make data fit inside the assignment region, when the last set of data contains the same item data as the other sets of data - for example, when all sets of data contain the same recording start hour and recorded channel - overlapping item data is deleted to reduce what is displayed so that the burning data fits inside the burning region.

In addition, whether or not all the lines fit inside the burning region in the up/down direction is checked. In the state shown in Fig. 80, since not all the lines fit inside the burning region in the up/down direction, they are found to be unassignable.

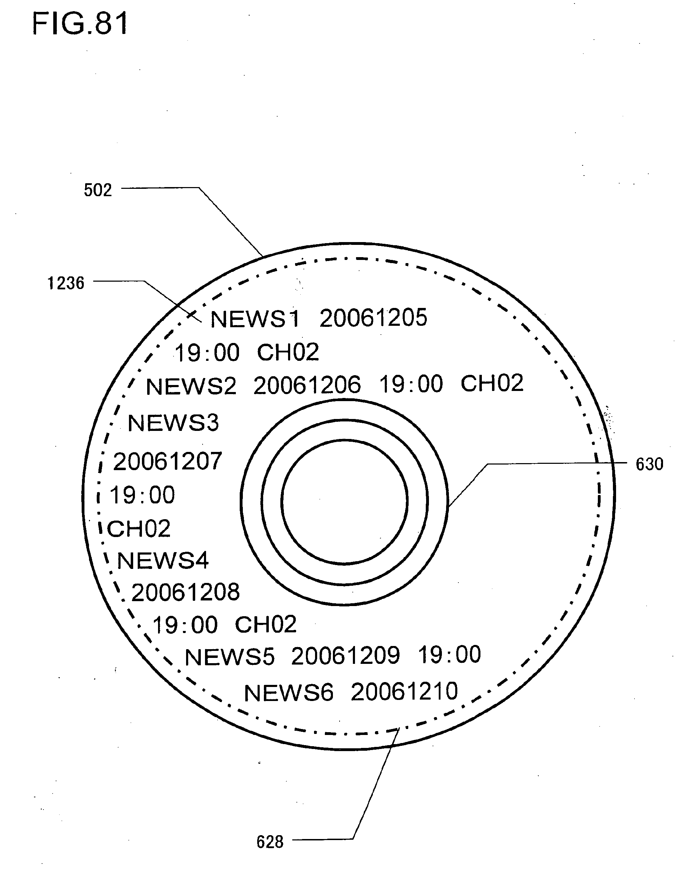

Fig. 81 shows how, now that the last set of data contains no more overlapping item data, the set of data (line 12) immediately proceeding it is processed. If this set of data contains the same item data, this item data - for example, the recorded channel, is deleted. Then, line head position setting processing is performed.

In Fig. 81, since all the lines fit inside the burning region, they are found to be assignable. Thus, then, whether or not all the lines are assignable in the left/right direction is checked. In Fig. 81, since all the lines fit inside the burning region, they are found to be assignable. This is the end of the entire line feed processing.

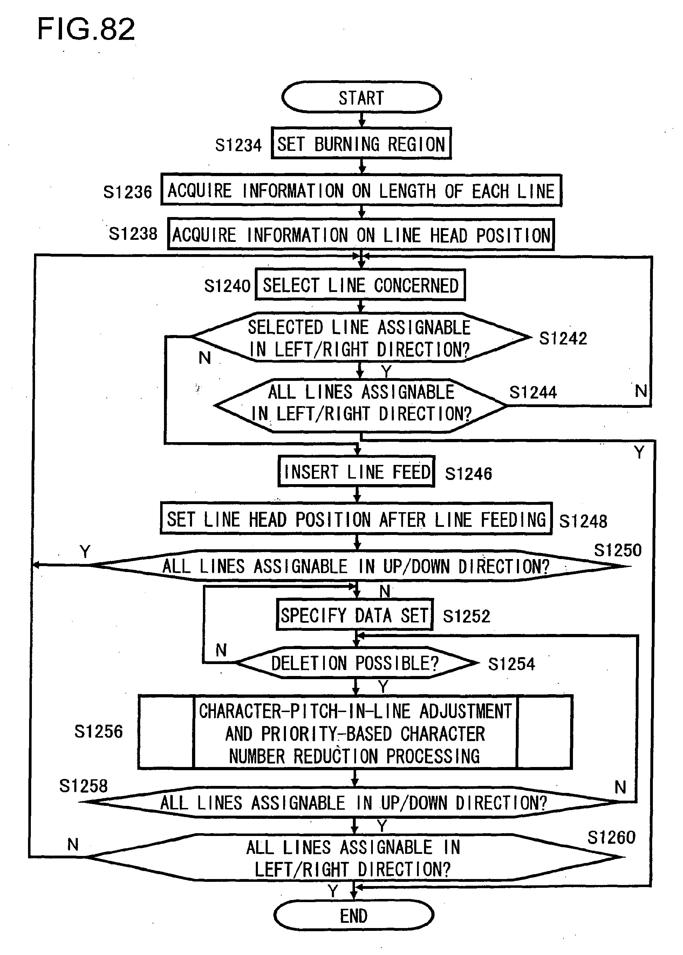

The above flow of processing performed in the tenth embodiment will now be described with reference to the flow chart in Fig. 82. Fig. 82 shows the details of step S1200 in Fig. 62. Since steps S1234 to S1250 here are the same as steps S1202 to S1218 in Fig. 63, their description will not be repeated.

Since the line feed inserted in step S1246 has increased the number of lines, and thus the up/down-direction width of the burning data may have become larger than that of the specified burning region; accordingly, in step S1250, as described previously, whether or not all the lines are assignable in the up/down direction is checked. If assignable, there is room in the up/down direction, and thus the flow proceeds to step S1240 to process the next line.

If unassignable, no more burning data 1236 can be kept displayed; thus, the flow proceeds to step S1252 to reduce what is displayed by performing character number reduction processing or the like on the burning data 1236 that is to be displayed.

In step S1252, one set of data after another is specified in order from the last to the first. First, the last set of data is specified.

Next, in step S1254, whether or not the specified set of data contains item data overlapping with that in other sets of data is checked. If there is item data overlapping with that in other sets of data, without omitting such data, the flow proceeds to step S1256. If there is no item data overlapping with that in other sets of data, no more deletion can be performed; thus, the flow proceeds to step S1252 again to specify a set of data anew.

In step S1258, whether or not the deletion in step S1256 has made all the lines assignable in the up/down direction is checked. If all the lines are now assignable in the up/down direction, the flow proceeds to step S1260. If not all the lines are assignable, the flow returns to step S1254 to check whether or not the specified set of data contains more item data overlapping with that in other sets of data. In step S1260, whether or not all the lines are assignable in the left/right direction is checked. If all the lines are assignable in the left/right direction, the process comes to an end. If not all the lines are assignable in the left/right direction, the flow returns to step S1208.

If, in step S1244 or S1260, all the lines are found to be assignable in the left/right direction as described above, since they have already been found to be assignable in the up/down direction as well, it is now possible to assign the burning data 1236 on the label face. Thus, the entire processing comes to an end.

In summary, when left/right-direction assignment is impossible, a line feed is inserted; when the increase in the number of lines resulting from the line feed causes the up/down-direction width of the burned data to become greater than that of the burning region, then, differently from the processing described previously, the data of items that overlaps among different sets of data is deleted from the item of the lowest priority up to reduce the data to be displayed and thereby make up/down-direction assignment possible; the processing is then repeated to make left/right-direction assignment possible as well.

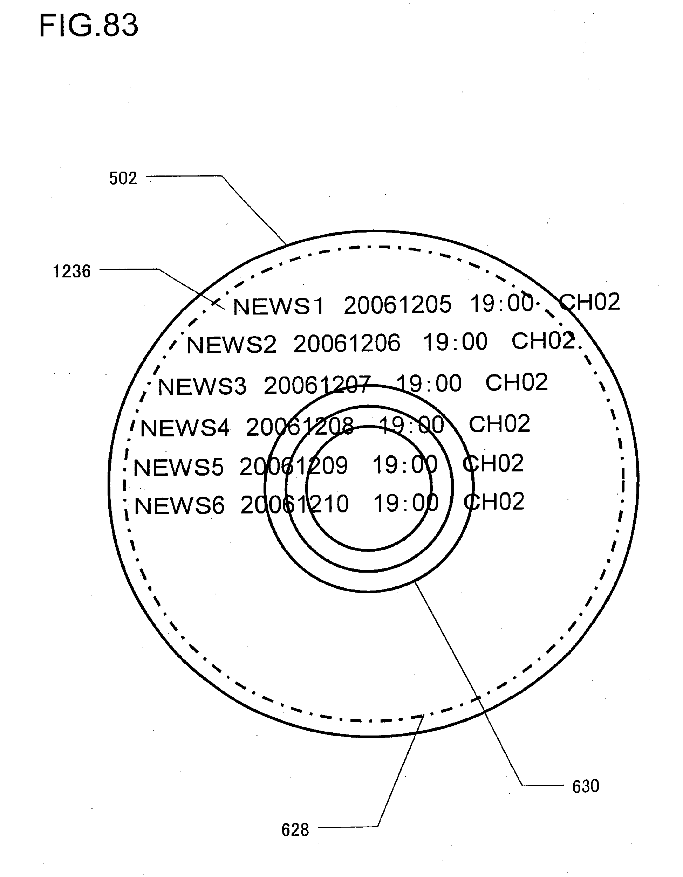

Fig. 83 shows a television display screen showing an image on the label face of the medium in an eleventh embodiment of the present invention. The eleventh embodiment has largely the same configuration as the sixth embodiment, and operates, like the sixth embodiment, according to the flow chart of Figs. 25 and 26. The difference lies in the details of step S528 in Fig. 26; specifically, here, a burning image is created in a layout different from those of the already described burning images. Fig. 83 shows how line head position setting processing is performed on the applied burning data 1236 so that the line heads of the lines are aligned at the outer circumference 628.

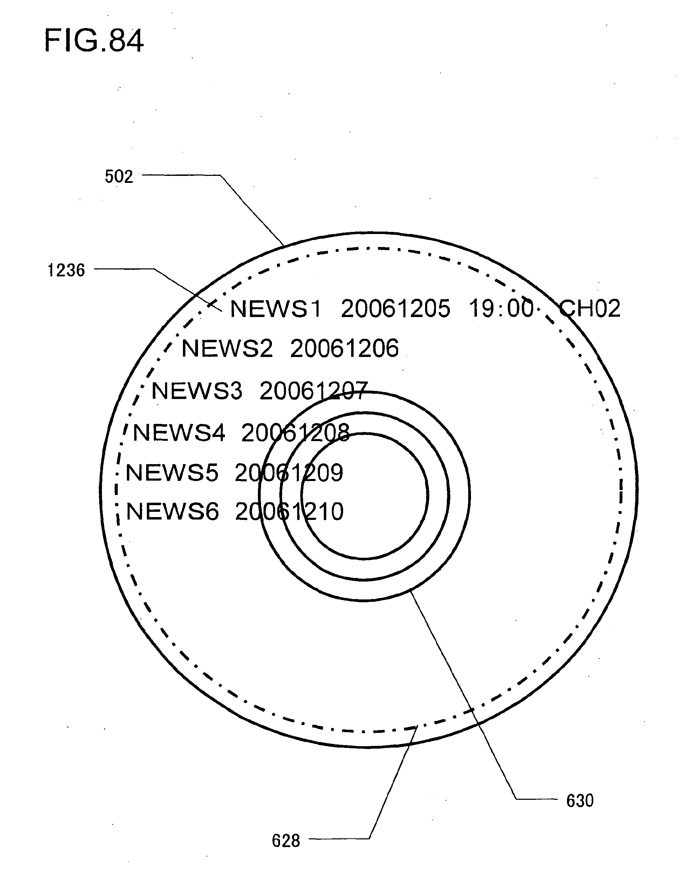

Fig. 84 shows how item data that overlaps among different sets of data is deleted except from the first set of data. For example, in Fig. 84, the recording start hour and the recorded channel overlap in all the sets of data, and therefore they are deleted except from the first set of data. Non-overlapping item data, such as the title and the recording date and time, is not deleted.

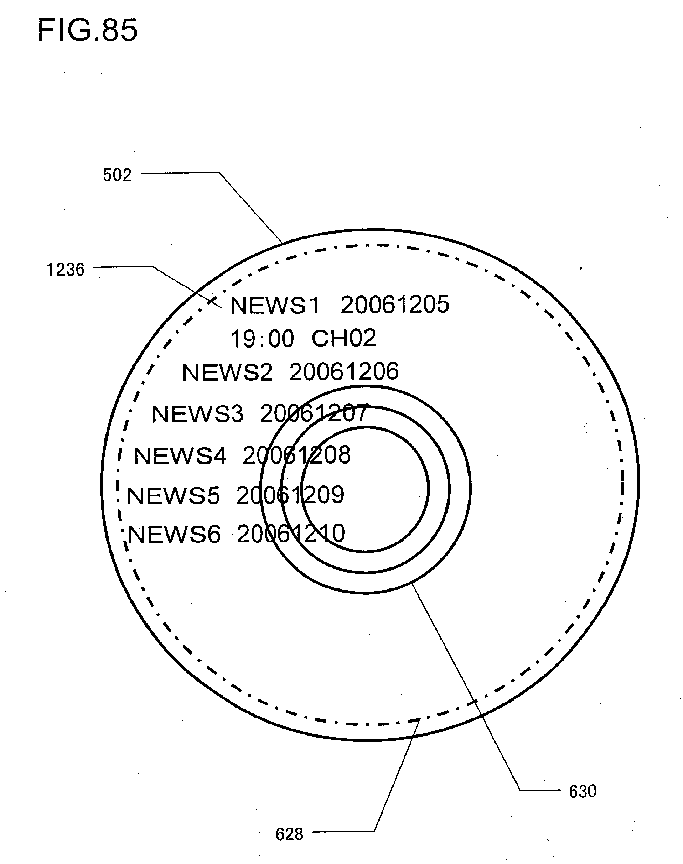

Fig. 85 shows how, since line 1 partly lies outside the burning region and is found to be unassignable in the left/right direction, a line feed is inserted in line 1 to carry to a new line the part of it lying outside the burning region (the recording start time and the recorded channel).

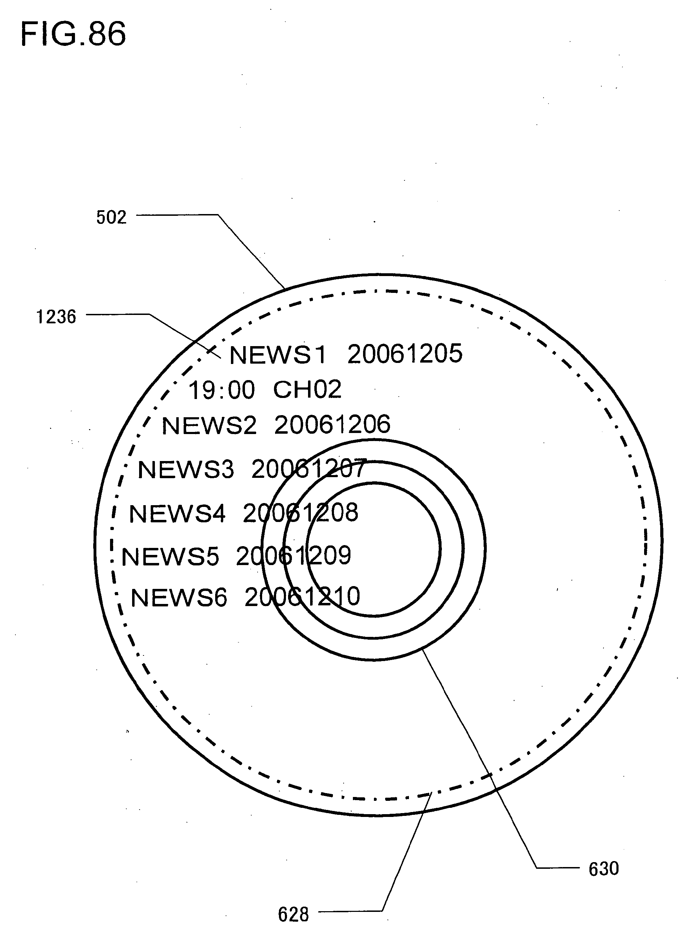

Fig. 86 shows how, since the line head of the new line (line 2) created as a result of insertion of the line feed lies away from the outer circumference 628, line head position setting processing is performed so that the line heads of all the lines are aligned at the outer circumference 628. Here, since the inserted line feed has increased the data width in the up/down direction, whether or not all the lines fit inside the burning region in the up/down direction is checked. In the state shown in Fig. 86, since all the lines fit inside the burning region in the up/down direction, they are found to be assignable. If all the lines are found to be assignable, the next line (line 3) starts to be processed.

Next, whether or not line 3 partly lies outside the burning region is checked. In Fig. 86, line 3 lies inside the burning region. Thus, without performing any processing such as line feed processing here, the next line starts to be processed.

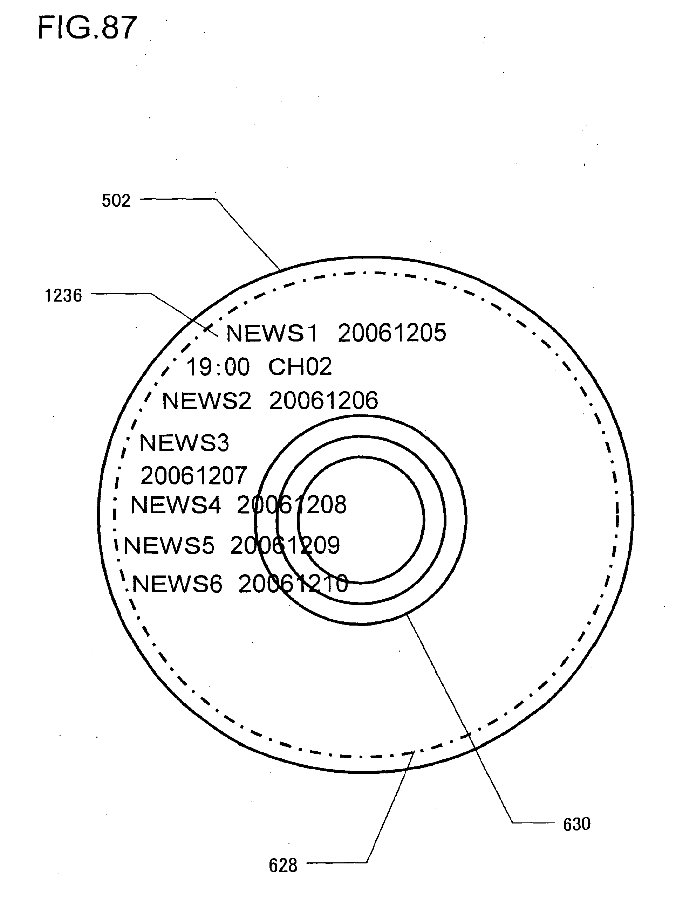

Fig. 87 shows how, since line 4 partly lies outside the burning region and is found to be unassignable in the left/right direction, a line feed is inserted in line 4 to carry to a new line the part of it lying outside the burning region (the recording date and time).

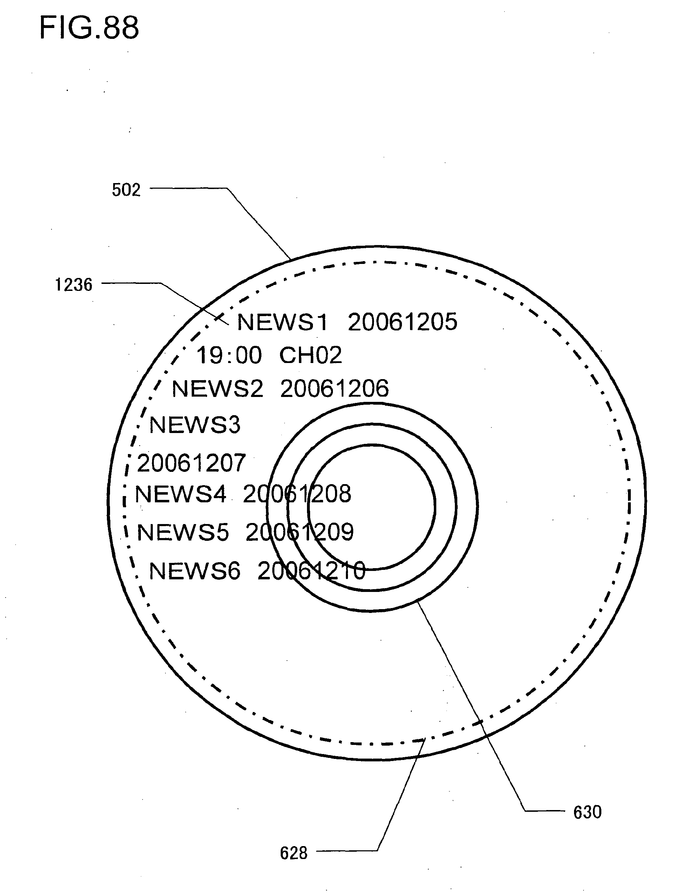

Fig. 88 shows how, since the line head of the new line (line 5) created as a result of insertion of the line feed lies away from the outer circumference 628, line head position setting processing is performed so that the line heads of all the lines are aligned at the outer circumference 628. Here, since the inserted line feed has increased the data width in the up/down direction, whether or not all the lines fit inside the burning region in the up/down direction is checked. In the state shown in Fig. 88, since all the lines fit inside the burning region in the up/down direction, they are found to be assignable. If all the lines are found to be assignable, the next line (line 6) starts to be processed.

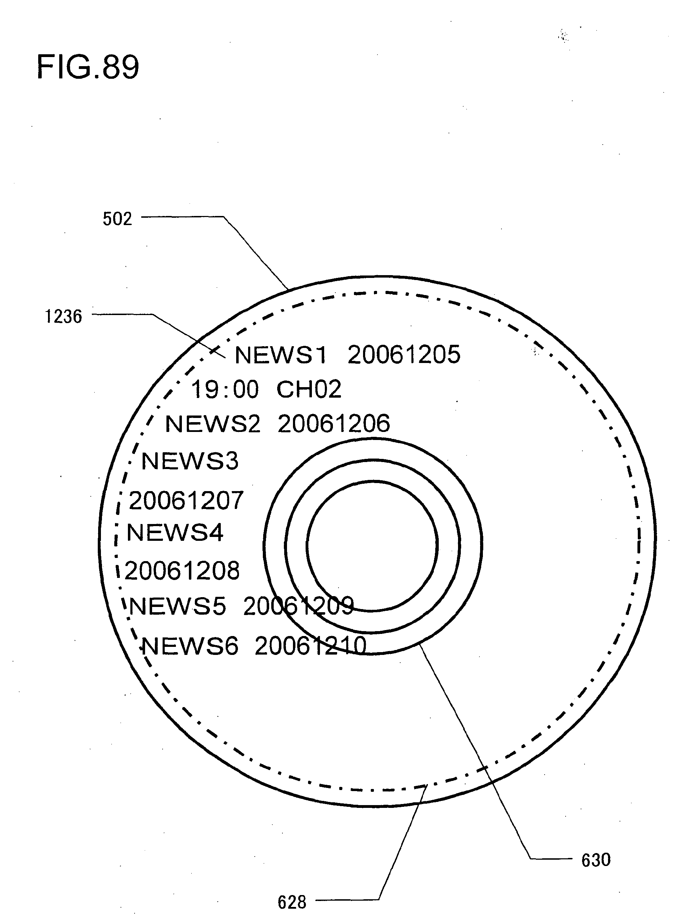

Fig. 89 shows how, since line 6 partly lies outside the burning region and is found to be unassignable in the left/right direction, a line feed is inserted in line 6 to carry to a new line the part of it lying outside the burning region.

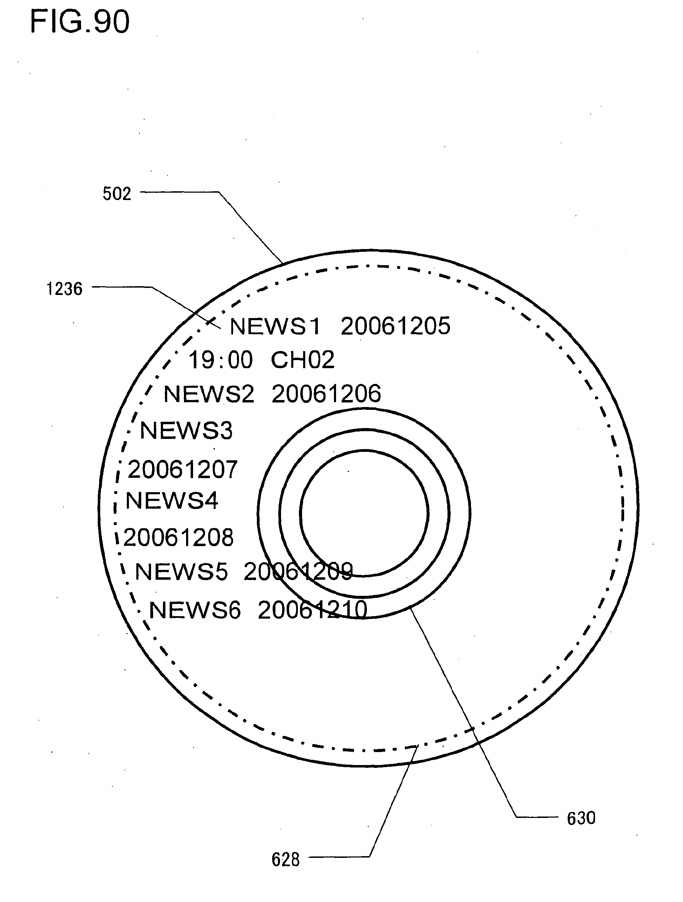

Fig. 90 shows how, since the line head of the new line (line 7) created as a result of insertion of the line feed lies away from the outer circumference 628, line head position setting processing is performed so that the line heads of all the lines are aligned at the outer circumference 628. Here, since the inserted line feed has increased the data width in the up/down direction, whether or not all the lines fit inside the burning region in the up/down direction is checked. In the state shown in Fig. 90, since all the lines fit inside the burning region in the up/down direction, they are found to be assignable. If all the lines are found to be assignable, the next line (line 8) starts to be processed.

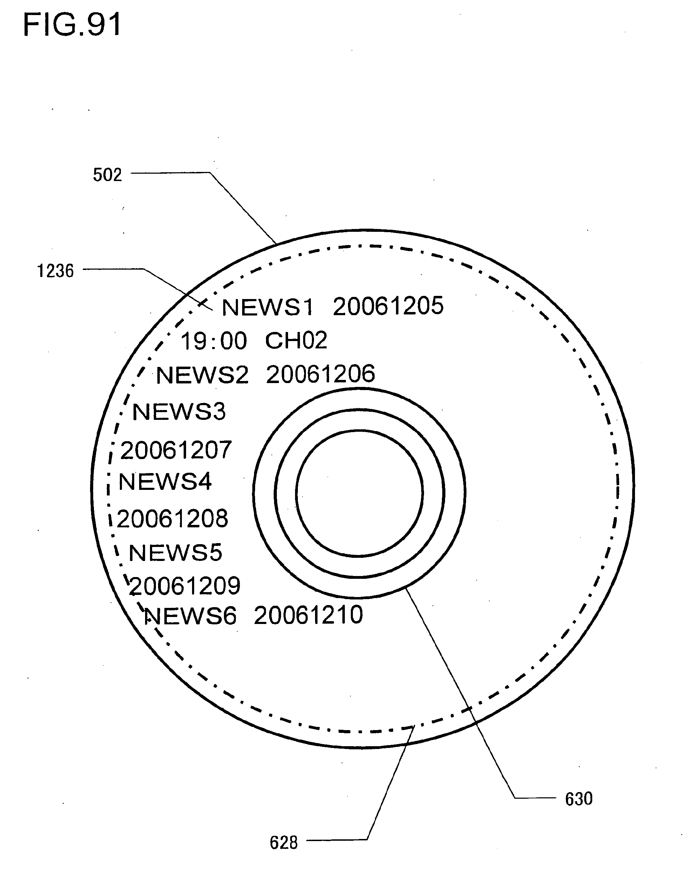

Fig. 91 shows how, since line 8 partly lies outside the burning region and is found to be unassignable in the left/right direction, a line feed is inserted in line 8 to carry to a new line the part of it lying outside the burning region.

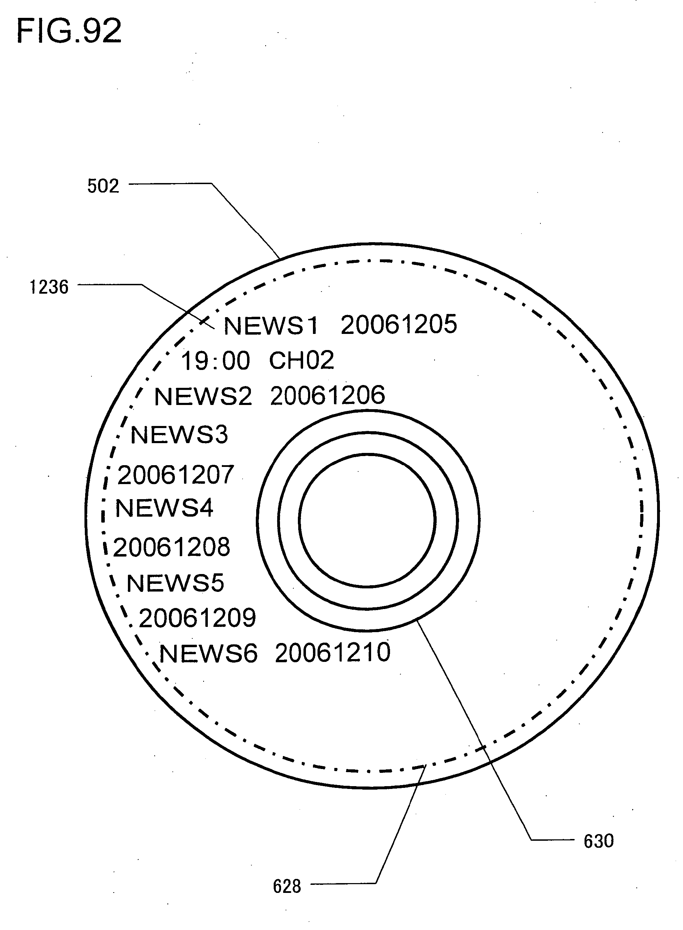

Fig. 92 shows how, since the line head of the new line (line 9) created as a result of insertion of the line feed lies away from the outer circumference 628, line head position setting processing is performed so that the line heads of all the lines are aligned at the outer circumference 628. Here, since the inserted line feed has increased the data width in the up/down direction, whether or not all the lines fit inside the burning region in the up/down direction is checked. In the state shown in Fig. 92, since all the lines fit inside the burning region in the up/down direction, they are found to be assignable. If all the lines are found to be assignable, the next line (line 10) starts to be processed.

Next, whether or not line 10 partly lies outside the burning region is checked. In Fig. 92, line 10 lies inside the burning region. Thus, without performing any processing such as line feed processing here, the next line, if any, starts to be processed. Here, since no next line exists, the entire processing comes to an end.

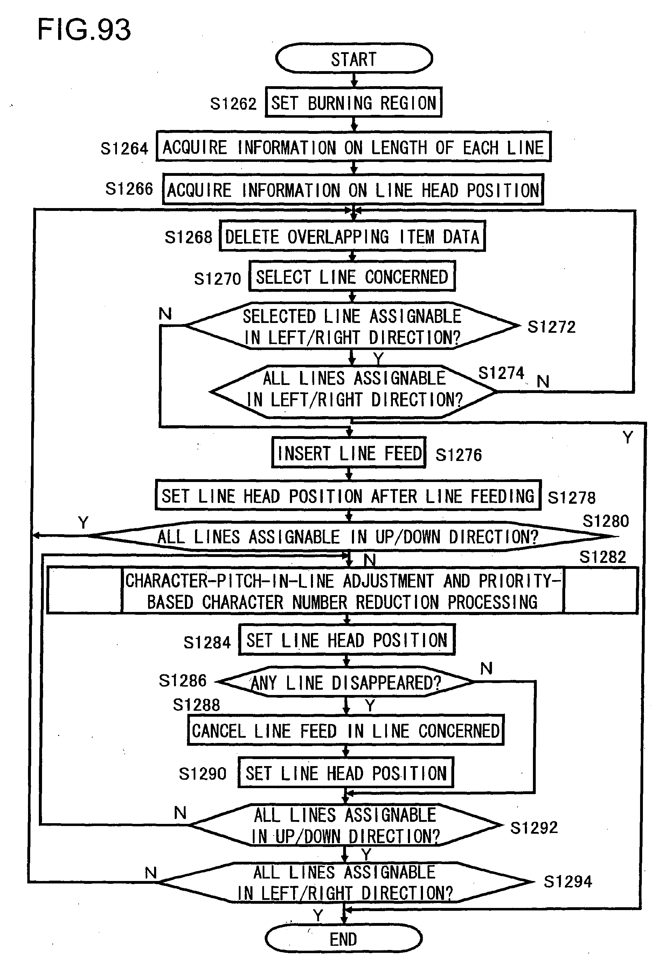

The above flow of processing performed in the eleventh embodiment will now be described with reference to the flow chart in Fig. 93. Fig. 93 shows the details of step S1200 in Fig. 62. When the flow starts, first, in step S1262, a burning region is set with consideration given to the region secured as the burning region secured for the remaining capacity.

In step S1264, information on the length of each line in the burning region is acquired and, as in step S590 in Fig 58, information on the length permitted for each of the assigned lines is acquired. This is because the burning target region is doughnut-shaped, and the length permitted for each line differs from one line to another.

In step S1266, as in step S588 in Fig. 28, the line head position is set. In this step, all the lines, having line feeds automatically inserted between different sets of data in step S556 in Fig. 46, are arranged such that their line heads are aligned at the outer circumference 628.

In step S1268, item data that overlaps among different sets of data is deleted except from the first set of data.

The flow then proceeds to step S1270 to select one after another of the lines having their line head position set. The line selected first is line 1. When predetermined processing is completed for the line selected in step S1270, the next line is selected.

In step S1272, whether or not the line selected in step S1270 is assignable in the burning region in the left/right direction is checked. If it is unassignable in the left/right direction, the flow proceeds to step S1276; if it is assignable, the flow proceeds to step S1274 to check whether or not all the lines are assignable in the left/right direction is checked. If all the lines are assignable in the left/right direction, the entire processing comes to an end; if not all the lines are assignable in the left/right direction, the flow returns to step S1270.

In step S1276, line feed processing is performed on the selected line based on information on its length to make it assignable in the burning region in the left/right direction. The new line produced as a result of insertion of the new line may lie away from the line head position set in step S1206; thus, in step S1278, line head position setting processing is newly performed.

Since the line feed processing in step S1276 described above has increased the number of lines, the up/down-direction of the burning data may have become larger than that of the specified burning region; accordingly, in step S1280, whether or not all the lines are assignable in the up/down direction is checked. If assignable, there is room in the up/down direction, and thus the flow proceeds to step S1270 to process the next line. If unassignable, no more burning data 1236 can be kept displayed; thus, the flow proceeds to step S1282 to reduce what is displayed by performing character number reduction processing or the like on the burning data 1236 that is to be displayed.

Since the character number reduction processing or the like in step S1282 has caused a change in the line head position, in step S1284, line head position setting processing is performed again to rearrange the lines.

Then, in step S1286, whether or not any line has disappeared as a result of the character number reduction processing is checked. If any line has disappeared, there appears room in the up/down direction. Thus, any line concerned is moved up. If, as a result of upward movement, the line becomes assignable in the left/right direction, the flow proceeds to step S1288 to cancel the line feed in the line to reduce the number of lines. In step S1290, since the line feed cancellation processing in step S1288 has caused a change in the line head position, line head position setting processing is newly performed to rearrange the lines. Moreover, the reduction in the number of lines resulting from the line feed cancellation processing in step S1288 causes a change in the up/down-direction width of the burning data 1236, in step S1292, whether or not all the lines are assignable is checked again. If, in step S1286, no line is found to have disappeared, then the flow may proceed directly to step S1292.

In step S1292, since the character number reduction processing and the disappeared line processing performed have caused a change in the number of lines, as in the step S1280, whether or not all the lines are assignable in the up/down direction is checked. If unassignable, character number reduction processing is performed again to reduce what is displayed as the burning data 1236. If assignable, the flow proceeds to step S1294. In step S1294, whether or not all the lines are assignable in the left/right direction is checked. If all the lines are assignable in the left/right direction, the entire processing comes to an end. If not all lines are assignable in the left/right direction, the flow returns to step S1270.

If, in steps S1274 and S1294, all the lines are assignable in the left/right direction as described above, since they are already assignable in the up/down direction, the burning data 1236 can be assigned on the label face. Thus, the entire processing comes to an end.

In summary, for the first set of data, all item data is displayed and, for the other sets of data, overlapping item data is deleted to reduce the amount of what is burned. Moreover, when left/right-direction assignment is impossible, a line feed is inserted; when the increase in the number of lines resulting from the line feed causes the up/down-direction width of the burned data to become greater than that of the burning region, the data to be displayed is reduced so that the width of the burned data is reduced to make up/down-direction assignment possible; the processing is then repeated to make left/right-direction assignment possible as well.

The ninth to eleventh embodiments described above assume the burning region 1234 shown in Fig. 44, but their application is not limited to such a burning region; they may be equally applied to, for example, a burning region extending other than in a central region 618 as shown in Fig. 32.

Hereinafter, conventional problems and the various solutions thereof that the present invention has achieved, which have been described in the embodiments above, will be summarized as follows:

With conventional label face burning technologies, it is indispensable to reverse a medium and insert it into a recording device. This may cause confusion with respect to the insertion of the medium, and puts an undue responsibility on the user to keep what is recorded in the data face consistent with what is burned on the label face. The conventional label recording methods are thus not easy to use for everyone.

In view of the above, the present invention provides a recording device that allows information corresponding to the data written in the data face to be written on the label burning easily and without confusion.

To solve the above problems, according to the present invention, a recording device is provided with: an insertion part into which a removable storage medium having a data face on one side and a label face on the other side is inserted; a data writing part that faces the inserted storage medium and that writes data in the data face; a label writing part that faces, from the same side from which the data writing part faces the storage medium, the storage medium inserted in the insertion part and that writes a visible image on the label face; a discriminating part that checks which face of the storage medium inserted in the insertion part faces the data writing part; and a user interface part that, when the discriminating part finds the label face of the storage medium to face the data writing part, checks whether the insertion is for label recording or by mistake.

The above user interface part is provided with, for example: an output part that asks the user whether or not the insertion is for label recording; and an input part that receives the user's response to it.

With the above configuration, it is possible to surely distinguish between a case where the user has inserted the medium reversely with an intention of label writing and a case where the user has inserted the medium reversely by mistake while intending data writing. Thus, despite the recording device assuming a possibility of reverse insertion, it is possible to avoid causing confusion or embarrassment to the user.

According to a specific feature of the invention, there is provided a checking part that checks whether or not the storage medium inserted in the insertion part is one writable by the label writing part, and, if the storage medium is found by the checking part to be one unwritable by the label writing part, the user interface part is kept out of operation. And in this case, a warning is promptly given to indicate erroneous insertion.

In this way, in a case where there is no likeliness of label writing being started and the insertion is erroneous, it is possible to avoid asking the user an unnecessary question and causing embarrassment to the user.

According to a specific feature of the invention, there is provided an insertion detection part that detects a storage medium being newly inserted, and, according to the detection by this insertion detection part of a storage medium being newly inserted, the user interface part is put into operation.

In this way, by putting the user interface part into operation when a storage medium is newly inserted, it is possible to speedily cope with a situation unintended by the user.

According to a specific feature of the invention related to this, when a storage medium is already inserted at start-up, the user interface part may be kept out of operation, so as not to cause unnecessary confusion to the user. In a case where the medium has been left inserted reversely, there is little likeliness of label burning being started subsequently to start-up. Accordingly, simply a warning may be given to indicate erroneous insertion.

According to a specific feature of the invention, there is provided an insertion detection part that detects a storage medium being newly inserted; and an ejection commanding part that commands the ejection of the storage medium from the insertion part. Here, if the time after the ejection of the storage medium effected by the ejection commanding part until the detection of insertion by the insertion detection part is shorter than a predetermined period, the user interface part is not put into operation.

If the time after the ejection of the storage medium effected by the ejection commanding part until the detection of insertion by the insertion detection part is shorter than the predetermined period, and in addition if the reinserted medium is in a reverse orientation, it is highly likely that the user intends label burning. Thus, with the configuration described above, it is possible to avoid asking the user an unnecessary question and causing embarrassment to the user. In the case described above, the user interface part may be kept out of operation to promptly allow label recording.

According to another feature of the invention, a recording device is provided with: an insertion part into which a removable storage medium having a data face on one side and a label face on the other side is inserted; a data writing part that faces the inserted storage medium and that writes data in the data face; a label writing part that faces, from the same side from which the data writing part faces the storage medium, the storage medium inserted in the insertion part and that writes a visible image on the label face; a discriminating part that checks which face of the storage medium inserted in the insertion part faces the data writing part; a checking part that checks whether or not the storage medium inserted in the insertion part is one writable by the label writing part; and an indicating part that, when the discriminating part finds the label face of the storage medium to face the data writing part, gives different indications depending on whether or not the storage medium is one writable by the label writing part according to the check result from the checking part.

With the above configuration, despite the recording device assuming a possibility of reverse insertion, it is possible to give the user appropriate indications depending on whether or not the medium is writable by the label writing part. Thus, it is possible to avoid causing embarrassment to the user as by giving a warning of erroneous insertion despite the user having inserted a label-writable medium with an intention of label writing.

According to another feature of the invention, a recording device is provided with: an insertion part into which a removable storage medium having a data face on one side and a label face on the other side is inserted; a data writing part that faces the inserted storage medium and that writes data in the data face; a label writing part that faces, from the same side from which the data writing part faces the storage medium, the storage medium inserted in the insertion part and that writes a visible image on the label face; a discriminating part that checks which face of the storage medium inserted in the insertion part faces the data writing part; an insertion detection part that detects the insertion of the storage medium into the insertion part; a power supply starting part; and an indicating part that, when the discriminating part finds the label face of the storage medium to face the data writing part, gives different indications depending on whether or not the storage medium was already inserted in the insertion part at the start-up by the power supply starting part according to the detection result from the insertion detection part.

With the above configuration, when the recording device, which assumes a possibility of reverse insertion, copes with an erroneous operation, it is possible to give the user appropriate indications depending on whether the medium has just been inserted or it has long been left inserted. In contrast, giving the same indication in both cases may cause inconsistencies, as by giving a definite warning of erroneous insertion when the user may have inserted the medium reversely with an intention of label writing, or giving an unnecessarily cautions indication when there is little likeliness of the user intending label burning. The above configuration helps improve this.

According to another feature of the invention, a recording device is provided with: an insertion part into which a removable storage medium having a data face on one side and a label face on the other side is inserted; a data writing part that faces the storage medium inserted in the insertion part and that writes data in the data face; a label writing part that faces, from the same side from which the data writing part faces the storage medium, the storage medium inserted in the insertion part and that writes a visible image on the label face; a discriminating part that checks which face of the storage medium inserted in the insertion part faces the data writing part; an insertion detection part that detects a storage medium being newly inserted; an ejection commanding part that commands the ejection of the storage medium from the insertion part; and a controller that, when the discriminating part finds the label face of the storage medium to face the data writing part, controls differently depending on whether or not the time after the ejection of the storage medium effected by the ejection commanding part until the detection of insertion by the insertion detection part is shorter than a predetermined period.

If the time after the ejection of the storage medium until the detection of insertion by the insertion detection part is shorter than the predetermined period, and in addition if the reinserted medium is in a reverse orientation, it is highly likely that the user intends label burning. Accordingly, in that case, label recording may promptly be allowed. On the other hand, if the time after the ejection of the storage medium until the detection of insertion by the insertion detection part is longer than the predetermined period, an erroneous operation is likely, and thus cautious handling is needed. According to the above feature of the invention, depending on the time after the ejection of the storage medium until the detection of insertion by the insertion detection part, it is possible to cope with reverse insertion appropriately without causing stress to the user.

According to another feature of the invention, a recording device is provided with: an insertion part into which a removable storage medium having a data face on one side and a label face on the other side is inserted; a data writing part that faces the storage medium inserted in the insertion part and that writes data in the data face; a label writing part that faces, from the same side from which the data writing part faces the storage medium, the storage medium inserted in the insertion part and that writes a visible image on the label face; a data reading part that faces the storage medium inserted in the insertion part and that reads data in the data face; and a label reading part that faces the storage medium inserted in the insertion part and that reads an image on the label face.

With the above configuration, the label face can be read. Thus, the result of reading can be used for various purposes, for example to prevent double burning during additional burning on the label face.

In the above configuration, the data writing part and the label writing part may share at least part of them. Moreover, in the above configuration, the data writing part and the data reading part may share at least part of them. In addition, in the above configuration, the label writing part and the label reading part may share at least part of them.

In the recording device, it is appropriate to make the data writing part and the data reading part share at least part of them. By making, as described above, the data writing part and the label writing part share at least part of them and the data reading part and the label reading part share at least part of them, it is possible to further enhance the label burning functions including that for preventing double burning.

With conventional label face burning technologies, it is indispensable to perform manual operation to reverse a medium and insert it into a recording device. The conventional label recording methods are thus not easy to use for everyone.

In view of the above, the present invention provides a recording device that allows an image to be written on the label face easily without putting an undue responsibility on the user in terms of operation.

To solve the above problems, according to the present invention, a recording device is provided with: an insertion part into which a removable storage medium having a data face on one side and a label face on the other side is inserted; a data writing part that faces the storage medium inserted in the insertion part and that writes data in the data face; a label writing part that faces, from the same side from which the data writing part faces the storage medium, the storage medium inserted in the insertion part and that writes a visible image on the label face; and a controller that switches the face of the storage medium that faces the data writing part by changing the relative positions of the storage medium inserted in the insertion part and the data writing part.

According to the present invention, with the above configuration, it is possible to write an image on the label face easily without putting an undue responsibility on the user in terms of operation.

According to a specific feature of the present invention, there are provided two data writing parts and two label writing parts so that they face both sides of the storage medium. When data is recorded, the controller activates, of the two data writing parts, the one facing the data face; when a label is recorded, the controller activates, of the two label writing parts, the one facing the label face.

This eliminates the need for the user to care about whether or not he is inserting the media obversely or reversely.

According to a further specific feature of the present invention, the two data writing parts may be configured identically, and so may be the two label writing part. With this configuration, it is necessary only to prepare one type of data writing part and one type of label writing part, and thus it is possible to achieve cost reduction through the economies of mass production.

According to another specific feature of the present invention, the data writing part and the label writing part can be moved between a first position facing one side of the storage medium inserted in the insertion part and a second position facing the other side thereof. When data is recorded, if the data writing part does not face the data face, the controller moves the data writing part between the first and second positions; when a label is recorded, if the label writing part does not face the label face, the controller moves the label writing part between the first and second positions.

This makes it possible to write and read data in and from the data face and to burn and read labels on and from the label face without reversing the medium, and also eliminates the need for the user to bother about whether he is inserting a medium obversely or reversely.

According to another specific feature of the present invention, there is provided a mechanism for changing the insertion orientation of the storage medium in the insertion part. When data is recorded, if the data writing part does not face the data face, the controller makes the insertion orientation changing mechanism change the insertion orientation of the storage medium; when a label is recorded, if the label writing part does not face the label face, the controller makes the insertion orientation changing mechanism change the insertion orientation of the storage medium.

This makes it possible to write and read data in and from the data face and to burn and read labels on and from the label face, and also eliminates the need for the user to bother about whether he is inserting a medium obversely or reversely.

According to another feature of the present invention, a recording device is provided with: an insertion part into which a removable storage medium having a data face on one side and a label face on the other side is inserted; a data writing part that faces the storage medium inserted in the insertion part and that writes data in the data face; a label writing part that faces, from the side opposite from that from which the data writing part faces the storage medium, the storage medium inserted in the insertion part and that writes a visible image on the label face; a discriminating part that checks the orientation of the storage medium inserted in the insertion part.

According to the above feature of the present invention, it is possible to write and read contents data and to burn and read label images without reversing the medium. Moreover, it is also possible to separately configure the data writing part and the label writing part, and thus to adopt writing parts operating on different principles suitable for different types of writing. This widens the application of the invention.

The use of recording devices provided with both the capability of writing data to recording media and the capability of writing images on the exterior of recording media according to conventional label surface burning technologies is still not widespread. Thus, as exemplified by printers capable of printing on the label face, the capability of writing images on the exterior of recording media is generally provided independently of the capability of writing data to recording media.

In view of the above, the present invention, by enhancing the usefulness of the capability of writing images on the exterior of recording media, provides a recording device that, despite being provided with both the capability of writing data and the capability of writing images on the exterior of recording media, is easier to use.

To solve the above problems, according to the present invention, a recording device is provided with: an insertion part into which a removable storage medium is inserted; a data writing part that writes data to the storage medium inserted into the insertion part; an automatically readable image creating part; and an image writing part that writes an automatically readable image on the exterior of the storage medium. Here, an "automatically readable image" denotes an image that can be read optically or mechanically without requiring judgment by the human eyes and brains, an example of such an image being a bar code.

With the above configuration, it is possible to write information for automatically managing recording media on their exterior with the recording device itself.

According to a specific feature of the present invention, the automatically readable image creating part creates an automatically readable image indicating the contents of data recorded on storage media.

According to this feature, an automatically readable image relating to the contents of recorded data can be recorded on the exterior of recording media. Thus, by automatically reading the image on the exterior of recording media, it is possible to acquire information on the contents of the data recorded on the recording media. Moreover, since the recording device is provided with both the capability of writing data in recording media and the capability of writing an automatically readable image on the exterior of recording media, the recording device can manage the correspondence between the data in the recording media and the automatically readable image on the exterior of the recording media. For example, it is possible to prevent the writing of an automatically readable image having information contradicting written data, and to newly write an automatically readable image in accordance with newly written data.

According to another specific feature of the present invention, the recording device is provided with an image reading part that reads an automatically readable image written on the exterior of storage media.

With this feature, the recording device itself can write and read an automatically readable image. Thus, through exchange of information with the exterior of recording media, it is possible to write an automatically readable image appropriately. Here, the image writing part and the image reading part may share at least part of them.

According to another specific feature of the present invention, there is provided a visual recognition image creating part that creates a visual recognition image that represents the contents of data recorded in storage media by the data writing part and that can be visually recognized by the user.

This makes it possible to acquire information on what visual recognition image is written by reading an automatically readably image. Thus, it is possible to manage the writing of a visual recognition image automatically without putting an undue responsibility on the user.

According to another specific feature of the present invention, the image writing part writes an automatically readable image in a predetermined region on the exterior of a storage medium.

This limits the area in which an automatically readable image is found, and thus makes it possible to read an automatically readable image efficiently and surely.

According to another specific feature of the present invention, what can be inserted into the insertion part is a removable storage medium having a data face on one side and a label face on the other side. In this case, the data writing part faces the inserted storage medium and writes data on the data face, and the image writing part faces, from the same side from which the data writing part faces the storage medium, the storage medium inserted in the insertion part and writes a visual recognition image and an automatically readable image on the label face.

In the above configuration, the data writing part and the image writing part may share at least part of them.

With the above configuration, for example, in a recording device that handles rotating-disc-type media having on their label face a color-changeable layer changing its color on exposure to heat or light and that can burn an image on the label face by irradiating such a medium with laser light by using the recording head with the medium reversely inserted into the recording device, it is possible to further enhance the usefulness of the capability of burning images on the label face.

In cases where removable media having a data face on one side and a label face on the other side as described above are handled, the image reading part may write an automatically readable image inside a predetermined region on the label face.

In cases where the storage medium is of a rotating disc type, the predetermined region may be a ring-shaped area concentric with the center of rotation. This makes it possible to write and read an automatically readable image efficiently by the rotation of the disc.

In recording devices provided with both the capability of writing data to storage media and the capability of writing a visual recognition image on the exterior of storage media according to conventional label surface burning technologies, no measures are taken to manage the correspondence between the recording of data in storage media and the writing of a visual recognition image on the exterior of the storage media. Thus, the user is responsible for maintaining the correspondence between what is recorded in the data face and the information burned on the label face.

In view of the above, the present invention provides a recording device that alleviates the user's responsibility for maintaining the correspondence between the data written in the data face and the visual recognition image written on the exterior of media.

To solve the above problems, according to the present invention, a recording device is provided with: an insertion part into which a removable storage medium is inserted; a data writing part that writes data to the storage medium inserted into the insertion part; a visual recognition image creating part that creates a visual recognition image that can be visually recognizable by the user; an image writing part that writes a visual recognition image on the exterior of the storage medium; and a controller that, as the visual recognition image is created, makes the data writing part automatically write information relating to the visual recognition image to the storage medium.

With the above configuration, whenever information on a visual recognition image is created, information relating to it is written to the storage medium. Thus, it is possible to surely manage, as data of the storage medium, information corresponding to a visual recognition image that has been or will be written on the exterior of the storage medium.

According to a specific feature of the present invention, the visual recognition image creating part creates a visual recognition image representing the contents of the data recorded in the storage medium by the data writing part.

This makes it possible to manage, as data of the storage medium, information on a visual recognition image corresponding to the contents of the recorded data, and thus to maintain the correspondence between the data written in the data face and the visual recognition image written on the exterior of the storage medium.

According to another specific feature of the present invention, information on a visual recognition image is information for managing the visual recognition image, and the visual recognition image creating part creates visual recognition image so as to correspond to such management information. This makes it easy to manage a visual recognition image as data of the storage medium.

According to another specific feature of the present invention, there is provided a storage part that stores information on a visual recognition image. By making the recording device itself store information on a visual recognition image in this way, it is possible to surely manage a visual recognition image.

According to another specific feature of the present invention, the controller makes the data writing part write the visual recognition image created by the visual recognition image creating part to the storage medium. This allows the visual recognition image written on the exterior of the storage medium to be written, as image information, to the storage medium, and makes it possible to recognize the image written on the exterior of the storage medium based on data in the storage medium.

According to another specific feature of the present invention, there is provided a storage part that stores the visual recognition image created by the visual recognition image creating part. This makes it possible to recognize the image written to the exterior of the storage medium based on data in the storage part.

According to another specific feature of the present invention, the controller makes the data writing part write, to the storage medium, information indicating that a visual recognition image has been written to the exterior of the media by the image writing part. This makes it possible to surely grasp the execution of the writing of a visual recognition image on the exterior of the medium based on data in the storage medium.

By adopting this feature in the management of the execution of the writing of a visual recognition image representing the contents of data recorded in the storage medium, it is possible to surely manage the correspondence between the data written in the data face and the visual recognition image written on the exterior of the storage medium.

In practicing the above feature of the present invention, a visual recognition image may be written on detection that no information indicating that a visual recognition image has been written on the exterior of the medium has been written to the recording medium. This makes it possible, even if there is inconsistency between the data written in the data face and the visual recognition image written on the exterior of the medium, to automatically eliminate the inconsistency.

Moreover, in practicing the above feature of the present invention, there may be provided an insertion detection part that detects a storage medium being newly inserted into the insertion part so that, on detection of a storage medium being newly inserted, information indicating that a visual recognition image has been written on the exterior of the medium is detected. This makes it possible, every time a storage medium is inserted, to eliminate inconsistency between the data written in the data face and the visual recognition image written on the exterior of the storage medium.

The above-described various features of the present invention can be suitably practiced in recording devices that handle removable storage media having a data face on one side and a label face on the other side, that write data into the data face while facing the storage medium inserted in the insertion part, and that write a visual recognition image on the label face while facing the storage medium inserted in the insertion part from the same side from which the data writing part faces it.

In such a recording device, the data writing part and the image writing part may share at least part of them. There may additionally be provided a data reading part that reads data written in the storage medium, in which case the data writing part and the data reading part may share at least part of them.

According to another feature of the present invention, a recording device is provided with: an insertion part into which a removable medium is inserted; a data writing part that writes data to the storage medium inserted in the insertion part; a visual recognition image creating part that creates a visual recognition image that can be visually recognized by the user; an image writing part that writes the visual recognition image on the exterior of the storage medium; and a controller that makes the data writing part write, to the storage medium, original information needed to create the visual recognition image.

With the above configuration, it is possible to manage the creation of a visual recognition image to be written on the exterior of the storage medium based on data in the storage medium itself, and this makes the management of the visual recognition image easy.

According to another feature of the present invention, a recording device is provided with: an insertion part into which a removable medium is inserted; a data writing part that writes data to the storage medium inserted in the insertion part; a visual recognition image creating part that creates a visual recognition image that can be visually recognized by the user; an image writing part that writes the visual recognition image on the exterior of the storage medium; and a controller that makes the data writing part write, to the storage medium, information indicating that a visual recognition image has been written on the exterior of the medium by the image writing part.

This makes it possible to surely grasp the execution of the writing of a visual recognition image on the exterior of the medium based on data in the storage medium. Thus, this configuration is useful for the management of the correspondence between the data written to the data face and the visual recognition image written on the exterior of the storage medium and for the management of the writing of the visual recognition image.

In recording devices provided with both the capability of writing data to storage media and the capability of writing a visual recognition image on the exterior of storage media according to conventional label surface burning technologies, no measures are taken to manage the correspondence between the recording of data in storage media and the writing of a visual recognition image on the exterior of the storage media. Thus, the user is responsible for maintaining the correspondence between what is recorded in the data face and the information burned on the label face.

In view of the above, the present invention provides a recording device that alleviates the user's responsibility for maintaining the correspondence between the data written in the data face and the visual recognition image written on the exterior of media.

To solve the above problems, according to the present invention, a recording device is provided with: an insertion part into which a removable storage medium is inserted; a data writing part that writes data to the storage medium inserted into the insertion part; a visual recognition image creating part that creates a visual recognition image that can be visually recognizable by the user; an image writing part that writes a visual recognition image on the exterior of the storage medium; and a storage part that stores information indicating that a visual recognition image has been written on the exterior of the medium by the image writing part.

This makes it possible to surely grasp the execution of the writing of a visual recognition image on the exterior of the medium based on data in the storage part of the recording device.

According to a specific feature of the present invention, the storage part stores identification information by which a storage medium on which a visual recognition image has been written by the image writing part can be identified. Thus, it is possible to manage a plurality of storage media based on information indicating that visual recognition images have been written on the exterior of the media.

According to another specific feature of the present invention, the visual recognition image creating part creates a visual recognition image that indicates the contents of data recorded in the storage medium by the data writing part. This makes it possible to manage information on a visual recognition image corresponding to the contents of recorded data based on data in the storage part, and thus to maintain the correspondence between the data written to the data face and the visual recognition image written on the exterior of the storage medium.

According to another specific feature of the present invention, the recording device is further provided with a storage part that stores information needed for the creation of a visual recognition image by the visual recognition image creating part. This makes it possible to create a visual recognition image automatically based on information in the storage part.

According to yet another specific feature of the present invention, the recording device is further provided with a storage part that stores a visual recognition image created by the visual recognition image creating part. This makes it possible to recognize the visual recognition image from the storage part of the storage device.

According to another feature of the present invention, a recording device is provided with: an insertion part into which a removable storage medium is inserted; a data writing part that writes data to the storage medium inserted into the insertion part; a storage part that stores information on data recorded in the storage medium by the data writing part; a visual recognition image creating part that creates a visual recognition image based on information in the storage part; an image storage part that stores the visual recognition image created by the visual recognition image creating part; and an image writing part that writes the visual recognition image stored in the image storage part on the exterior of the storage medium.

With the above configuration, it is possible to, first, write data to the storage medium and store information relating to it and, then, create a visual recognition image based on that and write it on the exterior of the medium. Thus, it is possible to manage the execution of the writing of a visual recognition image corresponding to data written in the medium.

Here, identification information by which a storage medium on which a visual recognition image has been written by the image writing part can be recognized may be stored. This makes it possible to manage the writing of visual recognition images on a plurality of storage media without confusion.

According to another feature of the present invention, a recording device is provided with: an insertion part into which a removable storage medium is inserted; a data writing part that writes data to the storage medium inserted into the insertion part; a visual recognition image creating part that creates a visual recognition image that can be visually recognized by the user; an image writing part that writes the visual recognition image on the exterior of the storage medium; and a storage part that stores identification information by which a storage medium on which a visual recognition image has been written by the image writing part can be identified.

With the above configuration, it is possible to manage, in the storage device, which storage medium a visual recognition image created by the visual recognition image creating part has been written on the exterior of, and thereby to alleviate the user's responsibility.

The above-described various features of the present invention can be suitably practiced in recording devices that handle removable storage media having a data face on one side and a label face on the other side, that write data into the data face while facing the storage medium inserted in the insertion part, and that write a visual recognition image on the label face while facing the storage medium inserted in the insertion part from the same side from which the data writing part faces it.

In such a recording device, the data writing part and the image writing part may share at least part of them. There may additionally be provided a data reading part that reads data written in the storage medium, in which case the data writing part and the data reading part may share at least part of them.

In recording devices provided with both the capability of writing data to storage media and the capability of writing a visual recognition image on the exterior of storage media according to conventional label surface burning technologies, no measures are taken to manage the correspondence between the recording of data in storage media and the writing of a visual recognition image on the exterior of the storage media. Thus, despite the provision of the two capabilities, they can only be used independently.

In view of the above, the present invention associates, in a recording device, the capability of recording data to a storage medium with the capability of writing a visual recognition image on the exterior of the medium, to thereby encourage the writing of a visual recognition image on the exterior of the storage medium corresponding to data written to the storage medium.

To solve the above problems, according to the present invention, a recording device is provided with: an insertion part into which a removable storage medium having a data face on one side and a label face on the other side is inserted; a data writing part that faces the storage medium inserted in the insertion part and that writes data in the data face; a label reading part that faces the storage medium inserted in the storage part and that writes a visible image on the label face; and a signal generating part that, in a state in which the data writing part can write data, a signal that enables the label writing part to write.

With the above configuration, it is possible to encourage the writing of a label on the label face corresponding to the writing of data into the data face.

According to a specific feature of the present invention, the label writing part is arranged to face the storage medium inserted in the insertion part from the same side from which the data writing part faces it. Here, the data writing part and the label writing part may share at least part of them. When the storage medium is inserted in the insertion part with the data face of the storage medium facing the data writing part and the label writing part, the signal generating part generates a signal recommending reinsertion of the storage medium with the label face facing the data writing part and the label writing part.

With this signal, the user is recommended to eject from the insertion part the storage medium having data written thereto, reverse the storage medium, and then insert it back into the insertion part for label writing.

Specifically, the recommendation signal so generated may be one that causes a visible or audible indication to be given to recommend reinsertion of the storage medium.

According to another specific feature of the present invention, there is provided a mechanism that ejects the storage medium inserted in the insertion part, and the signal generating part generates a signal that drives the mechanism.

With this configuration, automatic ejection of the storage medium on completion of writing on the data face recommends reversed reinsertion for label writing. Here, on the occasion of ejection, a visible or audible indication recommending label writing, for which purpose ejection has just taken place, may be given.

According to another specific feature of the present invention, there are provided two data writing parts and two label writing parts so that they face both sides of the storage medium. The signal generating part generates a signal that effects switching from a state in which, of the two data writing part, the one facing the data face is in operation to a state in which, of the two label writing parts, the one facing the label face.

With this configuration, it is possible to switch from data writing to label writing without reinsertion of the storage medium. Also in this configuration, instead of automatically effecting switching according to the signal, it is also possible to, first, recommend label writing according to the signal and, then, effect switching after receiving a response to the recommendation.

According to yet another specific feature of the present invention, there is provided a mechanism that mechanically changes the positional relationship between the storage medium inserted in the insertion part and the data writing part, and the signal generating part generates a signal for driving the mechanism.

Also with this configuration, it is possible to switch from data writing to label writing without reinsertion of the storage medium. Also in this configuration, instead of automatically effecting switching according to the signal, it is also possible to, first, recommend label writing according to the signal and, then, effect switching after receiving a response to the recommendation.

According to another specific feature of the present invention, the recording device is further provided with: a checking part that checks whether or not the storage medium inserted in the insertion part is one writable by the label writing part; and a controller that, when the checking part finds the storage medium to be one unwritable by the label writing part, inhibits the signal generating part from generating the signal. This prevents an unnecessary signal from being generated for a storage medium that is unwritable by the label writing part.

According to another specific feature of the present invention, there is provided a controller that generates a signal enabling the label writing part to write on various convenient occasions.

For example, the signal enabling the label writing part to write is generated in association with the end of the writing of data by the data writing part. In this way, subsequent to the end of the writing of data, the writing of a visible image relating to the data is encouraged.

For another example, in response to the generation of the signal that causes the storage medium to be ejected from the insertion part, the signal that enables the label writing part to write is generated. In this way, in association with the ejection of the storage medium, the writing of a visible image is encouraged.

In this example, in response to the generation of the medium ejection signal, for example, a signal recommending writing by the label writing part may be generated so that, until a response to this recommendation signal is entered, the execution of ejection is deferred. With this configuration, through interaction with the user on the occasion of the ejection of the medium, the writing of a visible image is surely encouraged.

For yet another example, when an operation that makes the writing of data by the data writing part impossible, a signal that enables the label writing part to write is generated. For example, when a recording medium is finalized to make it readable on another device, thereafter the data writing part can no longer write data to it. Since this means that the contents stored in the storage medium are made definite, generating the signal that enables the label writing part to write on this occasion is useful for maintaining the correspondence between the contents on the data face and the label face.

With a write-once-type medium, in which what has once been written in the label face cannot be erased, it is also possible to prohibit writing on the label face until the medium has been finalized as described above.

For still another example, when an operation is made to protect the data written by the data writing part, the signal that enables the label writing part to write is generated. The fact that some data is protected means that, at least for that data, the contents stored in the storage medium is definite. Thus, generating the signal that enables the label writing part to write on this occasion is useful for maintaining the correspondence between the contents on the data face and the label face.

With a write-once-type medium, in which what has once been written in the label face cannot be erased, it is also possible to prohibit writing of information relating to particular data on the label face unless that data is protected as described above.

In recording devices provided with both the capability of writing data to storage media and the capability of writing a visual recognition image on the exterior of storage media according to conventional label surface burning technologies, whether or not to use the visual recognition image burning capability is left to the choice of the user. Thus, while this capability is useful for users highly motivated to create labels for themselves, it remains difficult to use for general users at large.

In view of the above, the present invention makes, in a recording device provided with both the capability of recording data to storage media and the capability of writing a visual recognition image on the exterior of storage media, the visual recognition image writing capability usable by general users at large.

To solve the above problems, according to the present invention, a recording device is provided with: an insertion part into which a removable storage medium is inserted; a data writing part that writes data to the storage medium inserted into the insertion part; a controller that automatically acquires original information relating to the data written to the storage medium; a storage part that stores the original information acquired by the controller; a visual recognition image outputting part that outputs a visual recognition image that can be visually recognized by the user; and an image writing part that writes the outputted visual recognition image on the exterior of the storage medium.

With the above configuration, it is possible to easily write, on the exterior of the storage medium, a visual recognition image associated with data written to the storage medium. Thus, it is possible to meet the needs of general users at large, who want to know the contents of the data recorded in the storage medium by looking at the exterior of the storage medium.

According to a specific feature of the present invention, there is provided a data reading part that reads the data written in the storage medium, and the controller acquires original information based on the data read by the data reading part. This makes it possible to automatically acquire information relating to data actually written in the storage medium; then, based on that, it is possible to know the contents of data recorded in the storage medium with the help of the visual recognition image automatically written on the exterior of the storage medium.

According to another specific feature of the present invention, the controller automatically acquires original information from the data written by the data writing part. This makes it possible to automatically acquire information relating to data actually written to the storage medium; then, based on that, it is possible to know the contents of data recorded in the storage medium with the help of the visual recognition image automatically written on the exterior of the storage medium.

According to another specific feature of the present invention, the controller automatically acquires information on the owner of the storage medium, and the image writing part writes, on the exterior of the storage medium, a visual recognition image relating to the information on the owner of the recording medium. This makes it possible to know whose is the storage medium based on the visual recognition image automatically written on the exterior of the storage medium.

According to another specific feature of the present invention, the controller automatically acquires date information relating to data written by the data writing part, and the image writing part writes a visual recognition image relating to the date information on the exterior of the storage medium. This makes it possible to know the date information relating to data written in the storage medium based on the visual recognition image automatically written on the exterior of the storage medium.

According to another specific feature of the present invention, the data writing part can write image data; moreover, the controller automatically acquires recording mode information on image data written by the data writing part, and the image writing part writes a visual recognition image relating to the recording mode information on the exterior of the storage medium. This makes it possible to know the recording mode of the image information recorded in the storage medium based on the visual recognition image automatically written on the exterior of the storage medium.

According to another specific feature of the present invention, the data writing part can write image data; moreover, the controller automatically acquires image quality information on image data written by the data writing part, and the image writing part writes a visual recognition image relating to the image quality information on the exterior of the storage medium. This makes it possible to know the image quality of the image information recorded in the storage medium based on the visual recognition image automatically written on the exterior of the storage medium.

According to another specific feature of the present invention, the data writing part can write image data; moreover, the controller automatically acquires index image information of image data written by the data writing part, and the image writing part writes an index image on the exterior of the storage medium. This makes it possible to visually know the contents of the image information recorded in the storage medium based on the index image information automatically written on the exterior of the storage medium.

According to another specific feature of the present invention, the data writing part can write image data; moreover, the visual recognition image outputting part creates index image information based on image data automatically acquired by the controller, and the image writing part writes an index image on the exterior of the storage medium. This makes it possible to visually know the contents of the image information recorded in the storage medium based on the index image information automatically written on the exterior of the storage medium.

According to another specific feature of the present invention, the data writing part can write image data; moreover, the controller automatically acquires caption information that accompanies image data written by the data writing part, and the image writing part writes the caption information on the exterior of the medium. This makes it possible to know the contents of the image information recorded in the storage medium in the form of character information based on the caption information automatically written on the exterior of the storage medium.

According to another specific feature of the present invention, the data writing part can write data whose playback takes time; moreover, the controller automatically acquires playback duration information of image data written by the data writing part, and the image writing part writes the playback duration on the exterior of the storage medium. This makes it possible to know the playback duration of the image information recorded in the storage medium based on the playback duration information automatically written on the exterior of the storage medium.

According to another specific feature of the present invention, the data writing part can write data whose playback takes time; moreover, the controller automatically acquires division information for temporally dividing image data written by the data writing part, and the image writing part writes information relating to the division information on the exterior of the storage medium. This makes it possible to know chapter information and the like that temporally divides the image information recorded in the storage medium.

According to another specific feature of the present invention, the data writing part can write copy-prohibited data; moreover, the controller automatically acquires copy prohibition information relating to data written by the data writing part, and the image writing part writes the copy prohibition information relating to that data on the exterior of the storage medium. This makes it possible to know, based on the copy prohibition information automatically written on the exterior of the storage medium, that the image information recorded in the storage medium is the copy-prohibited original.

According to another specific feature of the present invention, the data writing part can write broadcast program data; moreover, the controller automatically acquires information relating to the broadcast program data, and the image writing part writes a visual recognition image relating to the broadcast program data on the exterior of the storage medium. This makes it possible to know information relating to the broadcast program recorded in the storage medium.

According to another specific feature of the present invention, there is provided a second storage medium different from the storage medium inserted in the insertion part; moreover, the controller automatically acquires management data used when data is written to the second storage medium, and the image writing part writes a visual recognition image relating to this management data on the exterior of the storage medium.

Depending on recording devices, the management data accompanying recording may differ between when data is recorded to the storage medium, such as a DVD, inserted in the insertion part and when data is recorded to the second storage medium, such as a hard disk. With the above feature, even the management data used exclusively when data is recorded to the second storage medium can be exploited in a form written as a visual recognition image on the exterior of the storage medium. This makes it possible to know in more detail the information recorded in the storage medium.

According to another specific feature of the present invention, there is provided a second storage medium different from the storage medium inserted in the insertion part, and the data writing part can move data written in the second storage medium to write it to the storage medium inserted in the insertion part; moreover, the controller automatically acquires moving information indicating that the data has been moved from the second storage medium, and the image writing part writes visual recognition image relating to the moving information on the exterior of the storage medium.

In a recording device, there may arise a need to move data recorded in the second storage medium, such as a hard disk, to the storage medium, such as a DVD, inserted in the insertion part. With the above feature, it is possible to know from the visual recognition image on the exterior of the storage medium that, as a result of the moving of data, the data in the second storage medium has been deleted and thus the data stored in the storage medium inserted in the insertion part is the original with no backup.

According to another specific feature of the present invention, there is provided a second storage medium different from the storage medium inserted in the insertion part, and the data writing part can write, to the storage medium inserted in the insertion part, data managed based on a play list in the second storage medium; moreover, the controller automatically acquires play list information in the second storage medium, and the image writing part writes a visual recognition image relating to the play list information on the exterior of the storage medium.

In a recording device, there may arise a need to move data recorded in the second storage medium, such as a hard disk, to the storage medium, such as a DVD, inserted in the insertion part. With the above feature, the play list information in the second storage medium is automatically written on the exterior of the storage medium inserted into the insertion part. This makes it possible to know the contents of the data recorded in the storage medium based on the play list information.

According to another specific feature of the present invention, the controller automatically acquires information on the remaining capacity in the storage medium, and the image writing part writes the information on the remaining capacity on the exterior of the storage medium. This makes it possible to know the remaining capacity in the storage medium based on the visual recognition image automatically written on the exterior of the storage medium.

The above-described various features of the present invention can be suitably practiced in recording devices that handle removable storage media having a data face on one side and a label face on the other side, that write data into the data face while facing the storage medium inserted in the insertion part, and that write a visual recognition image on the label face while facing the storage medium inserted in the insertion part from the same side from which the data writing part faces it.

In such a recording device, the data writing part and the image writing part may share at least part of them. There may additionally be provided a data reading part that reads data written in the storage medium, in which case the data writing part and the data reading part may share at least part of them.

With the capability of writing visual recognition images on the exterior of storage media according to conventional label surface burning technologies, whether or not to create such images is left to the choice of the user. Thus, while this capability is useful for users highly motivated to create labels for themselves, it remains difficult to use for general users at large.

In view of the above, the present invention makes the writing of visual recognition images on the exterior of recording media in a recording device easy, and makes the visual recognition image writing capability usable by general users at large.

To solve the above problems, according to the present invention, a recording device is provided with: an insertion part into which a removable storage medium is inserted; a data writing part that writes data to the inserted storage medium; a storage part that stores original information; an image creating part that automatically lays out an image based on the original information; and a an image writing part that writes the created image on the exterior of the storage medium.

By automatically laying out an image to be written on the exterior of the medium as described above, it is possible to alleviate the user's responsibility for image creation, and thereby to meet the needs of general users at large.

According to a specific feature of the present invention, there is provided a data reading part that reads data written in the storage medium, and, based on the data read by the data reading part, the image creating part automatically lays out an image to be written by the image writing part with consideration given to, if any, an image already written on the exterior of the storage medium.

This makes it possible to automatically prevent, based on data in the storage medium, interference of an image to be written with an image already written on the exterior of the storage medium, and thereby alleviates the user's responsibility.

According to another specific feature of the present invention, there is provided a storage part that stores information relating to an image written by the image writing part, and, based on the information in the storage part, the image creating part automatically lays out an image to be written by the image writing part with consideration given to, if any, an image already written on the exterior of the storage medium.

This makes it possible to automatically prevent, based on data in the storage part of the recording device, interference of an image to be written with an image already written on the exterior of the storage medium, and thereby alleviates the user's responsibility.

According to another specific feature of the present invention, there is provided an image reading part that reads an image written on the exterior of the storage medium, and, based on the image read by the image reading part, the image creating part automatically lays out an image to be written by the image writing part with consideration given to, if any, an image already written on the exterior of the storage medium.

This makes it possible to automatically prevent, based on the result of the reading of an image on the exterior of the storage medium, interference of an image to be written with an image already written on the exterior of the storage medium, and thereby alleviates the user's responsibility.

According to another specific feature of the present invention, in a case where an image already written on the exterior of the storage medium has a background image, if an image to be written by the image writing part has a background, the image creating part lays out this image without its background. Here, information on a background image can be acquired by reading data in the storage medium, by reading information in the storage part of the recording device, or by reading an image on the exterior of the storage medium.

This makes it possible to automatically prevent double writing of backgrounds, and thereby alleviates the user's responsibility.

According to another specific feature of the present invention, in a case where there is an image already written on the exterior of the storage medium, the image creating part automatically lays out, in a region other than where that image is written, the image to be written by the image writing part. Here, information on an image already written on the exterior of the storage medium can be acquired by reading data in the storage medium, by reading information in the storage part of the recording device, or by reading an image on the exterior of the storage medium.

This makes it possible to automatically prevent an image from being doubly written on top of an image already written on the exterior of the medium, and thereby alleviates the user's responsibility.

According to another specific feature of the present invention, the image writing part writes an image by scanning the exterior of the storage medium along ring-shaped areas on it, and the image creating part automatically lays out an image to be written in a ring-shaped area.

This makes it easy to lay out a concentric ring-shaped image fit for the image scanning method used.

According to another specific feature of the present invention, when an image already written on the exterior of the storage medium is canceled, an erasure image is automatically laid out so as to overwrite the region in which that image is written. Here, information on an image already written on the exterior of the storage medium can be acquired by reading data in the storage medium, by reading information in the storage part of the recording device, or by reading an image on the exterior of the storage medium.

This makes it possible to cope with a so-called write-once-type medium, in which what has once been written cannot be erased.

According to another specific feature of the present invention, the image creating part creates character information in the specified language. This is suitable for automatic laying out as described above.

The above-described various features of the present invention can be suitably practiced in recording devices that handle removable storage media having a data face on one side and a label face on the other side, that write data into the data face while facing the storage medium inserted in the insertion part, and that write a visual recognition image on the label face while facing the storage medium inserted in the insertion part from the same side from which the data writing part faces it.

In such a recording device, the data writing part and the image writing part may share at least part of them. There may additionally be provided a data reading part that reads data written in the storage medium, in which case the data writing part and the data reading part may share at least part of them.

In the writing of a visual recognition image on the exterior of a storage medium according to conventional label surface burning technologies, lowering the image quality helps shorten the write time; still, however, the write time is typically so long that, except users highly motivated to create visual recognition images, general users at large are discouraged from doing so.

In view of the above, the present invention gives consideration to the time required to write a visual recognition image on the exterior of the storage medium, and makes the visual recognition image writing capability usable by general users at large.

To solve the above problems, according to the present invention, a recording device is provided with: an insertion part into which a removable storage medium having an image writing region on its exterior is inserted; a data writing part that writes data to the inserted storage medium; a storage part that stores original information; a data writing part that writes, in an image writing region on the exterior of the storage medium, an image created based on the original information stored in the storage part; and a controller that automatically controls the image writing part so as to shorten the image write time.

This makes it possible to save the user from an unduly long wait automatically without the user making any particular setting, and thus helps spread the use of the visual recognition image writing capability to users with little knowledge about the operation of a recording device.

According to a specific feature of the present invention, when an image with an area smaller than the image writing region on the exterior of the storage medium is created, the controller controls the image writing part to automatically select a region, needed to write that image, on the exterior of the storage medium and write the image there.

This helps eliminate the time required to perform a write operation in a region, unnecessary for the writing of an image, on the exterior of the storage medium, and thus helps shorten the image write time.

According to another specific feature of the present invention, the image writing part is a scanning-type writing part; moreover; the controller determines a scanning end position fit for an image to be written, and controls the image writing part so that, if the operation end position is reached before scanning reaches an end of a writing region, scanning is ended at that point.

This helps eliminate the time required to scan a region, unnecessary for the writing of an image, on the exterior of the storage medium, and thus helps shorten the image write time.

According to another specific feature of the present invention, when an image to be written contains character information and background information occupying a larger area than that, the controller controls the image writing part to write the image with the background information omitted.

With this configuration, in a case where a setting has been made such that a previously selected background image is automatically added to character information, it is possible to ensure that at least the character information part, having a smaller area than the background and containing substantive information, is written while preventing time from being unnecessarily spent to write the remaining background part, containing no substantive information. If the user wishes to write the background portion, he can choose to additionally write it later, intentionally spending the necessary time.

In the above configuration, there may additionally be provided a selection part that allows the user to choose not to omit the background information so that, when no selection is made with the selection part, the controller controls the image writing part to write the image with the background omitted. This makes it possible, prior to the writing of the image, to meet the needs of users who are willing to intentionally spend time for the background part.

The above-described various features of the present invention can be suitably practiced in recording devices that handle removable storage media having a data face on one side and a label face on the other side, that write data into the data face while facing the storage medium inserted in the insertion part, and that write a visual recognition image on the label face while facing the storage medium inserted in the insertion part from the same side from which the data writing part faces it.

In such a recording device, the data writing part and the image writing part may share at least part of them. There may additionally be provided a data reading part that reads data written in the storage medium, in which case the data writing part and the data reading part may share at least part of them. There may additionally be provided an image reading part that reads an image written on the exterior of the storage medium, in which case the image writing part and the image reading part may share at least part of them.

According to another specific feature of the present invention, a recording device is provided with: an insertion part into which a removable medium having a data face on one side and a label face on the other side is inserted; a rotating mechanism that rotates the inserted storage medium; a data writing part that faces the inserted storage medium and that writes data by scanning the rotating data face; a label writing part that faces the inserted storage medium from the same side from which the data writing part faces it and that writes a visible image by scanning the rotating label face; an image creating part that creates the visible image to be written by the label writing part in a ring-shaped area along the rotation of the storage medium; and a controller that ends label writing when the label writing part, having scanned the ring-shaped image, moves past its edge.

This helps eliminate the time needed, after the completion of the writing of an image, to rotation-scan a ring-shaped area, unnecessary for the writing of the image, on the label face, and thus helps shorten the image write time.

In the above configuration, according to a specific feature of the present invention, the controller makes the label writing part start label writing at a position just in front of one of the inner and outer circumferences of the ring-shaped image, and makes the label writing part end label writing when it moves past the other of the inner and outer circumferences of the ring-shaped image.

This helps eliminate the time needed, even before the writing of an image, to rotation-scan a ring-shaped area, unnecessary for the writing of the image, on the label face, and thus helps shorten the image write time.

The writing of a visual recognition image on the exterior of a storage medium according to conventional label surface burning technologies takes time; thus, although it is useful for users who want to do it, general users are discouraged from it.

In view of the above, the present invention enhances the user's convenience in terms of the write time and thereby makes the visual recognition image writing capability usable by general users at large.

In addition, the present invention also enhances the user's convenience in terms of display and thereby makes the visual recognition image writing capability usable by general users at large.

To solve the above problems, according to the present invention, a recording device is provided with: an insertion part into which a removable storage medium is inserted; a data writing part that writes data to the inserted storage medium; a visual recognition image creating part that creates a visual recognition image that can be visually recognized by the user; an image writing part that writes the visual recognition image on the exterior of the storage medium; and a controller that allows the viewing of television broadcast during the writing of the visual recognition image by the image writing part.

For example, in a case where the recording device itself incorporates a broadcast receiving part, during the writing of a visual recognition image by the image writing part, the controller outputs to the outside the television broadcast received by the broadcast receiving part to allow the viewing of a broadcast program on the television or the like connected to the recording device.

For another example, during the writing of a visual recognition image by the image writing part, the controller outputs to the outside a signal that allows the viewing of television broadcast to make the television or the like connected to the recording device controllable to switch its input. This causes the television connected to the recording device to switch its input from the external input from the recording device to the internal input from the broadcast receiving part incorporated in the television itself, thereby allowing the viewing of a broadcast program.

For yet another example, in a case where the recording device and a television or the like are incorporated into a single unit that thus has a display screen and a broadcast receiving part, during the writing of a visual recognition image by the image writing part, the controller displays the television broadcast received by the broadcast receiving part on the display screen.

Allowing the viewing of television broadcast during the writing of a visual recognition image by the image writing part as described above allows the user to view a television broadcast program as usual without wasting his time doing nothing while the visual recognition image is written. This contributes to encouraging general user at large to use the visual recognition image writing capability. In particular, in a case where the visual recognition image writing capability is automated, it is important, to spread the use of the visual recognition image writing capability, not to hamper the ordinary television viewing capability.

According to a specific feature of the present invention, the recording device is further provided with a signal generating part that generates a signal for superimposing, on television broadcast being viewed, information indicating that the writing of a visual recognition image by the image writing part has been completed.

This allows the user to recognize the completion of the image writing that has been proceeding concurrently with the viewing of television broadcast. Naturally, the user can, as he likes, stop watching television and eject the storage medium, or ignore the completion of the image writing and continue to watch television.

As described above, the present invention, by addressing problems associated with display, attempts to promote the use of the visual recognition image writing capability, and other than this, the present invention achieves various improvements in terms of display.

For example, according to another feature of the present invention, a recording device is provided with: an insertion part into which a removable storage medium is inserted; a data writing part that writes data to the inserted storage medium; a visual recognition image creating part that creates a visual recognition image that can be visually recognized by the user; an image writing part that writes the visual recognition image on the exterior of the storage medium; a display signal outputting part; an image acquiring part that acquires a visual recognition image already written on the exterior of the storage medium; and a controller that so controls that both the visual recognition image acquired by the image acquiring part and the visual recognition image created by the visual recognition image creating part are outputted from the display signal outputting part.

Specifically, the visual recognition image already written on the exterior of the storage medium is acquired by reading an image written on the exterior of the storage medium, by reading data written in the storage medium by the data writing part, or by reading information in the storage part, which stores images written by the image writing part.

By making the display signal outputting part output both the visual recognition image already written on the exterior of the storage medium and the visual recognition image created by the visual recognition image creating part, it is possible to display both. This allows comparison between the layouts of the two images as visual recognition images are additionally written.

According to a specific feature, relating to the above, of the present invention, the visual recognition image acquired by the image acquiring part and the visual recognition image created by the visual recognition image creating part are outputted from the display signal outputting part in a fashion distinguishable from each other. Such distinction can be achieved, for example, by blinking one of them.

With such distinguishable display, it is possible to easily know what part of the displayed image is the visual recognition image already written on the exterior of the storage medium and what part is the newly created visual recognition image.

According to another feature of the present invention, a recording device is provided with: an insertion part into which a removable storage medium is inserted; a data writing part that writes data to the inserted storage medium; a visual recognition image creating part that creates a visual recognition image that can be visually recognized by the user; an image writing part that writes the visual recognition image on the exterior of the storage medium; and a storage part that, when the writing of the visual recognition image by the image writing part is interrupted, stores the incompletely written visual recognition image. This makes it possible to cope with an operation requesting intentional interruption of writing and with unexpected interruption of writing resulting from power failure or the like.

According to a specific feature, relating to the above, of the present invention, there is provided a display signal outputting part, and both the incompletely written visual recognition image information stored in the storage part and the visual recognition image created by the visual recognition image creating part are outputted from the display signal outputting part. This makes it possible to display both the incompletely written visual recognition image and the visual recognition image newly created by the visual recognition image creating part, and thus to check the layout of the two images integrated together in the form of a composite image that is going to be written.

According to another specific feature, relating to the above, of the present invention, the image writing part writes, on the exterior of the storage medium, both the incompletely written visual recognition image information stored in the storage part and the visual recognition image created by the visual recognition image creating part. This prevents the incompletely written image from being left incompletely written, and ensures that it is written fully on the next occasion of writing.

According to another feature of the present invention, a recording device is provided with: an insertion part into which a removable storage medium is inserted; a data writing part that writes data to the inserted storage medium; a visual recognition image creating part that creates a visual recognition image that can be visually recognized by the user; an image writing part that writes the visual recognition image on the exterior of the storage medium; a discriminating part that checks the type of the storage medium inserted in the storage part; and a controller that outputs a display signal for displaying the visual recognition image in one of different colors according to the type of the storage medium as found by the discriminating part.

This makes it possible, in cases where visual recognition images are written in different colors according to the type of storage medium, to display their preview images in colors true to those in which they are written on the exterior of storage media.

According to another feature of the present invention, a recording device is provided with: an insertion part into which a removable storage medium is inserted; a data writing part that writes data to the inserted storage medium; a visual recognition image creating part that creates a visual recognition image that can be visually recognized by the user; a storage part that stores a background image; a controller that, based on the background image stored in the storage part, automatically selects a background to be added to the visual recognition image created by the visual recognition image creating part; and an image writing part that writes, on the exterior of the storage medium, the visual recognition image created by the visual recognition image creating part along with the background added to it.

This makes it easy, when a background image is added, to determine the background, and thereby enhances the user's convenience. For example, used for this automatic selection are: a background previously registered by the user; a background determined by a "learn" function based on the history of the user's selection of backgrounds; a background previously adopted; etc. Needless to say, the user can, whenever possible, chose whether or not to add a background and select what background to add definitively.

According to another feature of the present invention, a recording device is provided with: an insertion part into which a removable storage medium is inserted; a data writing part that writes data to the inserted storage medium; a visual recognition image creating part that creates a visual recognition image that can be visually recognized by the user; a second storage medium different from the storage medium inserted in the insertion part; an operation part that chooses whether to write data to the medium inserted in the insertion part or to the second storage medium; and a controller that, when the writing of data to the second storage medium is chosen, so controls that no indication is displayed regarding the writing of the visual recognition image.

The visual recognition image writing capability according to the present invention is dedicated to the removable storage medium inserted in the insertion part. Thus, the above configuration prevents misunderstanding of an indication or confusion that may arise when the writing of data to the second storage medium is selected.

The above-described various features of the present invention can be suitably practiced in recording devices that handle removable storage media having a data face on one side and a label face on the other side, that write data into the data face while facing the storage medium inserted in the insertion part, and that write a visual recognition image on the label face while facing the storage medium inserted in the insertion part from the same side from which the data writing part faces it.

In such a recording device, the data writing part and the image writing part may share at least part of them. There may additionally be provided a data reading part that reads data written in the storage medium, in which case the data writing part and the data reading part may share at least part of them.

With the capability of writing an image on the exterior of a storage medium according to conventional label surface burning technologies, whether or not to create such an image is left to the choice of the user. Thus, while this capability is useful for users highly motivated to create images for themselves, it remains difficult to use for general users at large.

In view of the above, the present invention makes the writing of an image on the exterior of a storage medium in a recording device easy to make the image writing capability usable by general users at large.

To solve the above problems, according to the present invention, a recording device is provided with: an insertion part into which a removable storage medium is inserted; a data writing part that writes data to the inserted storage medium; a processing part that performs processing that inhibits the writing of data by the data writing part; a storage part that stores original information of an image to be written on the exterior of the storage medium; an image creating part that creates an image based on the original information in one of different layouts according to whether or not the processing part has performed its processing; and an image writing part that writes the image created by the image creating part on the exterior of the storage medium. One specific example of the processing part is finalization.

With this configuration, it is possible to create an image in one of the optimal layouts respectively corresponding to the case where more data is likely to be written and the case where there is no such likeliness. Thus, it is possible to easily maintain the correspondence between the writing of data into the storage medium and the writing of images on the exterior of the storage medium. This allows general users to write images in optimal layouts without difficulty.

According to a specific feature of the present invention, when the processing part has performed its operation, the image creating part lays out the original information in a larger region on the exterior of the storage medium. That is, once the processing part has performed its processing, no longer any consideration needs to be given to the likeliness of more data being written thereafter; thus, a layout is adopted that fully covers as large a writable region as available.

According to another specific feature of the present invention, when the processing part has performed its operation, the image creating part lays out the original information in a smaller region on the exterior of the storage medium. That is, once the processing part has performed its processing, no longer any consideration needs to be given to the likeliness of more data being written thereafter; thus, a layout is adopted that exploits the resulting flexibility to give priority to viewability and design.

According to yet another specific feature of the present invention, there is provided a detecting part that detects the remaining capacity in the storage medium; when any remaining capacity is detected, an image based on the original information is created in one of different layouts according to whether or not the processing part has performed its processing. In this way, it is possible, in particular when there is remaining capacity, to use whichever of different image layouts suits the case.

According to another feature of the present invention, a recording device is provided with: an insertion part into which a removable storage medium is inserted; a data writing part that writes data to the inserted storage medium; a processing part that performs processing that inhibits the writing of data by the data writing part; a storage part that stores original information of an image to be written on the exterior of the storage medium; an image creating part that creates an image based on the original information in one of different regions according to whether or not the processing part has performed its processing; and an image writing part that writes the image created by the image creating part on the exterior of the storage medium.

With this configuration, it is possible to adopt one of the optimal image writing regions respectively corresponding to the case where more data is likely to be written, the case where there is such likeliness, and the case where there is no such likeliness. Thus, it is possible to easily maintain the correspondence between the writing of data into the storage medium and the writing of images on the exterior of the storage medium. This allows general users to write images in optimal layouts without difficulty.

According to a more specific feature of the above, when the processing part has performed its processing, the image creating part writes in a larger region on the exterior of the storage medium than when the processing part has not performed its processing. More specifically, for example, even when there is remaining capacity in the storage medium, if the processing part has performed its processing, with no consideration given to the blank writing region corresponding to the remaining capacity, as large a writable region as available is fully used.

On the other hand, according to another specific feature of the above, when the processing part has performed its processing, the image creating part writes in a smaller region on the exterior of the storage medium than when the processing part has not performed its processing. More specifically, when the processing part has performed its processing, with no consideration given to the indefiniteness of whether or not data will be written thereafter, the image creating part adopts a writing region with priority given to viewability and design, excluding regions, such as a central region on the label face, where it is difficult to secure a rectilinear layout area extending in the length direction.

The above-described various features of the present invention can be suitably practiced in recording devices that handle removable storage media having a data face on one side and a label face on the other side, that write data into the data face while facing the storage medium inserted in the insertion part, and that write a visual recognition image on the label face while facing the storage medium inserted in the insertion part from the same side from which the data writing part faces it.

In such a recording device, the data writing part and the image writing part may share at least part of them. There may additionally be provided a data reading part that reads data written in the storage medium, in which case the data writing part and the data reading part may share at least part of them.

With the capability of writing an image on the exterior of a storage medium according to conventional label surface burning technologies, whether or not to create such an image is left to the choice of the user. Thus, while this capability is useful for users highly motivated to create images for themselves, it remains difficult to use for general users at large.

In view of the above, the present invention makes the writing of an image on the exterior of a storage medium in a recording device easy to make the image writing capability usable by general users at large.

To solve the above problems, according to the present invention, a recording device is provided with: an insertion part into which a removable storage medium having a data face on one side and a label face on the other side is inserted; a storage part that stores writing information to the label face; a burned information acquiring part that acquires burned information on the label face of the medium inserted in the insertion part; a burned image checking part that checks the layout in which a burned image has been burned on the label face of the medium based on the information from the burned information acquiring part; a burning image creating part that creates, based on the writing information stored in the storage part, a burning image in a layout similar to the layout of the burned image on the label face as recognized by the burned image checking part; and an image writing part that writes the burned image created by the burning image creating part on the label face of the medium. Examples of the layout include a ringed-shaped character layout and an ordinary character layout, and it is possible to achieve visual consistency between the burned and burning images.

In another embodiment of the present invention, in the recording device, the burned image checking part performs its checking based on the burned image burned with the newest date. This makes it possible to create and burn a burning image in the same layout as the burned image burned previously, and thus allows the burning image to be additionally burned with a unified appearance.

Instead, the burned image checking part may perform its checking based on the burned image burned with the oldest date. This makes it possible to create and burn a burning image in the same layout as the burned image burned first, and thus allows the burning image to be additionally burned with a unified appearance.

Instead, the burned image checking part may perform its checking based on the burned image burned with the most frequently used layout. This makes it possible, even in a case where additional writing is performed on the label face on which a plurality of burned images have been burned, to additionally burn a burning image with a unified appearance.

According to yet another embodiment of the present invention, a recording device is provided with: an insertion part into which a removable storage medium having a data face on one side and a label face on the other side is inserted; a storage part that stores writing information to the label face; a burned information acquiring part that acquires burned information on the label face of the medium inserted in the insertion part; a burned image checking part that checks what information items constitute the burned image on the label face of the medium based on the information from the burned information acquiring part; a burning image creating part that creates, based on the writing information stored in the storage part, a burning image composed of burning characters consisting of information items similar to those recognized by the burned image checking part; and an image writing part that writes the burning image created by the burning image creating part on the label face of the medium. This allows, for example, the program information in a to-be-newly-burned burning image to include the same number of information items (broadcast date, broadcast time, commentator, title, etc.) as the program information in a burned image written on the label face. Thus, the label face is expected to have a consistent appearance

According to another embodiment, the burned image checking part performs its checking based on the burned image burned with the newest date. This makes it possible to create a burning image in which a program is described consistently, with the same number and types of information items as the burned image burned previously.

Instead, the burned image checking part performs its checking based on the burned image burned with the oldest date. This makes it possible to create a burning image in which a program is described consistently, with the same number and types of information items as the burned image burned first.

Instead, the burned image checking part may perform its checking, if there are a plurality of burned images, based on the most frequently burned types of information items. This makes it possible, as a result of the checking performed based on the burning image having the most frequently burned types of information items, to create a visually consistent burning image.

According to yet another embodiment, the burned information acquiring part may include a label face reading part that optically reads a burned image on the label face of the medium inserted in the insertion part. With this configuration, in a case where information on a burned image is written on the label face, by reading the label face, it is possible to check how the burned image has been burned. This is advantageous in terms of cost, because then it is no longer absolutely necessary to use a storage device.

According to yet another embodiment, the recording device further is provided with a burned information storage part that stores information on a burned image burned on the label face of the medium inserted in the insertion part. According to this embodiment, it is not necessary to read, from the label face, information on how a burned image has been burned on the label face (that is, no information needs to be written in the label face regarding a burned image). Thus, a wider space for image burning can be secured on the label face. According to this embodiment, there may additionally be provided a label face reading part that optically reads a burned image on the label face of the medium inserted in the insertion part so that the burned image checking part performs its checking based on information from the burned information storage part or from the label face reading part. This makes it possible to refer to a plurality of sources of information to create a burning image. Thus, for example, even in a case where no information is available from one of the sources of information, it is possible to surely create a burning image.

According to an embodiment of the present invention, a recording device is provided with: an insertion part into which a removable storage medium having a data face on one side and a label face on the other side is inserted; a driving part that makes the storage medium rotate; a storage part that stores writing information to the label face; a burning image creating part that selectively creates, based on the information from the storage part, a burning image either in a ring-shaped character layout concentric with the center of the rotation caused by the driving part or in a rectilinear ordinary character layout; layout selecting means for automatically selecting the ring-shaped character layout created by the burning image creating part; a user interface part that makes it possible to change the selection by the layout selecting means to the ordinary character layout to reflect the user's intention; and an image writing part that writes the burning image from the burning image creating part on the label face of the medium. With this configuration, in a case where a ringed-shaped character layout is set as a parameter held in the layout selecting means at the time of shipment, unless the setting is explicitly changed, a burning image is created in a ringed-shaped character layout. Thus, in principle, it is possible to avoid visual inconsistency of coexistence of a ring-shaped character layout and a rectilinear ordinary character layout; moreover, it is also possible, by prompting the user to use a ringed-shaped character layout, to shorten the burning time (when the same amount of information is burned on the label face in an ordinary character layout and in a ringed-shaped character layout, it takes longer to do so in an ordinary character layout).

According to another embodiment of the present invention, the recording device is further provided with: an output screen creating part that creates a television output screen for previously notifying the user that burning is going to be performed with the burning image created by the burning image creating part; and an output interface that outputs the television output screen created by the output screen creating part. The television output screen here may be a screen that simply informs the user that burning is about to be performed (one that simply indicates the fact and does not prompt the user to respond).

With this configuration, in a case where the user automatically creates and additionally writes burning images with the same settings every day, it is possible to save the user the trouble of entering the same response every time burning is performed.

Instead, the television output screen may be one that displays a burning image to the user to prompt the user to confirm that burning will be performed with that burning image, in which case, if the user does not respond to the confirmation screen within a predetermined time, the user is assumed to have entered no response, and burning is started. With this embodiment, even if the user does not respond, it is possible to proceed to burning without delay.

With the capability of writing an image on the exterior of a storage medium according to conventional label surface burning technologies, whether or not to create such an image is left to the choice of the user. Thus, while this capability is useful for users highly motivated to create images for themselves, it remains difficult to use for general users at large.

In view of the above, the present invention makes the writing of an image on the exterior of a storage medium in a recording device easy to make the image writing capability usable by general users at large.

To solve the above problems, according to the present invention, once a burning target region is determined, by the procedure described later, the contents of the data to be written on the label face is, in terms of the size of the image, the number of characters written, the character size, and the character pitch, so adjusted that the image data and character data to be written on the label face lie inside the determined burning target region, and the data is burned inside the burning target region.

Thus, it is possible to burn, without going beyond the determined burning region, the information that needs to be burned on the label face.

According to another embodiment of the present invention, a recording device is provided in which a character information processing part includes a character pitch changing part that adjusts the character pitch of character information based on the result of checking by a checking part.

This makes it possible to adjust the character pitch to suit the character assignment, and thus makes it possible to obtain a well-balanced layout.

According to yet another embodiment of the present invention, a recording device is provided in which a character information part can reduce the number of characters in character information based on the result of checking by a checking part.

This makes it possible to adjust the number of characters to suit the character assignment, and thus makes it possible to display burning data such that it lies inside the burning region.

Moreover, through deletion, item-by-item display is achieved; thus, inconsistency in displayed items is eliminated, and thus a layout well-balanced as a whole is obtained.

Furthermore, even in a case where the number of lines has increased as a result of line feed processing as will be described later, burning data can be burned such that it lies inside the burning region in which the number of characters displayed can be adjusted.

Moreover, through deletion of items overlapping among different sets of data, it is no longer necessary to display overlapping, unnecessary data. Thus, it is possible to efficiently display information on the label face.

According to another embodiment, a recording device is provided in which the character information part includes a character size changing part that adjusts the size of characters in character information based on the result of checking by the checking part.

This makes it possible to adjust the character pitch to suit the character assignment, and thus makes it possible to obtain a well-balanced layout. Moreover, setting the minimum font size prevents a font size beyond the user's eyesight from being automatically set. This makes it easy even for general users to obtain the optimal layout.

According to yet another embodiment, a recording device is provided in which the character information part includes a character line feed part that inserts a line feed in character information based on the result of checking by the checking part.

This makes it possible to insert line feeds between different items in characters to suit the character assignment, and thus makes it possible to obtain a well-balanced layout.

According to an embodiment of the present invention, a recording device is provided in which the character information processing part processes character information by deleting character information starting with the last set of data with respect to character information containing a plurality of sets of data.

For items overlapping among different sets of data, deleting it starting with the last set of data makes it possible to retain necessary items one after another while deleting unnecessary items. This makes it possible to make good use of the label face.

According to another embodiment of the present invention, a recording device is provided that processes character information by inserting a line feed if the left/right-direction assignment region is exceeded and then displaying one item after another according to priority if the up/down-direction assignment region is exceeded.

With this configuration, character information can be processed such that the data to be burned on the label face does not lie beyond the label face while necessary items are burned. This eliminates the need for the user to bother to select items to be displayed.

According to another embodiment of the present invention, a recording device is provided with: an insertion part into which a removable storage medium having a data face on one side and a label face on the other side is inserted; a storage part that stores writing information to the label face; a remaining capacity acquiring part that acquires the remaining capacity information of the data face of the storage medium inserted in the insertion part; a data creating part that processes the writing information such that the writing information is written on the label face with writing room left behind if there is remaining capacity on the data face based on the remaining capacity information stored; and a data writing part that writes, on the label, the writing information created by the data creating part.

With this configuration, it is possible to secure a label burning area that suits the remaining capacity. Thus, it is possible to prevent shortage of area for burning when new information is additionally written on the label face afterwards.

While the present invention has been described with respect to preferred embodiments, it will be apparent to those skilled in the art that the disclosed invention may be modified in numerous ways and may assume many embodiments other than those specifically set out and described above. Accordingly, it is intended by the appended claims to cover all modifications of the present invention which fall within the true spirit and scope of the invention.

## Claims

1. A recording device for a disc medium having a recording side and a label side, the recording device comprising:
a receiving mechanism adapted to receive the disc medium;
a recording part adapted to record data into the recording side of the disc medium received by the receiving mechanism;
a printing part adapted to print an image on the label side of the disc medium received by the receiving mechanism, the image relating to the data recorded in the recording side of the disc medium; and
a controller adapted to control the printing part in accordance with data information relating to the data which has been recorded in the recording side of the disc medium.

2. The recording device according to claim 1 further comprising a data information receiver adapted to receive the data information from outside the recording device.

3. The recording device according to claim 2, wherein the data receiver is adapted to receive the data information from the disc medium.

4. The recording device according to claim 1, wherein the controller is adapted to control the printing part in accordance with image information relating to the image which has been printed on the label side of the disc medium.

5. The recording device according to claim 4 further comprising an image information receiver adapted to receive the image information from the disc medium.

6. The recording device according to claim 4, wherein the controller includes a layout adjuster adapted to lay out an image to be printed with the image information taken into consideration.

7. The recording device according to claim 6, wherein the layout adjuster is so adapted as to so layout the image to be printed as not to overlap the image which has been printed on the label side of the disc medium.

8. The recording device according to claim 6, wherein the layout adjuster is adapted to automatically lay out the image to be printed after a fashion of the image which has been printed on the label side of the disc medium.

9. The recording device according to claim 1, wherein the controller includes a layout adjuster adapted to automatically lay out an image of a character string along a circle concentric with the disc medium by default.

10. The recording device according to claim 1, wherein the controller includes a layout adjuster adapted to automatically lay out an image of a character string getting out of a central area of the disc medium.

11. The recording device according to claim 1, wherein the controller includes a layout adjuster adapted to automatically lay out an image of a character string within a margin of the disc medium.

12. The recording device according to claim 11, wherein the layout adjuster is adapted to make an automatic line feed for the character string within the margin of the disc medium.

13. The recording device according to claim 1, wherein the controller includes a layout adjuster adapted to lay out an image to be printed with free room left on the label side if free room is left in the recording side.

14. The recording device according to claim 1 further comprising a processing part adapted to process the disc medium to reject further data recording, wherein the controller includes a layout adjuster adapted to lay out an image to be printed in a different manner if the disc medium is processed by the processing part.

15. The recording device according to claim 14, wherein the layout adjuster is adapted to lay out an image to be printed with free room left on the label side regardless of whether or not the disc medium is processed by the processing part with free room left in the recording side.

16. A printing system for a disc medium having a recording side and a label side, the printing system comprising:
a receiver mechanism adapted to receive the disc medium;
a printing part adapted to print an image on the label side of the disc medium received by the receiving mechanism, the image relating to data recorded in the recording side of the disc medium;
a controller adapted to control the printing part in accordance with data information relating to the data which has been recorded in the recording side of the disc medium; and
a data information receiver adapted to receive the data information from the outside of the printing system.

17. The printing system according to claim 16, wherein the data information receiver is adapted to receive the data information from the disc medium.

18. A disc medium comprising:
a recording side into which data is to be recorded;
a label side on which an image is to be printed; and
a data holder adapted to keep information necessary for controlling the printing of a new image on the label side.

19. The disc medium according to claim 18, wherein the recording side serves as the data holder which keeps the information in a form of data recorded in the recording side.

20. The disc medium according to claim 18, wherein the label side serves as the data holder which keeps information in a form of an image printed on the label side.
